(19) **Europäisches Patentamt / European Patent Office / Office européen des brevets**

(11) **EP 3 184 488 B1**

(12) **EUROPEAN PATENT SPECIFICATION**

(45) Date of publication and mention
of the grant of the patent:
**09.02.2022  Bulletin 2022/06**

(21) Application number: **15834009.1**

(22) Date of filing: **19.08.2015**

(51) International Patent Classification (IPC):
*C01B 3/38* (2006.01)   *H01M 8/04* (2016.01)
*H01M 8/06* (2016.01)   *H01M 8/10* (2016.01)
*H01M 8/12* (2016.01)   *H01M 8/0612* (2016.01)

(52) Cooperative Patent Classification (CPC):
**C01B 3/38; H01M 8/0618;** C01B 2203/0233;
C01B 2203/044; C01B 2203/047; C01B 2203/066;
C01B 2203/16; C01B 2203/1614; C01B 2203/1619;
C01B 2203/1623; C01B 2203/169;
C01B 2203/1695; H01M 8/0668; H01M 2008/1095;
Y02E 60/50

(86) International application number:
**PCT/JP2015/004116**

(87) International publication number:
**WO 2016/027458 (25.02.2016 Gazette 2016/08)**

(54) **HYDROGEN GENERATOR, METHOD FOR OPERATING SAME AND FUEL CELL SYSTEM**

WASSERSTOFFERZEUGUNGSVORRICHTUNG, VERFAHREN ZUM BETRIEB DAVON UND
BRENNSTOFFZELLENSYSTEM

GÉNÉRATEUR D'HYDROGÈNE, PROCÉDÉ DE FONCTIONNEMENT DE CE DERNIER ET
SYSTÈME DE PILE À COMBUSTIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.08.2014  JP 2014168150**

(43) Date of publication of application:
**28.06.2017  Bulletin 2017/26**

(73) Proprietor: **Panasonic Intellectual Property
Management Co., Ltd.
Osaka-shi, Osaka 540-6207 (JP)**

(72) Inventors:
• **NARITA, Satoru**
**Osaka 540-6207 (JP)**
• **YASUDA, Shigeki**
**Osaka 540-6207 (JP)**
• **MIDORIKAWA, Yoichi**
**Osaka 540-6207 (JP)**

• **SHIMADA, Yasuaki**
**Osaka 540-6207 (JP)**
• **TAGUCHI, Kiyoshi**
**Osaka 540-6207 (JP)**
• **IIYAMA, Shigeru**
**Osaka 540-6207 (JP)**
• **ASO, Tomonori**
**Osaka 540-6207 (JP)**

(74) Representative: **Grünecker Patent- und
Rechtsanwälte
PartG mbB
Leopoldstraße 4
80802 München (DE)**

(56) References cited:
WO-A1-2014/115502    JP-A- 2005 200 260
JP-A- 2009 107 876    JP-A- 2009 205 882
JP-A- 2013 164 985    JP-A- 2014 120 313

**Description**

TECHNICAL FIELD

The present invention relates to a hydrogen generation apparatus that generates hydrogen by reforming a hydrocarbon-containing raw material gas, a method of driving the same, and a fuel cell system that includes the hydrogen generation apparatus, and a fuel cell that performs power generation by using a hydrogen-containing gas that is obtained in the hydrogen generation apparatus.

BACKGROUND ART

As a fuel cell that is capable of performing high-efficiency power generation even in a small apparatus, there is known a power generation apparatus that is a dispersive energy supply source.

A hydrogen gas that is used as a fuel during power generation in the fuel cell is not serviced by a typical infrastructure. According to this, in a case of usage as a dispersive device, for example, a configuration, in which a hydrogen generation apparatus is arranged in combination, is employed in many cases. The hydrogen generation apparatus subjects a hydrocarbon-containing raw material gas such as a city gas and LPG which are obtained from an existing fossil raw material infrastructure to a water vapor reforming reaction to generate a hydrogen-containing gas.

However, a composition of a gas, which is used as raw material, may vary in accordance with an infrastructure configuration. For example, even in the city gas, a composition thereof may be different in accordance with a difference in any one of a gas distribution company and an area, and the composition may vary with the passage of time.

Similar to Europe, in a case where a gas is supplied through pipelines over countries, a composition of the gas that is supplied may not be uniform and may vary. In addition, in a case of a liquefied gas such as LPG, a composition thereof varies in accordance with a usage rate in a gas cylinder due to a difference in a vapor pressure for each component.

As described above, in a case where the composition of the raw material gas that is supplied varies, if a supply amount of water that is used for reforming, and a supply amount of combustion air that is supplied to a combustor that raises a temperature of a reformer by combusting the raw material gas and an off-gas are set in advance in accordance with a raw material supply flow rate before variation of the composition, the above-described setting may have an effect on the amount of hydrogen that is generated.

That is, when a predetermined amount of hydrogen is not generated, power generation may be unstable. In addition, when hydrogen is excessively generated, balance collapses, and thus efficiency may decrease.

As means for solving the problem, there is suggested a fuel cell system capable of being used even in raw material supply areas different from each other. The fuel cell system has a configuration in which composition-related information with respect to a composition of a power generation raw material is acquired, and control parameters, which relate to the composition of the raw material, of the fuel cell system are set (for example, PTL 1).

In addition, there is suggested a configuration of a hydrogen generation apparatus in which when a temperature of a reformer is controlled to be a predetermined temperature, at least one ratio of an S/C value as a molar ratio between water and carbon in a raw material gas, and a ratio of combustion air that combusts a combustible gas in a combustor is set in accordance with a raw material flow rate that is measured by a raw material flow rate meter (for example, PTL 2).

In addition, there is suggested a configuration of a hydrogen generation apparatus provided with a target value setting device that sets at least one of a target value of the amount of raw material that is supplied to the reformer, a target value of the amount of water vapor that is supplied to the reformer, and a target value of the amount of combustion air that is supplied to the combustor in accordance with a value that is detected by a heat generation amount detector that detects the amount of heat generation in the combustor (for example, PTL 3).

In addition, in a case where a composition of the raw material gas varies, if the amount of air that is supplied to a CO remover does not increase in accordance with an increase in a concentration of carbon monoxide in a reforming gas that is supplied to the CO remover, only the carbon monoxide remains in the reforming gas, and thus durability and efficiency of the fuel cell system decrease.

As means for solving this problem, there is suggested a configuration in which raw material is supplied in order for a reforming temperature to be a predetermined temperature, and the amount of selective oxidation air supplied is controlled on the basis of a flow rate of a raw material gas which is measured (for example, PTL 4).

In addition, in a hydrogen generation apparatus that is suggested in PTL 5, the composition of the raw material is determined from a variation in a temperature of a reforming section or a temperature of the combustor from activation to time at which water is supplied to the hydrogen generation apparatus to control the amount of water that is supplied to a hydrogen generation section and the amount of combustion air that is supplied to the combustor.

In addition, in a fuel cell that is suggested in PTL 6, gas composition information is stored in a server that is prepared by a gas company, and control parameters are appropriately transmitted to each fuel cell by using a unit such as a telephone line, the Internet, or wireless means to control the amount of water that is supplied to the hydrogen generation section, and the amount of combustion air that is supplied to the combustor.

For example, as is the case with PTL 1, a configuration in which the composition information is acquired in advance, and parameters are set on the basis of the composition information is conceivable, or as a different configuration, a configuration in which the parameters are set through a server is also conceivable. However, in the configurations, it is necessary to individually perform setting in conformity to the raw material gas that is supplied, and thus the configurations are lack of versatility. In addition, in a case where a composition variation that deviates from parameters which are set in advance, or a seasonal variation with the passage of time occurs, it is difficult to cope with the composition variation or the seasonal variation.

For example, as is the case with PTL 2, in a case where parameters are set in accordance with the raw material flow rate that is measured by the raw material flow rate meter, if driving is performed in a state in which upper and lower limits are set to a setting value of the raw material flow rate that is measured, and a raw material compositional deviation occurs in a degree equal to or greater than a degree that is assumed, the raw material flow rate reaches the upper and lower limits, and thus it is difficult to maintain the reforming temperature in a predetermined range, and it is difficult to make a determination on the basis of the flow rate of the raw material gas which is measured.

In addition, in a case where the composition of the raw material gas is changed from the composition of the flow rate meter in assumption in accordance with the type or the principle of the raw material flow rate meter, a difference occurs between a flow rate that is detected by the flow rate meter and a flow rate of the raw material gas that is actually supplied, and thus it is difficult to determine appropriate parameters from the flow rate that is measured.

Furthermore, PTL 7 discloses a fuel system comprising a reforming section comprising control and detection means capable of generating hydrogen-contained gas while maintaining an appropriate air ratio even when the composition of raw material gas supplied to a hydrogen generation device changes. The temperature of the reformer is monitored and the amount of raw gas /air supplied is adjusted by the controller depending on the temperature of the reformer.

Citation List

Patent Literature

PTL 1: International Publication No. 2006/046621
PTL 2: International Publication No. 2013/150722
PTL 3: Japanese Patent Unexamined Publication No. 2013-053036
PTL 4: International Publication No. 2013/150721
PTL 5: Japanese Patent Unexamined Publication No. 2005-200260
PTL 6- Japanese Patent Unexamined Publication No. 2003-282116
PTL 7: Japanese Patent Unexamined Publication No. 2013-164985

SUMMARY OF THE INVENTION

In the invention, even when a composition of a raw material gas supplied, that is, the amount of heat varies, it is not necessary to set parameters in advance or from an outer side, and it is possible to automatically determine the amount of heat of the raw material gas from a reforming temperature during supply of the raw material gas at a predetermined flow rate. An object of the invention is to provide a hydrogen generation apparatus and a fuel cell system which are capable of appropriately generating necessary hydrogen by changing control parameters on the basis of the determination result, and in which stable driving is possible.

According to an aspect of the invention, there is provided a hydrogen generation apparatus as defined in claim 1.

In addition, according to another aspect of the invention, there is provided a fuel cell system as defined in claim 21 including the hydrogen generation apparatus of claim 1, and a fuel cell that performs power generation by using the hydrogen-containing gas that is generated by the reformer, and an oxygen-containing oxidant gas.

In addition, according to still another aspect of the invention, there is provided a method according to claim 22 of driving a hydrogen generation apparatus.

According to the hydrogen generation apparatus of the invention, the fuel cell system, and the method of driving a hydrogen generation apparatus, for example, even in a case where a raw material gas has any composition such as a case of installation in an area in which a gas composition is different, a case of a seasonal composition variation, and a case of a gas composition variation for a long period of time, it is not necessary to set a parameter in advance or from an outer side. In addition, it is possible to obtain a highly-versatile hydrogen generation apparatus and a highly-versatile fuel cell system in which it is possible to determine the amount of heat of the raw material gas from a reforming temperature or a temperature variation rate during supply of the raw material gas at a predetermined flow rate.

In addition, it is possible to appropriately generate hydrogen that is necessary by changing a control parameter on the basis of the determination result regardless of an apparent amount, which is detected by the raw material gas supply amount detector, of the raw material supplied, and thus stable driving is possible. Further advantageous embodiments are defined in the dependent claims.

BRIEF DESCRIPTION OF DRAWINGS

FIG. 1 is a view illustrating a schematic configuration of a fuel cell system in a first exemplary embodiment of the invention.

FIG. 2 is a view illustrating a relationship between a reforming temperature and a conversion rate of hydrocarbon that is a raw material gas in the first exemplary embodiment of the invention.

FIG. 3 is a view illustrating a correlation between a carbon number in alkane and combustion heat in the first exemplary embodiment of the invention.

FIG. 4 is a view illustrating a setting example of the amount of the raw material gas supplied with respect to the reforming temperature in the first exemplary embodiment of the invention.

FIG. 5 is a view illustrating a setting example of the amount of water supplied with respect to the reforming temperature in the first exemplary embodiment of the invention.

FIG. 6 is a view illustrating a setting example of the amount of power generation with respect to the reforming temperature in the first exemplary embodiment of the invention.

FIG. 7 is a view illustrating a value that is an example of a conversion factor (C.F.) for each gas composition in a mass flowmeter in a second exemplary embodiment of the invention.

FIG. 8 is a view illustrating a configuration of a fuel cell system in a third exemplary embodiment of the invention.

FIG. 9 is a view illustrating a configuration of a fuel cell system in a fourth exemplary embodiment of the invention.

FIG. 10 is a view illustrating an example of a control parameter group, and a reforming temperature at which a value detected by a raw material gas supply amount detector is a predetermined value when changing a composition of a raw material gas supplied, that is, the amount of heat by using the control parameter group in a seventh exemplary embodiment of the invention.

FIG. 11 is a view illustrating a setting example of the control parameter group in the seventh exemplary embodiment of the invention.

FIG. 12 is a view illustrating an example of the control parameter group corresponding to the raw material gas composition in the seventh exemplary embodiment of the invention.

FIG. 13 is a view illustrating a configuration of a hydrogen generation apparatus in a first example not part of the invention.

FIG. 14 is a view illustrating a difference in a temperature rise rate during activation when supplying gases having compositions different from each other in the first example.

FIG. 15 is a view illustrating an example of correction when supplying a mixed gas composed of 85% methane and 15% nitrogen in a raw material gas supply amount detector that uses 100% methane as the correction gas in the first example.

FIG. 16 is a view illustrating a correlation between a carbon number in alkane and combustion heat in the first example.

FIG. 17 is a view illustrating a configuration of a hydrogen generation apparatus in a second example not part of the invention.

FIG. 18 is a view illustrating a value of a conversion factor (C.F.) for each gas composition in a typical mass flowmeter in the second example.

FIG. 19 is a view illustrating a configuration of a hydrogen generation apparatus in a third example not part of the invention.

FIG. 20 is a view illustrating a configuration of a hydrogen generation apparatus in a fourth example not part of the invention.

FIG. 21 is a view illustrating a configuration of a hydrogen generation apparatus in a fifth example not part of the invention.

FIG. 22 is a view illustrating a configuration of a hydrogen generation apparatus in a seventh example not part of the invention.

FIG. 23 is a view illustrating a difference in a temperature rise rate during activation when supplying gases having compositions different from each other in the seventh example.

FIG. 24 is a view illustrating a configuration of a hydrogen generation apparatus of a first modification in the seventh example.

FIG. 25 is a view illustrating a configuration of a hydrogen generation apparatus of a second modification of the seventh example.

FIG. 26 is a view illustrating a configuration of a hydrogen generation apparatus of a third modification in the seventh example.

FIG. 27 is a view illustrating a configuration of a hydrogen generation apparatus of a fourth modification in the seventh example.

FIG. 28 is a view illustrating a configuration of a fuel cell system in an eighth example not part of the invention.

FIG. 29 is a view illustrating a configuration of a fuel cell system of a third modification in the eighth example.

FIG. 30 is a view illustrating a configuration of a fuel cell system of a fourth modification in the eighth example.

FIG. 31 is a view illustrating a configuration of a fuel cell system of a fifth modification in the eighth example.

FIG. 32 is a view illustrating a configuration of a fuel cell system of a sixth modification in the eighth example.

FIG. 33 is a view illustrating a configuration of a fuel cell system in a ninth example not part of the invention.

FIG. 34 is a block diagram illustrating an example of a schematic configuration of a hydrogen generation apparatus according to a tenth example not part of the invention.

FIG. 35 is a flowchart illustrating an example of an operation of the hydrogen generation apparatus of the tenth example.

FIG. 36 is a view illustrating an example of a relationship between a difference between an outside air temperature and a reference outside air temperature, and a parameter setting function correction width in accordance with the difference in the tenth example.

FIG. 37 is a view illustrating an example of a relationship between the difference between the outside air temperature and the reference outside air temperature, and a parameter setting function correction magnification in accordance with the difference in the tenth example.

FIG. 38 is a view illustrating an example of a parameter setting function corresponding to each driving control parameter in the tenth example.

FIG. 39 is a view illustrating an example of a relationship between a temperature rise rate and each driving control parameter in the tenth example.

FIG. 40 is a view illustrating an example of a configuration in which an ambient temperature detector is mounted in the hydrogen generation apparatus of the tenth example.

FIG. 41 is a flowchart illustrating an example of an operation of a hydrogen generation apparatus of an eleventh example not part of the invention.

FIG. 42 is a flowchart illustrating an example of an operation of a hydrogen generation apparatus of a twelfth example not part of the invention.

FIG. 43 is a view illustrating an example of a relationship between a difference between an outside air temperature and a reference outside air temperature, and a temperature rise rate correction width in accordance with the difference in the twelfth example.

FIG. 44 is a view illustrating an example of a relationship between the difference between the outside air temperature and the reference outside air temperature, and a temperature rise rate correction magnification in accordance with the difference in the twelfth example.

FIG. 45 is a flowchart illustrating an example of an operation of a hydrogen generation apparatus of a thirteenth example not part of the invention.

FIG. 46 is a flowchart illustrating an example of an operation of a hydrogen generation apparatus of a ninth exemplary embodiment of the invention.

FIG. 47 is a view illustrating a method of determining a predetermined temperature rise rate with respect to an outside temperature variation in a fourteenth example not part of the invention.

FIG. 48 is a flowchart illustrating an example of an operation of a hydrogen generation apparatus of a tenth exemplary embodiment of the invention.

FIG. 49 is a flowchart illustrating an example of an operation of a hydrogen generation apparatus of an eleventh exemplary embodiment of the invention.

FIG. 50 is a flowchart illustrating an example of an operation of a hydrogen generation apparatus of a twelfth exemplary embodiment of the invention.

FIG. 51 is a schematic view illustrating an example of a schematic configuration of a fuel cell system of a fifteenth example not part of the invention.

FIG. 52 is a flowchart illustrating an example of a schematic operation of a fuel cell system of the fifteenth example.

FIG. 53 is a view illustrating a measured concentration of carbon monoxide contained in a combustion exhaust gas when changing an air ratio in a combustor during power generation of the fuel cell system in the fifteenth example.

FIG. 54 is a view illustrating a measured concentration of carbon monoxide contained in the combustion exhaust gas when changing the air ratio in the combustor during power generation of the fuel cell system in the fifteenth example.

FIG. 55 is a view illustrating a relationship between an estimated amount of heat of raw material, and the amount of raw material that is supplied to the reformer with respect to the amount of power generation in the fuel cell in the fifteenth example.

FIG. 56 is a view illustrating a measured concentration of carbon monoxide contained in the combustion exhaust gas when changing the air ratio in the combustor in the fifteenth example.

FIG. 57 is a flowchart illustrating an example of a schematic operation of a fuel cell system of a sixteenth example not part of the invention.

FIG. 58 is a flowchart illustrating an example of a schematic operation of a fuel cell system of a seventeenth example not part of the invention.

FIG. 59 is a flowchart illustrating an example of a schematic operation of a fuel cell system of an eighteenth example not part of the invention.

FIG. 60 is a flowchart illustrating an example of a schematic operation of a fuel cell system of a nineteenth example not part of the invention.

FIG. 61 is a flowchart illustrating an example of a schematic operation of a fuel cell system of a twentieth example not part of the invention.

FIG. 62 is a flowchart illustrating an example of a schematic operation of a fuel cell system of a twenty first example not part of the invention.

FIG. 63 is a flowchart illustrating an example of a schematic operation of a hydrogen generation apparatus of a first modification example in the twenty first example.

FIG. 64 is a flowchart illustrating an example of a schematic operation of a hydrogen generation apparatus of a second modification example in the twenty first example.

FIG. 65 is a flowchart illustrating an example of a schematic operation of a fuel cell system of a twenty second example not part of the invention.

DESCRIPTION OF EMBODIMENTS

Hereinafter, description will be given of exemplary embodiments of the invention with reference to the accompanying drawings.

(First Exemplary Embodiment)

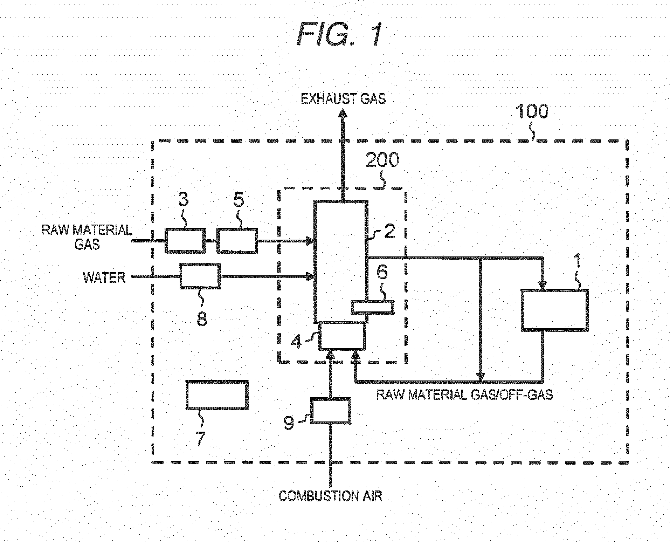

FIG. 1 is a view illustrating a schematic configuration of fuel cell system 100 in a first exemplary embodiment of the invention.

Fuel cell system 100 in the first exemplary embodiment includes fuel cell 1 that performs power generation by using a hydrogen-containing fuel gas and an oxygen-containing oxidant gas which are supplied from hydrogen generation apparatus 200, reformer 2 that reforms a hydrocarbon-containing raw material gas to generates a fuel gas, and raw material gas supply device 3 that supplies the raw material gas to reformer 2. In addition, fuel cell system 100 further includes combustor 4 that combusts at least one of the raw material gas and the fuel gas to heat reformer 2, raw material gas supply amount detector 5 that detects the amount of the raw material gas that is supplied, reforming temperature detector 6 that detects a temperature of reformer 2, and controller 7.

As fuel cell 1, for example, a polymer electrolyte type fuel cell (PEFC) or a solid oxide type fuel cell (SOFC) is used. For example, in a case where the PEFC is used, it is possible to employ a configuration in which CO in a reformed gas discharged from reformer 2 is reduced by using a CO removal unit (not illustrated). As the CO removal unit, for example, a combination of a CO converter and a CO selective oxidizer is exemplified.

As a method of generating hydrogen, here, a water vapor reforming reaction, in which hydrocarbon and water vapor are reformed, is used, and as a reforming catalyst that is filled in reformer 2, a Ru-based catalyst is used. In a case of using the water vapor reforming reaction, water may be supplied to reformer 2 by water supply device 8. In addition, as a reforming reaction, here, the water vapor reforming reaction is exemplified. However, for example, even in an auto-thermal reaction and a partial oxidation reforming reaction, the same effect is obtained.

Reformer 2 is configured to be heated with heat transfer from combustor 4, and reforming temperature detector 6 is provided to detect a heating state during combustion of the raw material gas and the fuel gas. Here, as a temperature detector, a thermocouple is provided to a flow path on an outlet side of a reforming catalyst layer, and measures a temperature of a gas that is discharged from the reforming catalyst.

An outer side of reformer 2 is covered with a thermal insulating material (not illustrated). A disposition position of reforming temperature detector 6 is not limited to the above-described position as long as reforming temperature detector 6 can detect the heating state during combustion of the raw material gas and the fuel gas.

In combustor 4, at least one of the raw material gas and the fuel gas that is the hydrogen-containing gas is combusted. The fuel gas may be an off-gas that contains hydrogen that is not consumed in fuel cell 1, or a fuel gas that is discharged from hydrogen generation apparatus 200. In addition, combustion air may be supplied to combustor 4 by combustion air supply device 9.

Next, description will be given of an operation of fuel cell system 100 in the first exemplary embodiment of the invention.

In addition, the following all operations are performed by controller 7 that controls respective devices of fuel cell system 100 by using control parameters. In this exemplary embodiment, a control parameter group, which corresponds to city gas 13A containing methane as a main component as a raw material gas, is used, and it is assumed that city gas 13A is actually supplied.

Controller 7 controls raw material gas supply device 3 to supply the raw material gas to reformer 2. Here, as raw material gas supply device 3, a buster pump that raises a pressure of the raw material gas can be used. As raw material gas supply amount detector 5, a flowmeter is used, and controller 7 is configured to control raw material gas supply device 3 so that the amount of the raw material gas that is detected becomes a predetermined flow rate (for example, 3.0 NL/min).

Here, in the flowmeter that detects the amount of the raw material gas supplied, typically, when supplying a gas having the same composition as a predetermined gas composition that is set in advance, a detection value (hereinafter, referred to as an "instructed flow rate"), which is a flow rate that is electrically output on the basis of a supply amount, of the amount of the raw material gas supplied, and an actual amount (hereinafter, referred to as an "actual flow rate"), which is an actual flow rate, of the raw material gas supplied are equal to each other in a predetermined accuracy range.

Here, the flowmeter is set in such a manner that the instructed flow rate and the actual flow rate are equal to each other when city gas 13A is supplied. On the other hand, when a predetermined gas and an actually flowing gas are different in a composition, a difference occurs between the instructed flow rate and the actual flow rate. In addition, the raw material gas may be supplied after desulfurizing a sulfur component in the raw material gas through a desulfurizer.

Controller 7 controls water supply device 8 to supply water vapor (hereinafter, referred to as "reforming water") that is necessary for a water vapor reforming reaction to reformer 2.

In this embodiment, a flow rate of the reforming water is supplied in such a manner that S/C, which represents a ratio of water to a carbon number in the raw material gas that is supplied to reformer 2, becomes 2.9.

Here, as the raw material gas, a gas that is city gas 13A is used, and thus a ratio of a carbon number in 1 mole of the raw material gas is "1.17", and from a calculation expression of $(2.9 \times 1.17 \times 18 \times 3.0 \div 22.4)$, water is supplied in such a manner that the amount thereof becomes 8.2 cc/min.

The raw material gas and the reforming water which are supplied to reformer 2 are reformed to a hydrogen-containing gas through a water vapor reforming reaction under the presence of a reforming catalyst inside reformer 2.

Controller 7 supplies the hydrogen-containing gas to an anode of fuel cell 1 as the fuel gas of fuel cell 1. In fuel cell 1, the fuel gas that is supplied to the anode, and power generation air that is supplied to a cathode electrochemically react with each other, and thus electricity, heat, and water are generated.

Electricity that is obtained in fuel cell 1 is supplied to a power load (not illustrated) and is used therein. On the other hand, heat that is generated in accordance with the power generation is recovered by a heat recovery unit (not illustrated), is supplied to a thermal load, and is used therein for various usages. An unreacted fuel gas (hereinafter, referred to as an "off-gas"), which is not consumed at the inside of fuel cell 1, is supplied to combustor 4.

Controller 7 controls combustion air supply device 9 to supply combustion air that is necessary to combust the off-gas supplied to combustor 4. In combustor 4, the off-gas and the combustion air that is supplied from combustion air supply device 9 are mixed and combusted so as to supply heat necessary for the water vapor reforming reaction in reformer 2. Here, a flow rate of the combustion air is controlled in such a manner that an air ratio indicating a supply air flow rate to a theoretical air flow rate becomes "1.7".

Controller 7 calculates the amount of hydrogen, which is generated, from a hydrocarbon conversation rate that is calculated from the raw material flow rate that is detected by raw material gas supply amount detector 5, and a temperature that is detected by reforming temperature detector 6, and gives an instruction for the amount of power generation of fuel cell 1 so that power generation can be performed in a predetermined hydrogen usage rate range.

Here, power generation is performed in a state in which "750 W" is instructed as an instructed amount of power generation so that the hydrogen usage rate becomes approximately 80%. Here, the hydrogen usage rate may be set to be approximately 70% to 85% for stable driving. At this time, a temperature that is detected by reforming temperature detector 6 becomes 620°C.

Next, description will be given of the temperature of reformer 2 of fuel cell system 100 in the first exemplary embodiment of the invention.

It is necessary for the temperature of reformer 2 to be maintained to a predetermined temperature so as to obtain hydrogen necessary for power generation of fuel cell 1 by promoting the water vapor reforming reaction. When a predetermined raw material gas is supplied, a difference in the reforming temperature has an effect on a conversion rate of the raw material gas, that is, the amount of hydrogen generated.

The amount of hydrogen generated has an effect on the amount of power generation and the hydrogen usage rate in fuel cell 1, and these are important parameters for stable driving of fuel cell system 100.

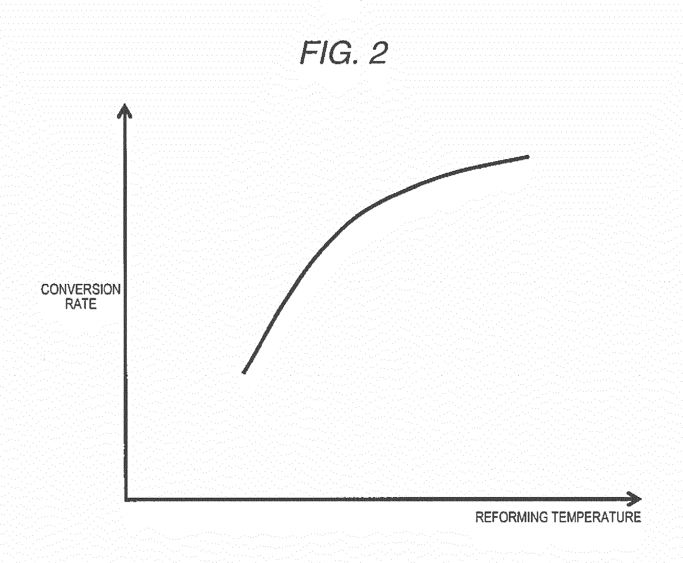

FIG. 2 is a view illustrating a relationship between the reforming temperature and the conversion rate of hydrocarbon that is a raw material gas in the first exemplary embodiment of the invention.

When the reforming temperature is equal to or higher than a predetermined temperature, a useful conversion rate is obtained, but when the reforming temperature is lower than the predetermined temperature, the conversion rate rapidly decreases. Accordingly, when the reforming temperature is maintained to a temperature that is equal to or higher than the predetermined temperature, it is possible to efficiently drive fuel cell system 100.

Here, for example, in a case where sufficient heat is not capable of being supplied to reformer 2, the temperature of reformer 2 is lowered. When the temperature of reformer 2 is lower than a temperature that is appropriate for the water vapor reforming reaction, the water vapor reforming reaction, which is an endothermic reaction, does not progress, and thus the amount of hydrogen generated decreases. As a result, hydrogen is not supplied in an amount necessary for power generation of fuel cell 1. Accordingly, power generation efficiency of fuel cell 1 decreases, and there is a possibility that power generation may be stopped.

In addition, when the amount of hydrogen that is generated in hydrogen generation apparatus 200 decreases under conditions in which the amount of hydrogen that is consumed in fuel cell 1 is constant, the amount of heat that is returned to hydrogen generation apparatus 200 as the off-gas decreases, and thus the temperature of reformer 2 may be further lowered. In contrast, when excessive heat is supplied to reformer 2, the temperature of reformer 2 is raised.

Here, examples of a main cause for a deviation in the reforming temperature from the predetermined temperature include a difference in the amount of heat per unit volume of the raw material gas, and a difference in a detection value, which is detected in raw material gas supply amount detector 5, of the amount of the raw material gas supplied.

With regard to the former, for example, in a case where the composition of the raw material gas that is supplied to reformer 2 is changed, and thus the amount of heat per unit volume of the raw material gas varies, even when the same volumetric flow rate as that before the amount of heat of the raw material gas varies is supplied to raw material gas supply device 3, the amount of heat supplied varies.

That is, when the raw material gas is supplied in a predetermined amount, in a case where a gas with a low amount of heat is supplied, the reforming temperature is lowered. In contrast, in a case where a gas with a high amount of heat is supplied, in a predetermined amount of power generation with respect to the predetermined amount of the raw material gas supplied, the amount of heat of a gas that is combusted as an off-gas becomes excessive, and this leads to rising of the reforming temperature.

With regard to the latter, when a composition of the raw material gas is changed from an assumed composition of the flowmeter depending on the kind or the principle of raw material gas supply amount detector 5, a difference occurs between a flow rate that is detected by the detector and a flow rate that is actually supplied.

Therefore, even when raw material gas supply amount detector 5 recognizes that a predetermined flow rate of raw material gas is supplied, a flow rate of the raw material gas that is actually supplied may be excessive or too small. In addition, in a case where the amount of water supplied, the flow rate of the combustion air, and the amount of power generation are set on the basis of the flow rate of the raw material gas which is incorrectly recognized by raw material gas supply amount detector 5, it is difficult to maintain the reforming temperature to a predetermined value, and thus it is difficult to perform stable driving.

Next, description will be given of a characteristic operation of fuel cell system 100 in the first exemplary embodiment of the invention.

"Determining Method Based on Reforming Temperature"

In a case where the raw material gas is supplied in such a manner that the amount, which is detected by raw material gas supply amount detector 5, of the raw material gas supplied becomes a predetermined value, controller 7 sets a control parameter group on the basis of the temperature that is detected by reforming temperature detector 6.

Here, with regard to the amount of heat of a gas that is supplied as the raw material gas, a reforming temperature at that time is given as the function of the amount of heat, and the control parameter group can be given as the function of the amount of heat and the reforming temperature. That is, the control parameter can be set by estimating the amount of heat of the raw material gas from the reforming temperature during driving under predetermined conditions.

More specifically, for example, it is assumed that city gas 13A is actually supplied by using a control parameter group corresponding to city gas 13A. In this case, in a case where the amount, which is detected by raw material gas supply amount detector 5, of the raw material gas supplied is set to 3.0 NL/min, the amount of the raw material gas that is actually supplied also becomes 3.0 NL/min in a predetermined accuracy range.

At this time, when power of 750 W is generated, an off-gas that is not consumed in fuel cell 1 is combusted in combustor 4 and heats reformer 2 with a predetermined amount of heat, and thus the reforming temperature, that is, the temperature that is detected by reforming temperature detector 6 becomes approximately 620°C.

On the other hand, assumption is made for a case where a raw material gas composed of 100% methane with the amount of heat lower than that of city gas 13A is supplied by using the control parameter group corresponding to city gas 13A.

In this case, the amount of heat of the raw material gas is smaller than that of city gas 13A. Accordingly, in a case where the amount of the raw material gas supplied is set to 3.0 NL/min, and the same power of 750W is generated as an output of fuel cell 1, the amount of heat that is returned to reformer 2 as the off-gas decreases. According to this, reformer 2 is not sufficiently heated, and thus the reforming temperature becomes approximately 600°C that is lower than 620°C.

That is, it is possible to estimate the amount of heat of the raw material gas supplied from the reforming temperature that is measured, and thus it is possible to set control parameters from the reforming temperature. Here, with regard to the amount of heat of the raw material gas supplied, and the reforming temperature that is driven from the amount of heat, control parameters which are set may be given as a continuous function.

"Method of Setting Control Parameter Group"

As a control parameter group for stable driving of fuel cell 1, controller 7 sets control parameters including at least one of the amount of the raw material gas that is supplied by raw material gas supply device 3, the amount of water that is supplied to reformer 2, the amount of the combustion air that is supplied to combustor 4, and the amount of power generation of fuel cell 1. In addition, when changing the control parameters in a composite manner, more stable driving becomes possible, and thus a significant effect is obtained.

Next, description will be given of a method of setting respective control parameters in the control parameter group.

First, description will be given of a method of setting the amount of raw material gas supplied.

In a case where driving is performed with control parameters corresponding to city gas 13A, when 750 W is generated and the usage rate of hydrogen in fuel cell 1 is set to 80%, the amount of the raw material gas supplied becomes approximately 3.0 NL/min.

On the other hand, in a case of supplying a gas composed of 100% methane that is a gas with the amount of heat less than that of city gas 13A, it is necessary to supply a relatively large amount of raw material gas so as to generate 750 W. The composition of hydrocarbon that is the raw material gas, and the amount of heat generation have a correlation.

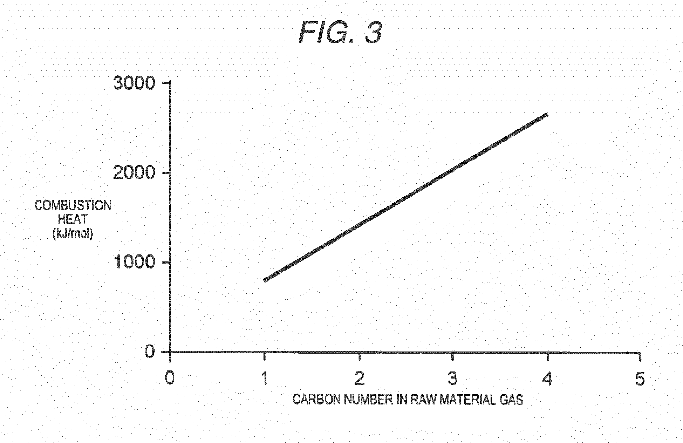

FIG. 3 is a view illustrating a correlation between a carbon number in alkane and combustion heat in the first exemplary embodiment of the invention.

As illustrated in FIG. 3, basically, when a carbon number in raw material increases, combustion heat (the amount of heat generation) per unit volume of the raw material increases, and thus the combustion heat (the amount of heat generation) and the carbon number have an approximately proportional relationship. That is, when a raw material gas is supplied in the same amount, the greater the carbon number in the raw material gas is, the greater the amount of heat that is supplied, and the higher the temperature of reformer 2 becomes.

That is, the amount of heat of the raw material gas that is supplied is estimated from the reforming temperature during supply of a predetermined amount of raw material gas, and the amount of the raw material gas supplied, which is one of the parameters of the control parameter group, can be set on the basis of the estimation result.

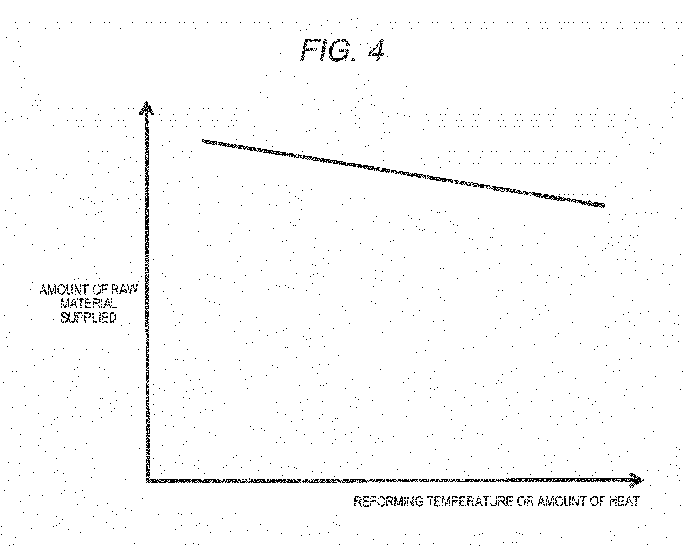

FIG. 4 is a view illustrating a setting example of the amount of the raw material gas supplied with respect to the reforming temperature in the first exemplary embodiment of the invention.

More specifically, for example, as illustrated in FIG. 4, as the reforming temperature that is detected is lower, that is, as the amount of heat of the raw material gas supplied is smaller, setting is made to increase the amount of the raw material gas supplied, and thus stable driving of fuel cell system 100 becomes possible.

Here, a function, in which the amount of the raw material gas supplied decreases proportionally with respect to the rise of the reforming temperature, is selected. This function is appropriately selected, and it is preferable that the setting is made to increase the amount of the raw material gas supplied as the amount of heat of the raw material gas is smaller and the reforming temperature is lower.

Next, description will be given of a method of setting the amount of water supplied when changing the control parameter group.

Here, assumption is made for a case where driving is performed through supply of 100% methane by using control parameters corresponding to city gas 13A. Here, the number of moles of carbon in 1 mole of raw material gas that is city gas 13A is 1.17, and the number of moles of carbon in 100% methane is 1.0, and thus a ratio therebetwen is $1.0 \div 1.17 = 0.85$.

As described above, the composition of hydrocarbon that is a raw material gas and the amount of heat generation have a correlation. In other words, in a case where the amount of heat of the raw material gas is smaller, and the reforming temperature is lower, it is preferable to set the control parameters so as to increase the amount of the raw material gas supplied. In this case, a case where the ratio of a carbon number in the raw material gas is relatively small is implied, and when the amount of water supplied is set to be constant, the carbon number is small and the amount of water vapor is constant. Accordingly, actual S/C relatively increases in comparison to S/C that is set.

Similarly, in a case where setting is made in such a manner that the amount of heat of the raw material gas increases and the amount of the raw material gas supplied degreases, a case where the ratio of the carbon number in the raw material gas is relatively great is implied. In this case, when the amount of water supplied is set to be constant, the carbon number is great and the amount of water vapor is constant, and thus the actual S/C relatively decreases in comparison to the S/C that is set.

Specifically, in a case where the S/C that is set is, for example, 2.9, and the carbon number in the raw material becomes 0.85 times the carbon number that is assumed, if the amount of water vapor is set to be constant, the actual S/C becomes approximately 3.4.

Here, the water vapor reforming reaction is an endothermic reaction, and the S/C greatly contributes to reaction heat of the reaction. For example, when the S/C increases, a large amount of heat is necessary to maintain the reforming temperature to a constant temperature, or in a case where the amount of heat that is supplied is constant, the reforming temperature is lowered.

That is, the amount of heat of the raw material gas that is supplied is estimated from the reforming temperature during supply of a predetermined amount of raw material gas, and the amount, which is one of the parameters of the control parameter group, of water supplied can be set on the basis of the estimation result.

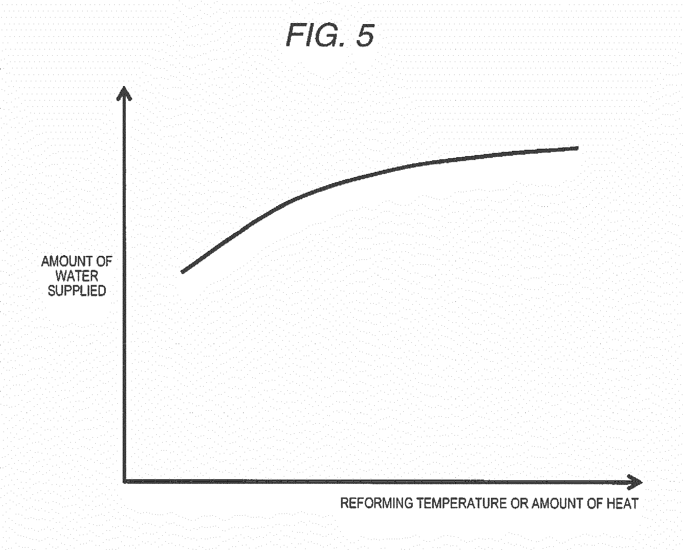

FIG. 5 is a view illustrating a setting example of the amount of water supplied with respect to the reforming temperature in the first exemplary embodiment of the invention.

More specifically, for example, as illustrated in FIG. 5, as the reforming temperature that is detected is lower, that is, as the amount of heat of the raw material gas supplied is smaller, setting is made to decrease the amount of water supplied, and thus stable driving of fuel cell system 100 becomes possible. Here, a high order function, in which the amount of water supplied increases with respect to the rise of the reforming temperature, is selected. This function is appropriately selected, and it is preferable that the setting is made to decrease the amount of water supplied as the amount of heat of the raw material gas is smaller and the reforming temperature is lower.

According to this configuration, the amount of water supplied, particularly, the actual S/C different from an apparent value is maintained in a predetermined range, and thus stable driving of fuel cell system 100 becomes possible in an efficient manner.

Next, description will be given of a method of setting the amount of combustion air supplied when changing the control parameter group.

The number of hydrogen atoms in one molecule of hydrocarbon that is the raw material gas increases as the carbon number increases. For example, in a case of methane that is alkane in which the carbon number is 1, a hydrogen number in one molecule is 4. For example, in a case of propane that is alkane in which the carbon number is 3, the hydrogen number in one molecule is 8. That is, when the raw material gas is supplied in the same amount, as the carbon number in the raw material gas is greater, the number of hydrogen molecules which are supplied is greater, and the amount of heat is greater as described above. Accordingly, the reforming temperature in a predetermined amount of the raw material gas supplied becomes higher.

In other words, in a case where the control parameters are set in such a manner that the amount of heat of the raw material gas decreases, and the amount of raw material gas supplied increases, a case where the hydrogen number in the raw material gas is relatively small is implied, and thus the number of molecules of hydrogen generated also decreases. In this case, when the amount of the combustion air that is supplied is set to be constant, a combustion air ratio $\lambda$, which is a ratio of a supply air flow rate to a combustion air flow rate necessary for complete combustion, relatively increases.

Similarly, in a case where the control parameters are set in such a manner that the amount of heat of the raw material gas increases, and the amount of the raw material gas supplied decreases, a case where the hydrogen number in the raw material gas is relatively great is implied, and thus the number of molecules of hydrogen generated also increases. In this case, when the amount of the combustion air that is supplied is set to be constant, the combustion air ratio $\lambda$ relatively decreases.

Here, the combustion exhaust gas is discharged to the outside of the system of fuel cell system 100. However, when flow rate of the combustion air or the combustion air ratio $\lambda$ increases, the amount of heat that is discharged to the outside of the system increases, and thus in a case where the amount of heat supplied is constant, the reforming temperature is lowered. That is, when the combustion air ratio $\lambda$ greatly varies due to correction of the raw material gas, stable driving of fuel cell system 100 becomes difficult.

For example, in a case where the amount of heat of the raw material gas is small, if the amount of the combustion air supplied is not corrected, the amount of heat is low and $\lambda$ is great, and thus the reforming temperature is less likely to rise. Accordingly, stable driving of fuel cell system 100 becomes difficult or efficiency decreases.

That is, the amount of heat of the raw material gas that is supplied is estimated from the reforming temperature during supply of a predetermined amount of raw material gas, and the amount of the combustion air supplied, which is one of the parameters of the control parameter group, can be set on the basis of the estimation result.

More specifically, for example, as the reforming temperature that is detected is lower, that is, as the amount of heat of the raw material gas supplied is smaller, setting is made to decrease the amount of the combustion air supplied, and thus stable driving of fuel cell system 100 becomes possible. It is preferable that a combustion air supply amount function that is set is appropriately selected with respect to the reforming temperature, and it is preferable that the setting is made to reduce the amount of that combustion air supplied as the amount of heat of the raw material gas is smaller and the reforming temperature is lower.

According to this configuration, driving is possible in a state in which the amount of the combustion air supplied, particularly, the combustion air ratio $\lambda$ is in a predetermined range, and thus stable driving of fuel cell system 100 with high efficiency becomes possible.

Next, description will be given of a method of setting the amount of power generation when changing the control parameter group.

In a case where driving is performed with a control parameter group that is a control parameter group corresponding to city gas 13A, it is assumed that when the amount of the raw material gas supplied is approximately 3.0 NL/min, and the hydrogen usage rate in fuel cell 1 is set to 80%, power generation of 750 W is possible.

Here, in a case of supplying a gas with the amount of heat less than that of city gas 13A, for example, a gas composed of 20% nitrogen and 80% methane, it is necessary to supply a relatively large amount of raw material gas so as to generate 750 W. When increasing the raw material gas by an amount that is appropriate for the amount of heat that is reduced, it is possible to perform approximately the same power generation. However, a large amount of raw material gas may not be supplied due to circumstances in devices which are used in fuel cell system 100.

For example, a predetermined supply upper limit is present in a constituent device such as a buster pump that is used as raw material gas supply device 3. In addition, for example, the amount of gas, which is capable of being coped with, is present in the reforming catalyst that is filled in reformer 2. In addition, when an excessive amount of gas is supplied, a pressure loss increases in a pipe and the like, and thus stable driving becomes difficult.

Accordingly, controller 7 may change the amount of power generation in the control parameter group on the basis of the reforming temperature. Specifically, in a case where driving is performed with a predetermined control parameter group, when the reforming temperature is 580°C, setting may be made to lower the amount of power generation to 700 W.

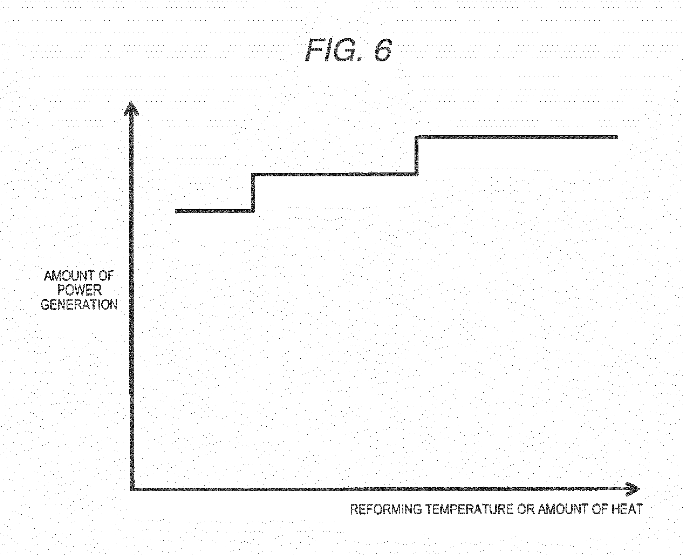

FIG. 6 is a view illustrating a setting example of the amount of power generation with respect to the reforming temperature in the first exemplary embodiment of the invention.

FIG. 6 illustrates a relationship with the reforming temperature (corresponding to the amount of heat of the raw material gas) in an example of the case of the amount of power generation as an example of parameters which are set.

The greater the amount of heat of the raw material gas is, the greater the number of hydrogen molecules included in unit volume of the raw material gas is. Accordingly, more stable power generation becomes possible. Here, a step-like function, in which the amount of power generation increases with respect to an increase in the reforming temperature, is selected.

This function is appropriately selected, and it is preferable that setting is made to increase the amount of power generation as the amount of heat of the raw material gas is greater and the reforming temperature is higher. That is, in a case where the amount of heat of the raw material gas is high, and the reforming temperature is high, even when further increasing the amount of power generation, stable power generation becomes possible.

In addition, in FIG. 2, a relationship between the reforming temperature and the conversion rate is illustrated. When the reforming temperature is equal to or higher than a predetermined temperature, a useful conversion rate is obtained, but when the reforming temperature is lower than the predetermined temperature, the conversion rate rapidly decreases. Therefore, when the reforming temperature is maintained to be equal to or higher than the predetermined temperature, it is possible to effectively drive fuel cell system 100.

In the configuration of fuel cell system 100 that is used, in a case where a variation in the amount of heat occurs in a degree which is difficult to cope with only by an increase and a decrease in the amount of the raw material gas supplied, changing of the amount of power generation is particularly useful. In addition, the amount of the raw material gas supplied, the amount of water supplied, and the amount of the combustion air supplied may be changed in combination with each other, or may be individually changed.

According to this configuration, it is possible to perform stable driving of fuel cell system 100 by maintaining the reforming temperature in a predetermined range regardless of the composition of the raw material gas. In addition, one fuel cell system 100 can cope with raw material gases with the amount of heat in a wide range, and thus it is possible to realize an apparatus with high versatility.

(Second Exemplary Embodiment)

Next, description will be given of fuel cell system 100 in a second exemplary embodiment of the invention.

In this exemplary embodiment, description will be given to a configuration in which a mass flowmeter is provided as raw material gas supply amount detector 5 in the first exemplary embodiment. The same reference numerals will be given to portions which are the same as or equivalent to those in the first exemplary embodiment illustrated in FIG. 1, and detailed description thereof will be omitted.

Typically, the mass flowmeter has a characteristic capable of detecting a flow rate with high accuracy in a wide flow rate range regardless of a pressure and a temperature. In addition, the amount of heat of a gas that is supplied, and an instructed flow rate have a correlation, and thus the mass flowmeter is particularly useful in fuel cell system 100 with focus given to the amount of heat that is supplied.

As setting of the mass flowmeter, here, a control parameter group corresponding to city gas 13A is set. That is, in a case where the raw material gas that is actually supplied is 13A, the instructed flow rate and an actual flow rate are equal to each other. On the other hand, when the raw material gas that is actually supplied has a different composition, the actual flow rate and the instructed flow rate deviate from each other depending on a component thereof.

On the other hand, in the mass flowmeter, the amount of heat and the instructed flow rate have a correlation, but when a gas having a composition different from a corrected gas composition is supplied, it is difficult to constantly maintain the amount of heat.

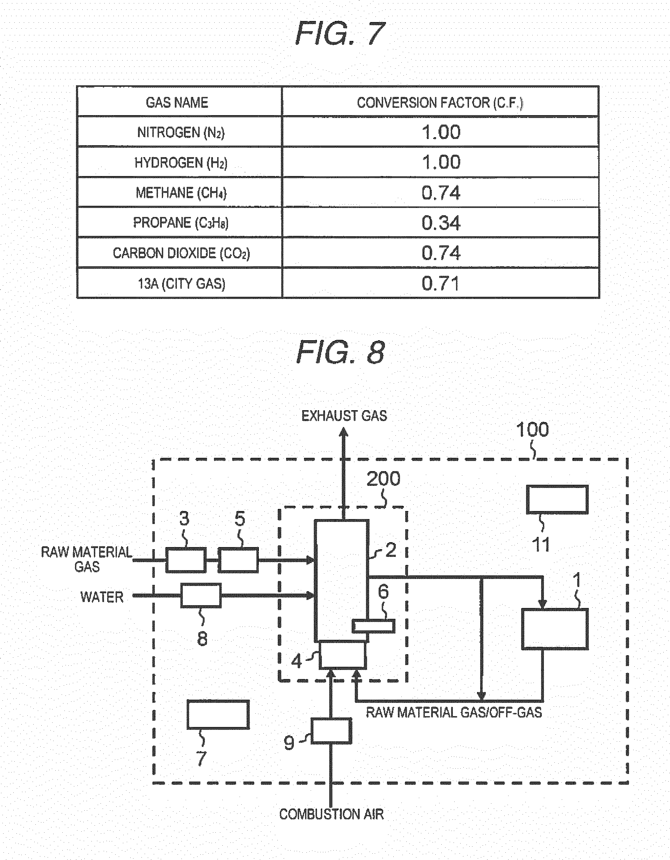

FIG. 7 is a view illustrating a typical value that is an example of a conversion factor (C.F.) for each gas composition in the mass flowmeter in the second exemplary embodiment of the invention.

In a case of a mixed gas, the value can be calculated by adding values, which are obtained by multiplying C.F. in a single gas and a mixing ratio thereof, to each other.

Here, when a corrected (designed) gas composition and a composition of a gas that is actually supplied are different from each other, the actual flow rate in the mass flowmeter is expressed by the following expression.

$$\text{(Actual flow rate)} = \text{(Instructed flow rate)} \times \text{(C.F. in an actual composition)} \div \text{(C.F. in a correction gas)}$$

Here, for example, assumption is made for a case where a gas composed of 100% methane (the number of moles of C in 1 mole of raw material gas: 1.0) is supplied by using the mass flowmeter that is corrected with 13A (the number of moles of C in one mole of raw material gas: 1.17) that is a representative gas of the city gas.

As can be seen from FIG. 7, C.F. in an actual composition, that is, C.F. of methane is 0.74. In addition, C.F. in the correction gas, that is, C.F. of 13A is 0.71.

When activating fuel cell system 100 by supplying a gas in such a manner that a value recognized by the mass flowmeter becomes a predetermined value F0, from the above-described values, a flow rate F' of a gas that is actually supplied is expressed by the following expression.

$$F'=F0 \times 0.74 \div 0.71=F0 \times 1.05$$

That is, the gas is actually supplied in a flow rate that is 1.05 times a flow rate that is detected by the mass flowmeter.

On the other hand, a ratio C' of the number of moles of carbon in the raw material gas becomes 0.85 from a calculation formula of $(1.0 \div 1.17)$. As described above, the number of moles of carbon has a relationship proportional to the amount of heat as illustrated in FIG. 3, and thus the total amount of heat Q that is supplied may approximate to a product of a carbon number C and a flow rate F. That is, when a gas composed of 100% methane is supplied to the mass flowmeter that is corrected with city gas 13A, the amount of heat Q' of a gas that is actually supplied is expressed by the following expression.

$$Q' \cong C' \times F'=0.85 \times 1.05 \times Q=0.89 \times Q$$

That is, the amount of heat that is actually supplied becomes 0.89 times the amount of heat of 13A, and thus the reforming temperature is lowered.

In a case of using the mass flowmeter, the amount of the heat and the instructed flow rate have a proportional relationship. Accordingly, for example, in a case of supplying a gas with the amount of heat lower than that of the correction gas, the amount of heat per unit volume becomes 0.85 times in the previous example, but the actual flow rate becomes 1.05 times the instructed flow rate, and thus the amount of heat that is supplied becomes 0.89 times greater than 0.85 times. Accordingly, it can be said that this case is useful.

However, if the above-described difference is great, excess or deficiency occurs in the raw material flow rate, and thus excess or deficiency occurs in the amount of hydrogen generated, or excess or deficiency occurs in the amount of heat of the raw material gas. Accordingly, it is difficult to maintain reformer 2 to a predetermined temperature, and thus stable driving of fuel cell system 100 becomes difficult.

Next, description will be given of a characteristic operation in the second exemplary embodiment of the invention, but description will be given of only a difference from the first exemplary embodiment, and the others are set to be the same as in the first exemplary embodiment.

First, controller 7 drives fuel cell system 100 with a first control parameter group. At this time, in a case where the raw material gas is supplied in such a manner that the amount, which is detected by raw material gas supply amount detector 5, of the raw material gas supplied, becomes a predetermined value (in this exemplary embodiment, 3.0 NL/min), the control parameter group is set on the basis of the temperature detected by reforming temperature detector 6.

Specifically, during driving of fuel cell system 100 with the first control parameter group, in a case where reformer 2 is not sufficiently heated and the temperature detected by reforming temperature detector 6 is 600°C lower than a predetermined temperature of 620°C, setting of the mass flowmeter may be changed to set a second control parameter group different from the first control parameter group.

In addition, a relationship between the instructed flow rate and the actual flow rate may be corrected by changing a gas species of the mass flowmeter, which is set, that is, a value of a conversion factor, or the amount of the raw material gas supplied may be changed by setting a target value of the amount of the raw material gas supplied.

According to this configuration, even in a case where the raw material gas has any composition such as a case of installation in an area in which a gas composition is different from a corrected gas composition of the mass flowmeter, and a case of a seasonal composition variation, it is possible to set the control parameter group from the reforming temperature during supply of a predetermined raw material gas.

In addition, it is possible to maintain the amount of the raw material gas that is actually supplied, that is, the amount of heat to a predetermined value by changing the control parameter group regardless of the apparent amount, which is detected by the mass flowmeter, of the raw material supplied, and thus it is possible to perform stable driving of fuel cell system 100. In addition, it is possible to drive hydrogen generation apparatus 200 under wide conditions in a more accurate manner by using the mass flowmeter.

(Third Exemplary Embodiment)

Next, description will be given of fuel cell system 100 in a third exemplary embodiment of the invention.

FIG. 8 is a view illustrating a configuration of fuel cell system 100 in the third exemplary embodiment of the invention.

The same reference numerals will be given to portions which are the same as or equivalent to those in the first exemplary embodiment illustrated in FIG. 1, and detailed description thereof will be omitted. This exemplary embodiment employs a configuration in which storage unit 11 that stores an optimal control parameter group is provided.

Next, description will be given of a characteristic operation in the third exemplary embodiment of the invention, but description will be given of only a difference from the first exemplary embodiment, and the others are set to be the same as in the first exemplary embodiment.

Controller 7 performs control of allowing the subsequent activation and driving to be performed on the basis of the control parameter group that is stored in storage unit 11.

As described above, activation and driving are performed on the basis of the optimal control parameter group that is determined from the reforming temperature and is selected, more stable driving becomes possible during the subsequent activation. In addition, in a case where three or more control parameter groups are set, even in a case where optimization is not made through selection of a first control parameter, it is possible to sequentially select an optimal parameter group, and thus it is possible to perform more stable driving of fuel cell system 100.

In addition, correction of parameters may be made for each activation of fuel cell system 100 and corrected parameters may be stored for each activation. In addition, the correction may be made at a predetermined timing, and the corrected parameters may be stored at the predetermined timing.

According to this configuration, even when fuel cell system 100 is installed in an area in which a gas composition is different from the corrected gas composition, stable driving is easily possible in conformity to an actually supplied gas. In addition, even when a seasonal variation in a gas composition and a variation in gas quality over a long period of time occur, it is possible to stably drive fuel cell system 100 over a long period of time.

(Fourth Exemplary Embodiment)

Next, description will be given of fuel cell system 100 in a fourth exemplary embodiment of the invention.

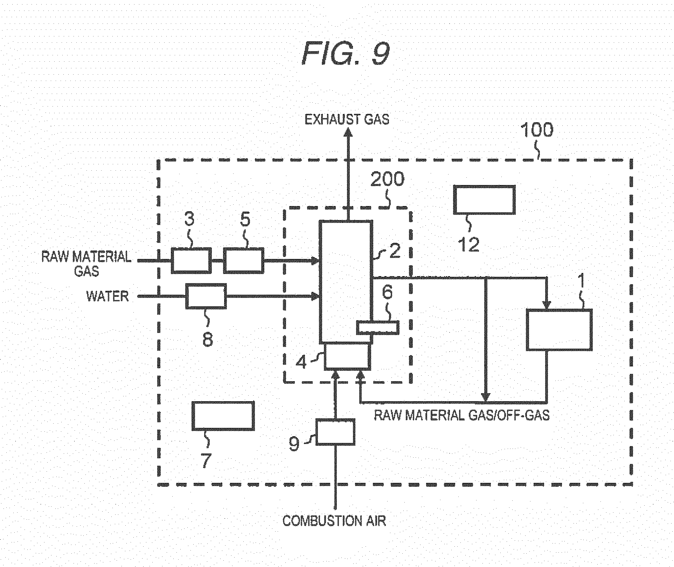

FIG. 9 is a view illustrating a configuration of fuel cell system 100 in the fourth exemplary embodiment of the invention.

The same reference numerals will be given to portions which are the same as or equivalent to those in the first exemplary embodiment illustrated in FIG. 1, and detailed description thereof will be omitted. This exemplary embodiment employs a configuration in which ambient temperature detector 12 that detects an ambient temperature of fuel cell system 100 is provided.

Next, description will be given of a characteristic operation in the fourth exemplary embodiment of the invention, but description will be given of only a difference from the first exemplary embodiment, and the others are set to be the same as in the first exemplary embodiment.

Controller 7 corrects a correlation between the temperature detected by reforming temperature detector 6 and the control parameter group of fuel cell system 100 on the basis of a temperature detected by ambient temperature detector 12.

A temperature rise due to combustion contributes to the temperature of reformer 2, and a temperature variation rate of reformer 2 may vary due to heat dissipation from reformer 2 and the temperature of the raw material gas that is supplied. The amount of heat dissipation depends on a difference between a surface temperature of a device (heat insulating material) and an ambient temperature thereof. That is, for example, when the ambient temperature is low, the amount of heat dissipation relatively increases, and the temperature of the raw material gas and the combustion air, which are supplied, is lowered, and thus the temperature of reformer 2 is lowered.

Accordingly, when the reforming temperature is corrected on the basis of the ambient temperature, it is possible to more accurately measure the reforming temperature, which is caused by the amount of heat of the raw material gas, by reforming temperature detector 6.

According to this configuration, it is possible to more accurately calculate the temperature of reformer 2 which is caused by the amount of heat of the raw material gas regardless of the ambient temperature, and thus the amount of hydrogen generation is maintained to a predetermined value. As a result, it is possible to realize fuel cell system 100 in which stable driving becomes possible.

(Fifth Exemplary Embodiment)

Next, description will be given of a fuel cell system in a fifth exemplary embodiment of the invention. A configuration can be made to be the same as the configuration of fuel cell system 100 in the first exemplary embodiment of the invention, and thus detailed description thereof will be omitted.

Next, description will be given of a characteristic operation in the fifth exemplary embodiment of the invention, but description will be given of only a difference from the first exemplary embodiment, and the others are set to be the same as in the first exemplary embodiment.

Controller 7 corrects a correlation between the temperature detected by reforming temperature detector 6 and the control parameter group of fuel cell 1 on the basis of driving time of reformer 2. In addition, the driving time of reformer 2 may be calculated by using power generation time of fuel cell 1, or may be calculated by using combustion time of combustor 4.

Temperature rise due to combustion contributes to the temperature of reformer 2, and the temperature may vary, for example, in accordance with deterioration of a catalyst. The water vapor reforming reaction is performed by the catalyst. However, typically, the catalyst deteriorates with the passage of time, and thus a reaction rate tends to be slow. When the reaction rate varies, the amount of temperature variation due to reaction heat also varies. Accordingly, even when a raw material gas with the same amount of heat is supplied without being changed with the passage of time, the temperature of reformer 2 may vary with the passage of time.

In addition, with regard to fuel cell 1, typically, a voltage tends to drop with the passage of the power generation time. However, it is necessary to consume a lot of currents so as to maintain the same amount of power generation (current×voltage) at the voltage that drops. In fuel cell 1, a current value, that is, the amount of hydrogen that is consumed increases. Accordingly, in the same amount of hydrogen that is generated, the amount of heat of the off-gas decreases, and thus the reforming temperature is lowered.

Accordingly, when correcting the reforming temperature on the basis of the driving time of reformer 2, it is possible to more accurately measure the reforming temperature, which is caused by the amount of heat of the raw material gas, by reforming temperature detector 6.

According to this configuration, it is possible to more accurately calculate the temperature of reformer 2 which is caused by the amount of heat of the raw material gas regardless of deterioration with the passage of driving time, and the like, and thus it is possible to realize fuel cell system 100 in which stable driving is possible.

(Sixth Exemplary Embodiment)

Next, description will be given of a fuel cell system in a sixth exemplary embodiment of the invention. A configuration of this exemplary embodiment can be made to be the same as the configuration of fuel cell system 100 in the first exemplary embodiment of the invention, and thus detailed description thereof will be omitted.

Next, description will be given of a characteristic operation in this exemplary embodiment.

Fuel cell system 100 includes any one of the upper limit and the lower limit, which are in a predetermined range, as the amount, which is detected by raw material gas supply amount detector 5, of the raw material gas supplied. In this control range of the amount of the raw material gas supplied, controller 7 controls the amount of the raw material gas supplied in such a manner that the temperature detected by reforming temperature detector 6 becomes a predetermined temperature.

As a method of controlling the amount of the raw material gas supplied, feedback control may be used. Controller 7 controls raw material gas supply device 3 to adjust the amount of the raw material supplied. When the amount of the raw material supplied is controlled, it is possible to adjust the supply amount of heat of a combustible gas that is supplied to combustor 4, and thus it is possible to adjust the supply amount of heat that is supplied from combustor 4 to reformer 2. Accordingly, the reforming temperature can be adjusted.

Here, for example, in a case where the raw material gas composed of 100% methane is supplied by using the first control parameter group corresponding to city gas 13A, controller 7 increases the amount of the raw material gas supplied so as to maintain the reforming temperature to a predetermined temperature.

However, when the predetermined amount of the raw material gas supplied reaches the upper limit, it is difficult to increase the amount no more, and thus the reforming temperature is lowered. Accordingly, controller 7 sets the control parameter group on the basis of the temperature detected by reforming temperature detector 6.

Here, it is preferable that upper and lower limit thresholds of the amount of raw material supplied are set in consideration of the margin on the basis of the flow rate of the raw material gas which is necessary to maintain the reforming temperature when using the raw material gas having a main composition that is assumed, and the thresholds of the amount of the raw material supplied may be values which are changed for each control parameter group.

According to this configuration, with regard to each control parameter group, when a gas having a composition different from a corresponding control parameter group is supplied while maintaining the reforming temperature in a predetermined range, the control parameter group is changed on the basis of the reforming temperature, and thus stable driving of fuel cell system 100 becomes possible.

(Seventh Exemplary Embodiment)

Next, description will be given of fuel cell system 100 in a seventh exemplary embodiment of the invention.

A configuration of this exemplary embodiment can be made to be the same as the configuration of fuel cell system 100 in the first exemplary embodiment of the invention, and thus detailed description thereof will be omitted.

Next, description will be given of a characteristic operation in this exemplary embodiment.

In this exemplary embodiment, fuel cell system 100 includes a plurality of control parameter groups which correspond to a range of the amount of heat of a predetermined raw material gas.

"Determination Method Based on Reforming Temperature"

Controller 7 sets a control parameter group on the basis of the temperature detected by reforming temperature detector 6 in a case where the raw material gas is supplied in such a manner that the amount, which is detected by raw material gas supply amount detector 5, of the raw material gas supplied, becomes a predetermined value.

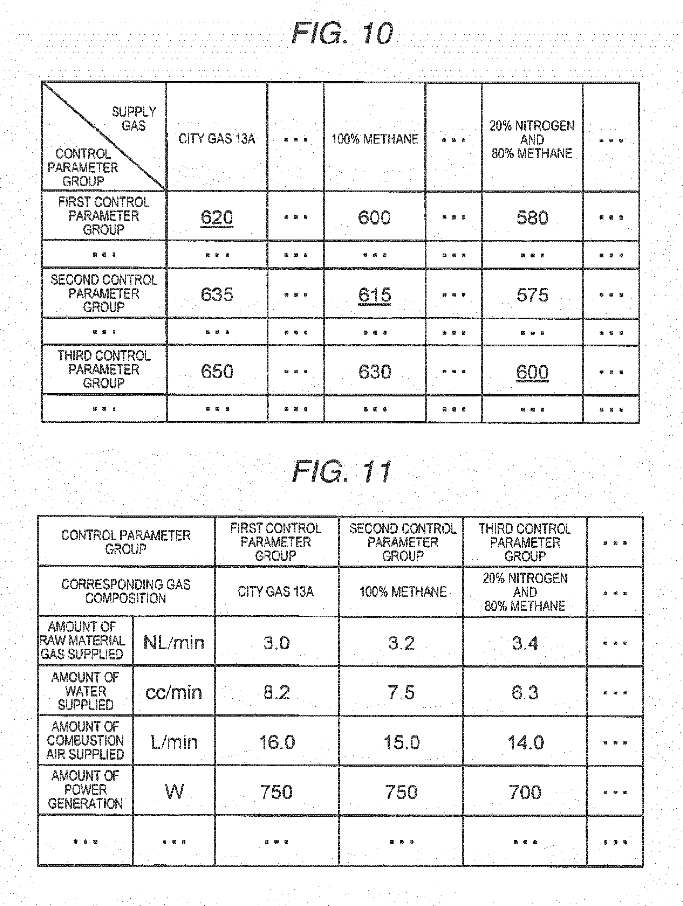

FIG. 10 is a view illustrating an example of a control parameter group, and a reforming temperature at which a value detected by the raw material gas supply amount detector is a predetermined value when changing a composition of the raw material gas supplied, that is, the amount of heat by using the control parameter group in the seventh exemplary embodiment of the invention.

Here, it is assumed that a first control parameter, a second control parameter, and a third control parameter are optimized in correspondence with gas compositions of city gas 13A, 100% methane, and a mixed gas composed of 20% nitrogen and 80% methane, respectively.

As described above, when city gas 13A is actually supplied by using the control parameter group (here, the first control parameter group) corresponding to city gas 13A, in a case where the raw material gas is supplied in such a manner that the amount, which is detected by raw material gas supply amount detector 5, of the raw material gas supplied, becomes 3.0 NL/min, the amount of the raw material gas that is actually supplied also becomes 3.0 NL/min in a predetermined accuracy range.

At this time, in a case of power generation of 750 W, an off-gas that is not consumed in fuel cell 1 is combusted in combustor 4, and thus reformer 2 is heated in a predetermined amount of heat. Accordingly, the reforming temperature, that is, the temperature detected by reforming temperature detector 6 becomes approximately 620°C.

On the other hand, it is assumed that a raw material gas composed of 100% methane is supplied by using the first control parameter group corresponding to city gas 13A.

In this case, the amount of heat of the raw material gas is smaller in comparison to city gas 13A, and thus in a case where the same power generation of 750 W as an output of fuel cell 1 by supplying the raw material gas in a supply amount of 3.0 NL/min, the amount of heat that is returned to reformer 2 as the off-gas decreases. According to this, reformer 2 is not sufficiently heated, and thus the reforming temperature, that is, the temperature detected by reforming temperature detector 6 becomes approximately 600°C that is lower than 620°C.

Similarly, in a case of supplying a gas (for example, a mixed gas composed of 20% nitrogen and 80% methane) with the amount of heat lower than that of 100% methane, the reforming temperature is additionally lowered (580°C).

In addition, even in driving with control parameter groups which correspond to respective raw material gases, reforming temperatures, which become stabilized, may not be constant. For example, in a case of supplying city gas 13A by using the first control parameter group corresponding to city gas 13A, and in a case of supplying 100% methane by using the second control parameter group corresponding to 100% methane, reforming temperature which are detected by reforming temperature detector 6 may not be the same as each other. In addition, although it is preferable to make a determination from a relationship between a predetermined amount of the raw material gas supplied, and the reforming temperature, it is not necessary to set a target value of the amount of the raw material gas supplied.

"Method of Setting Control Parameter Group"

As a control parameter group for stable driving of fuel cell 1, controller 7 sets control parameters including at least one of the amount of the raw material gas that is supplied by raw material gas supply device 3, the amount of water that is supplied to reformer 2, the amount of the combustion air that is supplied to the combustor 4, and the amount of power that is generated in fuel cell 1.

FIG. 11 is a view illustrating a setting example of the control parameter group in the seventh exemplary embodiment of the invention.

As the first control parameter group, the amount of the raw material gas supplied is set to 3.0 NL/min, the amount of water supplied is set to 8.2 cc/min, the amount of the combustion air supplied is set to 16 L/min, and the amount of power generation is set to 750 W.

In addition, the amount of water supplied may be set with a value of S/C that represents the number of moles of water with respect to the number of moles of carbon in the raw material gas. In addition, the amount of the combustion air supplied may be set with a value of a ratio of air to a theoretical air flow rate of a combustible gas.

Here, the amount of the raw material gas supplied, reforming water, the amount of the combustion air supplied, and the amount of power generation may be changed, respectively. In addition, when changing control parameters thereof in a composite manner, more stable driving becomes possible, and thus it is possible to obtain a significant effect.

Controller 7 drives fuel cell system 100 with the first control parameter group. At this time, controller 7 sets a control parameter group on the basis of the temperature detected by reforming temperature detector 6 in a case where the raw material gas is supplied in such a manner that the amount, which is detected by raw material gas supply amount detector 5, of the raw material gas supplied becomes a predetermined value (here, 3.0 NL/min).

Specifically, in a case where the temperature detected by reforming temperature detector 6 is 600°C, a second control parameter group different from the first control parameter group may be set. In addition, when fuel cell system 100 is driven with the first control parameter group, the second control parameter group may be selected and set depending on whether the temperature is close to either 620°C or 600°C to drive fuel cell system 100, or in a case where the temperature is equal to or lower than a predetermined threshold (for example, 605°C).

In addition, the amount of heat of the raw material gas corresponding to the first control parameter group may be more than the amount of heat of a raw material gas corresponding to the second control parameter group, and it is preferable that fuel cell system 100 is first driven with a control parameter group corresponding to a raw material gas of which the amount of heat is relatively higher. In addition, in a case where three or more control parameter groups are provided, fuel cell system 100 may be driven sequentially from a control parameter group corresponding to a raw material gas of which the amount of heat is relatively higher.

In a case where the driving is performed with a control parameter group corresponding to a gas with a relatively low amount of heat by supplying a gas with a relatively high amount of heat, a flow rate of combustion air with respect to a combustion gas becomes insufficient, and thus there is a possibility that occurrence of carbon monoxide due to incomplete combustion may be caused, or an accident fire may occur.

In addition, in a case of the water vapor reforming, a flow rate of water with respect to the raw material gas becomes insufficient. Accordingly, there is a possibility that a problem relating to stable driving of an apparatus such as precipitation of soot onto a catalyst may occur. According to this, when the driving is performed sequentially from a control parameter group corresponding to a raw material gas of which the amount of heat is relatively higher, it is possible to realize fuel cell system 100 that is safer and more stable.

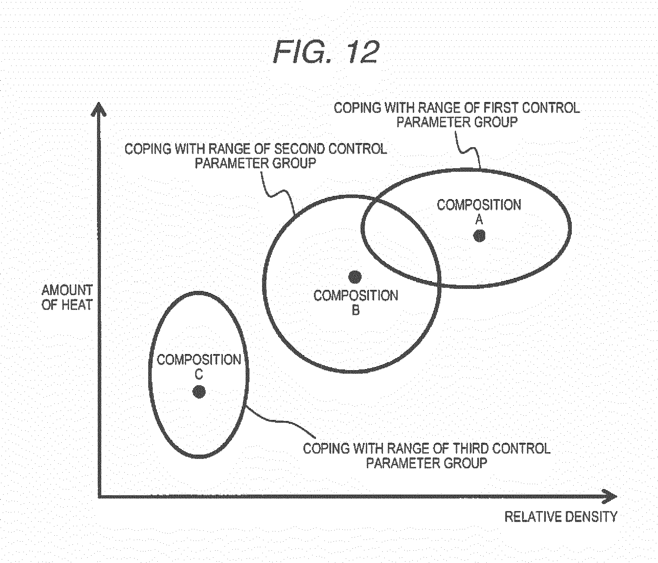

FIG. 12 is a view illustrating an example of the control parameter group corresponding to the raw material gas composition in the seventh exemplary embodiment of the invention.

A hydrocarbon-containing raw material gas can be expressed by a relationship between a relative density and the amount of heat.

For example, as described above, assumption is made for a case where a control parameter group, which corresponds to a gas composition of each of city gas 13A, the methane gas (100% methane), and the mixed gas composed of 20% nitrogen and 80% methane, is set. In this case, the control parameter group can cope with not only a corresponding raw material gas composition but also a predetermined range including the corresponding raw material gas composition, and thus stable driving becomes possible. In addition, the range, which is capable of being coped with, may or may not overlap in each of the respective control parameter groups.

When a plurality of control parameter groups are maintained, and as the range of the raw material gas composition, which is capable of being coped with, is wider, it is possible to cope with a wide range of raw material gas composition with one apparatus. Accordingly, versatility increases. On the other hand, even though the range, which is capable of being coped with, is narrow, when strictly diving a range that copes with the raw material gas, it is possible to efficiently drive fuel cell system 100 in a more accurate manner.

It is preferable that a raw material gas composition that is optimized, and a range of the amount of heat, which is capable of being coped with at that composition, are selected every time in conformity to a composition of a raw material gas that can be supplied, or an estimated gas composition variation over a long period of time.

According to this configuration, even in a case where the raw material gas has any composition such as a case of installation in an area in which a gas composition is different from a gas composition that corrects raw material gas supply amount detector 5, and a case of a seasonal composition variation, the composition of the raw material gas is estimated from the reforming temperature to set an optimal control parameter group, and thus stable driving of the fuel cell system becomes possible in an efficient manner.

Next, description will be given of a method of setting each control parameter in the control parameter group.

First, description will be given of a method of setting the amount of the raw material gas supplied when changing the control parameter group.

In a case of driving with the first control parameter group that is a control parameter group corresponding to city gas 13A, when 750 W is generated, and the hydrogen usage rate in fuel cell 1 is set to 80%, the amount of the raw material gas supplied becomes approximately 3.0 NL/min.

On the other hand, in a case of supplying a gas with the amount of heat less than that of city gas 13A, for example, a gas composed of 100% methane that corresponds to the second control parameter group, it is necessary to supply a relatively large amount of raw material gas so as to generate 750 W.

As illustrated in FIG. 3, basically, when a carbon number in the raw material increases, combustion heat (the amount of heat generation) per unit volume of the raw material increases, and thus the combustion heat (the amount of heat generation) and the carbon number have an approximately proportional relationship. That is, when the raw material is supplied in the same raw material gas supply amount, the greater the carbon number in the raw material gas is, the greater the amount of heat that is supplied, and the higher the temperature of reformer 2 becomes.

That is, the amount of heat of the raw material gas that is supplied is estimated from the reforming temperature during supply of a predetermined amount of raw material gas supplied, and the amount of the raw material gas supplied, which is one of the parameters of the control parameter group, is set on the basis of the estimation result. Accordingly, stable driving of fuel cell system 100 becomes possible.

Next, description will be given of a method of setting the amount of water supplied when changing the control parameter group. Here, a method of setting parameters such as the first control parameter group corresponding to city gas 13A, and the second control parameter group corresponding to 100% methane will be exemplified.

Here, the number of moles of carbon in 1 mole of raw material gas that is city gas 13A is 1.17, and the number of moles of carbon in 100% methane is 1.0, and thus a ratio therebetwen becomes 0.85 from a calculation formula of $(1.0 \div 1.17)$.

As described above, the composition of hydrocarbon that is a raw material gas and the amount of heat generation have a correlation. In other words, in a case where the amount of heat of the raw material gas is smaller, and the reforming temperature is lower, it is preferable to set the control parameters so as to increase the amount of the raw material gas supplied.

In this case, a case where the ratio of a carbon number in the raw material gas is relatively small is implied, and when the amount of water supplied is set to be constant, the carbon number is small and the amount of water vapor is constant. Accordingly, actual S/C relatively increases in comparison to S/C that is set.

Similarly, in a case where setting is made in such a manner that the amount of heat of the raw material gas increases and the amount of the raw material gas supplied degrees, a case where the ratio of the carbon number in the raw material gas is relatively great is implied. In this case, when the amount of water supplied is set to be constant, the carbon number is great and the amount of water vapor is constant, and thus the actual S/C relatively decreases in comparison to the S/C that is set.

Specifically, in a case where the S/C that is set is, for example, 2.9, and the carbon number in the raw material becomes 0.85 times the carbon number that is assumed, if the amount of water vapor is set to be constant, the actual S/C becomes approximately 3.4.

Here, the water vapor reforming reaction is an endothermic reaction, and the S/C greatly contributes to reaction heat of the reaction. For example, when the S/C increases, a large amount of heat is necessary to maintain the reforming temperature to a constant temperature, or in a case where the amount of heat that is supplied is constant, the reforming temperature is lowered.

That is, when the S/C greatly varies through setting of the amount of the raw material gas supplied, stable driving of fuel cell system 100 becomes difficult. Accordingly, controller 7 may simultaneously change the amount of water supplied in the control parameter group on the basis of the reforming temperature.

According to this configuration, the amount of water supplied, particularly, the S/C is maintained in a predetermined range, and thus stable driving of fuel cell system 100 becomes possible in an efficient manner.

Next, description will be given of a method of setting the amount of combustion air supplied when changing the control parameter group.

The number of hydrogen atoms in one molecule of hydrocarbon that is the raw material gas increases as the carbon number increases. For example, in a case of methane that is alkane in which the carbon number is 1, a hydrogen number in one molecule is 4. For example, in a case of propane that is alkane in which the carbon number is 3, the hydrogen number in one molecule is 8.

That is, when the raw material gas is supplied in the same amount, as the carbon number in the raw material gas is greater, the number of hydrogen molecules which are supplied is greater, and the amount of heat is greater as described above. Accordingly, the reforming temperature in a predetermined amount of the raw material gas supplied becomes higher.

In other words, in a case where the control parameters are set in such a manner that the amount of heat of the raw material gas decreases, and the amount of raw material gas supplied increases, a case where the hydrogen number in the raw material gas is relatively small is implied, and thus the number of molecules of hydrogen generated also decreases. In this case, when the amount of the combustion air that is supplied is set to be constant, a combustion air ratio λ, which is a ratio of a supply air flow rate to a combustion air flow rate necessary for complete combustion, relatively increases.

Similarly, in a case where the control parameters are set in such a manner that the amount of heat of the raw material gas increases, and the amount of the raw material gas supplied decreases, a case where the hydrogen number in the raw material gas is relatively great is implied, and thus the number of molecules of hydrogen generated also increases. In this case, when the amount of the combustion air that is supplied is set to be constant, the combustion air ratio λ relatively decreases.

Here, the combustion exhaust gas is discharged to the outside of the system of fuel cell system 100. However, when the flow rate of the combustion air or the combustion air ratio λ increases, the amount of heat that is discharged to the outside of the system increases, and thus in a case where the amount of heat supplied is constant, the reforming temperature is lowered.

That is, when the combustion air ratio λ greatly varies due to correction of the raw material gas, stable driving of fuel cell system 100 becomes difficult. For example, in a case where the amount of heat of the raw material gas is small, if the amount of the combustion air supplied is not corrected, the amount of heat is low and λ is great, and thus the reforming temperature is less likely to rise. Accordingly, stable driving of fuel cell system 100 becomes difficult or efficiency decreases. Accordingly, controller 7 may simultaneously change the amount of the combustion air supplied in the control parameter group on the basis of the reforming temperature.

According to this configuration, driving becomes possible in a state in which the amount of the combustion air supplied, particularly, the combustion air ratio λ is in a predetermined range, and thus stable driving of fuel cell system 100 with high efficiency becomes possible.

Next, description will be given of a method of setting the amount of power generation when changing the control parameter group.

In a case where driving is performed with the first control parameter group that is a control parameter group corresponding to city gas 13A, it is assumed that when the amount of the raw material gas supplied is approximately 3.0 NL/min, and the hydrogen usage rate in fuel cell 1 is set to 80%, power generation of 750 W is possible.

Here, in a case of supplying a gas with the amount of heat less than that of city gas 13A, for example, a mixed gas composed of 80% methane and 20% nitrogen which corresponds to the third control parameter group, it is necessary to supply a relatively large amount of raw material gas so as to generate 750 W.

When increasing the raw material gas by an amount that is appropriate for the amount of heat that is reduced, it is possible to perform approximately the same power generation. However, a large amount of raw material gas may not be supplied due to circumstances in devices which are used in fuel cell system 100.

For example, a predetermined supply upper limit is present in a constituent device such as a buster pump that is used as raw material gas supply device 3. In addition, for example, the amount of gas, which is capable of being coped with, is present in the reforming catalyst that is filled in reformer 2. In addition, when an excessive amount of gas is supplied, a pressure loss increases in a pipe and the like, and thus stable driving becomes difficult.

Accordingly, controller 7 may change the amount of power generation in the control parameter group on the basis of the reforming temperature. Specifically, in a case where driving is performed with the first control parameter group, when the reforming temperature is 580°C, setting may be performed to lower the amount of power generation to 700 W.

In addition, in FIG. 2, a relationship between the reforming temperature and the conversion rate is illustrated. When the reforming temperature is equal to or higher than a predetermined temperature, a useful conversion rate is obtained, but when the reforming temperature is lower than the predetermined temperature, the conversion rate rapidly decreases. Therefore, when the reforming temperature is maintained to be equal to or higher than the predetermined temperature, it is possible to effectively drive the fuel cell system 100.

In the configuration of fuel cell system 100 that is used, in a case where a variation in the amount of heat occurs in a degree which is difficult to cope with only by an increase and a decrease in the amount of the raw material gas supplied, changing of the amount of power generation is particularly useful. In addition, the amount of the raw material gas supplied, the amount of water supplied, and the amount of the combustion air supplied may be changed in combination with each other, or may be individually changed.

According to this configuration, it is possible to perform stable driving of fuel cell system 100 by maintaining the reforming temperature in a predetermined range regardless of the composition of the raw material gas. In addition, one fuel cell system 100 can cope with raw material gases with the amount of heat in a wide range, and thus it is possible to realize an apparatus with high versatility.

(First Example not part of the invention but facilitates understanding of the invention)

Next, description will be given of a first example.

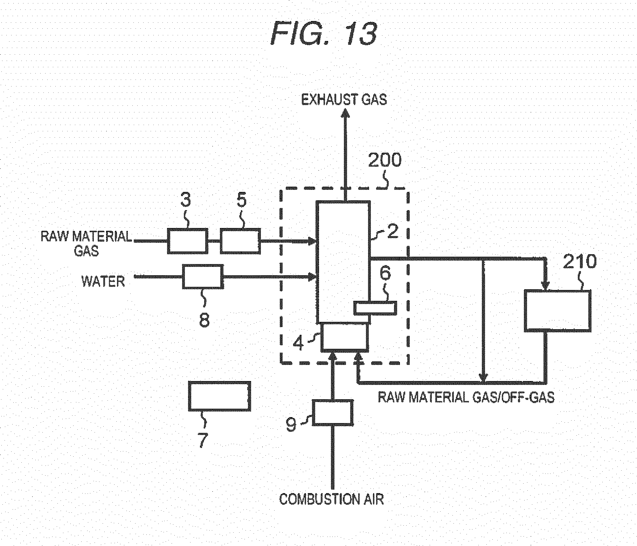

FIG. 13 is a view illustrating a configuration of hydrogen generation apparatus 200 in the first example.

As illustrated in FIG. 13, hydrogen generation apparatus 200 in this example includes reformer 2 that generates a hydrogen-containing gas through a reforming reaction by using a hydrocarbon-containing raw material gas and water vapor, combustor 4 that combusts at least the raw material gas to heat reformer 2, and reforming temperature detector 6 that detects the temperature of reformer 2. In addition, a fuel cell system includes raw material gas supply device 3 that supplies the raw material gas to reformer 2, water supply device 8 that supplies water to reformer 2, combustion air supply device 9 that supplies combustion air to combustor 4, raw material gas supply amount detector 5 that detects the amount of the raw material gas supplied, and controller 7.

Reformer 2 is filled with a reforming catalyst. Here, a method, in which hydrogen is obtained by subjecting hydrocarbon to water vapor reforming by using a Ru-based catalyst as the reforming catalyst, is employed. Reformer 2 is configured to be heated with heat transfer from combustor 4, and reforming temperature detector 6 is provided to detect a heating state during combustion of at least the raw material gas.

In combustor 4, at least the raw material gas is combusted, but the hydrogen-containing gas may be combusted during generation of hydrogen. Here, as a temperature detector, a thermocouple is provided to a flow path on an outlet side of a reforming catalyst layer, and measures a temperature of a gas that is discharged from the reforming catalyst.

An outer side of reformer 2 is covered with a thermal insulating material (not illustrated). A disposition position of reforming temperature detector 6 is not limited to the above-described example as long as reforming temperature detector 6 can detect the heating state during combustion of the raw material gas. In addition, as the reforming reaction, here, the water vapor reforming reaction is exemplified. However, it is possible to employ a configuration capable of detecting a temperature variation due to combustion of at least the raw material gas, and an auto-thermal reaction is exemplified.

Here, raw material gas supply device 3 is configured to supply the raw material gas after raising a pressure of the raw material gas by using a buster pump. Raw material gas supply device 3 is controlled in such a manner that in the raw material gas of which the pressure is raised, the amount of the raw material gas that is detected by raw material gas supply amount detector 5 becomes a predetermined flow rate.

Here, in a flowmeter that detects the amount of the raw material gas supplied, typically, when supplying a gas having the same composition as a gas composition that is set in advance, a detection value (hereinafter, referred to as an "instructed flow rate"), which is a flow rate that is electrically output on the basis of a supply amount, of the amount of the raw material gas supplied, and an actual amount (hereinafter, referred to as an "actual flow rate"), which is an actual flow rate, of the raw material gas supplied are equal to each other in a predetermined accuracy range.

On the other hand, when compositions are different from each other, a difference occurs between the instructed flow rate and the actual flow rate. In addition, the raw material gas may be supplied after desulfurizing a sulfur component in the raw material gas through a desulfurizer.

In addition, hydrogen using apparatus 210 may be configured to include a fuel cell. For example, as the fuel cell, a polymer electrolyte type fuel cell (PEFC) or a solid oxide type fuel cell (SOFC) is used. For example, in a case where the PEFC is used, it is possible to employ a configuration in which CO in a reformed gas discharged from reformer 2 is reduced by using a CO removal unit (not illustrated). As the CO removal unit, for example, a combination of a CO converter and a CO selective oxidizer is exemplified.

Next, description will be given of an operation of hydrogen generation apparatus 200 in the first example. In addition, the following all operations are performed by controlling respective devices of hydrogen generation apparatus 200 by controller 7.

"Method of Activating Hydrogen Generation Apparatus"

First, description will be given of a method of activating hydrogen generation apparatus 200. Generation of hydrogen is performed through a catalytic reaction, but the reaction progresses by maintaining the catalyst to a predetermined temperature. Accordingly, first, the raw material gas is supplied by controlling raw material gas supply device 3 in such a manner that the amount, which is detected by raw material gas supply amount detector 5, of the raw material gas supplied becomes a predetermined value.

Here, a feedback control type may be used. The raw material gas is supplied to combustor 4, but the raw material gas may be supplied to combustor 4 through reformer 2. In addition, the raw material gas, which is discharged from reformer 2, may pass through hydrogen using apparatus 210, or may be by-passed by using a switching value (not illustrated). This example employs a configuration in which the raw material gas, which passes through reformer 2, is supplied to combustor 4 by by-passing hydrogen using apparatus 210.

In addition, the combustion air is also supplied to combustor 4 by combustion air supply device 9, and the raw material gas is ignited by an igniter (not illustrated). The combustion air is supplied in such a manner that the flow rate becomes a predetermined flow rate that is determined in advance.

The temperature of reformer 2 is raised due to combustion of the raw material gas, and the temperature is detected by reforming temperature detector 6. When the temperature of reformer 2 is raised, and the temperature detected by reforming temperature detector 6 reaches a first temperature that is determined in advance, a predetermined flow rate of water is supplied to reformer 2 by water supply device 8. Here, it is preferable that the first temperature is equal to or higher than a temperature at which water leakage through condensation due to supply of water does not occur in a catalyst layer, and is equal to or lower than a temperature at which carbon precipitation due to a high temperature does not occur. Here, the first temperature is set to 150°C.

In reformer 2, the water vapor reforming reaction progresses by the raw material gas and water in combination with a temperature rise. In combustor 4, a mixed gas including an unreacted raw material gas and a hydrogen gas generated by reformer 2 is combusted, and thus the temperature of reformer 2 is additionally raised. Here, in a case where a CO removing unit is provided to hydrogen generation apparatus 200, the CO removing unit may be heated by a heater (not illustrated), and the like.

When the temperature detected by reforming temperature detector 6 reaches a high temperature (here, 550°C) that is sufficient for generation of hydrogen, hydrogen may be used by supplying the hydrogen-containing gas to hydrogen using apparatus 210, or unused hydrogen may be returned to combustor 4 for combustion.

"Method of Driving Hydrogen Generation Apparatus in Normal State"

Next, description will be given of a method of driving hydrogen generation apparatus 200 in a normal state. Controller 7 controls raw material gas supply device 3 to supply the raw material gas to reformer 2. It is necessary for the temperature of reformer 2 to be controlled to a target temperature that is determined in advance so as to obtain hydrogen necessary for hydrogen using apparatus 210 by promoting the water vapor reforming reaction.

Here, the flow rate of the raw material gas, which is detected by raw material gas supply amount detector 5, is controlled by using raw material gas supply device 3 in such a manner that the temperature detected by reforming temperature detector 6 becomes 630°C. As a method of controlling the flow rate of the raw material gas, feedback control may be used.

In addition, a target temperature of reformer 2 is a temperature that is affected by a heating amount at combustor 4, the amount of heat discharged from hydrogen generation apparatus 200, heat dissipation from the body of hydrogen generation apparatus 200, and the like, and it is preferable that the target temperature is determined in advance from the amount of hydrogen necessary for hydrogen using apparatus 210, a conversion rate of the raw material gas into hydrogen in hydrogen generation apparatus 200, and the like.

In addition, controller 7 controls water supply device 8 to supply water vapor (hereinafter, referred to as reforming water) necessary for the water vapor reforming reaction to reformer 2. In this example, with regard to a flow rate of the reforming water, water supply device 8 is controlled in such a manner that S/C, which represents a ratio of water to a carbon number in the raw material gas that is supplied to reformer 2, becomes 2.9.

Here, the carbon number in the raw material gas varies depending on a composition of the raw material gas.

Here, it is assumed that a raw material gas having a composition of 100% methane is supplied, and thus S/C is calculated in a state in which the carbon number in the raw material gas is set to 1.00, and then water is supplied.

In addition, controller 7 controls combustion air supply device 9 to supply the combustion air necessary to combust an off-gas that is supplied to combustor 4 and is transmitted from hydrogen using apparatus 210. In combustor 4, the off-gas is combusted to supply heat necessary for the water vapor reforming reaction in reformer 2. Here, a flow rate of the combustion air is controlled in such a manner that an air ratio indicating a supply air flow rate to a theoretical air flow rate becomes "1.7".

In addition, controller 7 calculates the amount of hydrogen, which is generated, from a conversion rate that is calculated from the raw material flow rate that is detected by raw material gas supply amount detector 5, and a temperature that is detected by reforming temperature detector 6, and controls hydrogen using apparatus 210 so that hydrogen can be used in a predetermined hydrogen usage rate range.

Controller 7 controls raw material gas supply device 3 to increase the amount of the raw material gas supplied so as to maintain the reforming temperature to a target temperature. However, in a case where a raw material gas, which has a composition (here, 100% methane) different from a raw material gas composition that is assumed, is supplied, when a predetermined flow rate is supplied, even though detection by raw material gas supply amount detector 5 is performed, that is, the instructed flow rate is a predetermined value, there is a possibility that the amount of the raw material gas that is actually supplied may be different.

For example, 15% nitrogen is contained in methane, there is a possibility that the flow rate and the amount of heat of the gas that is actually supplied deviate from values which are assumed, and thus even when the amount of the raw material gas supplied is controlled in a predetermined range, it is difficult to maintain the temperature of reformer 2 to a predetermined temperature, or necessary hydrogen is not generated. Accordingly, hydrogen using apparatus 210 cannot use necessary hydrogen, and thus stable driving as hydrogen generation apparatus 200 may be difficult.

Next, description will be given of a characteristic operation of hydrogen generation apparatus 200 in the first example.

In a case where a predetermined flow rate of raw material gas is combusted in combustor 4 to raise the temperature of reformer 2, controller 7 performs control of correcting a relationship between an actual amount of the raw material gas (actual flow rate) that is supplied from raw material gas supply device 3 and is converted from the amount of heat, and a detection value (instructed flow rate), which is detected by raw material gas supply amount detector 5, of the amount of the raw material gas supplied by using a temperature variation rate detected by reforming temperature detector 6.

In addition, the detection value (actual flow rate) of the amount of the raw material gas supplied may be corrected by using the temperature variation rate, or the control may be performed to correct the target amount of the raw material gas supplied when control is performed so that the amount of the raw material gas supplied becomes the target amount.

In addition, a correction coefficient may be calculated by using the temperature variation rate, and then a value, which is obtained by multiplying the correction coefficient by the detection value of the amount of the raw material gas supplied, may be set as a corrected amount of the raw material gas supplied. In addition, control may be performed so that a value, which is obtained by multiplying the correction coefficient by the target amount of the raw material gas supplied before correction, becomes the corrected target amount of the raw material supplied.

"Method of Calculating Correction Value"

As described above, during activation of hydrogen generation apparatus 200, the raw material gas is supplied by controlling raw material gas supply device 3 in such a manner that the amount, which is detected by raw material gas supply amount detector 5, of the raw material gas supplied becomes a predetermined value. Temperature of reformer 2 is raised due to combustion of the raw material gas, and a variation of the temperature is detected by reforming temperature detector 6.

Here, in a case of raising the temperature of reformer 2 by combusting the raw material gas in combustor 4, $\alpha$ is defined as a coefficient indicating the temperature variation rate that is detected by reforming temperature detector 6. Here, the variation rate $\alpha$ is defined as time taken until the temperature detected by reforming temperature detector 6 reaches a temperature T2 from a temperature T1.

In addition, a temperature, which is detected by reforming temperature detector 6 after the passage of predetermined time after initiation of temperature-raising, may be set as a variation rate, or a rising temperature per unit time may be set as the variation rate. However, the magnitude of $\alpha$ may be changed depending on a definition method, and thus the definition method may be appropriately selected so as to perform correction in such a manner that the amount of heat is increased when a gas with a low amount of heat is supplied, or the amount of heat is decreased when a gas with a high amount of heat is supplied.

When a gas having a predetermined composition (here, 100% methane), which is corrected in raw material gas supply amount detector 5, is supplied in a predetermined amount, which is detected by raw material gas supply amount detector 5, for combustion, a temperature variation rate detected by reforming temperature detector 6 is set to $\alpha0$. $\alpha0$ is preferably calculated from preliminary experiment or calculation.

The variation rate $\alpha$ becomes $\alpha0$ when 100% methane is actually supplied. However, in a case of supplying a gas with a low amount of heat as a composition A (for example, a mixed gas composed of 15% nitrogen and 85% methane), $\alpha$A, which is defined as time taken until the temperature T2 is reached from the temperature T1, becomes a value greater than $\alpha0$.

That is, although it is indicated that a predetermined flow rate is supplied, the smaller the amount of the raw material gas that is actually supplied is, the slower the temperature rise rate detected by reforming temperature detector 6 is. In addition, it takes relatively longer time to reach a predetermined temperature.

Similarly, in a case of supplying a gas with a large amount of heat as a composition B (for example, a mixed gas composed of 15% propane and 85% methane), $\alpha$B, which is defined as time taken until the temperature T2 is reached from the temperature T1, becomes a value smaller than $\alpha0$.

That is, although it is indicated that a predetermined flow rate is supplied, the larger the amount of the raw material gas that is actually supplied is, the greater the temperature rise rate detected by reforming temperature detector 6 is. In addition, it takes relatively shorter time to reach a predetermined temperature.

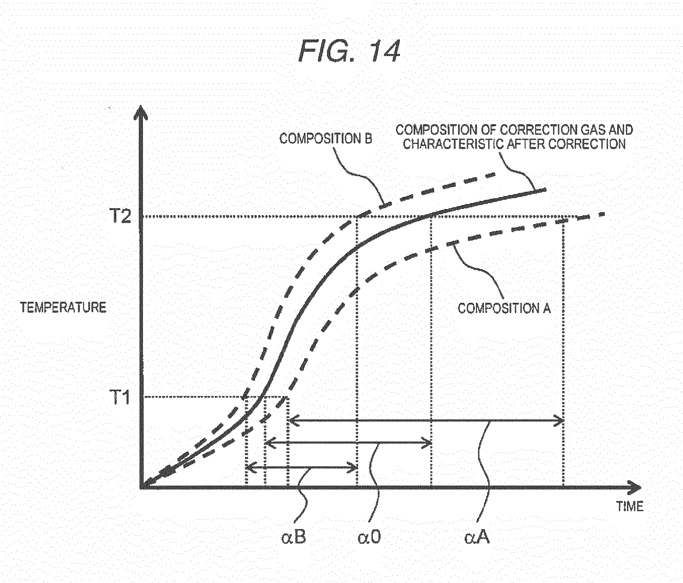

FIG. 14 is a view illustrating a difference in a temperature rise rate during activation when supplying gases having compositions different from each other in the first example.

As illustrated in FIG. 14, when a composition of a gas that is actually supplied is different from a composition that is assumed, a deviation occurs between the instructed flow rate and the actual flow rate, and thus a difference in the amount of heat appears as a difference in a temperature rise rate.

Here, the correction coefficient is calculated by using $\alpha0/\alpha$ that is a ratio between $\alpha0$ and the variation rate $\alpha$ during actual driving.

In addition, whether to calculate a multiplication value by using $\alpha0/\alpha$ or $\alpha/\alpha0$ that is the reciprocal may be changed depending on the definition method of the temperature rise rate $\alpha$, and thus calculation type may be appropriately selected to perform correction in such a manner that the amount of heat is increased when a gas with a low amount of heat is supplied, and the amount of heat is decreased when a gas with a high amount of heat is supplied.

In addition, the correction may be made by using a value that is calculated by using a predetermined coefficient on the basis of $\alpha$ and $\alpha0$ instead of the ratio between $\alpha$ and $\alpha0$.

Specifically, in raw material gas supply amount detector 5 that is corrected with 100% methane in advance, it is assumed that the variation rate $\alpha0$, which is defined as time taken until the temperature T2 is reached from the temperature T1 (here, 550°C is reached from 150°C) when supplying the gas composed of 100% methane in a predetermined flow rate Q (here, 1.0 NL/min), is 30 minutes.

Here, during activation by supplying a gas having a composition A (a mixed gas composed of 15% nitrogen and 85% methane) to raw material gas supply amount detector 5, which is corrected with 100% methane, in such a manner that the detection value detected by raw material gas supply amount detector 5 becomes Q (here, 1.0 NL/min), it is assumed that the variation rate $\alpha$ is 35 minutes that is greater than $\alpha0$.

Here, the amount of heat of the raw material gas that is actually supplied is approximately 0.86 times ($\alpha0 \div \alpha = 30 \div 35 \cong 0.86$) the amount of heat of 100% methane, and thus the correction coefficient X is set to 0.86. Here, calculation is performed from the ratio between $\alpha0$ and $\alpha$. However, for example, a value, which is obtained by multiplying the correction coefficient by a predetermined coefficient, may be set as a true correction value. In addition, determination of the composition of the raw material gas itself may not be made as long as the amount of heat of the raw material gas supplied can be determined from the temperature rise rate.

"Method of Correcting Amount of Raw material gas Supplied"

Next, description will be given of a method of correcting the amount of raw material gas supplied.

Correction is made with respect to a correlation between the actual amount of the raw material gas that is supplied by raw material gas supply device 3, and the detection value, which is detected by raw material gas supply amount detector 5, of the amount of the raw material gas supplied by using the temperature variation rate that is obtained. More specifically, a value that is detected by raw material gas supply amount detector 5 is corrected or the target flow rate of the raw material gas is corrected by using the correction value that is obtained.

In the former case, that is, in a case of correcting the value that is detected by raw material gas supply amount detector 5, for example, when the value of X is 0.86, correction is made in such a manner that raw material gas supply amount detector 5 recognizes a value, which is 0.86 times the amount of the supplied raw material gas that is detected before correction, as a true amount of the raw material gas supplied. According to this, even though the target flow rate is the same, correction is made so that the raw material gas is actually supplied in an amount that is 1.16 times the amount before correction. Here, 1.16 is the reciprocal of 0.86.

In this case, the correction may be made in such a manner that a signal, which is output from raw material gas supply amount detector 5 and corresponds to a supply amount, is increased or decreased, or the correction may be made by a device such as a microcomputer meter that receives the signal that is output from raw material gas supply amount detector 5 and corresponds to the supply amount.

In addition, in the latter case, that is, in a case where the target flow rate of the raw material gas is corrected, when the target flow rate before correction is 3.0 NL/min, correction is made in such a manner that 3.48 NL/min, which is obtained by multiplying 3.0 NL/min by 1.16 that is the reciprocal of X, becomes a true target flow rate.

In addition, the correction value may be calculated from the variation rate during activation, and the correction value may be used in the subsequent normal driving.

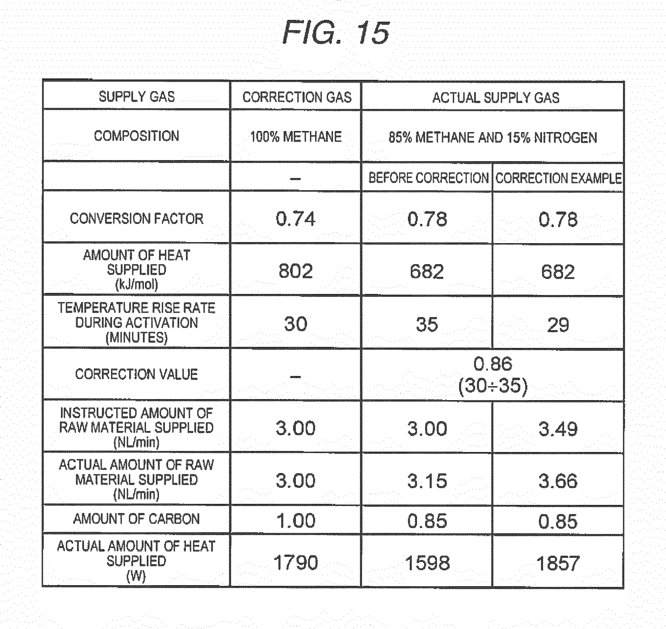

FIG. 15 is a view illustrating an example of correction when supplying a mixed gas composed of 85% methane and 15% nitrogen in raw material gas supply amount detector 5 that uses 100% methane as the correction gas in the first example.

In addition, in FIG. 14, characteristics of activation after correction are also illustrated. However, when correction is made, the amount of heat becomes the same as in the composition of the correction gas, and thus the temperature rise rate during activation also becomes the same.

According to this configuration, even in a case where the raw material gas has any composition such as a case of installation in an area in which a gas composition is different from a gas composition that is used for correction of raw material gas supply amount detector 5, and a case of a seasonal composition variation, it is possible to easily correct a value detected by raw material gas supply amount detector 5 from the temperature rise rate, or it is possible to easily correct the target flow rate of the raw material.

In addition, it is possible to maintain the amount of the raw material gas that is actually supplied, that is, the amount of heat to a predetermined value regardless of the apparent amount, which is detected by raw material gas supply amount detector 5, of the raw material supplied, and thus stable generation of hydrogen becomes possible in an efficient manner.

In addition, with regard to measurement of the amount of temperature variation for calculation of the correction value, when a temperature detected by reforming temperature detector 6 reaches a predetermined temperature after the raw material gas is supplied to reformer 2, water supply to reformer 2 is initiated, and then measurement of the amount of temperature variation, which is detected by reforming temperature detector 6, may be performed.

When water supply is initiated, in a case where the composition of the raw material gas is different from a composition that is assumed, a value of S/C also deviates, and thus a difference more significantly occurs in the amount of temperature variation (to be described later). Accordingly, measurement is performed after initiating water supply, and thus it is possible to more accurately detect a difference in the composition of the raw material gas.

In addition, when the correction coefficient X deviates from a predetermined range (for example, out of the range by $\pm5\%$), the correction may be made.

"Method of Correcting Amount of Water Supplied"

Next, description will be given of a method of correcting the amount of water supplied.

A composition of hydrocarbon that is the raw material gas and the amount of heat generation have a correlation.

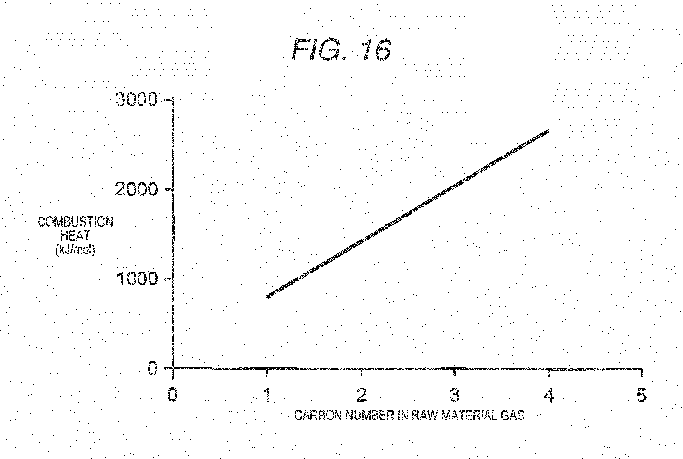

FIG. 16 is a view illustrating the correlation between a carbon number in alkane and combustion heat in the first example.

As illustrated in FIG. 16, basically, as the carbon number in the raw material increases, the combustion heat (amount of heat generation) per unit volume of the raw material increases, and thus the combustion heat (amount of heat generation) and the carbon number have an approximately proportional relationship. That is, when the raw material gas is supplied in the same amount, the greater the carbon number in the raw material gas is, the greater the amount of heat supplied is, and the greater the temperature variation rate during activation is (the shorter time until a predetermined temperature is reached is).

In other words, in a case where correction is made in such a manner that the amount of heat of the raw material gas decreases, and the amount of the raw material gas supplied increases, a case where a ratio of the carbon number in the raw material gas is relatively small is implied. In this case, in a case of not changing the amount of water supplied from the amount of water before correction, the carbon number is small and the amount of water vapor is constant. Accordingly, actual S/C relatively increases in comparison to S/C that is set.

Similarly, in a case where correction is made in such a manner that the amount of heat of the raw material gas increases and the amount of the raw material gas supplied degreases, a case where the ratio of the carbon number in the raw material gas is relatively great is implied. In this case, when the amount of water supplied is not changed, the carbon number is great and the amount of water vapor is constant, and thus the actual S/C relatively decreases in comparison to the S/C that is set.

Specifically, in a case where the S/C that is set is, for example, 2.9, and the carbon number in the raw material becomes 0.85 times the carbon number that is assumed, if the amount of water vapor is set to be constant, the actual S/C becomes approximately 3.4.

Here, the water vapor reforming reaction is an endothermic reaction, and the S/C greatly contributes to reaction heat of the reaction. For example, when the S/C increases, a large amount of heat is necessary to maintain the reforming temperature to a constant temperature, or in a case where the amount of heat that is supplied is constant, the reforming temperature is lowered.

That is, when the S/C greatly varies through correction of the raw material gas, stable driving of hydrogen generation apparatus 200 becomes difficult. For example, in a case where the amount of heat of the raw material gas is small, if the amount of water supplied is not corrected, the amount of heat is low, and S/C is great, and thus the reforming temperature is less likely to rise. Accordingly, stable driving of hydrogen generation apparatus 200 becomes difficult. In addition, excess or deficiency in the water supply also leads to a decrease in efficiency.

Accordingly, in a case where correction is made to increase the amount of the raw material gas supplied in comparison to an amount before correction by using the correction value that is obtained, controller 7 controls water supply device 8 to reduce the amount of water that is supplied to reformer 2 in comparison to the amount before correction. In addition, in a case where the correction is made to decrease the amount of the raw material gas supplied in comparison to the amount before correction, controller 7 controls water supply device 8 to increase the amount of water supplied in comparison to the amount before correction.

More specifically, the target amount of water supplied may be multiplied by a correction coefficient that is calculated by using the temperature variation rate during activation. For example, as described above, in a case where X is calculated as 0.86, a value, which is obtained by multiplying the target flow rate before correction by 0.86, may be set as a target flow rate after correction. In addition, correction may be made by using a correction value that is calculated from the correction coefficient that is calculated and a predetermined coefficient.

According to this configuration, when correcting the amount of the raw material gas supplied, it is possible to suppress a great deviation in the amount of water supplied, and thus it is possible to perform driving in a state in which S/C is in a predetermined range. Accordingly, the reforming temperature is maintained to a predetermined temperature, and thus stable driving of hydrogen generation apparatus 200 becomes possible in an efficient manner.

"Method of Correcting Amount of Combustion Air Supplied"

Next, description will be given of a method of correcting the amount of combustion air supplied.

As the number of hydrogen atoms in one molecule of hydrocarbon that is the raw material gas increases as the carbon number increases. For example, in a case of methane that is alkane in which the carbon number is 1, a hydrogen number in one molecule is 4. For example, in a case of propane that is alkane in which the carbon number is 3, the hydrogen number in one molecule is 8.

That is, when the raw material gas is supplied in the same amount, as the carbon number in the raw material gas is greater, the number of hydrogen molecules which are supplied is greater, and the amount of heat is greater as described above. Accordingly, the temperature variation rate during activation is great (time until a predetermined temperature is reached is short).

In other words, in a case where the correction is made in such a manner that the amount of heat of the raw material gas decreases, and the amount of raw material gas supplied increases, a case where the hydrogen number in the raw material gas is relatively small is implied, and thus the number of molecules of hydrogen generated also decreases. In this case, when the amount of the combustion air that is supplied is not changed, a combustion air ratio $\lambda$, which is a ratio of a supply air flow rate to a combustion air flow rate necessary for complete combustion, relatively increases.

Similarly, in a case where the correction is made in such a manner that the amount of heat of the raw material gas increases, and the amount of the raw material gas supplied decreases, a case where the hydrogen number in the raw material gas is relatively great is implied, and thus the number of molecules of hydrogen generated also increases. In this case, when the amount of the combustion air that is supplied is not changed, the combustion air ratio $\lambda$ relatively decreases.

Here, the combustion exhaust gas is discharged to the outside of the system of hydrogen generation apparatus 200. However, when the flow rate of the combustion air or the combustion air ratio $\lambda$ increases, the amount of heat that is discharged to the outside of the system increases. Accordingly, a large amount of heat is necessary to maintain the reforming temperature to a constant temperature, or in a case where the amount of heat that is supplied is constant, the reforming temperature is lowered.

That is, when the combustion air ratio $\lambda$ greatly varies due to the correction of the raw material gas, stable driving of hydrogen generation apparatus 200 becomes difficult. For example, in a case where the amount of heat of the raw material gas is small, if the amount of the combustion air supplied is not corrected, the amount of heat is low, and $\lambda$ is great. Accordingly, the reforming temperature is less likely to rise. As a result, stable driving of hydrogen generation apparatus 200 may be difficult, or efficiency may decrease.

Accordingly, in a case where the correction is made to increase the amount of the raw material gas supplied in comparison to the amount before correction by using the correction value that is obtained, controller 7 controls combustion air supply device 9 to reduce the amount of the combustion air that is supplied to combustor 4 in comparison to the amount before correction. In addition, in a case where the correction is made to decrease the amount of the raw material gas supplied in comparison to the amount before correction, controller 7 controls combustion air supply device 9 to increase the amount of the combustion air supplied in comparison to the amount before correction.

In addition, combustion air supply device 9 may be controlled in such a manner that a ratio of the flow rate of the combustion air that is supplied to combustor 4 to the flow rate of the off-gas from hydrogen using apparatus 210, which is derived from the corrected amount of the raw material gas supplied, becomes constant.

According to this configuration, when correcting the amount of the raw material gas supplied, it is possible to suppress a great deviation in the amount of the combustion air supplied, and thus it is possible to perform driving in a state in which the combustion air ratio $\lambda$ is in a predetermined range. Accordingly, the reforming temperature is maintained to a predetermined temperature, and thus stable driving of hydrogen generation apparatus 200 with high efficiency becomes possible.

In addition, the correction of water and the correction of the combustion air may be simultaneously performed in conformity to the correction of the raw material gas.

(Second Example not part of the invention but facilitates understanding of the invention)

Next, description will be given of hydrogen generation apparatus 200 in a second example.

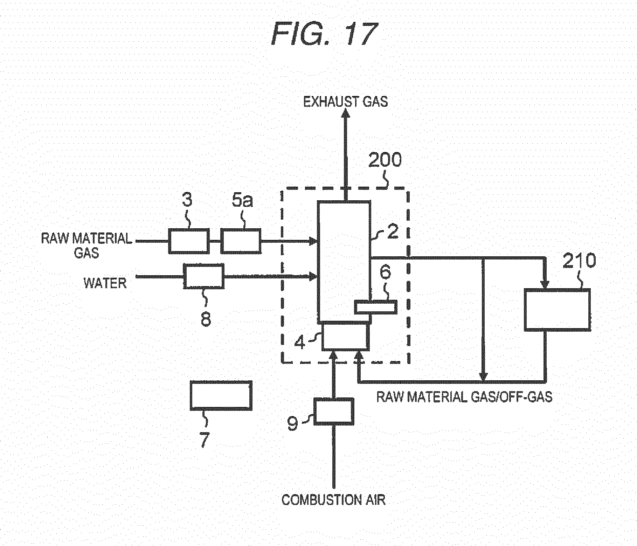

FIG. 17 is a view illustrating a configuration of hydrogen generation apparatus 200 in the second example.

The same reference numerals will be given to portions which are the same as or equivalent to those in the first example illustrated in FIG. 13, and detailed description thereof will be omitted.

This example employs a configuration in which mass flowmeter 5a is used as raw material gas supply amount detector 5 in the first example. Typically, mass flowmeter 5a has a characteristic capable of detecting a flow rate with high accuracy in a wide flow rate range regardless of a pressure and a temperature. In addition, the amount of heat of a gas that is supplied, and the instructed flow rate have a correlation, and thus mass flowmeter 5a is particularly useful in hydrogen generation apparatus 200 with focus given to the amount of heat that is supplied.

A gas composition, which is corrected in advance, is set to mass flowmeter 5a, but here, 13A that is a representative gas of the city gas is selected. That is, the raw material gas, which is actually supplied, is 13A, the instructed flow rate and the actual flow rate are equal to each other. On the other hand, when the raw material gas that is actually supplied has a different composition, the actual flow rate and the instructed flow rate become different from each other depending on a component thereof. In addition, as a gas composition that is set as the correction gas of mass flowmeter 5a, a value, which is close to a composition of a gas that can be actually supplied, may be selected.

On the other hand, in mass flowmeter 5a, the amount of heat and the instructed flow rate have a correlation. However, in a case where a gas having a composition different from a corrected gas composition is supplied, it is difficult to constantly maintain the amount of heat.

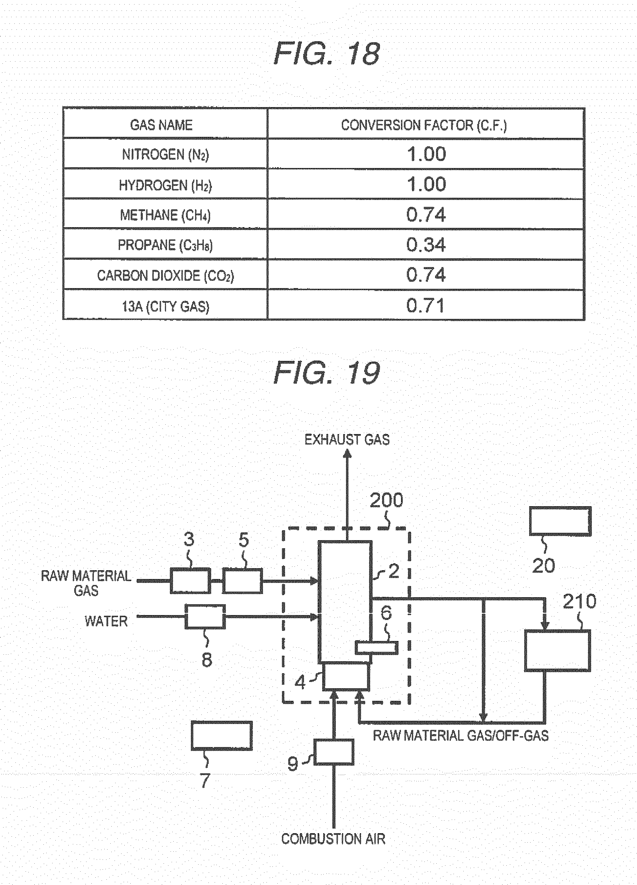

FIG. 18 is a view illustrating a value of a conversion factor (C.F.) for each gas composition in a typical mass flowmeter in the second example.

In a case of a mixed gas, the value can be calculated by adding values, which are obtained by multiplying C.F. in a single gas and a mixing ratio thereof, to each other.

Here, when a corrected (designed) gas composition and a composition of a gas that is actually supplied are different from each other, the actual flow rate in mass flowmeter 5a is expressed by the following expression.

(Actual flow rate) = (Instructed flow rate)$\times$(C.F. in an actual composition)$\div$(C.F. in a correction gas)

Here, for example, it is assumed that a gas composed of 100% methane (the number of moles of C in 1 mole of raw material gas: 1.0) is supplied by using mass flowmeter 5a that is corrected with 13A (the number of moles of C in one mole of raw material gas: 1.17) that is a representative gas of the city gas.

As can be seen from FIG. 18, C.F. in an actual composition, that is, C.F. of methane is 0.74. In addition, C.F. in the correction gas, that is, C.F. of 13A is 0.71. When activating hydrogen generation apparatus 200 by supplying a gas in such a manner that a value recognized by mass flowmeter 5a becomes a predetermined value F0, from a calculation formula (F0$\times$0.74$\div$0.71), a flow rate F' of a gas that is actually supplied becomes (F0$\times$1.05). That is, the gas is actually supplied in a flow rate that is 1.05 times a flow rate that is detected by mass flowmeter 5a.

On the other hand, a ratio C' of the number of moles of carbon in the raw material gas becomes 0.85 from a calculation formula of (1.0$\div$1.17). As described above, the number of moles of carbon has a relationship proportional to the amount of heat as illustrated in FIG. 16, and thus the total amount of heat Q that is supplied may approximate to a product of a carbon number C and a flow rate F. That is, when a gas composed of 100% methane is supplied to mass flowmeter 5a that is corrected with 13A, the amount of heat Q' of a gas that is actually supplied is expressed by the

following expression.

$$Q' \simeq C' \times F' = 0.85 \times 1.05 \times Q = 0.89 \times Q$$

That is, the amount of actually supplied heat becomes 0.89 times the amount of heat in 13A, and thus the temperature rise rate during activation also becomes 0.89 times.

In a case of using mass flowmeter 5a, the amount of the heat and the instructed flow rate have a proportional relationship. Accordingly, for example, in a case of supplying a gas with the amount of heat lower than that of the correction gas, the amount of heat per unit volume becomes 0.85 times in the previous example, but the actual flow rate becomes 1.05 times the instructed flow rate, and thus the amount of heat that is supplied becomes 0.89 times greater than 0.85 times. Accordingly, it can be said that this case is useful.

However, if the above-described difference is great, excess or deficiency occurs in the flow rate of the raw material, and thus excess or deficiency occurs in the amount of hydrogen generated, or excess or deficiency occurs in the amount of heat of the raw material gas. Accordingly, it is difficult to maintain reformer 2 to a predetermined temperature, and thus stable driving of hydrogen generation apparatus 200 becomes difficult.

Next, description will be given of a characteristic operation in the second example, but description will be given of only a difference from the first example, and the others are set to be the same as in the first example.

"Method of Correcting Amount of Raw material gas Supplied"

Next, description will be given of a method of correcting the amount of the raw material gas supplied.

As described above, controller 7 performs control of correcting the value detected by mass flowmeter 5a or the target flow rate of the raw material from the temperature variation rate (for example, a ratio of the temperature rise rate: here, 0.89).

More specifically, in the former case, that is, in a case of correcting the value that is detected by mass flowmeter 5a, for example, when the value of X is 0.89, correction is made in such a manner that mass flowmeter 5a recognizes a value, which is 0.89 times the amount of the supplied raw material gas that is detected before correction, as a true amount of the raw material gas supplied. According to this, even though the target flow rate is the same, correction is made so that the raw material gas is actually supplied in an amount that is 1.12 times the amount before correction. Here, 1.12 is the reciprocal of 0.89.

In addition, in the latter case, that is, in a case where the target flow rate of the raw material gas is corrected, for example, when the target flow rate before correction is 3.0 NL/min, correction is made in such a manner that 3.36 NL/min, which is obtained by multiplying 3.0 NL/min by 1.12 that is the reciprocal of X, becomes a true target flow rate. In addition, the correction value may be calculated from the variation rate during activation, and the correction value may be used in the subsequent normal driving.

According to this configuration, even in a case where the raw material gas has any composition such as a case of installation in an area in which a gas composition is different from a corrected gas composition of mass flowmeter 5a, and a case of a seasonal composition variation, it is possible to easily correct the value detected by mass flowmeter 5a or the target flow rate of the raw material from the temperature rise rate.

In addition, it is possible to maintain the amount of the raw material gas that is actually supplied, that is, the amount of heat to a predetermined value regardless of the apparent amount, which is detected by mass flowmeter 5a, of the raw material supplied, and thus stable hydrogen generation becomes possible. In addition, it is possible to drive hydrogen generation apparatus 200 under wide conditions in a more accurate manner by using mass flowmeter 5a.

"Method of Correcting Amount of Water Supplied"

Next, description will be given of a method of correcting the amount of water supplied.

In a case where correction is made to increase the amount of the raw material gas supplied in comparison to the amount before correction by using the correction value that is obtained, controller 7 controls water supply device 8 to reduce the amount of water that is supplied to reformer 2 in comparison to the amount before correction. In addition, in a case where the correction is made to decrease the amount of the raw material gas supplied in comparison to the amount before correction, controller 7 controls water supply device 8 to increase the amount of water supplied in comparison to the amount before correction. In addition, controller 7 may control water supply device 8 in such a manner that S/C, which is a ratio of the number of moles of water supplied to reformer 2 to the number of moles of carbon in a corrected raw material gas, becomes constant.

According to this configuration, when correcting the amount of the raw material gas supplied, it is possible to suppress a great deviation in the amount of water supplied, and thus it is possible to perform driving in a state in which S/C is in a predetermined range. Accordingly, it is possible to maintain the reforming temperature to a predetermined temperature regardless of a composition of the raw material gas that is supplied, and thus stable driving of hydrogen generation apparatus 200 with high efficiency becomes possible.

"Method of Correcting Amount of Combustion Air Supplied"

Next, description will be given of a method of correcting the amount of combustion air supplied.

In a case where the correction is made to increase the amount of the raw material gas supplied in comparison to the amount before correction by using the correction value that is obtained, controller 7 controls combustion air supply device 9 to reduce the amount of the combustion air that is supplied to combustor 4 in comparison to the amount before correction. In addition, in a case where the correction is made to decrease the amount of the raw material gas supplied in comparison to the amount before correction, controller 7 controls combustion air supply device 9 to increase the amount of the combustion air supplied in comparison to the amount before correction.

In addition, controller 7 may control combustion air supply device 9 in such a manner that a ratio of the flow rate of the combustion air that is supplied to combustor 4 to the flow rate of the off-gas from hydrogen using apparatus 210, which is derived from the corrected amount of the raw material gas supplied, becomes constant.

According to this configuration, when correcting the amount of the raw material gas supplied, it is possible to suppress a great deviation in the amount of the combustion air supplied, and thus it is possible to perform driving in a state in which the combustion air ratio $\lambda$ is in a predetermined range. Accordingly, the reforming temperature is maintained to a predetermined temperature regardless of the composition of the raw material gas supplied, and thus stable driving of hydrogen generation apparatus 200 with high efficiency becomes possible.

(Third Example not part of the invention but facilitates understanding of the invention)

Next, description will be given of hydrogen generation apparatus 200 in the third example.

FIG. 19 is a view illustrating a configuration of hydrogen generation apparatus 200 in the third example.

The same reference numerals will be given to portions which are the same as or equivalent to those in the first example illustrated in FIG. 13, and detailed description thereof will be omitted. This example employs a configuration in which gas leakage detection unit 20 that detects whether or not leakage of the raw material gas occurs is further provided in addition to the configuration of the first example.

Next, description will be given of a characteristic operation in the third example, but description will be given of only a difference from the first example, and the others are set to be the same as in the first example.

When the raw material gas is combusted in combustor 4 to raise the temperature of reformer 2, and the temperature variation rate, which is detected by reforming temperature detector 6, is measured, if a minute amount of raw material gas is leaked, even though the leakage occurs in a stable range in terms of hydrogen generation apparatus 200, the leakage has an effect on the temperature variation rate, and thus accurate determination cannot be made.

Accordingly, controller 7 detects whether or not leakage of the raw material gas occurs before detecting the temperature variation rate of reformer 2.

As gas leakage detection unit 20, for example, a combustible gas detector may be used to confirm whether or not leakage occurs through signal detection. In addition, for example, it is possible to indirectly confirm that gas leakage does not occur by confirming that a reduction in pressure does not occur after applying a pressure to the inside of a predetermined limited path. In addition, with regard to an operation of the confirmation, it is preferable to perform confirmation before detecting the temperature variation rate of hydrogen generation apparatus 200, or the confirmation may be appropriately performed during activation, that is, during temperature rise.

According to this configuration, it is possible to reliably measure the temperature variation of reformer 2 during temperature rise, and thus it is possible to make a correct determination. Accordingly, more stable driving of hydrogen generation apparatus 200 becomes possible.

(Fourth Example not part of the invention but facilitates understanding of the invention)

Next, description will be given of hydrogen generation apparatus 200 in the fourth example.

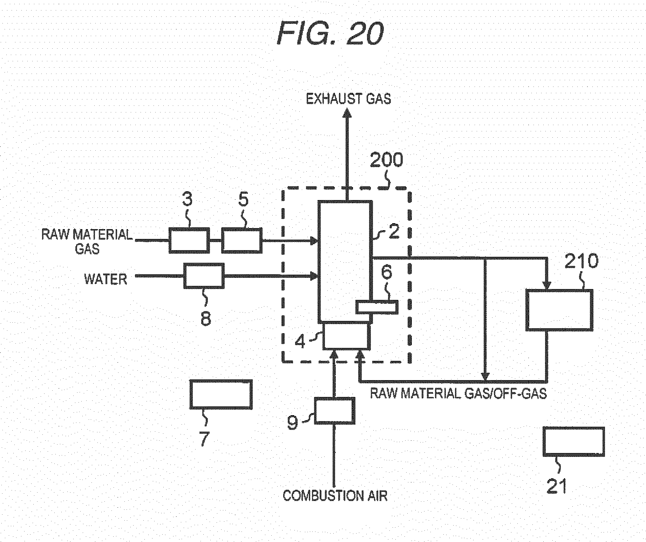

FIG. 20 is a view illustrating a configuration of hydrogen generation apparatus 200 in the fourth example.

The same reference numerals will be given to portions which are the same as or equivalent to those in the first example illustrated in FIG. 13, and detailed description thereof will be omitted. This example employs a configuration in which storage unit 21 that stores the correction value of the amount of the raw material gas supplied based on the temperature variation rate is further provided in addition to the configuration of the first example.

Next, description will be given of a characteristic operation in the fourth example, but description will be given of only a difference from the first example, and the others are set to be the same as in the first example.

Controller 7 performs control of allowing the subsequent activation and driving to be performed on the basis of the correction value that is stored in storage unit 21.

As described above, activation and driving are performed on the basis of the result of determination that is made once, and thus more stable driving becomes possible during the subsequent activation. Even when the corrected gas composition of raw material gas supply amount detector 5 that is used and a composition of a gas that is actually supplied greatly deviate from each other, it is possible to perform driving with a value that is close to the composition of the gas that is actually supplied during the subsequent activation and driving. At this time, even though sufficient correction cannot be made through correction that is made once, when correction is repeated on the basis of the correction value that is stored to gradually optimize driving parameters, stable driving becomes possible.

In addition, correction may be made for each activation of hydrogen generation apparatus 200, and the correction value may be stored for each activation. In addition, the correction may be made at a predetermined timing, and the correction value may be stored at the timing.

According to this configuration, even when hydrogen generation apparatus 200 is installed in an area in which a gas composition is different from the corrected gas composition, stable driving is easily possible in conformity to an actually supplied gas. In addition, even when a seasonal variation in a gas composition, a variation in gas quality over a long period of time, and the like occur, it is possible to stably drive hydrogen generation apparatus 200 over a long period of time.

(Fifth Example not part of the invention but facilitates understanding of the invention)

Next, description will be given of hydrogen generation apparatus 200 in the fifth example.

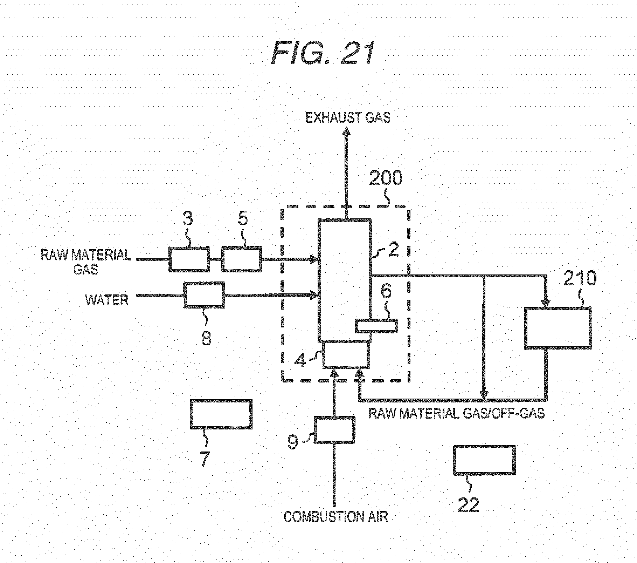

FIG. 21 is a view illustrating a configuration of hydrogen generation apparatus 200 in the fifth example.

The same reference numerals will be given to portions which are the same as or equivalent to those in the first example illustrated in FIG. 13, and detailed description will be omitted. This example employs a configuration in which ambient temperature detector 22 that detects an ambient temperature of hydrogen generation apparatus 200 is further provided in addition to the configuration of the first example.

Next, description will be given of a characteristic operation in the fifth example, but description will be given of only a difference from the first example, and the others are set to be the same as in the first example.

Controller 7 corrects a value of the temperature variation rate on the basis of a temperature detected by ambient temperature detector 22.

A temperature rise due to combustion contributes to the temperature variation rate of reformer 2, and the temperature variation rate of reformer 2 may vary due to heat dissipation from reformer 2 or the temperature of the raw material gas that is supplied. The amount of heat dissipation depends on a difference between a surface temperature of a device (heat insulating material) and an ambient temperature thereof. That is, for example, when the ambient temperature is low, the amount of heat dissipation relatively increases, and the temperature of the raw material gas and the combustion air, which are supplied, is lowered, and thus the temperature variation rate decreases (temperature is less likely to rise).

Accordingly, when the temperature variation rate is corrected on the basis of the ambient temperature, it is possible to more accurately make a correction that is caused by the amount of heat of the raw material gas.

According to this configuration, it is possible to more accurately calculate the temperature variation rate of reformer 2, which is caused by the amount of heat of the raw material gas, regardless of the ambient temperature, and it is possible to correct the amount of the raw material gas supplied. Accordingly, it is possible to realize hydrogen generation apparatus 200 in which the amount of hydrogen generated is maintained to a predetermined value, and stable driving becomes possible.

(Sixth Example not part of the invention but facilitates understanding of the invention)

Next, description will be given of a hydrogen generation apparatus in the sixth example. A configuration of this example can be made to be the same as the configuration of the hydrogen generation apparatus in the first example, and thus detailed description thereof will be omitted.

Next, description will be given of a characteristic operation in the sixth example, but description will be given of only a difference from the first example, and the others are set to be the same as in the first example.

Controller 7 corrects a value of the temperature variation rate on the basis of driving time of reformer 2.

A temperature rise due to combustion contributes to the temperature variation rate of reformer 2, and the temperature variation rate may be changed, for example, in accordance with deterioration of a catalyst. The water vapor reforming reaction is performed by the catalyst. However, typically, the catalyst deteriorates with the passage of time, and thus a reaction rate tends to be slow. When the reaction rate varies, the amount of temperature variation due to reaction heat also varies. Accordingly, even when a raw material gas with the same amount of heat is supplied without being changed with the passage of time, the temperature variation rate of reformer 2 may vary with the passage of time. Accordingly, when the temperature variation rate is corrected on the basis of the driving time of reformer 2, it is possible to more accurately make a correction that is caused by the amount of heat of the raw material gas.

According to this configuration, it is possible to more accurately calculate the temperature variation rate of reformer 2 which is caused by the amount of heat of the raw material gas regardless of deterioration with the passage of the driving time, and the like, and it is possible to correct the amount of the raw material gas supplied, and thus it is possible to realize hydrogen generation apparatus 200 in which the amount of hydrogen generated is maintained to a predetermined value, and stable driving is possible.

(Seventh Example not part of the invention but facilitates understanding of the invention)

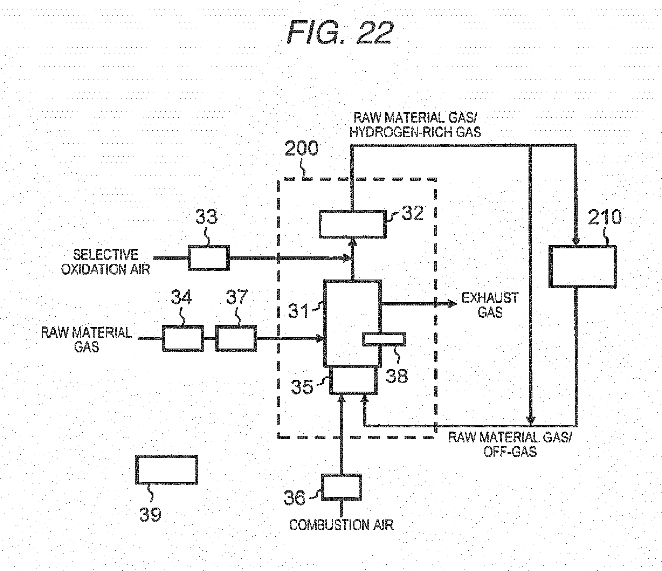

FIG. 22 is a view illustrating a configuration of hydrogen generation apparatus 200 in the seventh example.

As illustrated in FIG. 22, hydrogen generation apparatus 200 in this example includes reformer 31 that generates a hydrogen-containing gas through a reforming reaction by using a hydrocarbon-containing raw material gas, and water vapor, and selective oxidizer 32 that reduces a concentration of carbon monoxide in the hydrogen-containing gas that is supplied from reformer 31. In addition, hydrogen generation apparatus 200 further includes combustor 35 that combusts at least one of the raw material gas and the hydrogen-containing gas to heat reformer 31, and reforming temperature detector 38 that detects a temperature of reformer 31.

In addition, as a system, selective oxidation air supply device 33 that supplies selective oxidation air to selective oxidizer 32, raw material gas supply device 34 that supplies the raw material gas to reformer 31, combustion air supply device 36 that supplies combustion air to combustor 35, raw material gas supply amount detector 37 that detects the amount of the raw material gas supplied, and controller 39 are further provided.

Reformer 31 is filled with a reforming catalyst. Here, a method, in which hydrogen is obtained by using a Ru-based catalyst as the reforming catalyst, is employed. Reformer 31 is configured to be heated with heat transfer from combustor 35, and reforming temperature detector 38 is provided to detect a heating state during combustion of at least the raw material gas.

In combustor 35, at least one of a hydrocarbon-containing raw material gas, and a hydrogen-containing gas is combusted. Here, as a temperature detector, a thermocouple is provided to a flow path on an outlet side of a reforming catalyst layer, and measures a temperature of a gas that is discharged from the reforming catalyst. An outer side of reformer 31 is covered with a thermal insulating material (not illustrated).

A disposition position of reforming temperature detector 38 is not limited to the above-described example as long as reforming temperature detector 38 can detect a heating state during combustion of the raw material gas. A configuration capable of detecting a temperature variation due to combustion of at least the raw material gas is possible, and as a reforming reaction, a water vapor reforming reaction, a partial oxidation reaction, and an auto-thermal reaction are exemplified.

In selective oxidizer 32, the Ru-based catalyst is used as the selective oxidation catalyst, and selective oxidation air is supplied form selective oxidation air supply device 33. On a selective oxidation catalyst, carbon monoxide in the hydrogen-containing gas is selectively reduced to approximately 10 ppm or less through an oxidation reaction (exothermic reaction). In addition, the selective oxidation air is supplied so that $O_2/CO$, which represents a ratio of a flow rate of oxygen supplied to a flow rate of carbon monoxide to be removed, becomes approximately 1.5.

Here, supply of excessive oxygen contributes to combustion of hydrogen other than CO, and leads to consumption of necessary hydrogen. In addition, supply of excessive oxygen also leads to a temperature rise, and thus there is a possibility that durability of a catalyst and a reactor may deteriorate, and a runaway reaction due to an auxiliary methanation reaction may occur. Accordingly, it is important to manage the flow rate of air (oxygen) supplied. In addition, it is possible to employ a configuration in which the hydrogen-containing gas that is discharged from reformer 31 and contains carbon monoxide is supplied to selective oxidizer 32 after reducing carbon monoxide by using a CO converting catalyst.

Here, raw material gas supply device 34 is configured to supply the raw material gas after raising a pressure of the raw material gas by using a buster pump. Raw material gas supply device 34 is controlled in such a manner that in the raw material gas of which the pressure is raised, the amount of the raw material gas that is detected by raw material gas supply amount detector 37 becomes a predetermined flow rate. As raw material gas supply amount detector 37, here, a mass flowmeter is used. The mass flowmeter has an advantage capable of measuring a flow rate at a relatively low price without being affected by a temperature and a pressure in a wide flow rate region. In addition, the raw material gas may be supplied after desulfurizing a sulfur component in the raw material gas through a desulfurizer.

Next, description will be given of an operation of hydrogen generation apparatus 200 in the seventh example. In addition, the following all operations are performed by controlling respective devices of hydrogen generation apparatus 200 by controller 39.

"Method of Activating Hydrogen Generation Apparatus"

First, description will be given of a method of activating hydrogen generation apparatus 200. Generation of hydrogen is performed through a catalytic reaction, but the reaction progresses by maintaining the catalyst to a predetermined temperature. Accordingly, first, the raw material gas is supplied by controlling raw material gas supply device 34 by controller 39 in such a manner that the amount, which is detected by raw material gas supply amount detector 37, of the raw material gas supplied becomes a predetermined value.

Here, a feedback control type may be used. The raw material gas is supplied to combustor 35, but the raw material gas may be supplied to combustor 35 through reformer 31. In addition, the raw material gas, which is discharged from reformer 31, may pass through hydrogen using apparatus 210, or may be by-passed by using a switching value (not illustrated). This example employs a configuration in which the raw material gas, which passes through reformer 31, is supplied to combustor 35 by by-passing hydrogen using apparatus 210.

In addition, the combustion air is also supplied to combustor 35 by combustion air supply device 36, and the raw material gas is ignited by an igniter (not illustrated). The combustion air is supplied in such a manner that the flow rate becomes a predetermined flow rate that is determined in advance. The temperature of reformer 31 is raised due to combustion of the raw material gas, and the temperature is detected by reforming temperature detector 38.

The reforming reaction of the raw material gas progresses in reformer 31 in combination with a temperature rise. In combustor 35, a mixed gas including an unreacted raw material gas and a hydrogen gas generated by reformer 31 is combusted, and thus the temperature of reformer 31 is additionally raised. Here, in hydrogen generation apparatus 200, a CO removing unit including selective oxidizer 32 may be heated by a heater (not illustrated), and the like.

When the temperature detected by reforming temperature detector 38 reaches a high temperature (here, 550°C) that is sufficient for generation of hydrogen, hydrogen may be used by supplying the hydrogen-containing gas to hydrogen using apparatus 210, or unused hydrogen may be returned to combustor 35 for combustion.

"Method of Driving Hydrogen Generation Apparatus in Normal State"

Next, description will be given of a method of driving hydrogen generation apparatus 200 in a normal state. Controller 39 controls raw material gas supply device 34 to supply the raw material gas to reformer 31. It is necessary for the temperature of reformer 31 to be controlled to a target temperature that is determined in advance so as to obtain hydrogen necessary for hydrogen using apparatus 210 by promoting the reforming reaction.

Here, the flow rate of the raw material gas, which is detected by raw material gas supply amount detector 37, is controlled by using raw material gas supply device 34 in such a manner that the temperature detected by reforming temperature detector 38 becomes 630°C. As a method of controlling the flow rate of the raw material gas, feedback control may be used.

A target temperature of reformer 31 is a temperature that is affected by a heating amount at combustor 35, the amount of heat discharged from hydrogen generation apparatus 200, heat dissipation from the body of hydrogen generation apparatus 200, and the like, and it is preferable that the target temperature is determined in advance from the amount of hydrogen necessary for hydrogen using apparatus 210, a conversion rate of the raw material gas into hydrogen in hydrogen generation apparatus 200, and the like.

In addition, controller 39 controls combustion air supply device 36 to supply combustion air necessary to combust an off-gas that is supplied to combustor 35 and is transmitted from hydrogen using apparatus 210. In combustor 35, the off-gas is combusted to supply heat necessary for the reforming reaction in reformer 31. Here, a flow rate of the combustion air is controlled in such a manner that an air ratio indicating a supply air flow rate to a theoretical air flow rate becomes "1.7".

In addition, controller 39 calculates the amount of hydrogen, which is generated, from a conversion rate that is calculated from the raw material flow rate that is detected by raw material gas supply amount detector 37, and a temperature that is detected by reforming temperature detector 38, and controls hydrogen using apparatus 210 so that hydrogen can be used in a predetermined hydrogen usage rate range.

Controller 39 controls raw material gas supply device 34 to increase the amount of the raw material gas supplied so as to maintain the reforming temperature to the target temperature. However, in a case where a large amount of inert gas such as nitrogen and carbon dioxide is contained in the raw material gas, the amount of heat per unit volume of the raw material gas is lowered, and thus a necessary raw material flow rate is increased to maintain a predetermined temperature, or to obtain a predetermined amount of hydrogen.

"Composition of Raw material gas and Flow Rate of Carbon Monoxide"

Next, description will be given of a relationship between a flow rate of carbon monoxide to be removed by selective oxidizer 32, and a gas composition.

Here, as the reforming reaction, the water vapor reforming reaction is exemplified, and assumption is made for a case where S/C, which is a ratio between water vapor that is supplied, and a carbon number in the raw material gas, is set to 2.8, a reforming outlet temperature is set to 600°C, a converter is provided, and an outlet temperature of the converter is 200°C.

Here, it is assumed that as the raw material gas, a gas composed of 100% methane is supplied in a flow rate of 3.0 NL/min. In this case, a flow rate of carbon monoxide, which is supplied to selective oxidizer 32, through a reforming reaction and a converting reaction, becomes 0.022 NL/min in equilibrium. A ratio of the flow rate of carbon monoxide, which is supplied to selective oxidizer 32, to a flow rate of the raw material gas that is supplied becomes 0.73% from a calculation formula of $(0.022 \div 3.0 \times 100)$.

On the other hand, in a case of supplying a mixed gas composed of 20% nitrogen and 80% methane as the raw material gas, when a supply flow rate and a reforming temperature are set to be constant, a flow rate of carbon monoxide that is supplied to selective oxidizer 32 becomes 0.018 NL/min in equilibrium. In this case, the ratio of the flow rate of carbon monoxide, which is supplied to selective oxidizer 32, to the flow rate of the raw material gas that is supplied becomes 0.6% from a calculation formula of $(0.018 \div 3.0 \times 100)$.

However, actually, in a case where the flow rate of the raw material gas supplied is constant, the reforming temperature is lowered, the reforming reaction is suppressed, and the flow rate of carbon monoxide decreases. In addition, in a case where the raw material gas is controlled in order for the reforming temperature to be constant, the flow rate of the raw material gas increases. That is, in any case, the ratio of the flow rate of carbon monoxide, which is supplied to selective oxidizer 32, to the flow rate of the raw material gas that is supplied is additionally reduced from 0.6%, and a difference becomes significant.

Accordingly, for example, when a flow rate of selective oxidation air is set with respect to a predetermined flow rate of the raw material gas, in a case where the amount of heat of the raw material gas is low due to mixing-in of nitrogen and the like, the flow rate of carbon monoxide to be processed is relatively small. Accordingly, hydrogen is excessively consumed, and thus a predetermined amount of hydrogen is not supplied. As a result, stable driving of hydrogen generation apparatus 200 becomes difficult. In addition, a catalyst or a reactor may reach a high temperature due to excessive hydrogen consumption, and thus durability may deteriorate.

Next, description will be given of a characteristic operation of hydrogen generation apparatus 200 in the seventh example.

In a case where a predetermined flow rate of raw material gas is combusted in combustor 35 to raise a temperature of reformer 31, controller 39 performs control of correcting air flow rate that is supplied by selective oxidation air supply device 33 by using a temperature variation rate ($\alpha$: to be described later) that is detected by reforming temperature detector 38.

In addition, in a case where the temperature variation rate is less than a value ($\beta$: to be described later) that is set in advance, controller 39 may perform correction control in such a manner that the amount of air supplied by selective oxidation air supply device 33 becomes smaller in comparison to a case where the temperature variation rate is equal to or greater than the value that is set in advance.

"Method of Calculating Correction Value"

As described above, during activation of hydrogen generation apparatus 200, the raw material gas is supplied by controlling raw material gas supply device 34 in such a manner that the amount, which is detected by raw material gas supply amount detector 37, of the raw material gas supplied becomes a predetermined value. The temperature of reformer 31 is raised due to combustion of the raw material gas, and the temperature variation thereof is detected by reforming temperature detector 38.

Here, in a case where the raw material gas is combusted in combustor 35 to raise the temperature of reformer 31, a temperature variation rate $\alpha$, which is detected by reforming temperature detector 38, is defined. Here, the variation rate $\alpha$ is defined as a reforming temperature rise rate per predetermined time. That is, when a gas with a low amount of heat per unit volume is supplied as the raw material gas, the value of $\alpha$ becomes a relatively smaller value in comparison to a gas with a high amount of heat.

In addition, in a case where the raw material gas is combusted in combustor 35 to raise the temperature of reformer 31 by using a raw material gas composition that becomes the reference that is assumed in advance, a temperature variation rate that is detected by reforming temperature detector 38 may be measured as a reference temperature rise rate $\alpha0$. In this example, as an example, the temperature rise rate in a case of supplying a gas composed of 100% methane is set as $\alpha0$.

In addition, $\beta$ is defined as the temperature variation rate that is set in advance as described above, and when the temperature rise rate is less than $\beta$, correction may be made to decrease the amount of the selective oxidation air supplied. $\beta$ may be assumed, or it is preferable to calculate $\beta$ through experiment or calculation in advance on the basis of a raw material gas composition to which correction is necessary to be made.

More specifically, for example, in a case of supplying a methane gas containing 20% nitrogen, it is assumed that it is necessary to correct the amount of selective oxidation air supplied. In this case, the temperature rise rate $\beta$, in a case where a raw material gas is combusted in combustor 35 to raise the temperature of reformer 31 by supplying a methane gas including 10% nitrogen, is measured.

In addition, when the raw material gas is actually supplied and is combusted in combustor 35 to raise the temperature of reformer 31, when the measured temperature rise rate is less than $\beta$ (temperature rise rate is lower than $\beta$), correction may be made to reduce the flow rate of air that is supplied by selective oxidation air supply device 33. It is preferable that $\beta$, which is a value of the temperature rise rate that is set in advance, is appropriately set in consideration of a composition of a raw material gas that can be supplied.

"Method of Correcting Amount of Selective Oxidation Air Supplied"

In a case where the raw material gas is combusted in combustor 35 in a predetermined flow rate to raise the temperature of reformer 31, in this example, the temperature variation rate $\alpha$ that is detected by reforming temperature detector 38 becomes $\alpha 0$ when 100% methane is actually supplied, but it is assumed that when a gas with a low amount of heat (for example, a mixed gas composed of 20% nitrogen and 80% methane) as a composition A, the temperature variation rate becomes $\alpha 1$. Here, definition is made as a reforming temperature rise rate per predetermined time, and the amount of heat of the raw material gas is small in a case of containing nitrogen, and thus the temperature rise rate satisfies a relationship of $\alpha 1 < \alpha 0$.

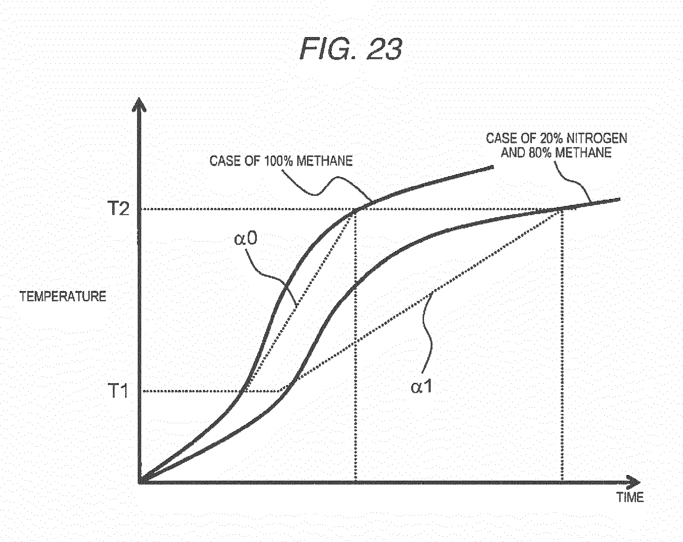

FIG. 23 is a view illustrating a difference in a temperature rise rate during activation when supplying gases having compositions different from each other in the seventh example.

As illustrated in FIG. 23, when a composition of a gas that is actually supplied is different from a composition that is assumed, a difference in the amount of heat appears as a difference in the temperature rise rate.

Here, $\alpha 1/\alpha 0$, which is a ratio of the temperature rise rate, is considered. Correction may be made by using a value that is obtained by multiplying the ratio $\alpha 1/\alpha 0$ by a predetermined flow rate of the selective oxidation air. That is, as the amount of heat of the raw material gas is smaller, and the temperature rise rate is slower, correction may be made to reduce the flow rate of the selective oxidation air.

In addition, in a case where $\alpha 1$ is slower than $\beta$ that is set in advance, correction may be made to reduce the flow rate of the selective oxidation air. In addition, correction may be made with a value that is calculated by using a predetermined coefficient on the basis of $\alpha 1$ and $\alpha 0$ instead of the ratio of $\alpha 1$ and $\alpha 0$.

Specifically, in a case where the temperature of reformer 31 is raised by supplying a raw material gas composed of 100% methane as a reference gas in a predetermined flow rate (here, 1.0 NL/min), the temperature rise rate $\alpha 0$ is 10 °C/min. On the other hand, in a case of supplying a mixed gas composed of 20% nitrogen and 80% methane in the same flow rate, the amount of heat is smaller than that in the former, and thus the temperature rise rate $\alpha 1$ is as slow as 8 °C/min.

In this case, $\alpha 1/\alpha 0 = 8 \div 10 = 0.8$, and thus, for example, correction may be made to supply the selective oxidation air in a flow rate that is obtained by multiplying the flow rate that is set in advance by 0.8. The flow rate of the selective oxidation air, which is set in advance, is an air flow rate capable of sufficiently removing carbon monoxide in selective oxidizer 32, and is preferably set on the basis of, for example, the amount of the raw material gas supplied.

In addition, here, the variation rate $\alpha$ is defined as the reforming temperature rise rate per predetermined time. However, for example, even when $\alpha$ is defined as time necessary to rise to a predetermined temperature, the same result is obtained. In this case, the smaller the amount of heat of the raw material gas, the slower the temperature rise rate, and the longer time taken to rise to the predetermined temperature is.

A relationship between $\alpha 0$ and $\alpha 1$ may vary depending on a definition method, but it is preferable that correction is made in such a manner that as the amount of heat of the raw material gas is smaller, and the temperature rise rate is slower (time is necessary to reach predetermined time), the flow rate of the selective oxidation air is reduced.

In addition, determination of the composition of the raw material gas may not be made as long as the amount of heat of the raw material gas supplied can be determined from the temperature rise rate.

According to this configuration, for example, even in a case of installation in an area in which the raw material gas contains a large amount of gas such as nitrogen and carbon dioxide other than hydrocarbon, it is possible to realize a high-versatility hydrogen generation apparatus in which it is not necessary to set parameters in advance or from an outer side, and it is possible to easily determine the amount of heat of the raw material gas from the temperature rise rate.

In addition, when the flow rate of the selective oxidation air is corrected on the basis of the determination result, the amount of hydrogen that is excessively consumed in selective oxidizer 32 is suppressed, and thus it is possible to realize stable hydrogen generation apparatus 200 with high efficiency. In addition, when reducing the flow rate of the selective oxidation air by the amount of components such as nitrogen and carbon dioxide, which are contained, other than hydrocarbon, the amount of hydrogen that is excessively consumed in selective oxidizer 32 is suppressed, and thus it is possible to realize stable hydrogen generation apparatus 200 with high efficiency.

(First Modification)

Next, description will be given of a first modification of the seventh example.

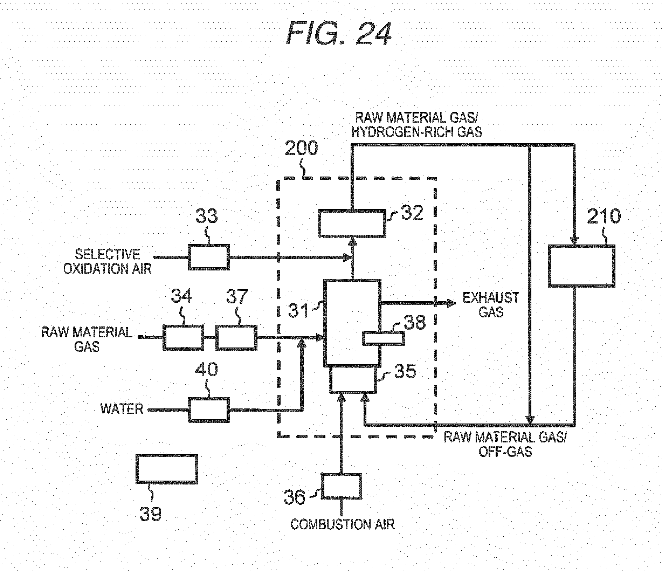

FIG. 24 is a view illustrating a configuration of hydrogen generation apparatus 200 of the first modification in the seventh example.

The same reference numerals will be given to portions which are the same as or equivalent to those in the seventh example illustrated in FIG. 22, and detailed description thereof will be omitted. In this modification, in addition to the configuration of the seventh example, water supply device 40 that supplies water to reformer 31 is further provided. Water is supplied to reformer 31 by using water supply device 40 in order for the water vapor reforming reaction (endothermic reaction) to progress, thereby generating a hydrogen-containing gas.

Next, description will be given of a characteristic operation in this modification.

When a temperature detected by reforming temperature detector 38 reaches a predetermined temperature after supplying the raw material gas to reformer 31, controller 39 initiates water supply to reformer 31, and measures a temperature variation rate.

The temperature of reformer 31 is raised due to combustion of the raw material gas, and the temperature is detected by reforming temperature detector 38. When the temperature of reformer 31 is raised, and the temperature detected by reforming temperature detector 38 reaches a first temperature that is determined in advance, a predetermined flow rate of water is supplied to reformer 31 by water supply device 40. Here, it is preferable that the first temperature is equal to or higher than a temperature at which water leakage through condensation due to supply of water does not occur in a catalyst layer, and is equal to or lower than a temperature at which carbon precipitation due to a high temperature does not occur. Here, the first temperature is set to 150°C.

In reformer 31, the water vapor reforming reaction progresses by the raw material gas and water in combination with a temperature rise. In combustor 35, a mixed gas including an unreacted raw material gas and a hydrogen gas generated by reformer 31 is combusted, and thus the temperature of reformer 31 is additionally raised.

In addition, controller 39 controls water supply device 40 to supply water vapor (reforming water) necessary for the water vapor reforming reaction to reformer 31. In this example, with regard to a flow rate of the reforming water, water supply device 40 is controlled in such a manner that S/C, which represents a ratio of water to a carbon number in the raw material gas that is supplied to reformer 31, becomes 2.9.

Here, in a case where an inert gas such as nitrogen is contained in the raw material gas, the amount of heat per unit volume further decreases in comparison to a case where the inert gas is not included in the raw material gas. That is, when the raw material gas is supplied in the same amount, the more the inert gas such as nitrogen is abundantly included, the smaller the amount of heat supplied is, and the less the temperature variation rate during activation is (the longer time taken to reach a predetermined temperature is).

In other words, in a case where the amount of heat of the raw material gas is small, a case where a ratio of the carbon number in the raw material gas is relatively small is implied. In this case, in a case of not changing the amount of water supplied, the carbon number is small and the amount of water vapor is constant, and thus actual S/C relatively increases in comparison to S/C that is set.

More specifically, in a case where S/C is set on the assumption of a raw material gas composed of 100% methane, and water vapor is supplied, if methane containing 20% nitrogen in the raw material gas is supplied, a value of S/C that is supplied becomes 1.25 times that of 100% methane.

Here, the water vapor reforming reaction is an endothermic reaction, and S/C greatly contributes to reaction heat. For example, when S/C that is actually supplied increases, it is necessary to supply a relatively excessive amount of water vapor, and thus the temperature rise rate of reformer 31 becomes slow in a predetermined amount of the raw material gas supplied due to sensible heat and latent heat.

As described above, when the temperature detected by reforming temperature detector 38 reaches a predetermined temperature after supplying the raw material gas to reformer 31, water supply to reformer 31 is initiated, and then measurement of the amount of temperature variation, which is detected by reforming temperature detector 38, is performed. Accordingly, in a case where a composition of the raw material gas deviates from a composition that is assumed, a value of S/C that is actually supplied also deviates, and thus a more significant difference occurs in the amount of temperature variation. According to this, it is possible to more accurately detect a difference in the amount of heat of the raw material gas, and when a flow rate of the selective oxidation air is corrected, stable driving becomes possible.

(Second Modification)

Next, description will be given of a second modification of the seventh example.

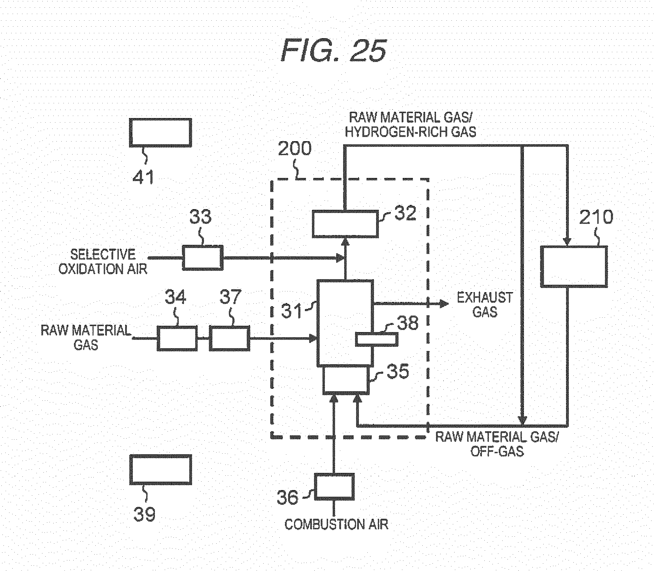

FIG. 25 is a view illustrating a configuration of hydrogen generation apparatus 200 of a second modification of the seventh example.

The same reference numerals will be given to portions which are the same as or equivalent to those in the seventh example illustrated in FIG. 22, and detailed description thereof will be omitted.

In this modification, in addition to the configuration of the seventh example, gas leakage detection unit 41, which detects whether or not leakage of the raw material gas occurs, is further provided.

When the raw material gas is combusted in combustor 35 to raise the temperature of reformer 31, and a temperature variation rate that is detected by reforming temperature detector 38 is measured, even in a stable range for hydrogen generation apparatus 200, if leakage of a minute amount of raw material gas occurs, the leakage has an effect on the temperature variation rate, and thus it is difficult to make an accurate determination.

Accordingly, controller 39 detects that leakage of the raw material gas does not occur before detecting the temperature variation rate of reformer 31.

As gas leakage detection unit 41, for example, a combustible gas detector may be used to confirm that leakage does not occur through signal detection. In addition, for example, it is possible to indirectly confirm that gas leakage does not occur by confirming that a reduction in pressure does not occur after applying a pressure to the inside of a predetermined limited path. In addition, with regard to an operation of the confirmation, it is preferable to perform confirmation before detecting the temperature variation rate of hydrogen generation apparatus 200, or the confirmation may be appropriately performed during activation, that is, during temperature rise.

According to this configuration, in a case where the raw material gas is combusted in combustor 35 to raise the temperature of reformer 31, the temperature variation rate, which is detected by reforming temperature detector 38, is more accurately measured, and thus the flow rate of the selective oxidation air is more accurately corrected. As a result, it is possible to realize hydrogen generation apparatus 200 in which stable driving is possible.

(Third Modification)

Next, description will be given of a third modification in the seventh example.

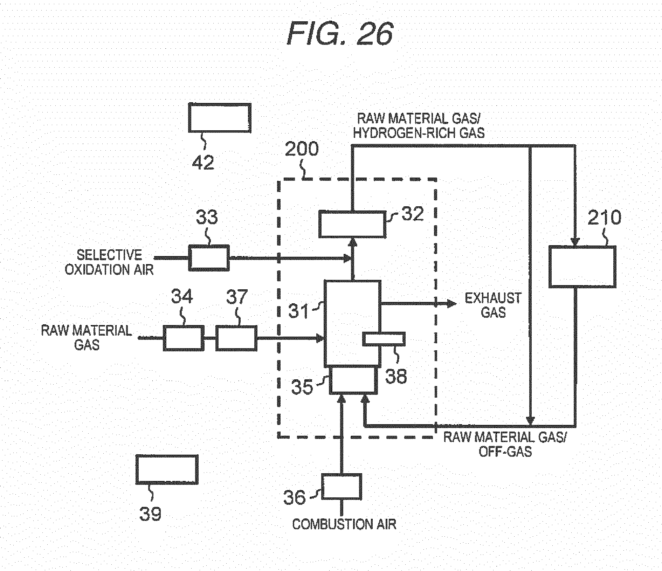

FIG. 26 is a view illustrating a configuration of hydrogen generation apparatus 200 of a third modification in the seventh example.

The same reference numerals will be given to portions which are the same as or equivalent to those in the seventh example illustrated in FIG. 22, and detailed description thereof will be omitted.

In this modification, in addition to the configuration of the seventh example, storage unit 42, which stores control parameters of hydrogen generation apparatus 200 which are based on the temperature variation rate, is provided, and controller 39 is configured to perform control of allowing the subsequent activation and driving to be performed on the basis of the control parameters which are stored in storage unit 42.

As described above, activation and driving are performed on the basis of the result of determination that is made once, and thus more stable driving becomes possible during the subsequent activation. Even when the corrected gas composition of raw material gas supply amount detector 37 that is used and a composition of a gas that is actually supplied greatly deviate from each other, it is possible to perform driving with a value that is close to the composition of the actually supplied gas during the subsequent activation and driving.

At this time, even though sufficient correction cannot be made through correction that is made once, when correction is repeated on the basis of the correction value that is stored to gradually optimize driving parameters, stable driving becomes possible.

In addition, correction may be made for each activation of hydrogen generation apparatus 200, and the correction value may be stored for each activation. In addition, the correction may be made at a predetermined timing, and the correction value may be stored at the timing.

According to this configuration, even when hydrogen generation apparatus 200 is installed in an area in which a gas composition is different from a gas composition that is assumed, stable driving is easily possible in conformity to an actually supplied gas. In addition, even when a seasonal variation in a gas composition, a variation in gas quality over a long period of time, and the like occur, it is possible to stably drive hydrogen generation apparatus 200 over a long period of time.

(Fourth Modification)

Next, description will be given of a fourth modification in the seventh example.

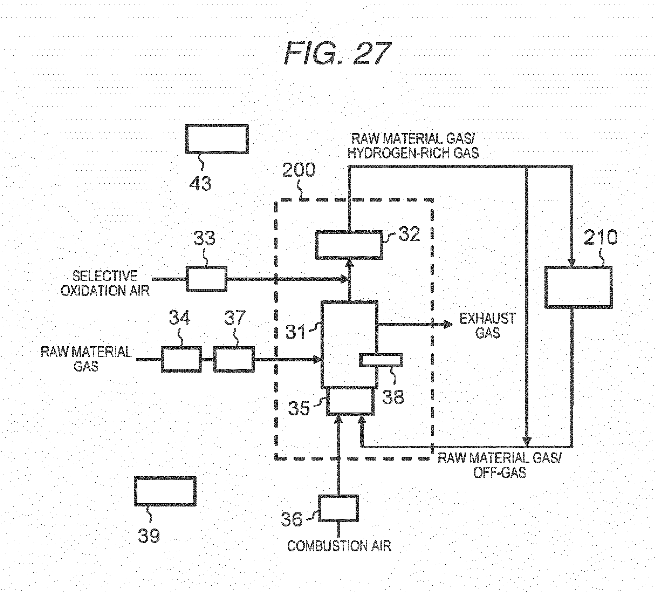

FIG. 27 is a view illustrating a configuration of hydrogen generation apparatus 200 of the fourth modification in the seventh example.

The same reference numerals will be given to portions which are the same as or equivalent to those in the seventh example illustrated in FIG. 22, and detailed description thereof will be omitted.

In this modification, in addition to the configuration of the seventh example, ambient temperature detector 43, which detects an ambient temperature of hydrogen generation apparatus 200, is provided, and controller 39 is configured to correct a value of the temperature variation rate on the basis of the temperature detected by ambient temperature detector 43.

A temperature rise due to combustion contributes to the temperature variation rate of reformer 31, and the temperature variation rate of reformer 31 may vary due to heat dissipation from reformer 31 and the temperature of the raw material gas that is supplied. The amount of heat dissipation depends on a difference between a surface temperature of a device (heat insulating material) and an ambient temperature thereof.

That is, for example, when the ambient temperature is low, the amount of heat dissipation relatively increases, and the temperature of the raw material gas and the combustion air, which are supplied, is lowered, and thus the temperature variation rate becomes small (temperature is less likely to rise). Accordingly, when correcting the temperature variation rate on the basis of the ambient temperature, it is possible to make a correction, which is caused by the amount of heat of the raw material gas, in a more accurate manner.

According to this configuration, it is possible to more accurately calculate the temperature variation rate of reformer 31 which is caused by the amount of heat of the raw material gas regardless of the ambient temperature, and thus the flow rate of the selective oxidation air is more accurately corrected. As a result, it is possible to realize hydrogen generation apparatus 200 in which stable driving is possible.

(Fifth Modification)

Next, description will be given of a fifth modification in the seventh example. A configuration of the fifth modification can be made to be the same as the configuration of hydrogen generation apparatus 200 in the seventh example, and thus detailed description thereof will be omitted.

Controller 39 corrects a value of the temperature variation rate on the basis of driving time of reformer 31. In addition, the correction may be made on the basis of driving time of hydrogen generation apparatus 200 including reformer 31.

A temperature rise due to combustion contributes to the temperature variation rate of reformer 31, and for example, the temperature variation rate of reformer 31 may be changed, for example, in accordance with deterioration of a catalyst. The water vapor reforming reaction is performed by the catalyst. However, typically, the catalyst deteriorates with the passage of time, and thus a reaction rate tends to be slow.

When the reaction rate varies, the amount of temperature variation due to reaction heat also varies. Accordingly, even when a raw material gas with the same amount of heat is supplied without being changed with the passage of time, the temperature variation rate of reformer 31 may vary with the passage of time. Accordingly, when the temperature variation rate is corrected on the basis of the driving time of reformer 31, it is possible to more accurately make a correction that is caused by the amount of heat of the raw material gas.

According to this configuration, it is possible to more accurately calculate the temperature variation rate of the reformer which is caused by the amount of heat of the raw material gas regardless of deterioration with the passage of the driving time, and the like, and it is possible to more accurately correct the flow rate of the selective oxidation air. Accordingly, it is possible to realize hydrogen generation apparatus 200 in which stable driving is possible.

(Sixth Modification)

Next, description will be given of a sixth modification in the seventh example. In this modification, a fuel cell system, which includes hydrogen generation apparatus 200 of any one of the above-described modifications, and a fuel cell that performs power generation by using the hydrogen-containing gas supplied from hydrogen generation apparatus 200, is exemplified.

Here, as the fuel cell, for example, a polymer electrolyte type fuel cell is exemplified, but the configuration thereof is known, and thus details thereof will be omitted.

A voltage of the fuel cell drops due to carbon monoxide, and thus it is necessary to reduce carbon monoxide to approximately 10 ppm or less. In combination of hydrogen generation apparatus 200 of this example and the fuel cell, consumption of hydrogen due to excessive air supply is suppressed, and thus it is possible to realize a fuel cell system in which stable power generation is possible.

In addition, controller 39 may correct a correlation between the amount of power generation in the fuel cell and the amount of air that is supplied by selective oxidation air supply device 33. That is, the flow rate of carbon monoxide which is to be processed in selective oxidizer 32 and the amount of power generation in the fuel cell have a predetermined correlation. Accordingly, the amount of carbon monoxide air supplied is set in advance with respect to the amount of power generation, and the flow rate of air, which is supplied by selective oxidation air supply device 33, may be corrected by using a temperature variation rate of the temperature detected by reforming temperature detector 38 in a case where the raw material gas is combusted in combustor 35 to raise the temperature of reformer 31.

According to this configuration, after a predetermined flow rate of the selective oxidation air is set with respect to the amount of power generation, even in a case where a large amount of inert gas such as nitrogen is contained in the raw material gas, consumption of hydrogen due to excessive air is suppressed, and thus it is possible to realize a fuel cell system in which stable power generation is possible.

(Eighth Example not part of the invention but facilitates understanding of the invention)

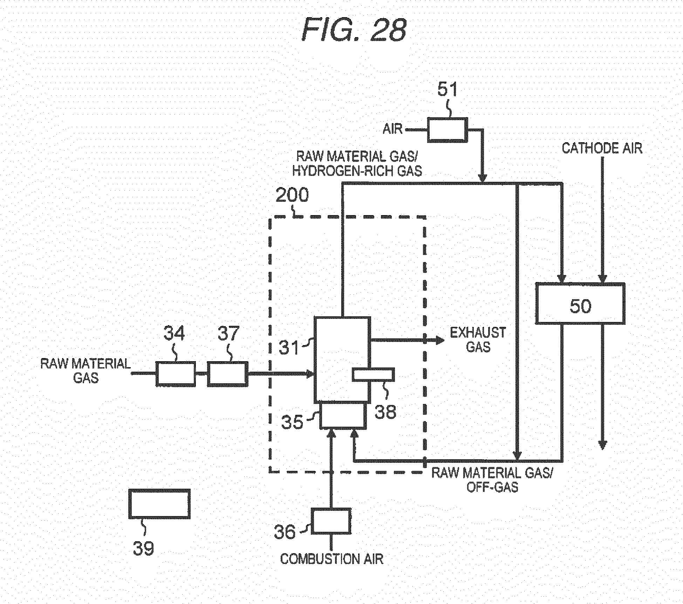

FIG. 28 is a view illustrating a configuration of a fuel cell system in the eighth example.

As illustrated in FIG. 28, the fuel cell system in this example includes reformer 31 that generates a hydrogen-containing gas through a reforming reaction by using a hydrocarbon-containing raw material gas and water vapor, fuel cell 50 that performs power generation by using the hydrogen-containing gas that is supplied from reformer 31, and anode air supply device 51 that supplies anode air to an anode of fuel cell 50.

In addition, the fuel cell system includes raw material gas supply device 34 that supplies the raw material gas to reformer 31, combustor 35 that combusts at least one of the raw material gas and the hydrogen-containing gas to heat reformer 31, combustion air supply device 36 that supplies combustion air to combustor 35, raw material gas supply amount detector 37 that detects the amount of the raw material gas supplied, reforming temperature detector 38 that detects the temperature of reformer 31, and controller 39. In addition, the same reference numerals will be given to portions which are the same as or equivalent to those in the seventh example illustrated in FIG. 22, and detailed description thereof will be omitted.

As fuel cell 50, here, a polymer electrolyte type fuel cell (PEFC) is used. Typically, a voltage of fuel cell 50 drops due to carbon monoxide, and thus it is necessary to reduce carbon monoxide to approximately 10 ppm or less by using a carbon monoxide remover. In addition, when a minute amount of carbon monoxide remains in the hydrogen-containing gas, carbon monoxide is absorbed to the anode during power generation of fuel cell 50, and thus power generation performance may deteriorate.

Accordingly, anode air supply device 51 is provided to supply the hydrogen-containing gas to the anode of fuel cell 50 after adding a minute amount of air to the hydrogen-containing gas. As anode air supply device 51, for example, it is possible to employ a configuration in which air of which a pressure is raised by a blower is supplied after controlling a flow rate by using an air flowmeter, and a needle valve.

Next, description will be given of an operation of the fuel cell system in the eighth example. In addition, the following all operations are performed by controlling respective devices of the full cell system by controller 39.

"Method of Driving Fuel Cell System"

First, as is the case with the seventh example, when hydrogen generation apparatus 200 is activated, and the temperature detected by reforming temperature detector 38 reaches a high temperature (here, 550°C) that is sufficient for generation of hydrogen, the hydrogen-containing gas is supplied to fuel cell 50 to initiate power generation. Fuel cell 50 is controlled in such a manner that hydrogen corresponding to approximately 80% of a hydrogen flow rate that is input is consumed in fuel cell 50 for power generation, and unused hydrogen is returned to combustor 35 for combustion.

After initiation of power generation, raw material gas supply device 34 is controlled to supply a predetermined raw material gas to reformer 31. It is necessary for the temperature of reformer 31 to be controlled to a target temperature that is determined in advance so as to obtain hydrogen necessary for fuel cell 50 by promoting the reforming reaction.

Here, a flow rate of the raw material gas, which is detected by raw material gas supply amount detector 37, is controlled by using raw material gas supply device 34 in such a manner that the temperature detected by reforming temperature detector 38 becomes 630°C. As a method of controlling the flow rate of the raw material gas, feedback control may be used.

The target temperature of reformer 31 is a temperature that is affected by a heating amount at combustor 35, the amount of heat discharged from hydrogen generation apparatus 200, heat dissipation from the body of hydrogen generation apparatus 200, and the like, and it is preferable that the target temperature is determined in advance from the amount of hydrogen necessary for fuel cell 50, a conversion rate of the raw material gas into hydrogen in hydrogen generation apparatus 200, and the like.

In addition, controller 39 controls combustion air supply device 36 to supply combustion air necessary for combustion of an off-gas that is supplied to combustor 35 and is transmitted from fuel cell 50. In combustor 35, the off-gas is combusted to supply heat necessary for the reforming reaction in reformer 31. Here, a flow rate of the combustion air is controlled in such a manner that an air ratio indicating a supply air flow rate to a theoretical air flow rate becomes "1.7".

In addition, controller 39 calculates the amount of hydrogen, which is generated, from a conversion rate that is calculated from the raw material flow rate that is detected by raw material gas supply amount detector 37, and a temperature that is detected by reforming temperature detector 38, and controls the amount of power generation of fuel cell 50 so that hydrogen can be used in a predetermined hydrogen usage rate range.

Controller 39 controls raw material gas supply device 34 to increase the amount of the raw material gas supplied so as to maintain the reforming temperature to the target temperature. However, in a case where a large amount of inert gas such as nitrogen and carbon dioxide is contained in the raw material gas, the amount of heat per unit volume of the raw material gas is lowered, and thus a necessary raw material flow rate is increased to maintain a predetermined temperature, or to obtain a predetermined amount of hydrogen.

"Composition of Raw material gas and Flow Rate of Carbon Monoxide"

Next, description will be given of a relationship between a flow rate of carbon monoxide which can be supplied to the anode of fuel cell 50 and a gas composition.

The flow rate of carbon monoxide that is contained in the hydrogen-containing gas has a relationship proportional to the amount of hydrocarbon supplied in the raw material gas on the assumption that a reaction in hydrogen generation apparatus 200 is stabilized. That is, it is preferable that the flow rate of the anode air is set as a function of the flow rate of the raw material gas, or a function of the amount of power generation of fuel cell 50 which has a predetermined relationship with the flow rate of the raw material gas. Here, anode air is configured to be supplied in a flow rate corresponding to 1% of the raw material gas.

For example, in a case of using a gas composed of 100% methane as the raw material gas, assumption is made for a case where air corresponding to 1% of the raw material gas is supplied. Specifically, in a case of supplying 3.0 NL/min of raw material gas, it is assumed that 30 cc/min of anode air is supplied. It is assumed that under these conditions, the amount of hydrogen consumed enters a predetermined range on the basis of a reaction of $H_2+(1/2)O_2$ in the anode of fuel cell 50, and thus stable driving is possible.

On the other hand, in a case of supplying a mixed gas composed of 20% nitrogen and 80% methane as the raw material gas, a concentration of hydrogen contained in the hydrogen-containing gas relatively decreases in comparison to a case of supplying 100% methane. When supplying air corresponding to 1% of the flow rate of the raw material gas under this condition, excessive hydrogen is consumed.

Accordingly, when setting the flow rate of the anode air with respect to a predetermined flow rate of the raw material gas, in a case where the amount of heat of the raw material gas is low due to mixing-in of nitrogen and the like, the flow rate of carbon monoxide to be processed is relatively small. Accordingly, hydrogen is excessively consumed, and a predetermined amount of hydrogen cannot be supplied. As a result, stable driving of fuel cell 50 becomes difficult.

Next, description will be given of a characteristic operation of the fuel cell system in the eighth example.

In a case where a predetermined flow rate of raw material gas is combusted in combustor 35 to raise a temperature of reformer 31, controller 39 performs control of correcting an air flow rate that is supplied by anode air supply device 51 by using a temperature variation rate ($\alpha$: to be described later) that is detected by reforming temperature detector 38.

In addition, in a case where the temperature variation rate is less than a value ($\beta$: to be described later) that is set in advance, controller 39 may perform correction control in such a manner that the amount of air supplied by anode air supply device 51 becomes smaller in comparison to a case where the temperature variation rate is equal to or greater than the value that is set in advance.

With regard to the method of calculating the correction value based on the temperature rise rate, and the method of correcting the flow rate of air that is supplied by anode air supply device 51 on the basis of the correction value may employ the same means as in the seventh example, and thus detailed description thereof will be omitted.

According to this configuration, for example, even in a case of installation in an area in which the raw material gas contains a large amount of gas such as nitrogen and carbon dioxide other than hydrocarbon, it is possible to realize a high-versatility fuel cell system in which it is not necessary to set parameters in advance or from an outer side, and it is possible to easily determine the amount of heat of the raw material gas from the temperature rise rate.

In addition, when the flow rate of the anode air is corrected on the basis of the determination result, the amount of hydrogen that is excessively consumed in the anode of fuel cell 50 is suppressed, and thus it is possible to realize a fuel cell system in which stable power generation is possible. In addition, when reducing the flow rate of the anode air by the amount of the component such as nitrogen and carbon dioxide other than hydrocarbon, the amount of hydrogen that is excessively consumed in fuel cell 50 is suppressed, and thus it is possible to realize a stable fuel cell system with high efficiency.

(First Modification)

Next, description will be given of a first modification in the eighth example.

This modification may employ the same configuration as in the eighth example illustrated in FIG. 28, and thus detailed description will be omitted. Next, description will be given of a characteristic operation in this modification.

Controller 39 performs control of correcting a correlation between the amount of the raw material gas that is supplied by raw material gas supply device 34, and the amount of air that is supplied by anode air supply device 51.

That is, the amount of the raw material gas that is supplied to hydrogen generation apparatus 200, a flow rate of the hydrogen-containing gas that is generated from the amount of the raw material gas supplied, and a flow rate of minute carbon monoxide that is contained in the hydrogen-containing gas have a predetermined correlation. Accordingly, the amount of the anode air supplied is set in advance with respect to the amount of the raw material gas supplied, and the flow rate of air that is supplied by anode air supply device 51 may be corrected by using a temperature variation rate of a temperature that is detected by reforming temperature detector 38 in a case where the raw material gas is combusted in combustor 35 to raise the temperature of reformer 31.

According to this configuration, after a predetermined flow rate of the anode air is set with respect to the amount of the raw material gas supplied, even in a case where a large amount of inert gas such as nitrogen is contained in the raw material gas, consumption of hydrogen due to excessive air is suppressed, and thus it is possible to realize a fuel cell system in which stable power generation is possible.

(Second Modification)

Next, description will be given of a second modification in the eighth example.

This modification can employ the same configuration as in the eighth example illustrated in FIG. 28, and thus detailed description thereof will be omitted. Next, description will be given of a characteristic operation in this modification.

Controller 39 performs control of correcting a correlation between the amount of power generation of fuel cell 50 and the amount of air that is supplied by anode air supply device 51. That is, the flow rate of the hydrogen-containing gas that is supplied to fuel cell 50, the flow rate of minute carbon dioxide that is contained in the hydrogen-containing gas, and the amount of power generation of fuel cell 50 have a predetermined correlation. The amount of the anode air supplied is set in advance with respect to the amount of power generation, and the flow rate of air, which is supplied by anode air supply device 51, may be corrected by using a temperature variation rate of the temperature detected by reforming temperature detector 38 in a case where the raw material gas is combusted in combustor 35 to raise the temperature of reformer 31.

According to this configuration, after a predetermined flow rate of anode air is set with respect to the amount of power generation, even in a case where a large amount of inert gas such as nitrogen is contained in the raw material gas, consumption of hydrogen due to excessive air is suppressed, and thus it is possible to realize a fuel cell system in which stable power generation is possible.

(Third Modification)

Next, description will be given of a third modification in the eighth example.

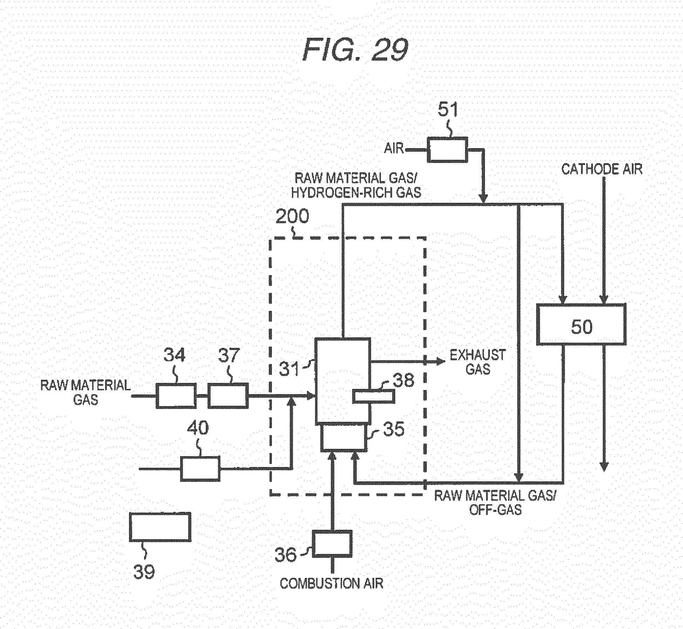

FIG. 29 is a view illustrating a configuration of a fuel cell system of a third modification in the eighth example of the invention.

The same reference numerals will be given to portions which are the same as or equivalent to those in the eighth example illustrated in FIG. 28, and detailed description thereof will be omitted.

In this modification, in addition to the configuration of the eighth example illustrated in FIG. 28, water supply device 40, which supplies water to reformer 31, is provided. Water is supplied to reformer 31 by using water supply device 40 in order for the water vapor reforming reaction (endothermic reaction) to progress, thereby generating a hydrogen-containing gas.

This modification example can be realized in combination of hydrogen generation apparatus 200 of the first modification in the seventh example illustrated in FIG. 24, and fuel cell 50.

According to this configuration, when the temperature detected by reforming temperature detector 38 reaches a predetermined temperature after supplying the raw material gas to reformer 31, water supply to reformer 31 is initiated, and then measurement of the amount of temperature variation, which is detected by reforming temperature detector 38, is performed. Accordingly, in a case where a composition of the raw material gas deviates from a composition that is assumed, a value of S/C that is actually supplied also deviates, and thus a more significant difference occurs in the amount of temperature variation. According to this, it is possible to more accurately detect a difference in the amount of heat of the raw material gas, and when a flow rate of the anode air is corrected, stable driving of the fuel cell system becomes possible.

(Fourth Modification)

Next, description will be given of a fourth modification in the eighth example.

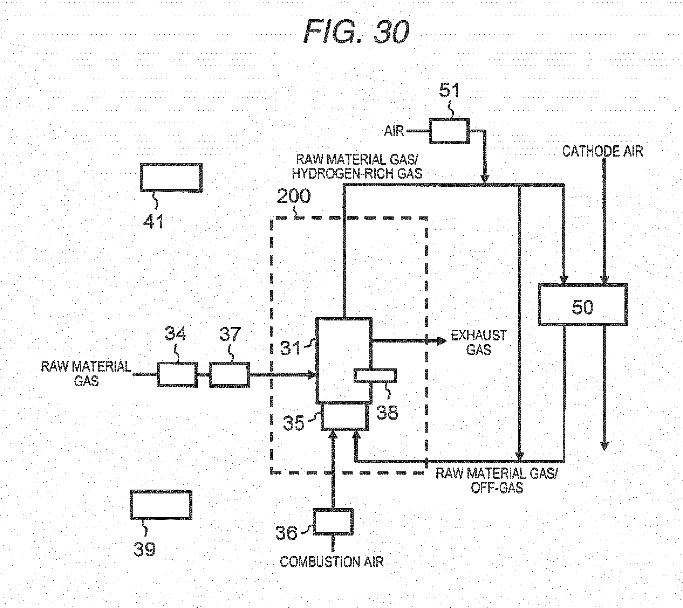

FIG. 30 is a view illustrating a configuration of a fuel cell system of a fourth modification in the eighth example.

The same reference numerals will be given to portions which are the same as or equivalent to those in the eighth example illustrated in FIG. 28, and detailed description thereof will be omitted.

In this modification, in addition to the configuration of the eighth example illustrated in FIG. 28, gas leakage detection unit 41, which detects whether or not leakage of the raw material gas occurs, is provided.

This modification can be realized in combination of hydrogen generation apparatus 200 of the second modification in the seventh example illustrated in FIG. 25, and fuel cell 50.

According to this configuration, in a case where the raw material gas is combusted in combustor 35 to raise the temperature of reformer 31, the temperature variation rate, which is detected by reforming temperature detector 38, is more accurately measured, and thus the flow rate of the anode air is more accurately corrected. Accordingly, it is possible to realize a fuel cell system in which stable driving is possible.

(Fifth Modification)

Next, description will be given of a fifth modification in the eighth example.

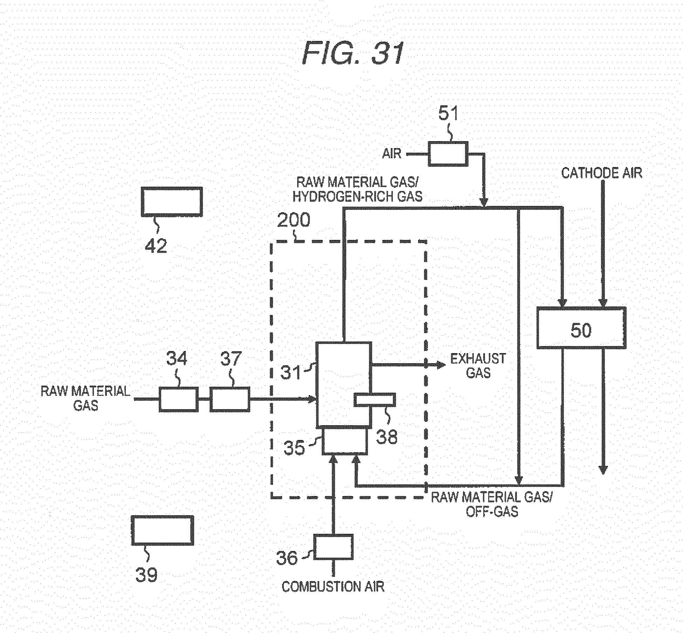

FIG. 31 is a view illustrating a configuration of a fuel cell system of a fifth modification in the eighth example.

The same reference numerals will be given to portions which are the same as or equivalent to those in the eighth example illustrated in FIG. 28, and detailed description thereof will be omitted.

In this modification, in addition to the configuration of the eighth example illustrated in FIG. 28, storage unit 42, which stores control parameters of hydrogen generation apparatus 200 which are based on the temperature variation rate, is provided, and controller 39 performs control of allowing the subsequent activation and driving to be performed on the basis of the control parameters that are stored in storage unit 42.

This modification can be realized in combination of hydrogen generation apparatus 200 of the third modification in the seventh example illustrated in FIG. 26, and fuel cell 50.

In addition, storage unit 42 may simultaneously store the control parameters of fuel cell 50. In addition, correction may be made for each activation of hydrogen generation apparatus 200 or a fuel cell system, and the correction value may be stored for each activation. In addition, the correction may be made at a predetermined timing, and the correction value may be stored at the timing.

According to this configuration, even when a fuel cell system is installed in an area in which a gas composition is different from a gas composition that is assumed, stable driving is easily possible in conformity to an actually supplied gas. In addition, even when a seasonal variation in a gas composition, a variation in gas quality over a long period of time, and the like occur, it is possible to stably drive the fuel cell system over a long period of time.

(Sixth Modification)

Next, description will be given of a sixth modification in the eighth example.

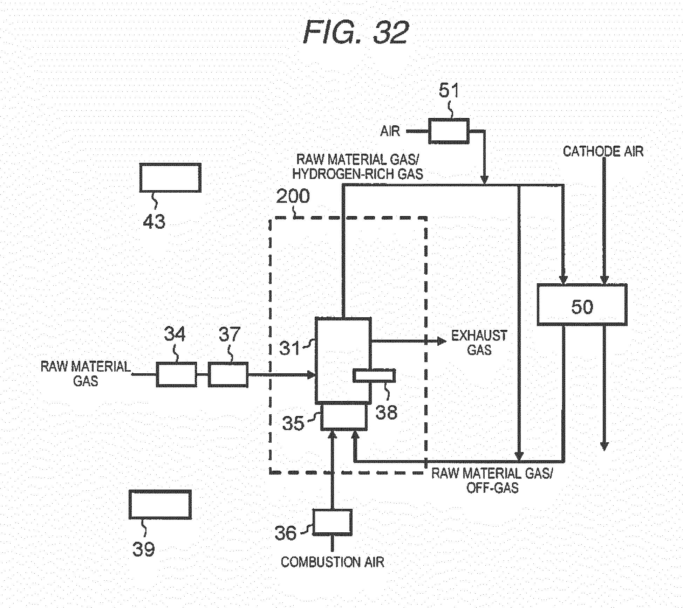

FIG. 32 is a view illustrating a configuration of a fuel cell system of a sixth modification in the eighth example.

The same reference numerals will be given to portions which are the same as or equivalent to those in the eighth example illustrated in FIG. 28, and detailed description thereof will be omitted.

In this modification, in addition to the configuration of the eighth example illustrated in FIG. 28, ambient temperature detector 43, which detects an ambient temperature of hydrogen generation apparatus 200, is provided, and controller 39 is configured to correct a value of the temperature variation rate on the basis of a temperature that is detected by ambient temperature detector 43. In addition, ambient temperature detector 43 may be configured to detect an ambient temperature of the fuel cell system including hydrogen generation apparatus 200.

This modification can be realized in combination of hydrogen generation apparatus 200 of the fourth modification in the seventh example illustrated in FIG. 27, and fuel cell 50.

According to this configuration, it is possible to more accurately calculate the temperature variation rate of reformer 31, which is caused by the amount of heat of the raw material gas, regardless of the ambient temperature, and it is possible to more accurately correct the flow rate of the anode air. Accordingly, it is possible to realize a fuel cell system in which stable driving is possible.

(Seventh Modification)

Next, description will be given of a seventh modification in the eighth example.

A configuration of this modification can be made to be the same as the configuration of the fuel cell system in the eighth example illustrated in FIG. 28, and thus detailed description thereof will be omitted.

Controller 39 corrects a value of the temperature variation rate on the basis of driving time of reformer 31. In addition, the correction may be made on the basis of driving time of hydrogen generation apparatus 200 including reformer 31, or the fuel cell system including hydrogen generation apparatus 200.

This modification can be realized in combination of hydrogen generation apparatus 200 of the fifth modification in the seventh example, and fuel cell 50.

According to this configuration, it is possible to more accurately calculate the temperature variation rate of reformer 31, which is caused by the amount of heat of the raw material gas, regardless of deterioration with the passage of the driving time, and the like, and it is possible to more accurately correct the flow rate of the anode air. Accordingly, it is possible to realize a fuel cell system in which stable driving is possible.

(Ninth example not part of the invention but facilitates understanding of the invention)

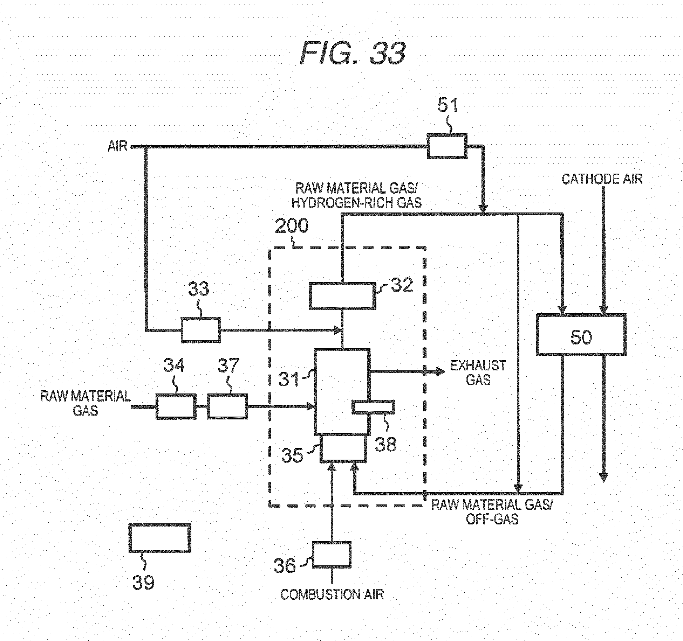

FIG. 33 is a view illustrating a configuration of a fuel cell system in the ninth example.

The same reference numerals will be given to portions which are the same as or equivalent to those in the eighth example illustrated in FIG. 28, and detailed description thereof will be omitted. In this modification, selective oxidizer 32 that reduces a concentration of carbon monoxide in the hydrogen-containing gas that is supplied from reformer 31, and selective oxidation air supply device 33 that supplies selective oxidation air to selective oxidizer 32 are provided. In addition, the anode air and the selective oxidation air are configured to be supplied from a common air source.

In this example, selective oxidation air supply device 33 and anode air supply device 51 are provided, and selective oxidation air supply device 33 and anode air supply device 51 are configured to supply air to selective oxidizer 32 and the anode of fuel cell 50, respectively. In addition, a flow rate may be controlled by a flowmeter and the like in each case, and for example, an orifice and the like may be formed in a flow path to distribute a flow rate.

As described above, all of the flow rate of the selective oxidation air and the flow rate of the anode air may be supplied in a predetermined relationship with the flow rate of the raw material gas or the amount of power generation in the fuel cell which is driven from the flow rate of the raw material gas. That is, as the flow rate of the raw material gas is greater, the flow rate of the selective oxidation air and the flow rate of the anode air may be set to increase. Since the air supply source is commonalized, the number of parts is reduced. Accordingly, control is easy, and cost reduction is possible.

Next, description will be given of a characteristic operation in this example.

In a case where a predetermined flow rate of raw material gas is combusted in combustor 35 to raise the temperature of reformer 31, controller 39 performs control of correcting the flow rate of air that is supplied by selective oxidation air supply device 33 and the flow rate of air that is supplied by anode air supply device 51 by using the temperature variation rate that is detected by reforming temperature detector 38.

According to this configuration, for example, even in a case of installation in an area in which the raw material gas contains a large amount of gas such as nitrogen and carbon dioxide other than hydrocarbon, it is possible to realize a high-versatility fuel cell system in which it is not necessary to set parameters in advance or from an outer side, and it is possible to easily determine the amount of heat of the raw material gas from the temperature rise rate.

In addition, the flow rate of air that is supplied to selective oxidizer 32, and a flow rate of air-bleed air that is supplied to the anode of fuel cell 50 are corrected on the basis of the determination result. Accordingly, the amount of hydrogen, which is excessively consumed in selective oxidizer 32 and the anode of fuel cell 50, is suppressed, and thus it is possible to realize a stable fuel cell system with high efficiency. In addition, it is possible to realize an inexpensive fuel cell system in which the number of parts is reduced.

In the fuel cell system, the hydrogen-containing gas, which is used as a fuel during power generation in the fuel cell, is not serviced by a typical raw material infrastructure gas. Accordingly, typically, the fuel cell system includes a hydrogen generation apparatus that includes the reformer.

In the reformer, the hydrogen-containing gas is generated from a city gas, a natural gas, or LPG, which is a typical raw material infrastructure gas, through the reforming reaction. For example, the water vapor reforming reaction is typically used.

In the water vapor reforming reaction, the city gas and the like, and water vapor, which become raw material, are allowed to react with each other at a high temperature of approximately 600°C to 700°C by using a noble metal-based reforming catalyst such as a Ni-based reforming catalyst and a Ru-based reforming catalyst. According to the reaction, a hydrogen-containing gas, which contains hydrogen as a main component, is generated.

It is necessary for water to be supplied in an amount appropriate for a composition of the raw material supplied so as to perform the water vapor reforming reaction in a stable and efficient manner. For example, in a reforming reaction in which methane ($CH_4$) or ethane ($C_2H_6$) is subjected to the water vapor reforming, and thus hydrogen and carbon dioxide are generated, theoretically, the amount of water, which is necessary for one mole of methane, is two moles. In addition, the amount of water, which is necessary for one mole of ethane, is four moles.

Typically, when the amount of water, which is supplied to the reformer, is deficient, a problem such as precipitation of carbon in the raw material supplied occurs. Accordingly, a water supply flow rate is set in such a manner that water is supplied to the reformer in an amount that is approximately 1.5 times the theoretical amount of water which is calculated from the flow rate of the raw material supplied so as to prevent the above-described problem. In addition, driving of the hydrogen generation apparatus is controlled so that the flow rate of water supplied becomes a desired value in accordance with the flow rate of the raw material supplied.

In addition, thermal energy, which is necessary for the water vapor reforming reaction in the reformer, is supplied to the reformer through combustion of the raw material in the combustor that is provided to the reformer. In a typical method, during activation, a gas, which passes through the hydrogen generation apparatus, is directly returned to the combustor for combustion, and during supply of the hydrogen-containing gas to the fuel cell, a raw material off-gas, which is discharged from the fuel cell, is combusted in the combustor.

It is necessary to supply the combustion air in an amount appropriate for the composition of the raw material so as to perform combustion of the raw material in the combustor in a stable manner. For example, in a combustion reaction in which a methane gas or an ethane gas is combusted in combination with oxygen, and water and carbon dioxide are generated, theoretically, the amount of oxygen, which is necessary for one mole of methane, is two moles. In addition, the amount of oxygen, which is necessary for one mole of ethane, is 3.5 moles.

Typically, when the amount of the combustion air that is supplied to the combustor is deficient, combustion failure occurs. Accordingly, the amount of the combustion air supplied is set in such a manner that the combustion air is supplied to the combustor in an amount that is approximately 1.5 times the theoretical amount of the combustion air which is calculated from the flow rate of the raw material supplied so as to prevent the above-described problem. In addition, driving of the hydrogen generation apparatus is controlled so that the amount of the combustion air supplied becomes a desired value in accordance with the flow rate of the raw material supplied.

However, in Europe such as Germany, during supply of an H gas with a high amount of heat generation that is set as a gas standard, and an L gas with a low amount of heat generation through pipelines, it may be difficult to know that the fuel cell system is installed in which area with an arbitrary gas composition.

When water is supplied to the reformer in an amount that is not appropriate for the composition of the raw material supplied, a difference occurs between a theoretical amount of water and an actual amount of water supplied, and thus there is a possibility that the amount of water that is necessary to be actually supplied may be greatly excessive or deficient in comparison to the theoretical amount of water.

For example, in a case where driving is performed by using a gas with a low amount of heat generation under the amount of water that is supplied on the assumption of a gas with a high amount of heat generation, the amount of water supplied is greater than the theoretical amount of water, and thus the reforming reaction rapidly progresses, but a large amount of energy is consumed due to water evaporation for the reforming reaction. Accordingly, energy efficiency in the generation of hydrogen decreases.

On the other hand, in a case where driving is performed by using a gas with high heat generation under the amount of water that is supplied on the assumption of a gas with low heat generation, the amount of water supplied is less than the theoretical amount of water, and thus carbonization due to thermal decomposition of the raw material that is supplied, or precipitation of carbon due to a disproportionation reaction of the reforming gas may occur. According to this, a pressure loss of the hydrogen generation apparatus increases, and clogging of a reforming gas flow path occurs. As a result, there is a concern that a decrease in hydrogen generation efficiency, or driving stoppage of the hydrogen generation apparatus may be caused.

In addition, in the combustor, in a case where driving is performed by using the gas with a high amount of heat generation under the amount of the combustion air that is set on the assumption of the gas with a low amount of heat generation, the amount of air is less than the theoretical amount of the combustion air. In this case, combustion failure may be caused.

For example, similar to PTL 3 and PTL 5, in the method of determining the composition of the raw material, even when the temperature of the reforming section or the temperature variation rate of the combustor are acquired a plurality of times in the same raw material composition, these values are not in accord sometimes due to an effect of an outside air temperature, and thus determination of the raw material composition may be incorrectly made. Accordingly, there is a concern that inadequate driving control parameters may be set.

The present inventors have extensively studied to set control parameters, which are appropriate for the raw material composition with higher accuracy in comparison to the related art, in the hydrogen generation apparatus and the fuel cell system. As a result, they have found the following finding.

With regard to the determination of the raw material composition, in the related art, the amount of heat generation is detected on the basis of driving that is performed once, for example, the temperature rise rate of the reforming section is measured. However, in this case, even when the temperature variation rate of the reforming section is acquired a plurality of times in the same raw material composition, the value is not in accord sometimes due to an effect of the outside air temperature, and thus determination of the raw material composition may be incorrectly made. Accordingly, there is a problem in that inadequate driving control parameters may be set.

Accordingly, the present inventors have conceived that when correction of the temperature rise rate due to the outside air temperature is made and a corrected temperature rise rate is used for setting, it is possible to set driving control parameters appropriate for the raw material composition with accuracy without being affected by the outside air temperature.

(Tenth example not part of the invention but facilitates understanding of the invention)

A hydrogen generation apparatus of this example includes a reformer that generates a hydrogen-containing gas through a reforming reaction, a reforming temperature rise rate detector that detects a temperature rise rate of the reformer, a heater that heats the reformer, a storage unit that stores a control parameter group, and a parameter setting function configured to set the control parameter group on the basis of the temperature rise rate that is detected by the reforming temperature rise rate detector, and a controller that includes a storage unit. In addition, the controller performs a heating operation of heating the reformer by using a predetermined control parameter group for determination, acquires the temperature rise rate, corrects the parameter setting function on the basis of an outside air temperature, refers to the parameter setting function after correction on the basis of the temperature rise rate, and performs control of allowing driving to be performed by using a control parameter group that is set by the parameter setting function after correction.

According to this, correction can be made with a correction value by a variation in the temperature rise rate due to the outside air temperature, and thus it is possible to set the control parameters without being affected by the variation in the temperature rise rate due to the outside air temperature. Accordingly, it is possible to set a driving control parameter group with accuracy.

In addition, for example, the driving control parameter group may be one or more control values among a flow rate of raw material, a flow rate of reforming water, and a flow rate of combustion air.

[Apparatus Configuration]

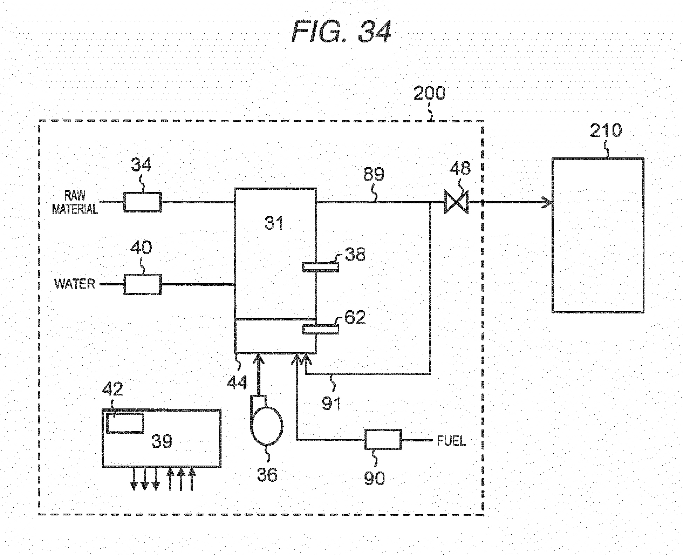

FIG. 34 is a block diagram illustrating an example of a schematic configuration of hydrogen generation apparatus 200 according to the tenth example.

In the example illustrated in FIG. 34, hydrogen generation apparatus 200 includes reformer 31, raw material gas supply device 34 that supplies raw material to reformer 31, water supply device 40 that supplies water to reformer 31, heater 44 that heats reformer 31, and combustion air supply device 36 that supplies air to heater 44. In addition, hydrogen generation apparatus 200 further includes flame rod 62 that detects a frame state of heater 44, reforming temperature detector 38 that detects a temperature of reformer 31, fuel supply device 90 that supplies a fuel to heater 44, and controller 39 that controls hydrogen generation apparatus 200.

In addition, in this example, description will be given of an example in which reforming temperature detector 38 is provided as the reforming temperature rise rate detector. For example, reforming temperature detector 38 is constituted by a thermocouple.

In addition, for example, heater 44 may be selected from a combustor, a heater, and a catalyst combustor. In this example, description will be given of an example in which the combustor is used as the heater.

Reformer 31 generates a hydrogen-containing gas by using raw material and water vapor through a reforming reaction. The raw material includes an organic compound that contains at least carbon and hydrogen as a constituent element, and specific examples of the raw material include hydrocarbon such as a natural gas, a city gas, LPG, and LNG, and alcohols such as methanol and ethanol.

The city gas represents a gas that is supplied to individual home from a gas company through pipelines. The reforming reaction may be an arbitrary reforming reaction as long as the hydrogen-containing gas is generated from the raw material and water vapor. Specific examples of the reforming reaction include a water vapor reforming reaction and an auto-thermal reaction. The hydrogen-containing gas that is generated in reformer 31 is supplied to hydrogen using apparatus 210 through hydrogen supply path 89.

Raw material gas supply device 34 supplies the raw material to reformer 31. For example, raw material gas supply device 34 is constituted by at least one of a pressure raising device and a flow rate adjusting valve.

Water supply device 40 supplies water to reformer 31. Water supply device 40 adjusts a flow rate of water, and is constituted by, for example, at least one of a pump and a flow rate adjusting valve.

Heater 44 heats reformer 31. As a fuel of heater 44, a hydrogen-containing gas, which is discharged from at least reformer 31, is used. The hydrogen-containing gas that is supplied to heater 44 may be directly supplied from reformer 31 to heater 44, or may pass through hydrogen using apparatus 210, and may be supplied to heater 44 after being discharged from hydrogen using apparatus 210. In heater 44, a fuel may be added to the hydrogen-containing gas from fuel supply device 90 for combustion.

Combustion air supply device 36 supplies combustion air to heater 44. For example, combustion air supply device 36 is constituted by at least one of a fan and a pump.

Controller 39 may be a control device capable of controlling the entirety or parts of hydrogen generation apparatus 200 as long as a control function is provided. For example, controller 39 includes a calculation processing unit (not illustrated) and storage unit 42 that stores a control program. Examples of the calculation processing unit include an MPU and a CPU. Examples of storage unit 42 include a memory.

Controller 39 stores a control parameter group, and a parameter setting function that sets the control parameter group on the basis of the temperature rise rate that is detected by the reforming temperature rise rate detector in storage unit 42.

Controller 39 performs a hating operation of heating reformer 31 by using a predetermined control parameter group for determination, detects the temperature rise rate by using reforming temperature detector 38 that is the reforming temperature rise rate detector, corrects the parameter setting function on the basis of an outside air temperature, refers to the parameter setting function after correction on the basis of the temperature rise rate, and performs control of allowing driving to be performed by using the control parameter group that is set by the parameter setting function after correction.

In addition, driving of hydrogen generation apparatus 200 is controlled on the basis of the driving control parameter group that is set by controller 39.

Controller 39 may be a single controller, or a plurality of controllers. That is, controller 39 may be constituted by a single controller that performs centralized control, or a plurality of controllers which perform decentralized control in cooperation with each other. This configuration is true of a controller of other example and exemplary embodiments to be described later.

[Operation of Hydrogen Generation Apparatus]

Next, description will be given of an operation of hydrogen generation apparatus 200 of the tenth example. In addition, the following operations are performed by controlling hydrogen generation apparatus 200 by controller 39.

When hydrogen generation apparatus 200 is activated, combustion in heater 44 is initiated. At this time, sealing device 48 is closed, but fuel supply path 91, which diverges from hydrogen supply path 89 and leads to heater 44, is in a gas ventilation state.

Accordingly, when raw material is supplied to reformer 31 due to initiation of an operation of raw material gas supply device 34, the raw material, which passes through reformer 31, is supplied to heater 44 by using fuel supply path 91. At the same time, combustion air is supplied to heater 44 due to initiation of an operation of combustion air supply device 36. In heater 44, an ignition operation is performed by an ignition electrode (not illustrated), and combustion of a fuel occurs by using the combustion air. As described above, reformer 31 is heated by combustion heat that is supplied from heater 44.

Then, water is supplied to reformer 31 due to initiation of an operation of water supply device 40. After initiation of water supply, in a stage in which a composition of the hydrogen-containing gas generated in reformer 31 becomes a composition appropriate for supply to hydrogen using apparatus 210, the sealing device 48 is opened, and thus the hydrogen-containing gas is supplied to hydrogen using apparatus 210.

In a case of stopping hydrogen generation apparatus 200, raw material gas supply device 34 and water supply device 40 are stopped.

[Method of Setting Driving Control Parameter]

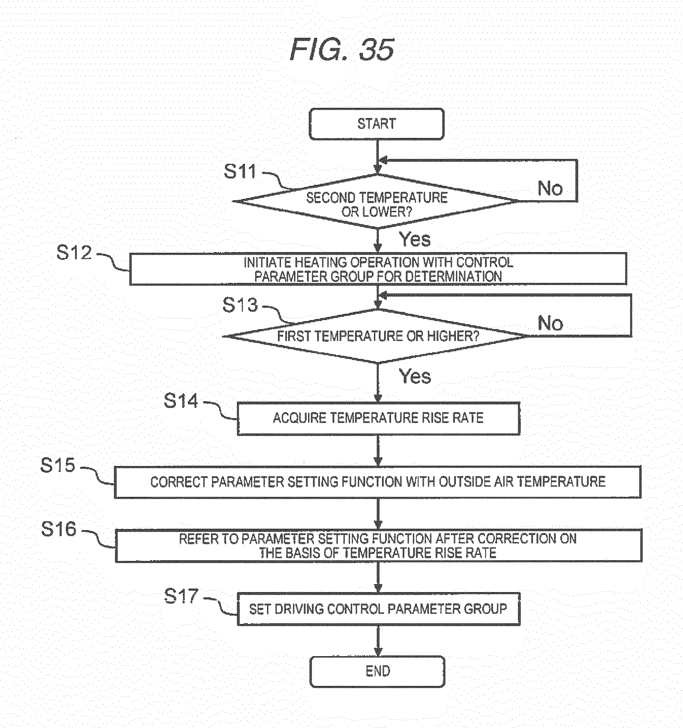

FIG. 35 is a flowchart illustrating an example of an operation of the hydrogen generation apparatus of the tenth example.

Setting of the driving control parameter is performed by controller 39 in accordance with operations in the flowchart of FIG. 35. First, it is determined whether or not a temperature detected by reforming temperature detector 38 is equal to or lower than a predetermined second temperature (S11). In addition, the second temperature may be set to, for example, 60°C.

In a case where the temperature detected by reforming temperature detector 38 is equal to or lower than the second temperature, a heating operation with the control parameter group for determination is initiated (S12), and controller 39 measures time taken for the temperature detected by reforming temperature detector 38 to rise from the second temperature to a first temperature higher than the predetermined second temperature (S13).

In addition, a temperature rise rate is calculated by dividing a difference between the first temperature and the second temperature by the time measured by controller 39, and the temperature rise rate that is calculated is stored in storage unit 42 (S14). In addition, the first temperature may be set to, for example, 350°C.

Since the temperature rise rate is acquired in a predetermined temperature range from the second temperature to the first temperature, a reformer temperature condition for acquisition of the temperature rise rate can be made to be constant. Accordingly, it is possible to exclude an effect on the temperature rise rate by a variation of the amount of heat dissipation, which occurs due to a difference in the reformer temperature condition during acquisition of the temperature rise rate, in the amount of heat dissipation that occurs due to a difference between the temperature of reformer 31 and the outside air temperature. As a result, it is possible to perform setting of the driving control parameter group with accuracy.

Next, correction is made to the parameter setting function by acquiring a correction value based on the outside air temperature (S15).

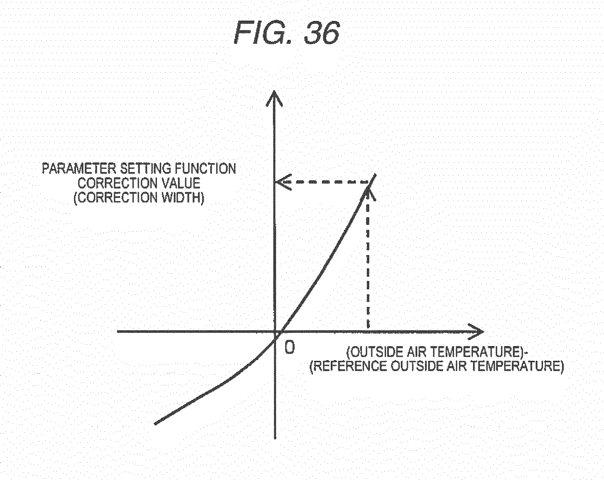

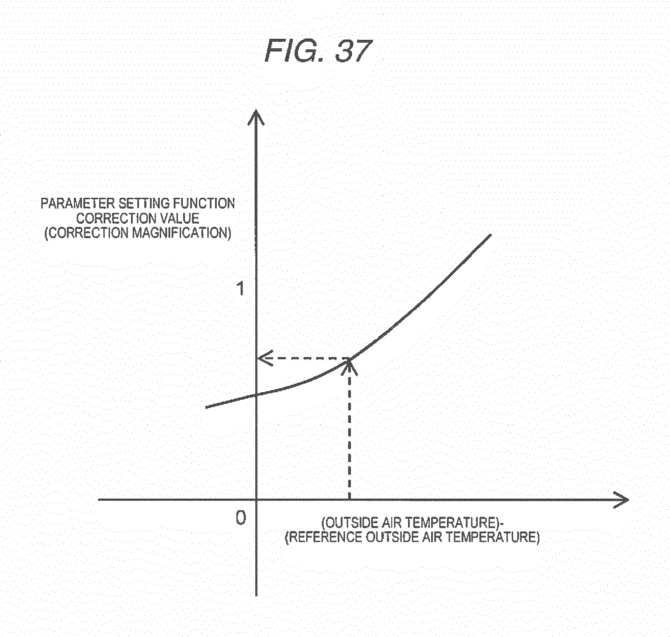

FIG. 36 is a view illustrating an example of a relationship between a difference between an outside air temperature and a reference outside air temperature, and a parameter setting function correction width in accordance with the difference in the tenth example. In addition, FIG. 37 illustrates an example of a relationship between the difference between the outside air temperature and the reference outside air temperature, and the parameter setting function correction magnification in accordance with the difference in the tenth example.

In FIG. 36, the horizontal axis represents a difference between the outside air temperature during acquisition of the temperature rise rate by using the control parameter group for determination, and the reference outside air temperature during acquisition of the parameter setting function that becomes a reference for correction. The vertical axis represents the parameter setting function correction value (correction width) that is given to correct the parameter setting function. FIG. 36 is a graph illustrating a correlation therebetween.

In FIG. 37, the vertical axis of FIG. 36 is set as the parameter setting function correction value (correction magnification). The correction value may be added to the parameter setting function as the correction width similar to FIG. 36, or may be integrated to the parameter setting function as the correction magnification similar to FIG. 37.

Correction is made by the correction value by a variation of the temperature rise rate due to the outside air temperature, and thus setting of the control parameter can be performed without being affected by the variation in the temperature rise rate due to the outside air temperature. Accordingly, it is possible to set the driving control parameter group with accuracy.

After the correction, the parameter setting function after correction is referred to on the basis of the temperature rise rate (S16), and driving is performed by using a driving control parameter group that is set by the parameter setting function after correction which is referred to (S17)

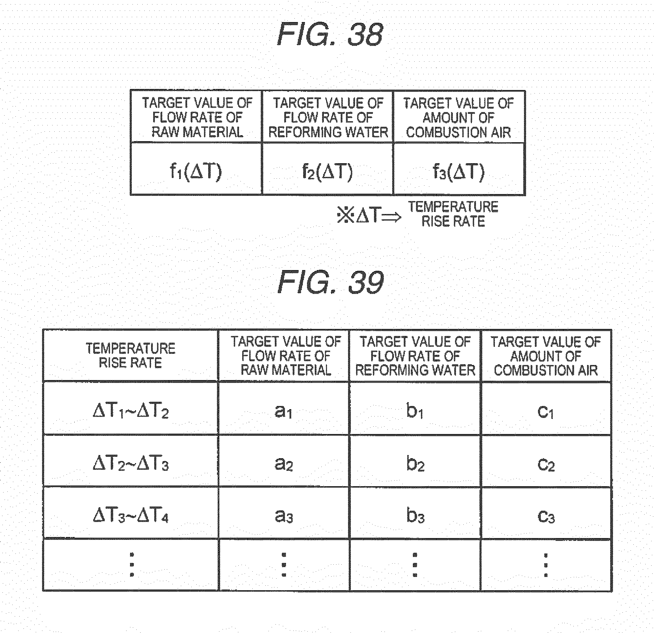

FIG. 38 is a view illustrating an example of a parameter setting function corresponding to each driving control parameter in the tenth example.

As illustrated in FIG. 38, the parameter setting function is stored in storage unit 42 as a continuous function of the temperature rise rate.

In FIG. 38, a target value of the flow rate of the raw material, a target value of the flow rate of the reforming water, and a target value of the amount of the combustion air are expressed as $f1(\Delta T)$, $f2(\Delta T)$, and $f3(\Delta T)$, respectively, as a continuous function of the temperature rise rate $\Delta T$. Since the parameter group is prepared as a continuous function, a parameter setting value becomes continuous with respect to the temperature rise rate, and thus more detailed parameter setting becomes possible. In addition, $f1(\Delta T)$, $f2(\Delta T)$, and $f3(\Delta T)$ may be changed in accordance with a target value of the amount of hydrogen generated.

FIG. 39 is a view illustrating an example of a relationship between the temperature rise rate and each driving control parameter in the tenth example.

As illustrated in FIG. 39, the driving control parameter group may be correlated with each temperature rise rate as a table.

FIG. 39 illustrates that the target value of the flow rate of the raw material, the target value of the flow rate of the reforming water, and the target value of the amount of the combustion air are set to which value in a case where the temperature rise rate, which is acquired with the control parameter for determination, enters in each temperature rise rate range. For example, when the temperature rise rate enters a range between $\Delta T1$ and $\Delta T2$, the target value of the flow rate of the raw material is given as a1, the target value of the flow rate of the reforming water is given as b1, and the target value of the amount of the combustion air is given as c1.

In this case, a1, b1, and c1 become a target of outside air temperature correction. In addition, a1, b1, and c1 may be changed in accordance with the target value of the amount of hydrogen generated.

As described above, since correction of the parameter setting function due to the outside air temperature is made, it is possible to exclude an effect of the variation in the temperature rise rate due to the outside air temperature, and thus it is possible to perform driving control parameter group setting with accuracy.

Here, description will be given of a method of detecting the outside air temperature. When reformer 31 is not heated by heater 44, a temperature drop rate, which is detected by reforming temperature detector 38, of reformer 31 is greatly affected by the amount of heat dissipation that occurs due to a difference between the temperature of reformer 31 and the outside air temperature.

According to this, when heating is not performed, the temperature drop rate of reformer 31 varies due to the outside air temperature. Accordingly, time, which is taken for the temperature detected by reforming temperature detector 38 to be lowered from a predetermined first temperature to a second temperature lower than the first temperature, may be acquired, and the outside air temperature may be estimated from a temperature drop rate that is obtained by dividing a difference between the first temperature and the second temperature by the time that is acquired.

In addition, as the temperature detected by reforming temperature detector 38, a temperature after passage of constant time from the predetermined first temperature may be detected, and the outside air temperature may be estimated from a temperature drop rate that is obtained by dividing the difference between the first temperature and the temperature after passage of the constant time by the constant time.

In addition, an operation of heating reformer 31 until the temperature detected by reforming temperature detector 38 reaches the first temperature may be performed before detecting the temperature drop rate.

In addition, as another method of detecting the outside air temperature, ambient temperature detector 43 may be disposed on an outer side of hydrogen generation apparatus 200 for detection.

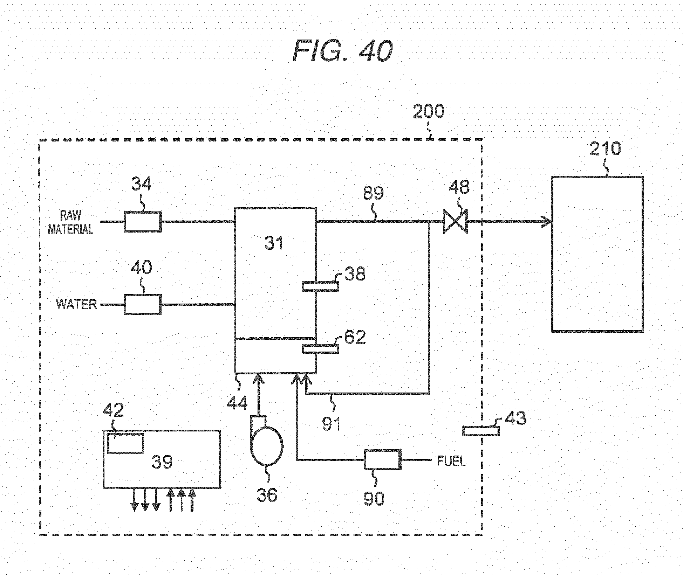

FIG. 40 is a view illustrating an example of a configuration in which ambient temperature detector 43 is mounted in the hydrogen generation apparatus of the tenth example.

The same reference numerals and terms will be given to constituent elements which are common in FIG. 40 and FIG. 34, and description thereof will be omitted. A difference from FIG. 34 is that ambient temperature detector 43 is provided on an outer side of hydrogen generation apparatus 200. According to this, it is possible to detect the outside air temperature. For example, ambient temperature detector 43 may be constituted by a thermistor.

In addition, the temperature that is detected by reforming temperature detector 38 may be a temperature of an arbitrary portion of reformer 31.

In addition, a difference between the outside air temperature during the subsequent setting and the outside air temperature during the previous setting is within a predetermined value, the parameter setting function correction step (S15) due to the outside air temperature in FIG. 35 may be omitted, and the driving control parameter group may be set with reference to the parameter setting function after correction during the previous setting.

According to this, the frequency of the correction due to the outside air temperature may be reduced, and thus it is possible to set the driving control parameter group with accuracy, and it is possible to shorten time necessary for setting by the correction step. Accordingly, it is possible to shorten activation time.

In addition, in an area in which the amount of an atmospheric temperature variation is small for a constant period, the temperature rise rate variation due to the outside air temperature decreases in the constant period. Accordingly, after performing the parameter setting function correction due to the outside air temperature, the parameter setting function correction step (S15) due to the outside air temperature may be omitted for a constant period, and the driving control parameter group may be set with reference to the parameter setting function after correction during the previous setting.

For example, the constant period may be set to three months. According to this, the frequency of the correction due to the outside air temperature may be reduced, and thus it is possible to set the driving control parameter group with accuracy, and it is possible to shorten time necessary for setting by the correction step. Accordingly, it is possible to shorten activation time.

In addition, in an area in which an atmospheric temperature variation is small, the temperature rise rate variation due to the outside air temperature decreases. Accordingly, after performing the parameter setting function correction due to the outside air temperature during trial driving, the parameter setting function correction step (S15) due to the outside air temperature may be omitted, and the driving control parameter group may be set with reference to the parameter setting function after correction during the previous setting.

According to this, the frequency of the correction due to the outside air temperature may be reduced, and thus it is possible to set the driving control parameter group with accuracy, and it is possible to shorten time necessary for setting by the correction step. Accordingly, it is possible to shorten activation time.

In addition, in an area in which a raw material composition is less likely to vary from the previous driving, activation may be performed on the basis of the driving control parameter group that is set during the previous driving. According to this, the frequency of setting of the driving control parameter group may be reduced, and thus it is possible to set the driving control parameter group with accuracy, and it is possible to shorten time necessary for setting. Accordingly, it is possible to shorten activation time.

In addition, activation may be performed on the basis of the driving control parameter group that is set during trial driving.

In addition, in the heating operation with the control parameter group for determination, the temperature rise rate is acquired. However, during the subsequent activation, the temperature rise rate may be acquired by using the driving control parameter group that is used for the previous driving. In this case, it is not necessary to store the control parameter group for determination. This operation does not depart from the scope of the invention.

(Eleventh example not part of the invention but facilitates understanding of the invention)

A block diagram, which illustrates a schematic configuration of a hydrogen generation apparatus according to this example, is the same as the block diagram of the tenth example illustrated in FIG. 34, and thus the same reference numerals and terms will be given, and description thereof will be omitted.

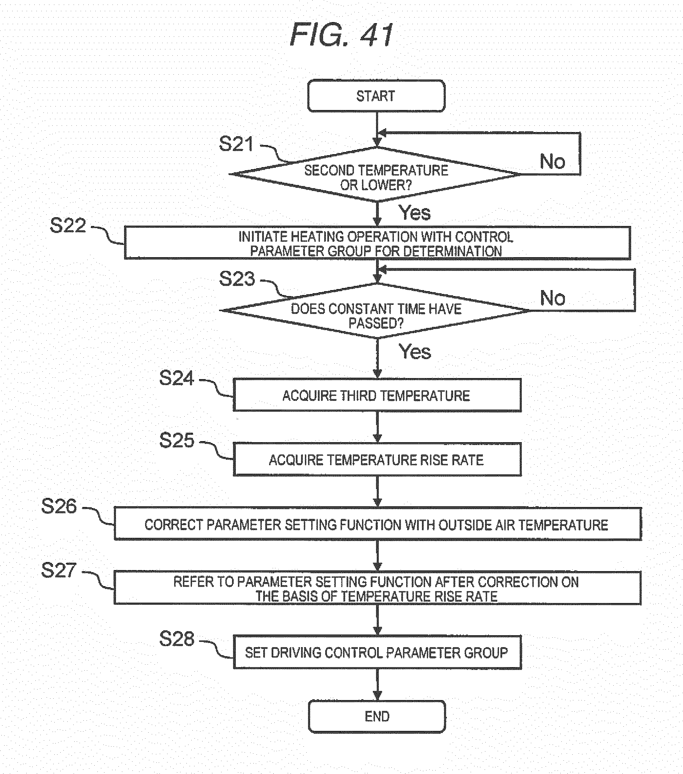

FIG. 41 is a flowchart illustrating an example of an operation of hydrogen generation apparatus 200 of the eleventh example.

In the eleventh example, the driving control parameter group setting is performed by controller 39 in accordance with a flowchart illustrated in FIG. 41.

A difference from the tenth example is that the temperature rise rate due to a temperature variation before and after the passage of a constant time is acquired during the heating operation by using the control parameter group for determination, and the other configurations are the same as those in the tenth example.

Description will be given of a method of setting the driving control parameter group with reference to FIG. 41. First, it is determined whether or not the temperature detected by reforming temperature detector 38 is equal to or lower than a predetermined second temperature (S21). In addition, for example, the second temperature may be set to 60°C.

In a case where the temperature detected by reforming temperature detector 38 is equal to or lower than the second temperature (YES in S21), the heating operation with the control parameter group for determination is initiated (S22), and a heating operation with a control parameter for determination is initiated.

Heating with the control parameter for determination is performed for predetermined time (S23), and a third temperature, which is a temperature detected by reforming temperature detector 38 after passage of constant time (YES in S23), is acquired (S24). A temperature rise rate relating to usage of the control parameter for determination is acquired by dividing a difference between the second temperature and the third temperature by the constant time (S25).

Next, with respect to the parameter setting function, a correction value is acquired on the basis of the outside air temperature, and correction is performed (S26). After the correction, the parameter setting function after correction is referred to on the basis of the temperature rise rate (S27), and driving is performed by using a driving control parameter group that is set by the parameter setting function after correction which is referred to (S28).

(Twelfth example not part of the invention but facilitates understanding of the invention)

A hydrogen generation apparatus of this example includes a reformer that generates a hydrogen-containing gas through a reforming reaction, a reforming temperature rise rate detector that detects a temperature rise rate of the reformer, a heater that heats the reformer, a storage unit that stores a control parameter group, and a parameter setting function configured to set the control parameter group on the basis of the temperature rise rate that is detected by a reforming temperature rise rate detector, and a controller that includes a storage unit.

The controller performs a heating operation of heating the reformer by using a predetermined control parameter group for determination, acquires the temperature rise rate, corrects the temperature rise rate on the basis of the outside air temperature, refers to a parameter setting function on the basis of the temperature rise rate after correction, and performs control of allowing driving to be performed by using a control parameter group that is set by the parameter setting function.

According to this, correction can be made with a correction value by a variation in the temperature rise rate due to the outside air temperature, and thus it is possible to set the control parameters without being affected by the variation in the temperature rise rate due to the outside air temperature. Accordingly, it is possible to set a driving control parameter group with accuracy.

A block diagram, which illustrates a schematic configuration of a hydrogen generation apparatus according to this example, is the same as the block diagram of the tenth example illustrated in FIG. 34, and thus the same reference numerals and terms will be given, and description thereof will be omitted.

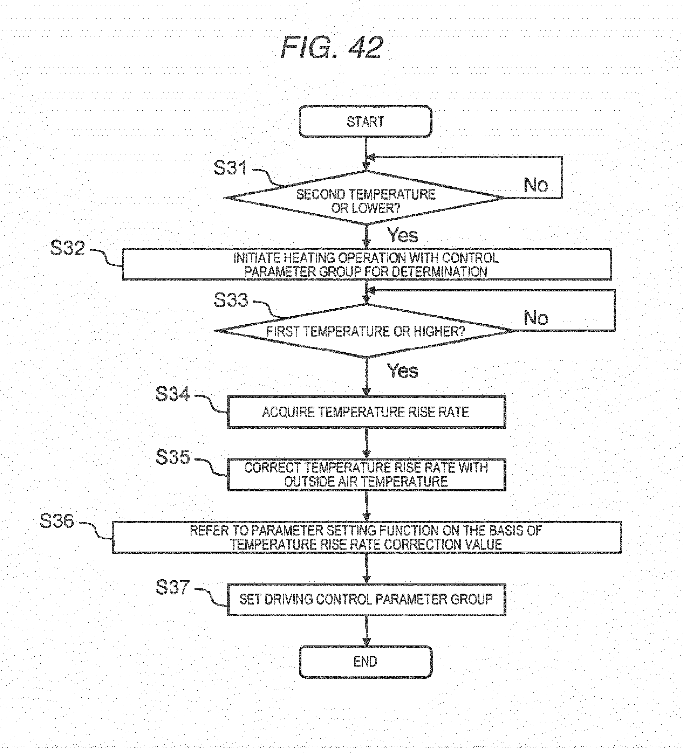

FIG. 42 is a flowchart illustrating an example of an operation of a hydrogen generation apparatus of the twelfth example.

In the twelfth example, setting of the driving control parameter group is performed by controller 39 in accordance with a flowchart illustrated in FIG. 42. A difference from the tenth example is that a target of correction due to the outside air temperature is set to the temperature rise rate that is acquired by the heating operation, and the other configurations are the same as those in the tenth example.

Description will be given of a method of setting the driving control parameter group with reference to FIG. 42. First, it is determined whether or not the temperature detected by reforming temperature detector 38 is equal to or lower than a predetermined second temperature (S31). In addition, for example, the second temperature may be set to 60°C.

In a case where the temperature detected by reforming temperature detector 38 is equal to or lower than the second temperature, the heating operation with the control parameter group for determination is initiated (S32), and controller 39 measures time taken for the temperature detected by reforming temperature detector 38 to rise from the second temperature to a predetermined first temperature (S33).

A temperature rise rate is calculated by dividing a difference between the first temperature and the second temperature by the time that is measured by controller 39, and the temperature rise rate that is calculated is stored in storage unit 42 (S34). In addition, for example, the first temperature may be set to 350°C.

Since the temperature rise rate is acquired in a predetermined temperature range from the second temperature to the first temperature, a reformer temperature condition for acquisition of the temperature rise rate can be made to be constant. Accordingly, it is possible to exclude an effect on the temperature rise rate by a variation of the amount of heat dissipation, which occurs due to a difference in the reformer temperature condition during acquisition of the temperature rise rate, in the amount of heat dissipation that occurs due to a difference between the temperature of reformer 31 and the outside air temperature. As a result, it is possible to perform setting of the driving control parameter with accuracy.

Next, correction is made to the temperature rise rate that is obtained by acquiring a correction value on the basis of the outside air temperature (S35).

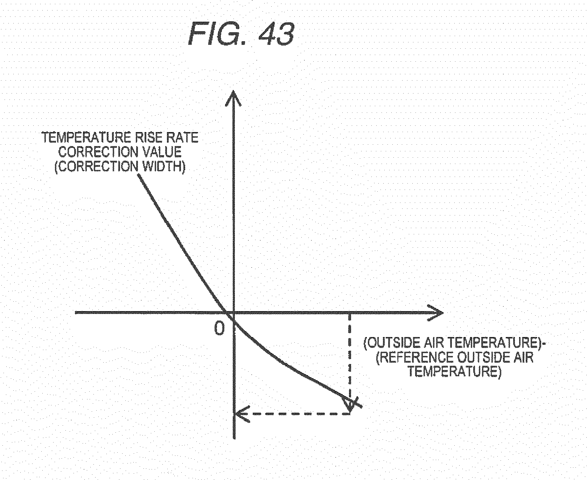

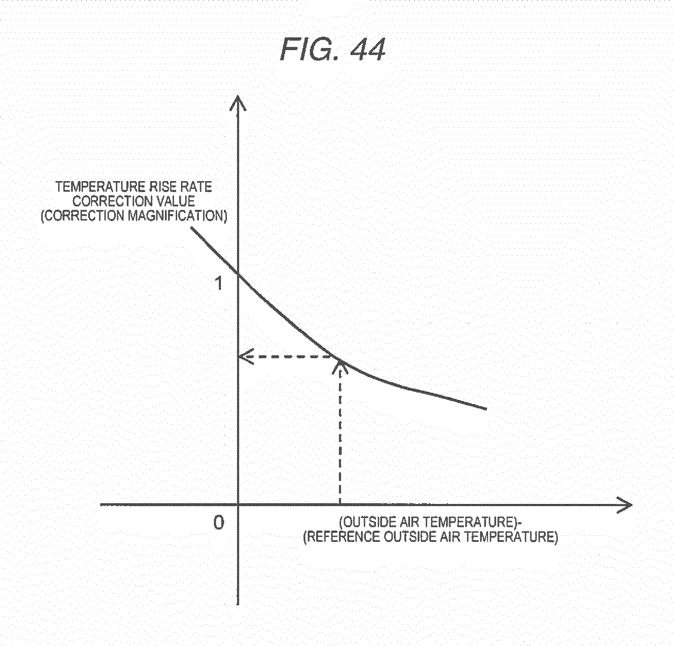

FIG. 43 is a view illustrating an example of a relationship between a difference between an outside air temperature and a reference outside air temperature, and a temperature rise rate correction width in accordance with the difference in the twelfth example. FIG. 44 is a view illustrating an example of a relationship between the difference between the outside air temperature and the reference outside air temperature, and a temperature rise rate correction magnification in accordance with the difference in the twelfth example.

In FIG. 43, the horizontal axis represents a difference between the outside air temperature during acquisition of the temperature rise rate by using the control parameter group for determination, and the reference outside air temperature during acquisition of the temperature rise rate that becomes a reference for correction. The vertical axis represents the temperature rise rate correction value (correction width) that is given to correct the temperature rise rate. FIG. 43 is a graph illustrating a correlation therebetween.

In FIG. 44, the vertical axis of FIG. 43 is set as the temperature rise rate correction value (correction magnification). FIG. 43 illustrates a case where the correction value is acquired as the correction width, and FIG. 44 illustrates a case where the correction value is acquired as the correction magnification.

The correction value may be added to the temperature rise rate as the correction width similar to FIG. 43, or may be integrated to the temperature rise rate as the correction magnification similar to FIG. 44. Correction is made by the correction value by a variation of the temperature rise rate due to the outside air temperature, and thus setting of the control parameter can be performed without being affected by the variation in the temperature rise rate due to the outside air temperature. Accordingly, it is possible to set the driving control parameter group with accuracy.

After the correction, the parameter setting function is referred to on the basis of the temperature rise rate that is corrected (S36), and driving is performed by using a driving control parameter group that is set by the parameter setting function that is referred to (S37).

As described above, since correction of the temperature rise rate due to the outside air temperature is made, it is possible to exclude an effect of the variation in the temperature rise rate due to the outside air temperature, and thus it is possible to perform setting of the driving control parameter group with accuracy.

Here, description will be given of a method of detecting the outside air temperature. When reformer 31 is not heated by heater 44, a temperature drop rate, which is detected by reforming temperature detector 38, of reformer 31 is greatly affected by the amount of heat dissipation that occurs due to a difference between the temperature of reformer 31 and the outside air temperature.

According to this, when heating is not performed, the temperature drop rate of reformer 31 varies due to the outside air temperature. Accordingly, time, which is taken for the temperature detected by reforming temperature detector 38 to be lowered from a predetermined first temperature to a second temperature lower than the first temperature, may be acquired, and the outside air temperature may be estimated from a temperature drop rate that is obtained by dividing a difference between the first temperature and the second temperature by the time that is acquired.

In addition, as the temperature detected by reforming temperature detector 38, a temperature after passage of predetermined time from the predetermined first temperature may be detected, and the outside air temperature may be estimated from a temperature drop rate that is obtained by dividing the difference between the first temperature and the temperature after passage of the predetermined time by the constant time.

In addition, an operation of heating the reformer until the temperature detected by reforming temperature detector 38 reaches the first temperature may be performed before detecting the temperature drop rate.

In addition, as another method of detecting the outside air temperature, ambient temperature detector 43 may be disposed on an outer side of hydrogen generation apparatus 200 for detection.

An example of a configuration, in which ambient temperature detector 43 is mounted in hydrogen generation apparatus 200 of the tenth example, is illustrated in FIG. 40, but this example has the same configuration as in the tenth example. In FIG. 40, ambient temperature detector 43 is provided on an outer side of hydrogen generation apparatus 200, and thus the outside air temperature can be detected. For example, ambient temperature detector 43 may be constituted by a thermistor.

In addition, the temperature that is detected by reforming temperature detector 38 may be a temperature of an arbitrary portion of reformer 31.

In addition, a difference between the outside air temperature during the subsequent setting and the outside air temperature during the previous setting is within a predetermined value, the temperature rise rate correction step (S35) due to the outside air temperature may be omitted, and the driving control parameter may be set by correcting the temperature rise rate with the correction width or the correction magnification which is used during the previous setting.

According to this, the frequency of the correction due to the outside air temperature may be reduced, and thus it is possible to set the driving control parameter group with accuracy, and it is possible to shorten time necessary for setting of the correction step. Accordingly, it is possible to shorten activation time.

In addition, in an area in which the amount of an atmospheric temperature variation is small for a constant period, the temperature rise rate variation due to the outside air temperature decreases in the constant period. Accordingly, after performing the temperature rise rate correction due to the outside air temperature, the temperature rise rate correction step (S35) due to the outside air temperature may be omitted for a constant period, and the driving control parameter group may be set by correcting the temperature rise rate with the correction width or the correction magnification which is used for the previous setting.

For example, the constant period may be set to three months. According to this, the frequency of the correction due to the outside air temperature may be reduced, and thus it is possible to set the driving control parameter group with accuracy, and it is possible to shorten time necessary for setting of the correction step. Accordingly, it is possible to shorten activation time.

In addition, in an area in which an atmospheric temperature variation is small, the temperature rise rate variation due to the outside air temperature decreases. Accordingly, after performing the temperature rise rate correction due to the outside air temperature during trial driving, the temperature rise rate correction step (S35) due to the outside air temperature may be omitted, and the driving control parameter group may be set by correcting the temperature rise rate with the correction width or the correction magnification which is used for the previous setting.

According to this, the frequency of the correction due to the outside air temperature may be reduced, and thus it is possible to set the driving control parameter group with accuracy, and it is possible to shorten time necessary for setting by the correction step. Accordingly, it is possible to shorten activation time.

In addition, in an area in which a raw material composition is less likely to vary from the previous driving, activation may be performed on the basis of the driving control parameter group that is set during the previous driving. According to this, the frequency of setting of the driving control parameter group may be reduced, and thus it is possible to set the driving control parameter group with accuracy, and it is possible to shorten time necessary for setting. Accordingly, it is possible to shorten activation time.

In addition, activation may be performed on the basis of the driving control parameter group that is set during trial driving.

In addition, in the heating operation with the control parameter group for determination, the temperature rise rate is acquired. However, during the subsequent activation, the temperature rise rate may be acquired by using the driving control parameter group that is used for the previous driving. In this case, it is not necessary to store the control parameter group for determination. This operation does not depart from the scope of this example and disclosure.

(Thirteenth example not part of the invention but facilitates understanding of the invention)

A block diagram, which illustrates a schematic configuration of a hydrogen generation apparatus according to this example, is the same as the block diagram of the tenth example illustrated in FIG. 34, and thus the same reference numerals and terms will be given, and description thereof will be omitted.

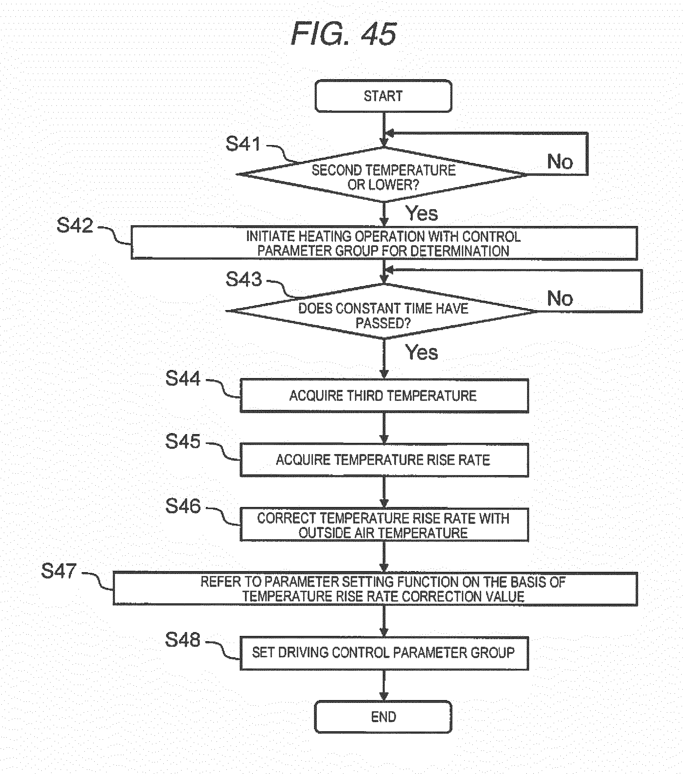

FIG. 45 is a flowchart illustrating an example of an operation of hydrogen generation apparatus 200 of the thirteenth example.

In the thirteenth example, the driving control parameter group setting is performed by controller 39 in accordance with a flowchart illustrated in FIG. 45.

A difference from the twelfth example is that the temperature rise rate due to a temperature variation before and after the passage of a constant time is acquired during the heating operation by using the control parameter group for determination, and the other configurations are the same as those in the twelfth example.

Description will be given of a method of setting the driving control parameter group with reference to FIG. 45. First, it is determined whether or not a temperature detected by reforming temperature detector 38 as an initial temperature is equal to or lower than a second temperature (S41). In a case where the temperature is equal to or lower than the second temperature (YES in S41), a heating operation by using the control parameter for determination is initiated (S42).

The heating by using the control parameter for determination is performed for a constant time (S43), and a third temperature that is a temperature detected by reforming temperature detector 38 is acquired (S44) after passage of the constant time (YES in S43). A temperature rise rate relating to usage of the control parameter for determination is acquired by dividing a difference between the second temperature and the first temperature by the constant time (S45).

Next, correction is made to the temperature rise rate by acquiring a correction value on the basis of the outside air temperature (S46). After the correction, the parameter setting function is referred to on the basis of the temperature rise rate that is corrected (S47), and driving is performed by using a driving control parameter group that is set by the parameter setting function that is referred to (S48).

As described above, since correction of the temperature rise rate due to the outside air temperature is made, it is possible to exclude an effect of the variation in the temperature rise rate due to the outside air temperature, and thus it is possible to perform setting of the driving control parameter group with accuracy.

(Ninth Exemplary Embodiment)

Next, description will be given of a ninth exemplary embodiment of the invention.

A hydrogen generation apparatus in this exemplary embodiment includes a reformer that generates a hydrogen-containing gas through a reforming reaction, a reforming temperature detector that measures a temperature of the reformer, a raw material supply device that supplies raw material to the reformer, a reforming water supply device that supplies reforming water to the reformer, a combustor that heats the reformer, a fuel supply device that supplies a fuel to the combustor, and an air supply device that supplies air to the combustor. In addition, the hydrogen generation apparatus includes a storage unit that stores a first control parameter group that corresponds to a gas composition with a high amount of heat generation, and a second control parameter group that corresponds to a gas composition with a low amount of heat generation, and a controller that performs a first heating operation of heating the reformer by using one control parameter group of the first control parameter group and the second control parameter group. In addition, the controller stops the heating of the reformer, and performs a second heating operation of heating the reformer by using the other control parameter group of the first control parameter group and the second control parameter group. Then, the controller performs control of allowing driving to be performed by using a control parameter group, with which a temperature rise rate close to a temperature rise rate set in advance is obtained, between a first temperature rise rate of the reformer when being heated by using the first control parameter group, and a second temperature rise rate of the reformer when being heated by using the second control parameter group. According to this configuration, it is possible to set a driving control parameter that is appropriate for a raw material composition with higher accuracy in comparison to the related art.

In addition, for example, the first control parameter group and the second control parameter group may be one or more control values among the flow rate of the raw material, the flow rate of the reforming water, the flow rate of the combustion air, and the flow rate of the selective oxidation air.

[Apparatus Configuration]

A block diagram, which illustrates a schematic configuration of the hydrogen generation apparatus according to the ninth exemplary embodiment of the invention, is the same as the block diagram of the tenth example illustrated in FIG. 34.

Hydrogen generation apparatus 200 according to the ninth exemplary embodiment includes raw material gas supply device 34, water supply device 40, reformer 31, heater 44, combustion air supply device 36, flame rod 62, reforming temperature detector 38, fuel supply device 90, and controller 39.

Reformer 31 generates a hydrogen-containing gas by using raw material and water vapor through a reforming reaction. The raw material includes an organic compound that contains at least carbon and hydrogen as a constituent element, and specific examples of the raw material include hydrocarbon such as a natural gas, a city gas, LPG, and LNG, and alcohols such as methanol and ethanol.

The city gas represents a gas that is supplied to individual home from a gas company through pipelines. The reforming reaction may be an arbitrary reforming reaction as long as the hydrogen-containing gas is generated from the raw material and water vapor in the reaction. Specific examples of the reforming reaction include a water vapor reforming reaction and an auto-thermal reaction.

The hydrogen-containing gas that is generated in reformer 31 is supplied to hydrogen using apparatus 210 through hydrogen supply path 89.

Raw material gas supply device 34 supplies the raw material to reformer 31. For example, raw material gas supply device 34 is constituted by at least one of a pressure raising device and a flow rate adjusting valve.

Water supply device 40 supplies water to reformer 31. Water supply device 40 adjusts a flow rate of water, and is constituted by, for example, at least one of a pump and a flow rate adjusting valve.

Heater 44 heats reformer 31. As a fuel of heater 44, a hydrogen-containing gas, which is discharged from at least reformer 31, is used. The hydrogen-containing gas that is supplied to heater 44 may be directly supplied from reformer 31 to heater 44, or may pass through hydrogen using apparatus 210, and may be supplied to heater 44 after being discharged from hydrogen using apparatus 210. In heater 44, a fuel may be added to the hydrogen-containing gas from fuel supply device 90 for combustion.

Combustion air supply device 36 supplies combustion air to heater 44. For example, combustion air supply device 36 is constituted by at least any one of a fan and a pump.

Controller 39 may be a control device capable of controlling the entirety or parts of hydrogen generation apparatus 200 as long as a control function is provided. For example, controller 39 includes a calculation processing unit (not illustrated) and storage unit 42 that stores a control program. Examples of the calculation processing unit include an MPU and a CPU. Examples of storage unit 42 include a memory.

Storage unit 42 stores the first control parameter group that corresponds to the gas composition with a high amount of heat generation, and the second control parameter group that corresponds to the gas composition with a low amount of heat generation.

Controller 39 performs control of allowing driving to be performed by using a control parameter group, with which a temperature rise rate close to a temperature rise rate set in advance is obtained, between the first temperature rise rate of reformer 31 when being heated by using the first control parameter group, and the second temperature rise rate of reformer 31 when being heated by using the second control parameter group.

In addition, controller 39 controls driving of hydrogen generation apparatus 200 on the basis of a target value that is set.

Controller 39 may be a single controller, or a plurality of controllers. That is, controller 39 may be constituted by a single controller that performs centralized control, or a plurality of controllers which perform decentralized control in cooperation with each other. This configuration is true of a controller of other exemplary examples and embodiments.

[Operation of Hydrogen Generation Apparatus]

Next, description will be given of an operation of hydrogen generation apparatus 200 of the ninth exemplary embodiment. In addition, the following operations are performed by controlling hydrogen generation apparatus 200 by controller 39.

When hydrogen generation apparatus 200 is activated, combustion in heater 44 is initiated. At this time, sealing device 48 is closed, but fuel supply path 91 for combustion, which diverges from hydrogen supply path 89 and leads to heater 44, is in a gas ventilation state.

Accordingly, when a raw material gas is supplied to reformer 31 due to initiation of an operation of raw material gas supply device 34, the raw material gas, which passes through reformer 31, is supplied to heater 44 by using fuel supply path 91 for combustion. At the same time, combustion air is supplied to heater 44 due to initiation of an operation of combustion air supply device 36.

In heater 44, an ignition operation is performed by an ignition electrode (not illustrated), and combustion of a fuel occurs by using the combustion air. As described above, reformer 31 is heated by combustion heat that is supplied from heater 44.

Then, water is supplied to reformer 31 due to initiation of an operation of water supply device 40. After initiation of water supply, in a stage in which a composition of the hydrogen-containing gas generated in reformer 31 becomes a composition appropriate for supply to hydrogen using apparatus 210, sealing device 48 is opened, and thus the hydrogen-containing gas is supplied to hydrogen using apparatus 210.

In a case of stopping hydrogen generation apparatus 200, raw material gas supply device 34 and water supply device 40 are stopped.

[Method of Setting Driving Control Parameter]

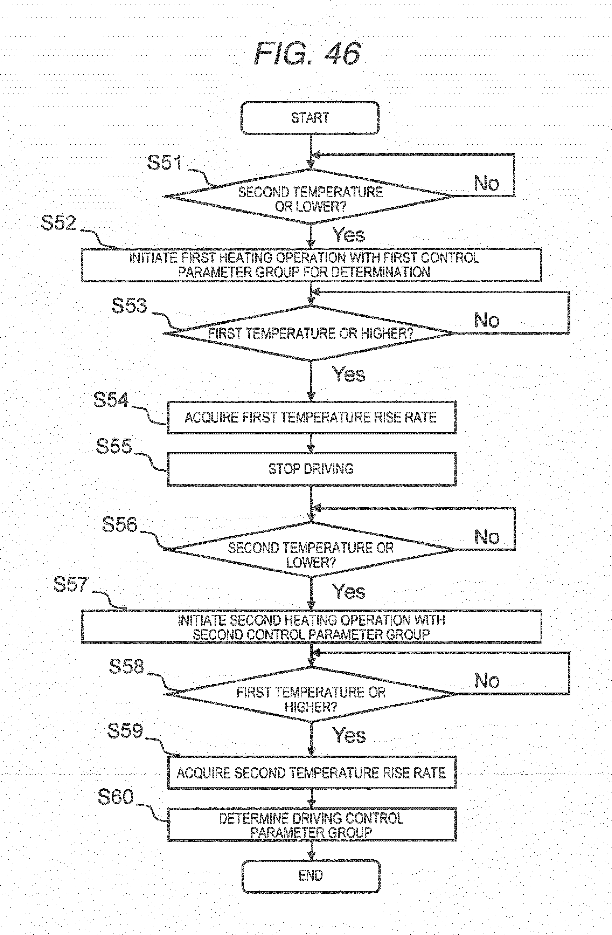

FIG. 46 is a flowchart illustrating an example of an operation of hydrogen generation apparatus 200 of the ninth exemplary embodiment of the invention.

The method of setting of the driving control parameter is executed by controller 39 in accordance with operations in the flowchart of FIG. 46. The operations of the flowchart in FIG. 46 will be described with reference to a case where heating with the first control parameter group on the assumption of a gas with a high amount of heat generation is performed before heating with the second control parameter group on the assumption of a gas with a low amount of heat generation.

A first temperature in the flowchart may be set to an arbitrary temperature that is lower than a carbon precipitation temperature condition so as to suppress carbonization due to thermal decomposition of the raw material supplied, or carbon precipitation due to a disproportionation reaction of the reforming gas which occurs in a case where the amount of water supplied to the reformer is less than the theoretical amount of water. For example, the first temperature may be set to 350°C.

A second temperature may be set to an arbitrary temperature that is lower than the first temperature, and may be set to, for example, 60°C.

First, in a case where a temperature of the reformer which is detected by reforming temperature detector 38 is equal to or lower than the second temperature (YES in S51), the first heating operation is performed by using the first control parameter group on the assumption of the gas with a high amount of heat generation (S52) to raise the temperature to the first temperature (S53).

In addition, for example, reforming temperature detector 38 may be constituted by a thermocouple.

Here, controller 39 measures time taken for the temperature of the reformer to rise from the second temperature to the first temperature. Controller 39 calculates a temperature rise rate from the time that is measured (S54), and stores the temperature rise rate that is calculated in storage unit 42 as a first temperature rise rate. In addition, after the reformer is heated until the temperature of the reformer reaches the first temperature through a first heating operation and the first heating operation is stopped (S55), the subsequent heating operation is not initiated until the temperature of the reformer reaches a temperature equal to or lower than the second temperature (S56).

After the temperature of the reformer is lowered to the second temperature (YES in S56), a second heating operation is initiated by using the second control parameter group on the assumption of a gas with a low amount of heat generation (S57). After heating the reformer through the second heating operation until the temperature of the reformer reaches the first temperature (YES in S58), controller 39 performs the same operation as in acquisition of the first temperature rise rate, acquires a temperature rise rate obtained through the second heating operation as a second temperature rise rate, and stores the temperature rise rate in storage unit 42 (S59).

After acquiring the first temperature rise rate and the second temperature rise rate through the above-described operations, controller 39 obtains a difference between the first and second temperature rise rates and a predetermined temperature rise rate, respectively, and performs control of allowing a control parameter, which corresponds to a temperature rise rate in which an absolute value of the difference is smaller, to be used for driving (S60). According to this, it is possible to set driving control parameters which are appropriate for a raw material composition with accuracy.

In addition, setting of the driving control parameters by controller 39 may be performed during driving stoppage after completion of the second heating operation, or may be performed while continuously performing the heating operation even after acquisition of the second temperature rise rate.

In addition, description has been given with reference to an example in which the operation with the first control parameter group is performed before the operation with the second control parameter group, but the operation with the second control parameter group may be performed before the operation with the first control parameter group.

In addition, assumption is made for a case where when the first temperature rise rate and the second temperature rise rate are compared with the temperature rise rate that is set in advance, and assumption is made for a case where a difference between the first temperature rise rate and the temperature rise rate that is set in advance and a difference between the second temperature rise rate and the temperature rise rate that is set in advance are approximately equal to each other. In this case, controller 39 may be configured to perform control of allowing driving to be performed by using a third control parameter group that is an intermediate control value between the first control parameter group corresponding to the gas composition with a high amount of heat generation and the second control parameter group corresponding to the gas composition with a low amount of heat generation.

(Fourteenth example not part of the invention but facilitates understanding of the invention)

Hydrogen generation apparatus 200 of this example has the same configuration as in hydrogen generation apparatus 200 of the tenth example illustrated in FIG. 40 in that ambient temperature detector 43 is provided for measurement of an outside temperature, and the predetermined temperature rise rate described in the ninth exemplary embodiment is changed in accordance with the outside temperature detected by ambient temperature detector 43.

According to this configuration, even in a case where the temperature rise rate of the reforming section during the heating operation varies due to an effect of the outside temperature, erroneous determination of the raw material composition is prevented, and thus it is possible to set the driving control parameters which are appropriate for the raw material composition with accuracy. The other configurations may be the same as those in the ninth exemplary embodiment. For example, ambient temperature detector 43 is constituted by a thermistor.

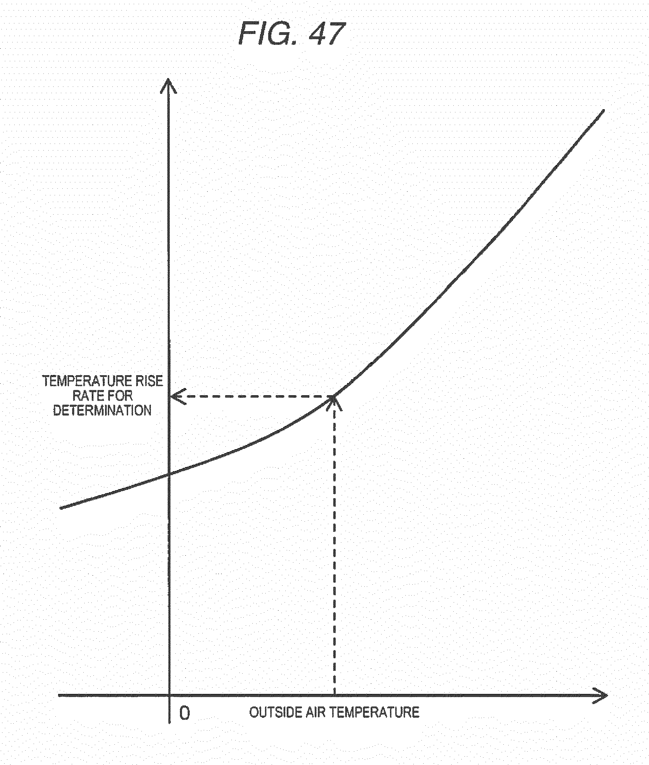

FIG. 47 is a view illustrating a method of determining a predetermined temperature rise rate with respect to an outside temperature variation in the fourteenth example.

Specifically, predetermined temperature rise rate data corresponding to an outside temperature illustrated in FIG. 47 is retained in storage unit 42, and controller 39 sets a predetermined temperature rise rate on the basis of a temperature detected by ambient temperature detector 43. According to this configuration, in a case where the outside temperature is low, the predetermined temperature rise rate is set to a low value, and in a case where the outside temperature is high, the predetermined temperature rise rate is set to a high value. According to this, even in a case where the temperature rise rate of the reforming section during the heating operation varies due to an effect of the outside temperature, it is possible to set the driving control parameters which are appropriate for the raw material composition with accuracy.

(Tenth Exemplary Embodiment)

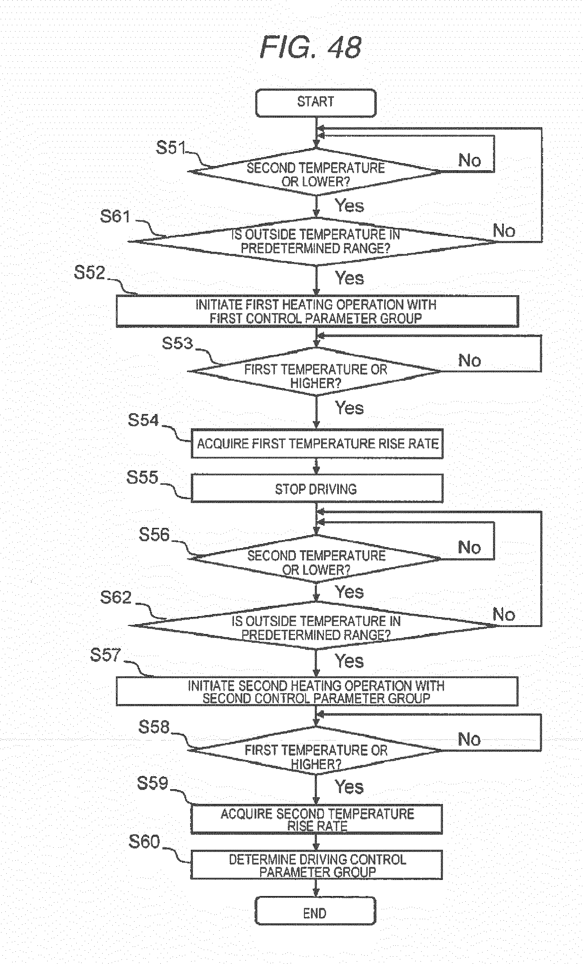

FIG. 48 is a flowchart illustrating an example of an operation of a hydrogen generation apparatus of a tenth exemplary embodiment of the invention.

In this exemplary embodiment, in the apparatus configuration of FIG. 40, the setting of the driving control parameters by controller 39 is performed in accordance with operations in a flowchart illustrated in FIG. 48, and in a case where the outside temperature is in a predetermined temperature range, control is performed to allow the first heating operation and the second heating operation to be performed.

The other operations may be the same as those in the ninth exemplary embodiment. According to this configuration, it is possible to exclude an effect of the outside temperature on the temperature rise rate of the reforming section, and thus it is possible to set the driving control parameters which are appropriate for the raw material composition with accuracy.

With regard to a method of setting the driving control parameters, description will be given to the operations of the flowchart in FIG. 48 with reference to an example in which an operation with a parameter group on the assumption of a gas with a high amount of heat generation is performed before an operation with a parameter group on the assumption of a gas with a low amount of heat generation. Description with the same expression as in the ninth exemplary embodiment has the same meaning as in the ninth exemplary embodiment, and description thereof will be omitted.

First, in a case where the temperature of the reformer is equal to or lower than the second temperature (YES in S51), controller 39 determines whether or not the outside temperature detected by ambient temperature detector 43 is in a predetermined temperature range (S61). In addition, the predetermined temperature range may be a normally fixed value, or may be changed in accordance with current time information.

In a case where the outside temperature is in the predetermined temperature range (YES in S61), the first heating operation is initiated by using the parameter group on the assumption of the gas with a high amount of heat generation (S52), and a temperature is raised to the first temperature (S53). Here, controller 39 measures time taken for the temperature of the reformer to rise from the second temperature to the first temperature, calculates a temperature rise rate from the time, and stores the temperature rise rate that is calculated in storage unit 42 as the first temperature rise rate (S54).

After reformer 31 is heated until the temperature of the reformer reaches the first temperature through the first heating operation and the first heating operation is stopped (S55), the temperature of the reformer is lowered until reaching a temperature equal to or lower than the second temperature (S56).

After the temperature of the reformer is lowered to the temperature equal to or lower than the second temperature (YES in S56), controller 39 determines whether or not the outside temperature detected by ambient temperature detector 43 is in the predetermined temperature range (S62), and in a case where the outside temperature is in the predetermined temperature range (YES in S62), the second heating operation is initiated by using the parameter group on the assumption of the gas with a low amount of heat generation (S57).

After heating the reformer through the second heating operation until the temperature of the reformer reaches the first temperature (S58), controller 39 performs the same operation as in acquisition of the first temperature rise rate, acquires a temperature rise rate obtained through the second heating operation as a second temperature rise rate, and stores the temperature rise rate in storage unit 42 (S59).

After acquiring the first temperature rise rate and the second temperature rise rate through the above-described operations, controller 39 obtains a difference between the first and second temperature rise rates and a predetermined temperature rise rate, respectively, and performs control of allowing a temperature rise rate, in which an absolute value of the difference is smaller, to be used for driving. According to this, it is possible to exclude an effect of the outside temperature on the temperature rise rate of the reforming section, and thus it is possible to set the driving control parameters which are appropriate for the raw material composition with accuracy (S60).

In addition, setting of the driving control parameters by controller 39 may be performed during driving stoppage after completion of the second heating operation, or may be performed while continuously performing the heating operation even after acquisition of the second temperature rise rate.

In addition, the predetermined temperature rise temperature may be changed in accordance with the outside temperature in the same manner as in the fourteenth example.

(Eleventh Exemplary Embodiment)

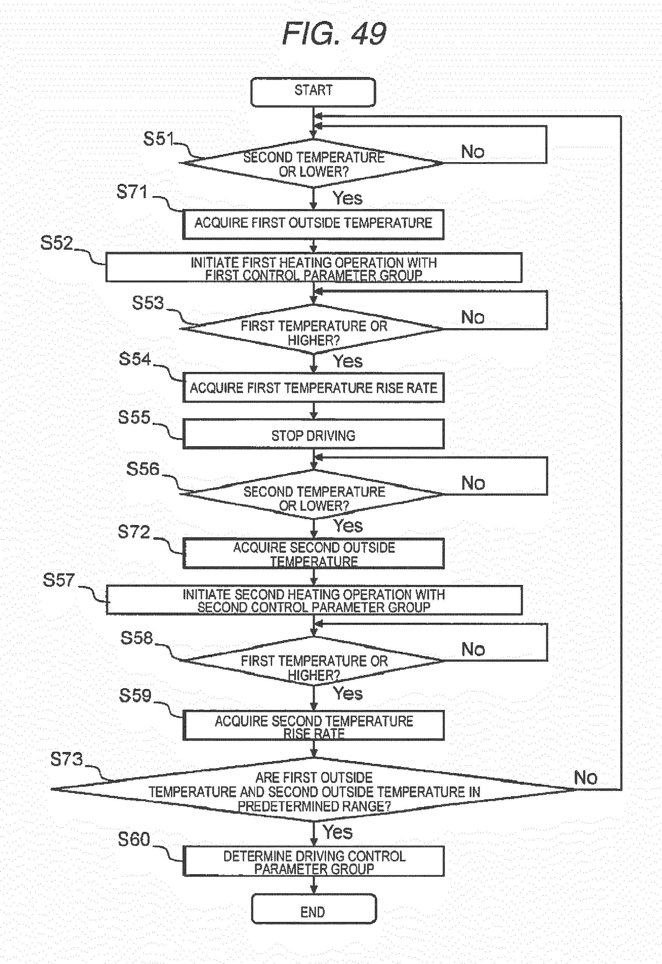

FIG. 49 is a flowchart illustrating an example of an operation of a hydrogen generation apparatus of a eleventh exemplary embodiment of the invention.

In this exemplary embodiment, in the apparatus configuration of FIG. 40, the setting of the driving control parameters by controller 39 is performed in accordance with operations in a flowchart illustrated in FIG. 49, and in a case where the outside temperature is in a predetermined temperature range, control is performed to allow the first heating operation and the second heating operation to be performed.

The other operations may be the same as those in the ninth exemplary embodiment. According to this configuration, it is possible to exclude an effect of the outside temperature on the temperature rise rate of the reforming section, and thus it is possible to set the driving control parameters which are appropriate for the raw material composition.

With regard to a method of setting the driving control parameters, description will be given to the operations of the flowchart in FIG. 49 with reference to an example in which an operation with a parameter group on the assumption of a gas with a high amount of heat generation is performed before an operation with a parameter group on the assumption of a gas with a low amount of heat generation.

Description with the same expression as in the ninth exemplary embodiment has the same meaning as in the ninth exemplary embodiment, and description thereof will be omitted.

First, in a case where the temperature of the reformer is equal to or lower than the second temperature (YES in S51), controller 39 acquires an outside temperature by ambient temperature detector 43 before a reformer heating operation, and retains the outside temperature in storage unit 42 as a first outside temperature (S71). Then, the first heating operation is performed with the first control parameter group on the assumption of the gas with a high amount of heat generation (S52), and a temperature is raised to the first temperature (S53).

Here, controller 39 measures time taken for the temperature of the reformer to rise from the second temperature to the first temperature, calculates a temperature rise rate from the time that is measured, and stores the temperature rise rate that is calculated in storage unit 42 as a first temperature rise rate (S54).

After reformer 31 is heated until the temperature of the reformer reaches the first temperature through the first heating operation and the first heating operation is stopped (S55), the subsequent heating operation is not initiated until the temperature of the reformer reaches the second temperature (S56).

After the temperature of the reformer is lowered to the second temperature (YES in S56), controller 39 allows ambient temperature detector 43 to acquire an outside temperature before the reformer heating operation, and retains the outside temperature in storage unit 42 as a second outside temperature (S72). Then, the second heating operation is initiated by using the second control parameter group on the assumption of the gas with a low amount of heat generation (S57).

After heating the reformer 31 through the second heating operation until the temperature of the reformer reaches the first temperature (YES in S58), controller 39 performs the same operation as in acquisition of the first temperature rise rate, acquires a temperature rise rate obtained through the second heating operation as a second temperature rise rate, and stores the temperature rise rate in storage unit 42 (S59).

After acquiring the first temperature rise rate and the second temperature rise rate through the above-described operations, controller 39 determines whether or not the first outside temperature and the second outside temperature are in a predetermined temperature range (S73). In a case where the temperature rise rates are in the predetermined temperature range (YES in S73), controller 39 obtains a difference between the first and second temperature rise rates and a predetermined temperature rise rate, respectively, and performs control of allowing a temperature rise rate in which an absolute value of the difference is smaller, to be used for driving (S60). In addition, in a case where any one of the temperature rise rates is out of the predetermined temperature range (NO in S73), the progress returns to start again.

In addition, the predetermined temperature range may be a fixed value, or may be changed in accordance with current time information.

In addition, setting of the driving control parameters by controller 39 may be performed during driving stoppage after completion of the second heating operation, or may be performed while continuously performing the heating operation even after acquisition of the second temperature rise rate.

In addition, description has been given with reference to an example in which the operation with the first control parameter group is performed before the operation with the second control parameter group, but the operation with the second control parameter group may be performed before the operation with the first control parameter group.

In addition, the predetermined temperature rise temperature may be changed in accordance with the outside temperature in the same manner as in the fourteenth example.

(Twelfth Exemplary Embodiment)

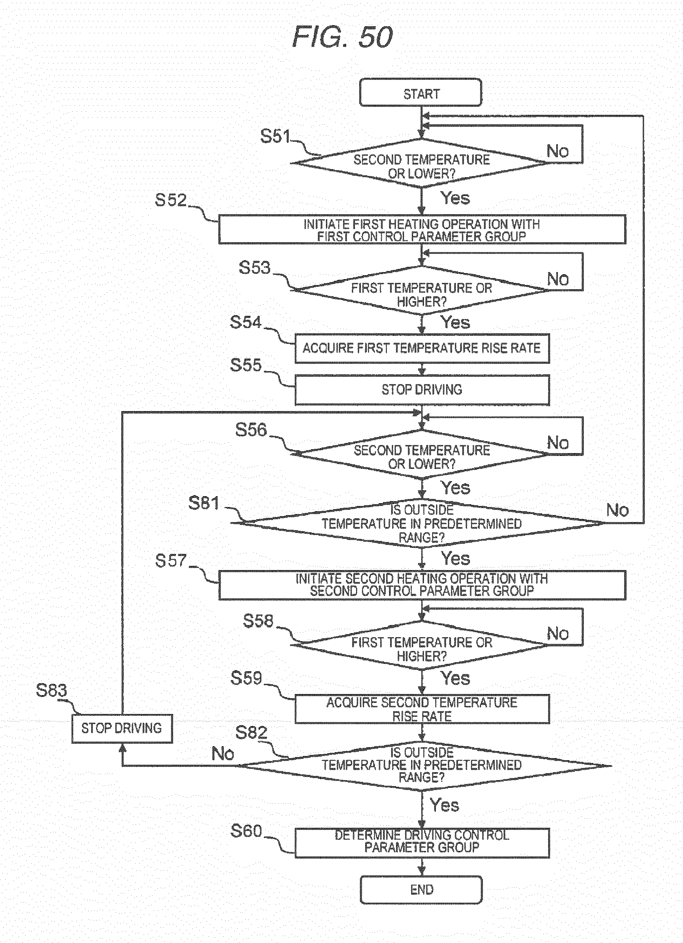

FIG. 50 is a flowchart illustrating an example of an operation of a hydrogen generation apparatus of a twelfth exemplary embodiment of the invention.

In this exemplary embodiment, in the apparatus configuration of FIG. 40, the setting of the driving control parameters by controller 39 is performed in accordance with operations in a flowchart illustrated in FIG. 50. Control is performed as follows. The first heating operation is repeated until the outside temperature during driving is in the predetermined temperature range, and when the outside temperature is in the predetermined temperature range, the second heating operation is subsequently initiated. Similarly, the second heating operation is repeated until the outside temperature during driving is in the predetermined temperature range.

The other operations may be the same as those in the ninth exemplary embodiment. According to this configuration, it is possible to exclude an effect of the outside temperature on the temperature rise rate of the reforming section, and thus it is possible to set the driving control parameters which are appropriate for the raw material composition with accuracy.

With regard to a method of setting the driving control parameters, description will be given to the operations of the flowchart in FIG. 50 with reference to an example in which an operation with a parameter group on the assumption of a gas with a high amount of heat generation is performed before an operation with a parameter group on the assumption of a gas with a low amount of heat generation. Description with the same expression as in the ninth exemplary embodiment has the same meaning as in the ninth exemplary embodiment, and description thereof will be omitted.

In a case where the temperature of the reformer is equal to or lower than the second temperature (YES in S51), the first heating operation with the first control parameter group on the assumption of a gas with a high amount of heat generation is performed (S52), and a temperature is raised to the first temperature (S53). Here, controller 39 measures time taken for the temperature of the reformer to rise from the second temperature to the first temperature, calculates a temperature rise rate from the time, and stores the temperature rise rate that is calculated in storage unit 42 as the first temperature rise rate (S54).

After reformer 31 is heated until the temperature of the reformer reaches the first temperature through the first heating operation and the first heating operation is stopped (S55), the subsequent heating operation is not initiated until reaching the second temperature (NO in S56).

After the temperature of the reformer is lowered to the second temperature (YES in S56), controller 39 allows ambient temperature detector 43 to acquire the outside temperature, and determines whether or not the outside temperature is in a predetermined temperature range (S81).

In a case where the outside temperature is out of the predetermined temperature range (NO in S81), the first heating operation is initiated again. In a case where the outside temperature is in the predetermined temperature range (YES in S81), controller 39 initiates the second heating operation by using the second control parameter group on the assumption of the gas with a low amount of heat generation (S57). After heating reformer 31 through the second heating operation until the temperature of the reformer reaches the first temperature (YES in S58), controller 39 performs the same operation as in acquisition of the first temperature rise rate, acquires a temperature rise rate obtained through the second heating operation as a second temperature rise rate, and stores the temperature rise rate in storage unit 42 (S59).

Then, controller 39 allows ambient temperature detector 43 to acquire the outside temperature, and determines whether or not the outside temperature is in a predetermined temperature range (S82). In a case where the outside temperature is out of the temperature range (NO in S82), controller 39 stops the heating (S83), lowers the temperature of the reformer to the second temperature, and performs the second heating operation again. In a case where the outside temperature is in the temperature range (YES in S82), controller 39 obtains a difference between the first and second temperature rise rates and a predetermined temperature rise rate, respectively, and performs control of allowing a temperature rise rate, in which an absolute value of the difference is smaller, to be used for driving (S60).

According to this, it is possible to exclude an effect of the outside temperature on the temperature rise rate of the reforming section, and thus it is possible to set the driving control parameters which are appropriate for the raw material composition with accuracy.

In addition, the predetermined temperature range may be a fixed value, or may be changed in accordance with current time information.

In addition, setting of the driving control parameters by controller 39 may be performed during driving stoppage after completion of the second heating operation, or may be performed while continuously performing the heating operation even after acquisition of the second temperature rise rate.

In addition, description has been given with reference to an example in which the operation with the first control parameter group is performed before the operation with the second control parameter group, but the operation with the second control parameter group may be performed before the operation with the first control parameter group.

In addition, the predetermined temperature rise temperature may be changed in accordance with the outside temperature in the same manner as in the fourteenth example.

(Fifteenth example not part of the invention but facilitates understanding of the invention)

The hydrogen-containing gas, which is used as a fuel during power generation in the fuel cell, is not serviced by a typical raw material infrastructure gas. Accordingly, typically, the fuel cell system includes a hydrogen generation apparatus that includes the reformer.

In the reformer, the hydrogen-containing gas is generated from a city gas, a natural gas, or LPG, which is a typical raw material infrastructure gas, through the reforming reaction. For example, the water vapor reforming reaction is typically used.

In the water vapor reforming reaction, the city gas and the like, and water vapor, which become raw material, are allowed to react with each other at a high temperature of approximately 600°C to 700°C by using a noble metal-based reforming catalyst such as a Ni-based reforming catalyst and a Ru-based reforming catalyst. According to the reaction, a hydrogen-containing gas, which contains hydrogen as a main component, is generated.

At this time, it is necessary for water to be supplied in an amount appropriate for a composition of the raw material supplied so as to perform the water vapor reforming reaction in a stable and efficient manner. For example, in a reforming reaction in which a methane ($CH_4$) gas or an ethane ($C_2H_6$) gas is subjected to the water vapor reforming, and thus hydrogen and carbon dioxide are generated, theoretically, the amount of water, which is necessary for one mole of methane, is two moles.

In addition, the amount of water, which is necessary for one mole of ethane, is four moles. Typically, when the amount of water, which is supplied to the reformer, is deficient, a problem such as precipitation of carbon in the raw material that is supplied occurs. Accordingly, a water supply flow rate is set in such a manner that water is supplied to the reformer in an amount that is approximately 1.5 times the theoretical amount of water which is calculated from the flow rate of the raw material supplied so as to prevent the above-described problem. In addition, driving of the hydrogen generation apparatus is controlled so that the flow rate of water supplied becomes a desired value in accordance with the flow rate of the raw material supplied.

In addition, thermal energy, which is necessary for the water vapor reforming reaction in the reformer, is supplied to the reformer through combustion of the raw material in the combustor that is provided to the reformer. In a typical method, during activation, a gas, which passes through the hydrogen generation apparatus, is directly returned to the combustor for combustion, and during supply of the hydrogen-containing gas to the fuel cell, a combustion off-gas, which is discharged from the fuel cell, is combusted in the combustor.

It is necessary to supply the combustion air in an amount appropriate for the composition of the raw material so as to perform combustion of the raw material in the combustor in a stable manner. For example, in a combustion reaction in which a methane gas or an ethane gas is combusted in combination with oxygen, and water and carbon dioxide are generated, theoretically, the amount of oxygen, which is necessary for one mole of methane, is two moles. In addition, the amount of oxygen, which is necessary for one mole of ethane, is 3.5 moles.

Typically, when the amount of the combustion air that is supplied to the combustor is deficient, combustion failure occurs. Accordingly, the amount of the combustion air, which is supplied to the combustor, is set in such a manner that the combustion air is supplied to the combustor in an amount that is approximately 1.5 times to 2.0 times the theoretical amount of the combustion air which is calculated from the flow rate of the raw material supplied so as to prevent the above-described problem. In addition, driving of the hydrogen generation apparatus is controlled so that the amount of the combustion air supplied becomes a desired value in accordance with the flow rate of the raw material supplied.

However, a composition of raw material that is supplied to the reformer may vary depending on a configuration of the raw material infrastructure. For example, in a city gas that is supplied from an existing infrastructure, even when a main composition is the same, a difference in a composition exists depending on a supply source (specifically, a gas company). Accordingly, when changing the supply source, the composition of the raw material, which is supplied to the reformer, varies. In addition, among standards which are determined, even in the same supply source, the composition of the raw material may vary in some cases.

In a case where the composition of the raw material that is supplied varies, if water is supplied to the reformer in a water supply flow rate that is set in accordance with a raw material supply flow rate before composition variation, a difference occurs between a theoretical amount of water after composition variation and an actual amount of water supplied, and thus there is a possibility that the amount of water that is necessary to be actually supplied may be greatly excessive or deficient in comparison to the theoretical amount of water.

For example, in a case where the amount of water supplied is greater than the theoretical amount of water after composition variation, the reforming reaction rapidly progresses, but a large amount of energy is consumed due to water evaporation for the reforming reaction. Accordingly, energy efficiency in the generation of hydrogen decreases.

On the other hand, in a case where the amount of water supplied is less than the theoretical amount of water after composition variation, carbonization due to thermal decomposition of the raw material that is supplied, or precipitation of carbon due to a disproportionation reaction of the reforming gas may occur. According to this, a pressure loss of the hydrogen generation apparatus increases, and clogging of a reforming gas flow path occurs. As a result, there is a concern that a decrease in hydrogen generation efficiency, or driving stoppage of the hydrogen generation apparatus may be caused.

In addition, in a case where the composition of the raw material supplied varies, driving continues in the amount of the combustion air which is set in accordance with the raw material supply flow rate before composition variation, a difference occurs between a theoretical amount of the combustion air after composition variation, and an actual amount of the combustion air supplied, and thus there is a possibility that the amount of the combustion air that is necessary to be actually supplied may be greatly excessive or deficient in comparison to the theoretical amount of the combustion air. In this case, there is a concern that combustion failure may be caused.

For example, in the fuel cell of PTL 6, as a unit that sets a control parameter for changing the flow rate of the raw material gas, and the flow rate of the reforming water so as to obtain a reforming gas in which a concentration of hydrogen is high, an area server is provided for each area in addition to a center server. The fuel cell is connected to the area server through a telephone line, the Internet, wireless connection, and the like. According to this, in a case where a communication error such as line disconnection occurs, the gas composition is not updated for a period until the communication is recovered. Accordingly, in a case where changing of the gas composition is performed in the period, driving of the fuel cell becomes unstable.

Specifically, it is difficult to supply an appropriate amount of reforming water, and thus carbon precipitation occurs. In addition, it is difficult to control the flow rate of the combustion air in an appropriate manner, and thus there is a concern that combustion destabilization due to deficient air or excessive air may be caused.

(Basic Finding)

The present inventors have made a thorough investigation on a method capable of more reliably performing setting of control parameters of the fuel cell system in accordance with the gas composition. As a result, they obtained the following findings.

That is, the present inventors have conceived that when changing a ratio of the amount of air that is supplied to the combustor to the amount of the raw material that is supplied to the combustor in a state in which at least any one of the raw material and the hydrogen-containing gas is combusted, it is possible to use a phenomenon in which a degree of variation of a combustion state is different depending on a composition of the raw material.

That is, in a state in which driving is performed with control parameters with which an air ratio is appropriately controlled during combustion of a raw material gas with a high amount of heat, during combustion in a case where the raw material gas is changed to a raw material gas with a low amount of heat, the air ratio excessively increases.

At this time, since the combustion state becomes unstable, a concentration of carbon monoxide included in a combustion exhaust gas becomes higher than a commonly permissible concentration due to incomplete combustion. In addition, a combustion reaction is stopped due to cooling-down of the combustor and flame which is caused by the excessive air ratio.

It is considered that this state can be detected with a combustion state detector, that is, a carbon monoxide detector or a flame detector such as a flame rod and a thermocouple which is arranged at the rear end of the combustor.

For example, assumption is made for a case where the amount of the raw material that is supplied to the reformer with respect to the amount of power generation in the fuel cell system is optimized for raw material composed of 100% methane. At this time, with respect to one mole of methane, oxygen necessary for complete combustion is two moles, and typically, the amount of air supplied is controlled so that oxygen can be supplied to the combustor in an amount 1.5 times to 2.0 times the amount necessary for the complete combustion.

Specifically, the amount of air supplied is controlled to 14 to 19 L/min so that the air ratio when the amount of the raw material supplied is 1 L/min becomes 1.5 to 2.0.

Next, assumption is made for a case where the raw material has a composition of a mixture composed of 90% methane and 10% nitrogen in a state in which the amount of air supplied is the same. When the amount of the raw material supplied is 1 L/min, methane in the raw material is 0.9 L/min, and when the amount of air supplied is 14 to 19 L/min, the air ratio is 1.6 to 2.2.

In a case where the air ratio is higher than a typically set range, the combustion state becomes unstable, and thus the concentration of carbon monoxide in the combustion exhaust gas increases. In addition, when the amount of air supplied additionally increases, it enters a combustion unstable state in which extinction of a flame occurs. When increasing the ratio of the amount of air supplied to the amount of the raw material supplied by operating any one of the amount of air supplied or the amount of the raw material supplied, stability of the combustion state is different between a case where the amount of the heat of the raw material gas is high, and the amount of heat of the raw material gas is low. According to this, the concentration of carbon monoxide in the combustion exhaust gas becomes lower in a raw material gas with a high amount of heat in comparison to a raw material gas with a low amount of heat.

According to this configuration, in a case where a control device reads out the concentration of carbon monoxide in the combustion exhaust gas when increasing the ratio of the amount of air supplied to the amount of the raw material supplied in a state in which at least any one of the raw material and the hydrogen-containing gas is combusted in the combustor, and the control device controls a supply flow of the raw material to the reformer with respect to the amount of power generation of a corresponding fuel cell, it is possible to more reliably perform setting of the control parameters in accordance with the raw material composition in comparison to a fuel cell system of the related art.

[Configuration of Hydrogen Generation Apparatus]

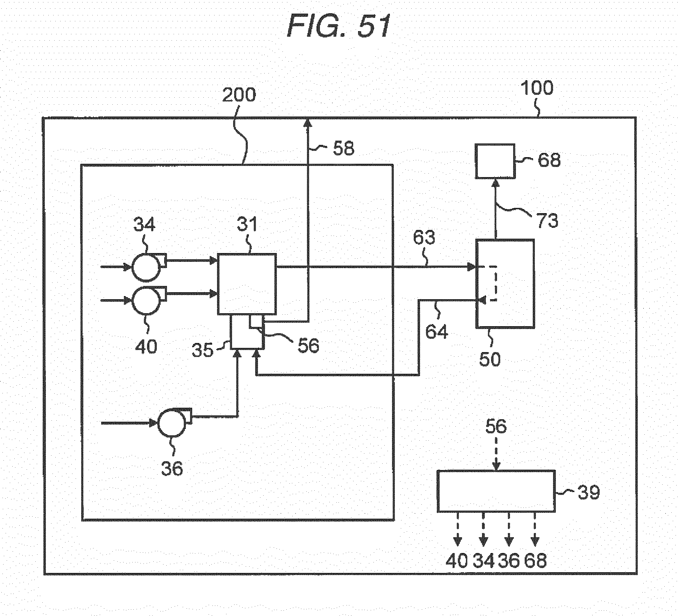

FIG. 51 is a schematic view illustrating an example of a schematic configuration of fuel cell system 100 of a fifteenth example.

In an example illustrated in FIG. 51, fuel cell system 100 of this example includes hydrogen generation apparatus 200, fuel cell 50, reformer 31, combustor 35, water supply device 40, raw material gas supply device 34, combustion air supply device 36, combustion state detector 56, combustion exhaust gas path 58, controller 39, anode hydrogen supply path 63, anode hydrogen exhaust path 64, power converter 68, and stack current 73.

Reformer 31 is configured to generate a hydrogen-containing gas by using raw material and water vapor through a reforming reaction. Specifically, in a reforming catalyst (not illustrated) in reformer 31, the raw material is subjected to the reforming reaction to generate the hydrogen-containing gas. The reforming reaction may be an arbitrary type, and examples thereof include a water vapor reforming reaction and an auto-thermal reaction.

In addition, examples of the raw material that can be used include an organic compound, which is composed of at least carbon and hydrogen, such as a natural gas that contains methane as a main component, LPG that contains propane as a main component, alcohol, gasoline, and kerosene.

In addition, the raw material is supplied from a raw material supply source (not illustrated). Examples of the raw material supply source include a raw material gas cylinder, a raw material gas infrastructure, a raw material tank, and the like. In addition, as water, ion exchange water and the like can be used, and water is supplied from a reforming water tank or pipelines of tap water in a state of being subjected to an ion exchange treatment.

In addition, although not illustrated in FIG. 51, devices necessary for each reforming reaction are appropriately provided. For example, in a case where the reforming reaction is the water reforming reaction, an evaporator that generates water vapor is provided. In a case where the reforming reaction is the auto-thermal reaction, an air supply device (not illustrate) that supplies air to reformer 31 is additionally provided to hydrogen generation apparatus 200.

The hydrogen-containing gas that is generated in reformer 31 is supplied to fuel cell 50 through anode hydrogen supply path 63.

Combustor 35 is configured to combust a fuel and air which are supplied to the combustor 35 to heat reformer 31. As combustor 35, for example, a burner can be used. Combustion air supply device 36 is connected to combustor 35.

Combustion air supply device 36 may have any configuration as long as air can be supplied to combustor 35. As combustion air supply device 36, for example, a fan, a blower, and the like can be used.

In addition, raw material gas supply device 34 is connected to combustor 35 through reformer 31, anode hydrogen supply path 63, fuel cell 50, and anode hydrogen exhaust path 64. Raw material gas supply device 34 can have any configuration as long as a fuel can be supplied to combustor 35. Raw material gas supply device 34 is a device that adjusts a flow rate of the fuel that is supplied to combustor 35, and is constituted by, for example, a pressure raising device and a flow rate adjusting valve. As the pressure raising device, for example, a constant volume type pump is used, but there is no limitation thereto.

In addition, as to be described later, in a case of employing a type in which the hydrogen-containing gas generated in reformer 31 is supplied to combustor 35, the hydrogen-containing gas that is generated in reformer 31 is supplied to combustor 35 through raw material gas supply device 34, a water vapor supply device (water supply device 40 and the evaporator), and reformer 31.

Combustion state detector 56 is provided to combustor 35. Combustion state detector 56 is configured to detect a combustion state in combustor 35, and to output a state that is detected to controller 39.

As combustion state detector 56, a carbon monoxide sensor that measures a concentration of carbon monoxide in a combustion exhaust gas, a flame rod that detects a flame state, a temperature sensor that detects heat generation due to combustion, and the like can be used. In addition, in a case where combustion state detector 56 is constituted by the carbon monoxide sensor, the carbon monoxide sensor may be provided to a path that diverges from combustion exhaust gas path 58.

Controller 39 is configured to control at least one device between combustion air supply device 36 and raw material gas supply device 34 so that a ratio of the amount of air supplied to the amount of the raw material supplied in combustor 35 during an operation of estimating the amount of heat of the raw material gas further increases in comparison to a ratio before the operation of estimating the amount of heat of the raw material gas.

Controller 39 may be a device that controls devices (for example, combustion air supply device 36, and the like) which are necessary to operate during carrying-out of the operation of estimating the amount of heat of the raw material gas, and includes a calculation processing unit (not illustrated), and a storage unit (not illustrated) that stores a control program.

Examples of the calculation processing unit include an MPU and a CPU. Examples of the storage unit include a memory. Controller 39 may be constituted by a single controller that performs centralized control, or a plurality of controllers which perform decentralized control in corporation with each other.

[Operation of Fuel Cell System]

Next, description will be given of an operation of fuel cell system 100 of the fifteenth example with reference to FIG. 51 to FIG. 56. In addition, in the following description, a hydrogen generation operation of hydrogen generation apparatus 200 in fuel cell system 100 is the same as in a hydrogen generation apparatus that is known, and thus detailed description thereof will be omitted, and description will be given to an operation of estimating the amount of heat of the raw material gas.

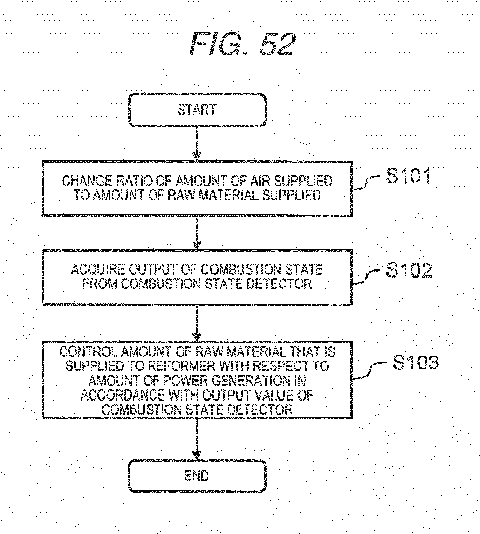

FIG. 52 is a flowchart illustrating an example of a schematic operation of fuel cell system 100 of the fifteenth example.

As illustrated in FIG. 52, controller 39 controls at least one device among raw material gas supply device 34, combustion air supply device 36, and power converter 68 so that the ratio of the flow rate of air to the flow rate of the raw material in combustor 35 further increases in comparison to a ratio before carrying-out the operation of estimating the amount of heat of the raw material gas (S101).

Specifically, for example, controller 39 controls at least one device among raw material gas supply device 34, combustion air supply device 36, and power converter 68 so that a ratio of the amount of air supplied to the amount of the raw material supplied in combustor 35 becomes 2 times to 5 times a ratio of the amount of air supplied to the amount of the raw material supplied before the operation of estimating the amount of heat of the raw material.

More specifically, controller 39 controls combustion air supply device 36 to increase the flow rate of air that is supplied to combustor 35. In addition, controller 39 controls raw material gas supply device 34 to decrease the flow rate of the fuel that is supplied to combustor 35. In addition, controller 39 controls power converter 68 to increase stack current 73 so as to decrease the flow rate of the fuel that is supplied to combustor 35.

Here, the reason why the ratio of the amount of air supplied to the amount of the raw material supplied is set to 2 times to 5 times the ratio of the amount of air supplied to the amount of the raw material supplied before the operation of estimating the amount of heat of the raw material is as follows.

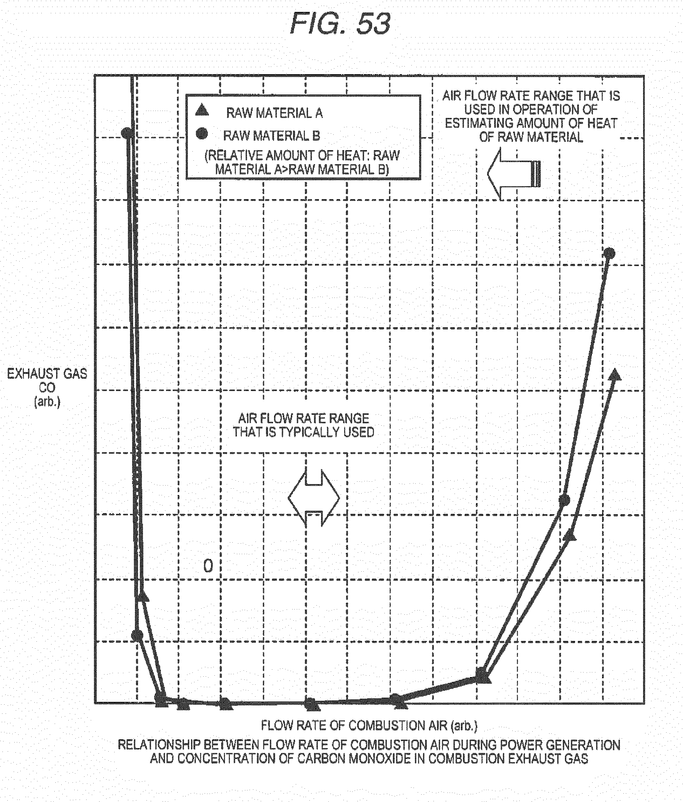

FIG. 53 is a view illustrating a measured concentration of carbon monoxide contained in a combustion exhaust gas when changing an air ratio in a combustor during power generation of the fuel cell system in the fifteenth example.

In a case of employing the carbon monoxide sensor as combustion state detector 56, as illustrated in FIG. 53, the amount of air supplied, which is typically used, is set in a range capable of maintaining a stable combustion state, and thus a variation of a combustion state is less likely to be observed in accordance with the amount of heat of the raw material. However, when increasing the amount of air supplied, the combustion state becomes gradually unstable, and thus the concentration of carbon monoxide in the combustion exhaust gas increases, and a difference in the concentration of carbon monoxide becomes significant depending on the amount of heat of the raw material.

In addition, as combustion state detector 56, in a case of employing a flame detector such as a flame rod, a temperature sensor, and an optical sensor which detects whether or not a flame exists, it is necessary for the ratio of the amount of air supplied to the amount of the raw material supplied to be 2 times to 5 times the ratio of the amount of air supplied to the amount of the raw material supplied before the operation of estimating the amount of heat of the raw material for reliable extinction of the flame.

On the other hand, in a case where the ratio of the amount of the air supplied to the amount of the raw material supplied is set to be higher than necessary, the ratio deviates from a typical operation range of raw material gas supply device 34 or combustion air supply device 36, and thus there is a possibility that a blower or a fan, which can be employed, may not exist.

According to this, the ratio of the amount of air supplied to the amount of the raw material supplied in combustor 35 may be higher than the ratio of the amount of air supplied to the amount of the raw material supplied in combustor 35 at time other than the operation of estimating the amount of heat of the raw material, and thus combustion may enter a more unstable state in comparison to a state before the operation of estimating the amount of heat of the raw material.

Next, controller 39 acquires a combustion state output value, which is detected by combustion state detector 56, from combustion state detector 56 (S102).

Next, controller 39 sets the amount of the raw material, which is supplied to reformer 31, with respect to the amount of power generation of fuel cell 50 in accordance with the combustion state output value that is acquired in step S102 (S103), and terminates the operation of estimating the amount of heat of the raw material.

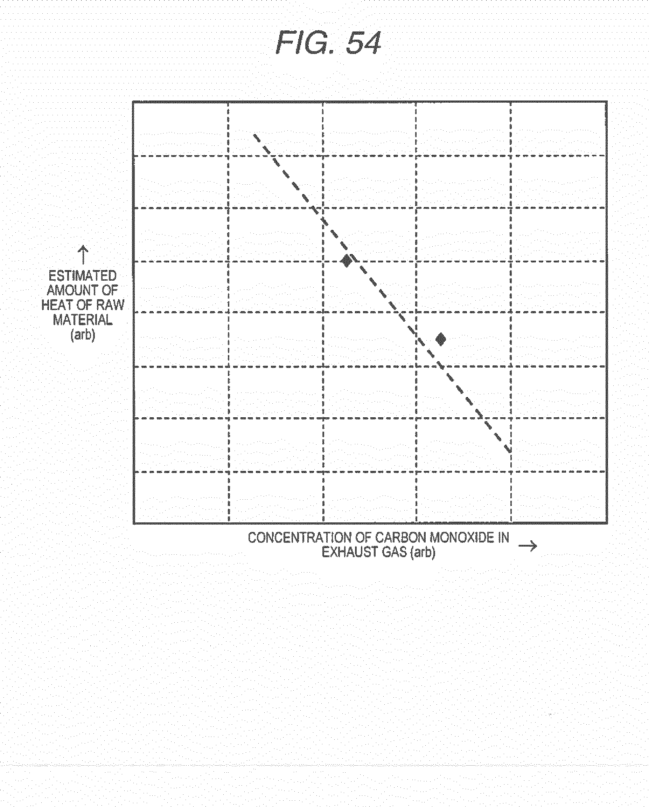

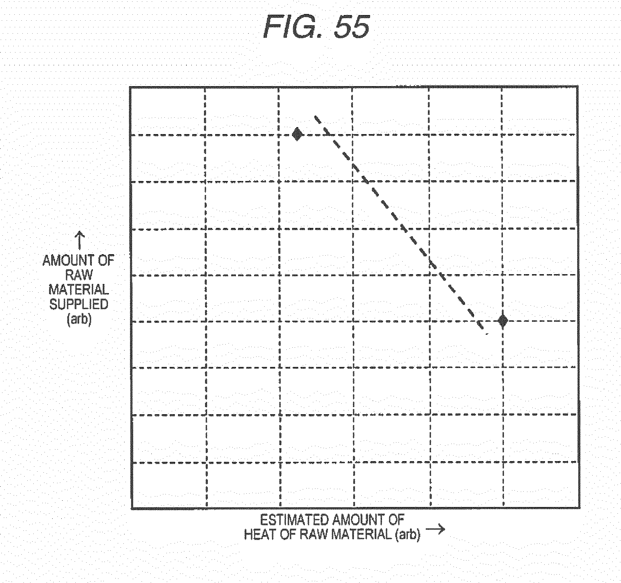

FIG. 54 is a view illustrating a measured concentration of carbon monoxide contained in the combustion exhaust gas when changing the air ratio in the combustor during power generation of the fuel cell system in the fifteenth example. Specifically, a relationship between the detection value of combustion state detector 56 and an estimation value of the amount of heat of the raw material. FIG. 55 is a view illustrating a relationship between the estimated amount of heat of the raw material, and the amount of the raw material that is supplied to the reformer with respect to the amount of power generation in the fuel cell in the fifteenth example.

Here, the setting value of the amount of the raw material, which is supplied to reformer 31, with respect to the amount of power generation of fuel cell 50 in accordance with an output value of a combustion state is stored in advance in a storage unit of controller 39, and is set in an arbitrary manner on the basis of a relationship of FIG. 55.

In fuel cell system 100 of the fifteenth example, during carrying-out of the operation of estimating the amount of heat of the raw material, controller 39 controls at least one device between raw material gas supply device 34 and combustion air supply device 36 so that the ratio of the flow rate of air to the flow rate of the raw material in combustor 35 increases, thereby increasing the concentration of carbon monoxide in the combustion exhaust gas.

Devices may be controlled in order for the ratio of the flow rate of air to the flow rate of the raw material in combustor 35 to decrease so as to increase the concentration of carbon monoxide in the combustion exhaust gas. However, in this example, the devices are controlled in order for the ratio of the flow rate of air to the flow rate of the raw material in combustor 35 to increase from the following reasons.

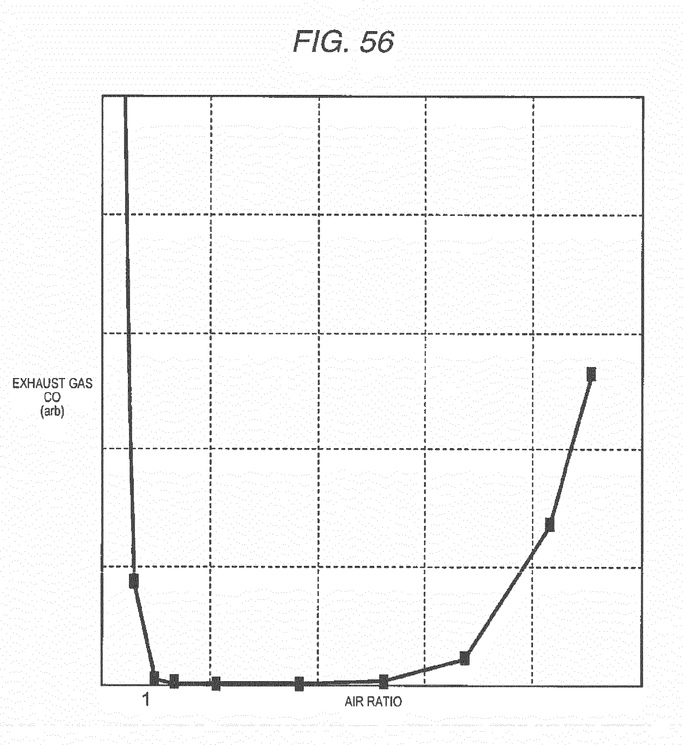

FIG. 56 is a view illustrating a measured concentration of carbon monoxide contained in the combustion exhaust gas when changing the air ratio in combustor 35 in the fifteenth example.

As illustrated in FIG. 56, when an air ratio is set to be lower than the air ratio of combustor 35 during a typical operation (at time other than the operation of estimating the amount of heat of the raw material) of fuel cell system 100, if the air ratio slightly deviates from a target air ratio (for example, 1.05), the concentration of carbon monoxide rapidly varies. According to this, it is necessary for controller 39 to strictly perform control of raw material gas supply device 34 and combustion air supply device 36 so as to maintain the concentration of carbon monoxide, which is generated in combustor 35, to a predetermined value.

In addition, when the air ratio in combustor 35 is set to be low, smoke occurs due to deficiency of air. The smoke adheres to combustor 35, combustion exhaust gas path 58, or a device such as a heat exchanger (not illustrated), which is provided downstream combustor 35 in combustion exhaust gas path 58, thereby deteriorating heat exchange capability, and reducing a cross-sectional area of combustion exhaust gas path 58. Accordingly, there is a concern that combustibility during combustion may deteriorate.

On the other hand, when the air ratio is set to be higher than the air ratio of combustor 35 during a typical operation (at time other than the operation of estimating the amount of heat of the raw material) of fuel cell system 100, a variation in the concentration of carbon monoxide is smaller in comparison to a case where the air ratio is set to be low.

According to this, it is easy to maintain the concentration of carbon monoxide, which is generated in combustor 35, to a predetermined value, and thus control of raw material gas supply device 34, combustion air supply device 36, or power converter 68 by controller 39 becomes easy. In addition, when the air ratio in combustor 35 is set to be high, even in a case where smoke occurs, the smoke is rapidly discharged a large amount of combustion exhaust gas, and thus it is possible to reduce an adverse effect on combustor 35 and devices on a downstream side.

(Sixteenth example not part of the invention but facilitates understanding of the invention)

With regard to fuel cell system 100 of a sixteenth example, when generation of the hydrogen-containing gas is not carried out in reformer 31 of fuel cell system 100 of the fifteenth example, controller 39 controls at least one device between raw material gas supply device 34 and combustion air supply device 36 so that the ratio of the flow rate of air to the flow rate of the raw material in combustor 35 becomes higher than a ratio before carrying out the operation of estimating the amount of heat of the raw material gas. Fuel cell system 100 of this example may be configured in the same manner as hydrogen generation apparatus 200 of the fifteenth example other than the above-described characteristic.

In the sixteenth example, a reforming reaction is performed at a temperature, for example, 400°C or lower at which a temperature of a reforming catalyst does not cause precipitation of carbon, and thus it is possible to prevent a reforming reaction in a state in which control parameters are not appropriate. That is, catalytic deterioration in the reforming catalyst due to precipitation of carbon, which occurs when the control parameters are not appropriate, is prevented.

In addition, fuel cell system 100 of the sixteenth example may be configured as follows. A path (not illustrated), which short-circuits anode hydrogen supply path 63 and anode hydrogen exhaust path 64 of fuel cell system 100, is provided in the fifteenth example illustrated in FIG. 51, and a raw material gas may be supplied to combustor 35 through the short-circuit path. The other configurations are the same as in the fifteenth example, and thus in the following description, an operation of estimating the amount of heat of the raw material will be described.

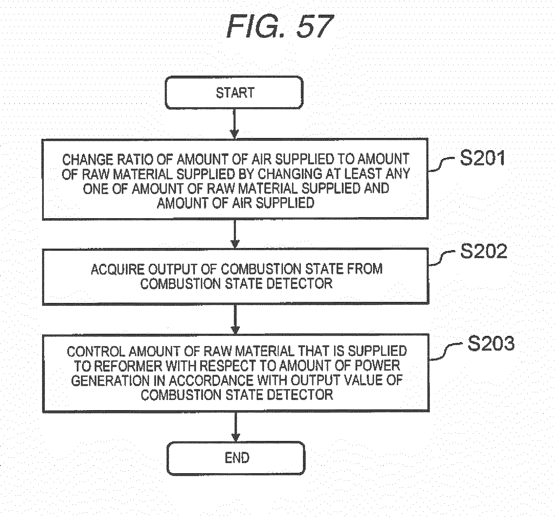

FIG. 57 is a flowchart illustrating an example of a schematic operation of fuel cell system 100 of the sixteenth example.

As illustrated in FIG. 57, the schematic operation of hydrogen generation apparatus 200 of the sixteenth example is basically the same as the schematic operation of hydrogen generation apparatus 200 of the fifteenth example, but at least one device between raw material gas supply device 34 and combustion air supply device 36 is controlled (S201). More specifically, controller 39 controls combustion air supply device 36 so as to increase the flow rate of air that is supplied to combustor 35. In addition, controller 39 controls raw material gas supply device 34 so as to reduce the flow rate of the raw material that is supplied to combustor 35. These configurations are different from those of the fifteenth example.

(Seventeenth example not part of the invention but facilitates understanding of the invention)

In fuel cell system 100 of the fifteenth example or the sixteenth example, controller 39 of hydrogen generation apparatus 200 of this example performs control in such a manner that the amount of the raw material that is supplied to reformer 31 with respect to the amount of power generation of fuel cell 50 becomes any one of a first raw material supply amount or a second raw material supply amount that is smaller than the first raw material supply amount on the basis of a value that is detected by combustion state detector 56.

In a case of designing raw material, which fuel cell system 100 can cope with, as a city gas and LPG, the amount of heat is greatly different between the city gas and the LPG, and thus when setting control parameters with respect to various city gases, it is necessary to set the degree of sensitivity and reproducibility of combustion state detector 56 to a very high value. According to this, the price of fuel cell system 100 becomes high, and thus a value as a product decreases.

Accordingly, in this example, control parameters with respect to a variation of raw material compositions, between which a difference of the amount of heat is small, are not set, and two-step of control parameters, which are respectively appropriate for two kinds of raw material between which a difference in the amount of heat is great, are set, and thus it is possible to employ combustion state detector 56 with low degrees of sensitivity and a low degree of reproducibility. Accordingly, it is possible to realize a cost reduction of fuel cell system 100.

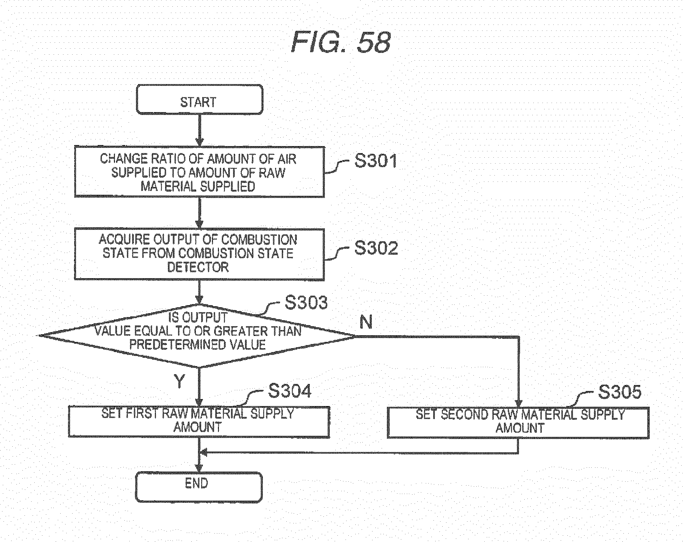

FIG. 58 is a flowchart illustrating an example of a schematic operation of fuel cell system 100 of this example.

As illustrated in FIG. 58, the schematic operation of fuel cell system 100 of this example is basically the same as the schematic operation of fuel cell system 100 of the fifteenth example and the schematic operation of fuel cell system 100 of the sixteenth example except that the amount of the raw material that is supplied to reformer 31 with respect to the amount of power generation of fuel cell 50 is set in two steps not in a non-step manner (S303 to S305).

(Eighteenth example not part of the invention but facilitates understanding of the invention)

In fuel cell system 100 of this example, as combustion state detector 56, the carbon monoxide sensor is arranged at a rear end of combustor 35. The carbon monoxide sensor can measure the degree of quality of the combustion state in a non-step manner. According to this, it is possible to set control parameters with respect to the amount of heat of the raw material in a non-step manner.

That is, it is possible to set control parameters which are respectively appropriate for not only a plurality of kinds of raw material such as the city gas and the LPG which are exemplified in the seventeenth example and in which a difference in the amount of heat is great, but also a subdivided city gas, and thus it is possible to drive fuel cell system 100 in a more stable manner in comparison to the related art.

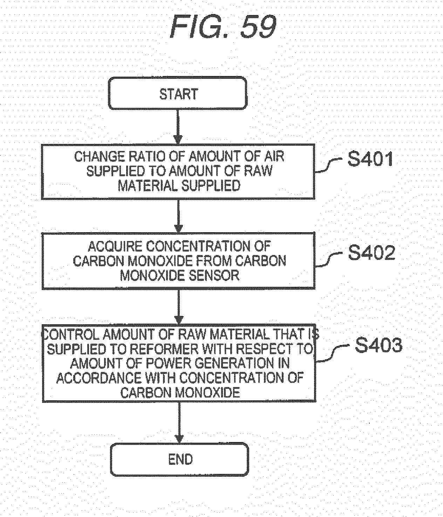

FIG. 59 is a flowchart illustrating an example of a schematic operation of fuel cell system 100 of this example.

As illustrated in FIG. 59, the schematic operation of fuel cell system 100 of this example is basically the same as the schematic operation of fuel cell systems 100 of the fifteenth to the seventeenth example except that the amount of the raw material, which is supplied to reformer 31 with respect to the amount of power generation, is controlled in accordance with an output value of the carbon monoxide sensor (S401 to S403).

(Nineteenth example not part of the invention but facilitates understanding of the invention)

In a state in which at least any one of the raw material and the hydrogen-containing gas is combusted in combustor 35 in the eighteenth example, fuel cell system 100 of this example is controlled as follows. When increasing a ratio of the amount of air that is supplied to combustor 35 to the amount of raw material that is supplied to combustor 35, if the concentration of carbon monoxide, which is detected by the carbon monoxide detector, is equal to or greater than a predetermined concentration threshold, control is performed so that the amount of the raw material that is supplied to reformer 31 with respect to the amount of power generation of fuel cell 50 becomes the first raw material supply amount. In addition, if the concentration of carbon monoxide, which is detected by the carbon monoxide detector, is less than the predetermined concentration threshold, control is performed so that the amount of the raw material that is supplied to reformer 31 with respect to the amount of power generation of fuel cell 50 becomes the second raw material supply amount.

With regard to a combustion state in combustor 35, in a case where an air temperature is low, a flame temperature is lowered, and thus incomplete combustion is likely to occur due to a decrease in a combustion reaction rate. Accordingly, the concentration of carbon monoxide that is included in the combustion exhaust gas is likely to increase.

In addition, in a case where the temperature of combustor 35 is very high, that is, in a case where combustion is initiated again before reformer 31 is sufficiently cooled down after completion of the previous power generation, air is supplied to combustor 35 in a pre-heated state, or heat is less likely to be transferred from a flame to combustor 35, and thus the flame temperature is raised. Accordingly, the combustion reaction rate increases, and thus the combustion state is less likely to deteriorate.

Accordingly, it is useful to set two-value control parameters, in which a threshold is provided and which are not linear with respect to the concentration of carbon monoxide, so as to reliably set control parameters of the amount of the raw material that is supplied to reformer 31 with respect to the amount of power generation of fuel cell 50 even when being affected by the external environment as described above.

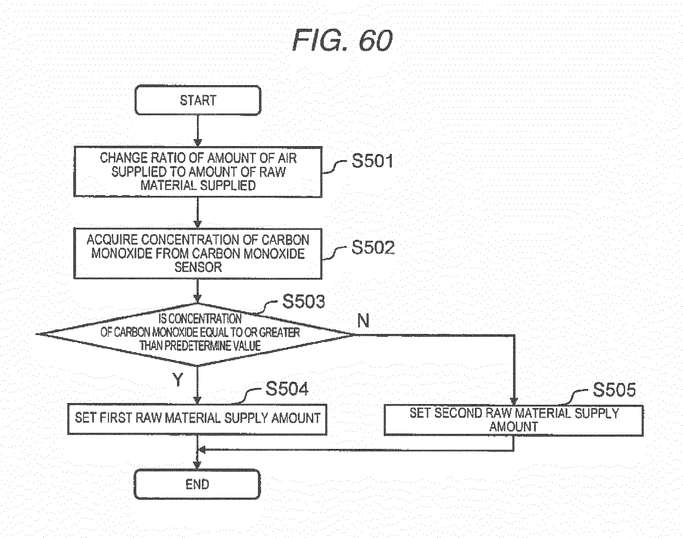

FIG. 60 is a flowchart illustrating an example of a schematic operation of fuel cell system 100 of this example.

As illustrated in FIG. 60, the schematic operation of fuel cell system 100 of this example is basically the same as the schematic operation of fuel cell system 100 of the eighteenth example except that the amount of the raw material that is supplied to reformer 31 with respect to the amount of power generation is controlled in a case where an output value of the carbon monoxide sensor is equal to or greater than a predetermined concentration threshold and in a case where the output value is less than the concentration threshold (S501 to S505).

(Twentieth example not part of the invention but facilitates understanding of the invention)

In fuel cell system 100 of a twentieth example, a flame rod that is an example of a flame detector as combustion state detector 56 is arranged at a rear end of combustor 35. The flame rod is configured as follows. A metal rod, which is electrically connected to a flame current detection circuit including a power supply and a current sensor, is inserted into a flame, and a flame state is determined in accordance with the magnitude of a current.

In a case where a combustion reaction is stopped, a current value instantly becomes "0", and thus transition into a re-ignition operation in a case of flame extinction can be rapidly performed. Accordingly, it is possible to provide fuel cell system 100 in which a possibility of discharging of an unburned gas is low, and safety is high.

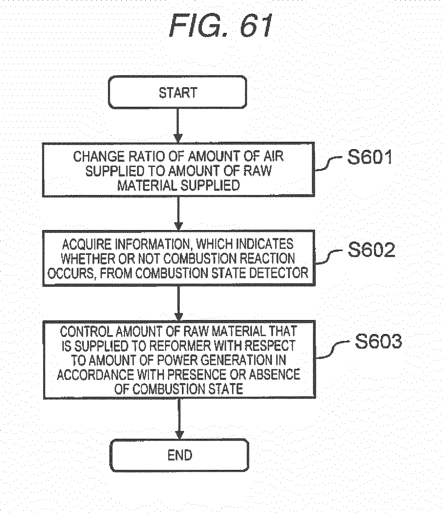

FIG. 61 is a flowchart illustrating an example of a schematic operation of fuel cell system 100 of this example.

As illustrated in FIG. 61, the schematic operation of fuel cell system 100 of this example is basically the same as the schematic operation of fuel cell system 100 of the eighteenth example except that the amount of the raw material that is supplied to reformer 31 with respect to the amount of power generation is controlled in a case where the flame current detected by the flame rod is equal to or greater than a predetermined current threshold, and a case where the flame current is less than the current threshold (S601 to S603).

(Twenty first example not part of the invention but facilitates understanding of the invention)

A schematic configuration of fuel cell system 100 of this example is the same as in the twentieth example.

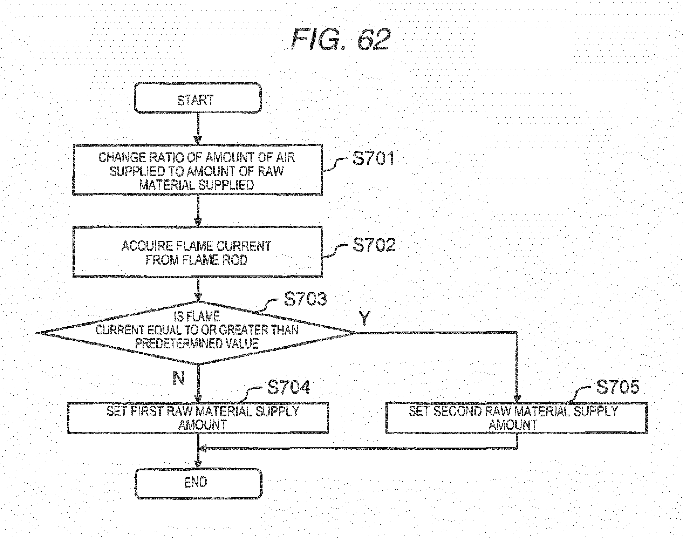

FIG. 62 is a flowchart illustrating an example of the schematic operation of fuel cell system 100 of this example.

As illustrated in FIG. 62, in fuel cell system 100 of this example, after confirming whether or not combustion occurs (S703), in a case where combustion does not continue, a first raw material supply amount is set as the amount of the raw material that is supplied to reformer 31 with respect to the amount of power generation of fuel cell 50 (S704). Here, the first raw material supply amount represents a control parameter for raw material with a low amount of heat.

In addition, in a case where combustion continues, a second raw material supply amount is set as the amount of the raw material that is supplied to reformer 31 with respect to the amount of power generation of fuel cell 50 (S705). Here, the second raw material supply amount represents a control parameter for raw material with a high amount of heat.

(First Modification)

Next, description will be given of a first modification in hydrogen generation apparatus 200 of this example. In hydrogen generation apparatus 200 of the first modification in this example, as combustion state detector 56, a temperature sensor that is one kind of the flame detector is arranged in combustor 35.

The temperature sensor detects heat generation due to combustion, and a thermocouple, a thermistor, and the like are used as the temperature sensor. The temperature sensor measures a temperature variation due to an exothermic reaction through combustion, and thus the temperature sensor is useful for not only a hydrocarbon fuel such as a city gas and LPG as a fuel, but also a reforming gas in which a concentration of hydrocarbon is lower in comparison to the raw material, and an off-gas from a stack.

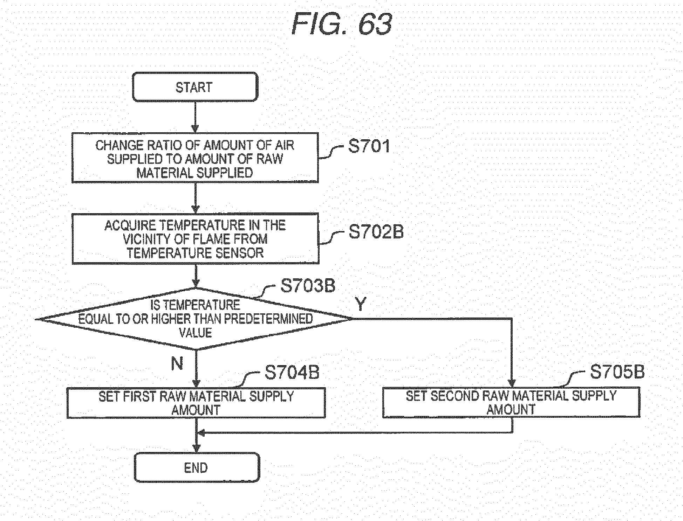

FIG. 63 is a flowchart illustrating an example of a schematic operation of hydrogen generation apparatus 200 of the first modification in the twenty first example.

As illustrated in FIG. 63, the schematic operation of hydrogen generation apparatus 200 of the first modification of this example is basically the same as the schematic operation of hydrogen generation apparatus 200 of the twenty first example except that controller 39 acquires an output state of the temperature sensor (S702B), and determines a combustion state (S703B).

(Second Modification)

Next, description will be given of a second modification in hydrogen generation apparatus 200 of the twenty first example. In hydrogen generation apparatus 200 of the second modification in the twenty first example, as combustion state detector 56, an optical sensor that is one kind of the flame detector is arranged in combustor 35.

The optical sensor detects light emission due to the combustion reaction, and a sensor that detects visible light, ultraviolet light, or the like is used as the optical sensor. The optical sensor has a characteristic of directly observing a light-emitting phenomenon of the combustion reaction. Accordingly, in a case where the combustion reaction is stopped, a sensor output value instantly becomes "0", and thus transition into a re-ignition operation in a case of flame extinction can be rapidly performed. Accordingly, it is possible to provide fuel cell system 100 in which a possibility of discharging of an unburned gas is low, and safety is high.

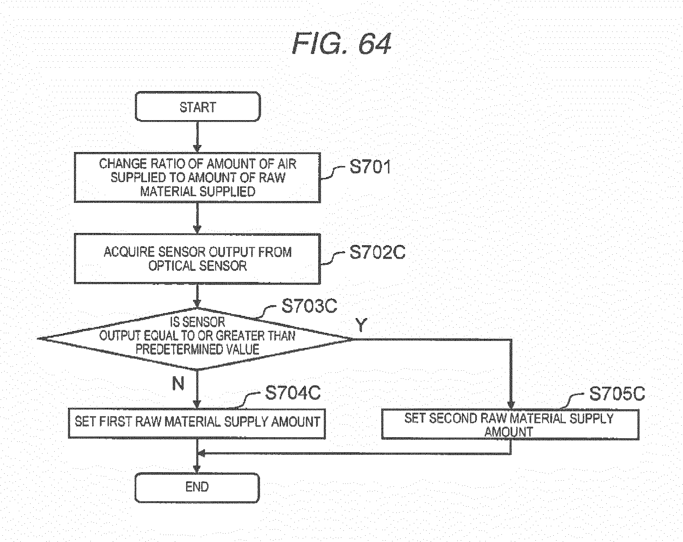

FIG. 64 is a flowchart illustrating an example of a schematic operation of hydrogen generation apparatus 200 of the second modification in this example.

As illustrated in FIG. 64, the schematic operation of hydrogen generation apparatus 200 of the second modification of this example is basically the same as the schematic operation of hydrogen generation apparatus 200 of this example except that controller 39 acquires an output state of the optical sensor (S702C) and determines a combustion state (703C).

(Twenty second example not part of the invention but facilitates understanding of the invention)

A schematic configuration of fuel cell system 100 of this example is the same as in the twentieth example.

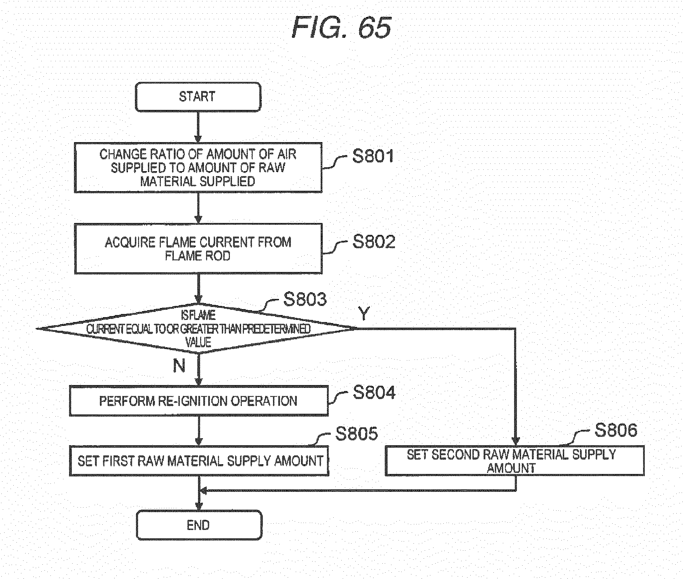

FIG. 65 is a flowchart illustrating an example of a schematic operation of fuel cell system 100 of this example.

As illustrated in FIG. 65, in fuel cell system 100 of this example, after confirming whether or not combustion occurs (S803), in a case where combustion does not continue (NO in S803), a re-ignition operation is performed (S804).

Specifically, an operation of continuing combustion is performed by using an ignition device such as an igniter and a glow plug. According to this configuration, even after extinction of a flame, combustion is immediately performed again, and thus it is possible to provide fuel cell system 100 in which a possibility of discharging of an unburned gas is low, and safety is high. In addition, flame extinction time can be suppressed to approximately 10 seconds or shorter, and thus it is not necessary to excessively extend activation time during a heating temperature rise of hydrogen generation apparatus 200.

In addition, fuel cell system 100 may be configured to include hydrogen generation apparatus 200 of the above-described examples and exemplary embodiments, and a fuel cell that performs power generation by using the hydrogen-containing gas that is supplied from hydrogen generation apparatus 200.

The fuel cell performs power generation by using the hydrogen-containing gas that is supplied from hydrogen generation apparatus 200. The fuel cell may be an arbitrary type of fuel cell. For example, as the fuel cell, a polymer electrolyte type fuel cell (PEFC), a solid oxide type fuel cell, a phosphoric acid type fuel cell, and the like can be used, and a configuration thereof is known.

Accordingly, detailed description of the configuration of the fuel cell will be omitted. In addition, in a case where the fuel cell is the solid oxide type fuel cell, the fuel cell may be an internal-reforming solid oxide type fuel cell in which a reformer and the fuel cell are integrated.

From the above description, it should be understood by those skilled in the art that lots of modifications or other exemplary embodiments are possible in the invention. Accordingly, the above description is illustrative only, and is provided to teach best aspects for carrying out the invention for those skilled in the art. Details of at least one of a structure and a function can be substantially changed without departing from the scope of the invention as claimed.

As described above, a hydrogen generation apparatus of an exemplary embodiment of the invention as defined in claim 1 includes a reformer that generates a hydrogen-containing gas from a hydrocarbon-containing raw material gas through a reforming reaction, a raw material gas supply device that supplies the raw material gas to the reformer, and a combustor that combusts at least one of the raw material gas and the hydrogen-containing gas which pass through the reformer, or any off-gas that includes the hydrogen-containing gas, which is not used, to heat the reformer. In addition, the hydrogen generation apparatus further includes a combustion air supply device that supplies combustion air to the combustor, a raw material gas supply amount detector that detects the amount of the raw material gas supplied to the reformer, a reforming temperature detector that detects a temperature of the reformer, and a controller that performs control in accordance with a predetermined control parameter.

In addition, the controller is configured to set the control parameter on the basis of a reforming temperature, which is detected by the reforming temperature detector, in a case where the raw material gas supply device supplies the raw material gas so that the amount of the raw material gas supplied, which is detected by the raw material gas supply amount detector, becomes a predetermined value, or on the basis of a temperature variation rate, which is detected by the reforming temperature detector, when the temperature of the reformer rises due to heating by the combustor.

According to this configuration, it is possible to realize a highly-versatile hydrogen generation apparatus in which it is not necessary to set parameters in advance or from an outer side, and it is possible to easily determine the amount of heat of the raw material gas from a reforming temperature during supply of the raw material gas at a predetermined flow rate.

In addition, it is possible to appropriately generate hydrogen that is necessary by changing a control parameter on the basis of the determination result regardless of an apparent amount, which is detected by the raw material gas supply amount detector, of the raw material supplied, and thus stable driving is possible.

In addition, the controller is configured to select an optimal control parameter among at least two kinds of the control parameters respectively corresponding to compositions of at least two kinds of the raw material gases, which are different in the amount of heat, on the basis of the reforming temperature or the temperature variation rate.

According to this configuration, when performing driving with one control parameter group, in a case where a composition of the raw material gas that is actually supplied does not conform to the control parameter, it is possible to perform stable driving by changing the control parameter to a different control parameter.

In addition, the controller is configured to perform control, first, on the basis of a first control parameter that is one kind of the control parameter, and the controller is configured to perform control after changing to a second control parameter, which is a different kind of the control parameter, in a case where the reforming temperature deviates from a predetermined threshold value or in a case where the temperature variation rate deviates from a predetermined threshold value.

According to this configuration, when performing driving with a first control parameter group, in a case where the reforming temperature or the temperature variation rate deviates from a predetermined threshold value, a composition of the raw material gas supplied can be determined as not conforming to the first control parameter, and thus it is possible to perform stable driving by changing the control parameter to a second control parameter.

In addition, the amount of heat of the raw material gas corresponding to the first control parameter may be greater than the amount of heat of the raw material gas corresponding to the second control parameter.

According to this configuration, first, driving is performed with the first control parameter group corresponding to a relatively high amount of heat, and thus even when a raw material gas with a relatively low amount of heat is actually supplied, it is possible to perform driving in which occurrence of CO in a combustion exhaust gas due to deficiency of combustion air, occurrence of soot on a reforming catalyst due to deficiency of water supply, and the like are suppressed. Then, driving is performed after changing to a second control parameter group corresponding to a raw material gas corresponding to a relatively low amount of heat, and thus it is possible to perform safe and stable driving.

In addition, the hydrogen generation apparatus may further include a storage unit that stores the control parameter that is set or selected on the basis of the reforming temperature or the temperature variation rate. The controller may be configured to perform control of allowing the subsequent activation and driving to be performed on the basis of the control parameter that is stored in the storage unit.

According to this configuration, when an optimal control parameter is stored, it is possible to reliably perform stable driving during the subsequent activation. In addition, even in a case where a great deviation from a raw material gas composition, which is assumed, occurs, and thus it is difficult to perform sufficient adjustment with setting of the control parameter which is performed once, it is possible to perform more stable driving by additionally changing the control parameter on the basis of a correction value that is stored. In addition, even when a seasonal composition variation occurs, it is possible to cope with the seasonal composition variation at each time.

In addition, the controller may be configured to correct a correlation between the reforming temperature or the temperature variation rate and the control parameter on the basis of an ambient temperature.

According to this configuration, it is possible to more accurately calculate a temperature, which is detected by the reforming temperature detector, regardless of the ambient temperature, and thus it is possible to perform more stable driving.

In addition, the controller may be configured to correct a correlation between the reforming temperature or the temperature variation rate and the control parameter when supplying the raw material gas so that the amount of the raw material gas supplied, which is detected by the raw material gas supply amount detector, becomes a predetermined value on the basis of driving time of the reformer.

According to this configuration, it is possible to more accurately calculate the temperature of the reformer which is caused by the amount of heat of the raw material gas regardless of deterioration with the passage of driving time, and the like, and thus it is possible to realize stable driving over a long period of time.

In addition, the controller may be configured to correct a correlation between an actual amount, which is converted from the amount of heat, of the raw material gas that is supplied by the raw material gas supply device, and a detection value, which is detected by the raw material gas supply amount detector, of the amount of the raw material gas supplied on the basis of the reforming temperature or the temperature variation rate.

According to this configuration, for example, even in a case where a raw material gas has any composition such as a case of installation in an area in which a gas composition is different, and a case of a seasonal composition variation, it is not necessary to set a parameter in advance or from an outer side, and it is possible to easily determine the amount of heat of the raw material gas from a temperature rise rate that greatly depends on the amount of heat of the raw material gas.

In addition, it is possible to appropriately generate hydrogen that is necessary by correcting the amount of the raw material supplied on the basis of the determination result regardless of the apparent amount, which is detected by the raw material gas supply amount detector, of the raw material supplied, and thus it is also possible to cope with a wide raw material gas composition. Accordingly, it is possible to realize a highly-versatile stable hydrogen generation apparatus with high efficiency.

In addition, the controller may be configured to correct the detection value of the amount of the raw material gas supplied, or a target amount of the raw material gas supplied during control in order for the amount of the raw material gas supplied to be the target amount on the basis of the reforming temperature or the temperature variation rate.

According to this configuration, it is possible to correct a detection value of the amount of the raw material gas supplied with respect to the amount of the raw material gas supplied by using the reforming temperature or the temperature variation rate. In addition, it is possible to correct the target amount of the raw material gas supplied by using the reforming temperature or the temperature variation rate. According to this, it is possible to appropriately generate hydrogen that is necessary by correcting the amount of the raw material supplied regardless of the apparent amount, which is detected by the raw material gas supply amount detector, of the raw material supplied.

In addition, the controller may be configured to calculate a correction coefficient on the basis of the reforming temperature or the temperature variation rate, and to set a value, which is obtained by multiplying the correction coefficient by the detection value of the amount of the raw material gas supplied, as a corrected amount of the raw material gas supplied, or to set a value, which is obtained by multiplying the correction coefficient by the target amount of the raw material gas supplied before the correction, as a corrected target amount of the raw material supplied.

According to this configuration, it is possible to maintain the supply amount of heat of raw material, which is actually supplied by the raw material gas supply device, to a predetermined value by making a correction by using the correction coefficient calculated from a variation rate that is caused by the amount of heat of the raw material gas, and thus it is possible to realize a stable hydrogen generation apparatus.

In addition, the hydrogen generation apparatus may further include a water supply device that supplies water to the reformer. The controller may be configured to control the water supply device so as to further reduce the amount of water that is supplied to the reformer in comparison to the amount of water supplied before correction in a case where correction is made in order for the detection value of the amount of the raw material gas supplied to further increase in comparison to a detection value before correction, and so as to further increase the amount of water supplied in comparison to the amount of water supplied before correction in a case where correction is made in order for the detection value of the amount of the raw material gas supplied to further decrease in comparison to the detection value before correction.

In a case of increasing the amount of raw material supplied through correction, that is, in a case where the amount of heat of the raw material gas is small, the number of moles of carbon in the raw material gas is relatively small. That is, when a flow rate of water is increased in proportion to an increase in a flow rate of the raw material gas, a value of S/C, which is a ratio between water vapor and the number of moles of carbon in the raw material gas, relatively increases, and thus the reforming temperature is lowered. As a result, the amount of hydrogen decreases, and thus stable driving becomes difficult. However, when the amount of water supplied is reduced in accordance with the above-described configuration, the stable driving becomes possible.

On the other hand, in a case of reducing raw material, the number of moles of carbon in the raw material gas is relatively large, and a value of actual S/C becomes relatively small. In this case, in a case where the reforming temperature rises, or the actual S/C excessively decreases, a problem such as precipitation of carbon occurs. However, when the amount of water supplied is increased through the control, stable hydrogen generation becomes possible.

In addition, the controller may be configured to control the combustion air supply device so as to further reduce the amount of the combustion air that is supplied to the combustor in comparison to the amount of the combustion air supplied before correction in a case where correction is made in order for the detection value of the raw material gas supplied to further increase in comparison to a detection value before correction, and so as to further increase the amount of the combustion air supplied in comparison to the amount of the combustion air supplied before correction in a case where correction is made in order for the detection value of the amount of the raw material gas supplied to further decrease in comparison to the detection value before correction.

In a case of increasing the amount of the raw material gas supplied through correction, that is, in a case where the amount of heat of the raw material gas is small, a flow rate of a gas to be combusted is relatively small. That is, in a case of increasing a flow rate of combustion air in proportion to an increase in a flow rate of the raw material gas, a ratio between the flow rate of the combustion air and the flow rate of the raw material gas or the flow rate of the hydrogen-containing gas that is derived from the flow rate of the raw material gas relatively increases, and thus the reforming temperature is lowered. As a result, the amount of hydrogen decreases, and thus stable driving becomes difficult. However, according to the above-described configuration, stable driving becomes possible. Similarly, in a case of reducing raw material, when increasing the amount of combustion air supplied, stable hydrogen generation becomes possible.

In addition, the controller may be configured to perform measurement of the amount of temperature variation after initiating water supply to the reformer when a temperature detected by the reforming temperature detector reaches a predetermined temperature after supplying the raw material gas to the reformer.

According to this configuration, a temperature rise rate is calculated after initiation of water supply during activation. Accordingly, in a case where a composition of raw material deviates from a composition that is assumed, S/C also deviates as described above, and thus a difference in a temperature rise rate becomes significant. As a result, it is possible to reliably perform composition determination. In a case where reforming is performed at a predetermined temperature and reforming water is supplied, if driving is initiated from a temperature equal to or lower than a temperature at which supply of reforming water is initiated, comparison can be reliably made regardless of the temperature, and thus determination is possible.

In addition, the hydrogen generation apparatus may further include a storage unit that stores a correction value, which is based on the reforming temperature or the temperature variation rate, of the amount of the raw material gas supplied. The controller may be configured to perform control of allowing the subsequent activation and driving to be performed on the basis of the correction value that is stored in the storage unit.

According to this configuration, a determination result is stored, and thus stable driving becomes possible in a reliable manner during the subsequent activation. In addition, even when a raw material gas composition that is assumed and an actual composition greatly deviate from each other, and thus it is difficult to make a sufficient correction through activation correction that is made once, when correction is repeated on the basis of the correction value that is stored, it is possible to perform more stable driving. In addition, even when a seasonal composition variation occurs, it is possible to cope with the seasonal composition variation at each time.

In addition, the hydrogen generation apparatus may further include a selective oxidizer that reduces a concentration of carbon monoxide in the hydrogen-containing gas that is discharged from the reformer, and a selective oxidation air supply device that supplies selective oxidation air to the selective oxidizer. The controller may be configured to correct an air flow rate, which is supplied by the selective oxidation air supply device, on the basis of the reforming temperature or the temperature variation rate.

According to this configuration, for example, even in a case of installation in an area in which the raw material gas contains a large amount of gas such as nitrogen and carbon dioxide other than hydrocarbon, it is possible to realize a highly-versatile hydrogen generation apparatus in which it is not necessary to set parameters in advance or from an outer side, and it is possible to easily determine the amount of heat of the raw material gas from the reforming temperature or the temperature rise rate. In addition, when the flow rate of the selective oxidation air is corrected on the basis of the determination result, the amount of hydrogen that is excessively consumed in the selective oxidizer is suppressed, and thus it is possible to realize a stable hydrogen generation apparatus with high efficiency.

In addition, the hydrogen generation apparatus may further include an anode air supply device that supplies anode air to an anode of a fuel cell. The controller may be configured to correct an air flow rate, which is supplied by the anode air supply device, on the basis of the reforming temperature or the temperature variation rate.

According to this configuration, for example, even in a case of installation in an area in which the raw material gas contains a large amount of gas such as nitrogen and carbon dioxide other than hydrocarbon, it is possible to realize a highly-versatile fuel cell system in which it is not necessary to set parameters in advance or from an outer side, and it is possible to easily determine the amount of heat of the raw material gas from the reforming temperature or the temperature rise rate. In addition, the flow rate of air-bleed air that is supplied to the fuel cell is corrected on the basis of the determination result, and thus the amount of hydrogen, which is excessively consumed in the anode of the fuel cell, is suppressed. As a result, it is possible to realize a stable fuel cell system with high efficiency.

In addition, the hydrogen generation apparatus may further include a storage unit that stores the control parameter, and a parameter setting function for setting the control parameter on the basis of the temperature variation rate. In addition, the controller may be configured to correct the parameter setting function on the basis of an ambient temperature, to refer to the parameter setting function after correction on the basis of the temperature variation rate that is obtained by performing a heating operation of heating the reformer by using a predetermined control parameter for determination, and to allow driving to be performed by using a control parameter that is set by the parameter setting function after correction.

According to this configuration, correction can be made with a correction value by a variation in the temperature rise rate due to the outside air temperature, and thus it is possible to set control parameters without being affected by the variation in the temperature rise rate due to the outside air temperature. Accordingly, it is possible to set a driving control parameter group with accuracy.

The hydrogen generation apparatus may further include a storage unit that stores the control parameter, and a parameter setting function for setting the control parameter on the basis of the temperature variation rate. The controller may be configured to correct the temperature variation rate on the basis of an ambient temperature after obtaining the temperature variation rate by performing a heating operation of heating the reformer by using a predetermined control parameter for determination, to refer to the parameter setting function on the basis of the temperature variation rate after correction, and to perform control of allowing driving to be performed by using a control parameter set by the parameter setting function.

According to this configuration, correction can be made with a correction value by a variation in the temperature rise rate due to the outside air temperature, and thus it is possible to set control parameters without being affected by the variation in the temperature rise rate due to the outside air temperature. Accordingly, it is possible to set a driving control parameter group with accuracy.

In addition, the hydrogen generation apparatus may further include an ambient temperature detector that is provided on an outer side of the hydrogen generation apparatus to detect the ambient temperature.

According to this configuration, it is possible to more accurately calculate the temperature variation rate of the reformer, which is caused by the amount of heat of the raw material gas, regardless of the ambient temperature, and it is possible to correct the amount of the raw material gas supplied, and thus it is possible to realize a hydrogen generation apparatus in which the amount of hydrogen generated is maintained to a predetermined value, and stable driving is possible.

In addition, the controller may be configured to estimate the ambient temperature from a temperature drop rate of the reformer from a first temperature to a second temperature that is lower than the first temperature.

According to this configuration, it is possible to estimate an outside air temperature without necessity to provide an outside air temperature detector.

In addition, the hydrogen generation apparatus may further include a storage unit that stores a first control parameter corresponding to a gas composition with a high amount of heat generation, and a second control parameter corresponding to a gas composition with a low amount of heat generation. The controller may be configured to sequentially perform a first heating operation of heating the reformer by using one control parameter of the first control parameter and the second control parameter, and a second heating operation of heating the reformer by using the other control parameter of the first control parameter and the second control parameter with an operation of stopping the heating of the reformer set between the first heating operation and the second heating operation. The controller may be configured to allow driving to be performed by selecting a control parameter with which a temperature rise rate close to a temperature rise rate, which is set in advance, of the reformer is obtained between a first temperature rise rate that is detected by the reforming temperature detector when heating the reformer by using the first control parameter, and a second temperature rise rate that is detected by the reforming temperature detector when heating the reformer by using the second control parameter.

According to this configuration, it is possible to acquire a temperature rise rate during two times of heating operations in which assumed amounts of heat generation are different from each other, and it is possible to set a driving control parameter suitable for a raw material composition with accuracy through comparison between the temperature rise rate and a predetermined temperature rise rate.

In addition, the controller may be configured to perform control of allowing the first heating operation and the second heating operation to be performed in a case where the ambient temperature is in a predetermined temperature range.

According to this configuration, it is possible to acquire the temperature rise rate without being affected by an outside temperature, and thus it is possible to set a driving control parameter suitable for a raw material composition with accuracy.

In addition, the controller may be configured to perform the first heating operation of heating the reformer to a first temperature, to stop the heating of the reformer, and to perform the second heating operation of heating the reformer to a second temperature.

According to this configuration, it is possible to stop the heating operation at a predetermined temperature, and thus it is possible to suppress carbonization of a catalyst due to thermal decomposition of raw material that is supplied, or precipitation of carbon due to a disproportionation reaction of a reforming gas in a case where the amount of water supplied to the reformer is less than the theoretical amount of water after composition variation.

In addition, according to another exemplary embodiment of the invention, there is provided a fuel cell system according to claim 22 including the hydrogen generation apparatus, and a fuel cell that performs power generation by using the hydrogen-containing gas that is generated by the reformer, and an oxygen-containing oxidant gas.

According to this configuration, it is possible to realize a highly-versatile fuel cell system in which it is not necessary to set parameters in advance or from an outer side, and it is possible to easily determine the amount of heat of the raw material gas from a reforming temperature during supply of the raw material gas at a predetermined flow rate.

In addition, it is possible to appropriately generate hydrogen that is necessary by changing a control parameter on the basis of the determination result regardless of an apparent amount, which is detected by the raw material gas supply amount detector, of the raw material supplied, and thus stable driving is possible.

In addition, according to still another exemplary embodiment of the invention, there is provided a method according to claim 23 of driving a hydrogen generation apparatus.

According to this method, it is possible to realize a method of driving a highly-versatile hydrogen generation apparatus in which it is not necessary to set parameters in advance or from an outer side, and it is possible to easily determine the amount of heat of the raw material gas from a reforming temperature during supply of the raw material gas at a predetermined flow rate.

In addition, it is possible to appropriately generate hydrogen that is necessary by changing a control parameter on the basis of the determination result regardless of an apparent amount, which is detected by the raw material gas supply amount detector, of the raw material supplied, and thus stable driving is possible.

INDUSTRIAL APPLICABILITY

As described above, according to the invention, it is possible to exhibit a remarkable effect in which it is not necessary to set parameters in advance or from an outer side, and it is possible to easily determine the amount of heat of the raw material gas from a reforming temperature during supply of the raw material gas at a predetermined flow rate. Accordingly, the invention is particularly useful for a case where a composition of the raw material gas may vary with the passage of time, and a case of installation in an area in which a composition of the raw material gas that can be supplied is wide. In addition, high versatility is realized in a fuel cell system such as a dispersive polymer electrolyte type and a solid oxide type, and thus the invention is useful.

REFERENCE MARKS IN THE DRAWINGS

| | |
|---|---|
| 1 | Fuel cell |
| 2 | Reformer |
| 3 | Raw material gas supply device |
| 4 | Combustor |
| 5 | Raw material gas supply amount detector |
| 5a | Mass flowmeter |
| 6 | Reforming temperature detector |
| 7 | Controller |
| 8 | Water supply device |
| 9 | Combustion air supply device |
| 11 | Storage unit |
| 12 | Ambient temperature detector |
| 20 | Gas leakage detection unit |
| 21 | Storage unit |
| 22 | Ambient temperature detector |
| 31 | Reformer |
| 32 | Selective oxidizer |
| 33 | Selective oxidation air supply device |
| 34 | Raw material gas supply device |
| 35 | Combustor |
| 36 | Combustion air supply device |
| 37 | Raw material gas supply amount detector |
| 38 | Reforming temperature detector |
| 39 | Controller |
| 40 | Water supply device |
| 41 | Gas leakage detection unit |
| 42 | Storage unit |
| 43 | Ambient temperature detector |
| 44 | Heater |
| 48 | Sealing device |
| 50 | Fuel cell |
| 51 | Anode air supply device |
| 56 | Combustion state detector |
| 58 | Combustion exhaust gas path |
| 63 | Anode hydrogen supply path |
| 64 | Anode hydrogen exhaust path |
| 68 | Power converter |
| 73 | Stack current |
| 89 | Hydrogen supply path |
| 90 | Fuel supply device |
| 91 | Fuel supply path |
| 100 | Fuel cell system |

200 Hydrogen generation apparatus
210 Hydrogen using apparatus

**Claims**

1. A hydrogen generation apparatus, comprising:

   a reformer (2, 31) that generates a hydrogen-containing gas from a hydrocarbon-containing raw material gas through a reforming reaction;
   a raw material gas supply device (3, 34) that supplies the raw material gas to the reformer;
   a combustor (4, 35) that combusts at least one of the raw material gas and the hydrogen-containing gas which pass through the reformer, or any off-gas that includes the hydrogen-containing gas, which is not used, to heat the reformer;
   a combustion air supply device (9, 36) that supplies combustion air to the combustor;
   a raw material gas supply amount detector (5, 37) that detects the amount of the raw material gas supplied to the reformer;
   a reforming temperature detector (6, 38) that detects a temperature of the reformer; and
   a controller (7, 39) that performs control in accordance with a control parameter;
   **characterized in that**
   the controller (7, 39) is configured to set the control parameter on the basis of a reforming temperature, which is detected by the reforming temperature detector, in a case where the raw material gas supply device supplies the raw material gas so that the amount of the raw material gas supplied, which is detected by the raw material gas supply amount detector, becomes a predetermined value, or on the basis of a temperature variation rate, which is detected by the reforming temperature detector, when the temperature of the reformer rises due to heating by the combustor,
   the controller (7, 39) is configured to select an optimal control parameter among at least two kinds of the control parameters depending on compositions of at least two kinds of the raw material gases, which are different in the amount of heat, on the basis of the reforming temperature or the temperature variation rate,
   the controller (7, 39) is configured to perform control on the basis of a first control parameter that is one kind of the control parameter, and
   the controller (7, 39) is configured to perform control after changing to a second control parameter, which is a different kind of the control parameter, in a case where the reforming temperature deviates from a predetermined threshold value or in a case where the temperature variation rate deviates from a predetermined threshold value.

2. The hydrogen generation apparatus of claim 1, further comprising:

   a storage unit (11) that stores the control parameter that is set or selected on the basis of the reforming temperature or the temperature variation rate,
   wherein the controller (7) is configured to perform control of allowing a subsequent activation and driving to be performed on the basis of the control parameter that is stored in the storage unit.

3. The hydrogen generation apparatus of claim 1 or 2, wherein the controller (7) is configured to correct a correlation between the reforming temperature or the temperature variation rate and the control parameter on the basis of an ambient temperature.

4. The hydrogen generation apparatus of any one of claims 1 to 3, wherein the controller (7) is configured to correct a correlation between the reforming temperature or the temperature variation rate and the control parameter when the raw material gas is supplied so that the amount of the raw material gas supplied, which is detected by the raw material gas supply amount detector, becomes a predetermined value on the basis of driving time of the reformer.

5. The hydrogen generation apparatus of any one of claims 1 to 4, wherein the controller (7) is configured to correct a correlation between an actual amount, which is converted from the amount of heat, of the raw material gas that is supplied by the raw material gas supply device, and a detection value, which is detected by the raw material gas supply amount detector, of the amount of the raw material gas supplied, on the basis of the reforming temperature or the temperature variation rate.

6. The hydrogen generation apparatus of claim 5, wherein the controller (7) is configured to correct the detection value of the amount of the raw material gas supplied, or a target amount of the raw material gas supplied during control in order for the amount of the raw material gas supplied to be the target amount, on the basis of the reforming temperature or the temperature variation rate.

7. The hydrogen generation apparatus of claim 6, wherein the controller (7) is configured to calculate a correction coefficient on the basis of the reforming temperature or the temperature variation rate, and to set a value, which is obtained by multiplying the correction coefficient by the detection value of the amount of the raw material gas supplied, as a corrected amount of the raw material gas supplied, or to set a value, which is obtained by multiplying the correction coefficient by the target amount of the raw material gas supplied before the correction, as a corrected target amount of the raw material gas supplied.

8. The hydrogen generation apparatus of any one of claims 5 to 7, further comprising:

   a water supply device (8) that supplies water to the reformer,
   wherein the controller (7) is configured to control the water supply device (8) so as to further reduce the amount of water that is supplied to the reformer in comparison to the amount of water supplied before correction in a case where correction is made in order for the detection value of the amount of the raw material gas supplied to further increase in comparison to a detection value before correction, and so as to further increase the amount of water supplied in comparison to the amount of water supplied before correction in a case where correction is made in order for the detection value of the amount of the raw material gas supplied to further decrease in comparison to the detection value before correction.

9. The hydrogen generation apparatus of any one of claims 5 to 8, wherein the controller (7) is configured to control the combustion air supply device (9) so as to further reduce the amount of the combustion air that is supplied to the combustor in comparison to the amount of the combustion air supplied before correction in a case where correction is made in order for the detection value of the raw material gas supplied to further increase in comparison to a detection value before correction, and so as to further increase the amount of the combustion air supplied in comparison to the amount of the combustion air supplied before correction in a case where correction is made in order for the detection value of the amount of the raw material gas supplied to further decrease in comparison to the detection value before correction.

10. The hydrogen generation apparatus of any one of claims 5 to 9, wherein the controller (7) is configured to perform measurement of the amount of temperature variation after initiating water supply to the reformer when a temperature detected by the reforming temperature detector reaches a predetermined temperature after the raw material gas is supplied to the reformer.

11. The hydrogen generation apparatus of any one of claims 5 to 10, further comprising:

   a storage unit (21) that stores a correction value, which is based on the reforming temperature or the temperature variation rate, of the amount of the raw material gas supplied,
   wherein the controller (7) is configured to perform control of allowing a subsequent activation and driving to be performed on the basis of the correction value that is stored in the storage unit.

12. The hydrogen generation apparatus of any one of claims 1 to 11, further comprising:

   a selective oxidizer (32) that reduces a concentration of carbon monoxide in the hydrogen-containing gas that is discharged from the reformer (31); and
   a selective oxidation air supply device (33) that supplies selective oxidation air to the selective oxidizer,
   wherein the controller (39) is configured to correct an air flow rate, which is supplied by the selective oxidation air supply device, on the basis of the reforming temperature or the temperature variation rate.

13. The hydrogen generation apparatus of any one of claims 1 to 12, further comprising:

   an anode air supply device (51) that supplies anode air to an anode of a fuel cell,
   wherein the controller (39) is configured to correct an air flow rate, which is supplied by the anode air supply device, on the basis of the reforming temperature or the temperature variation rate.

14. The hydrogen generation apparatus of claim 3, further comprising:

a storage unit (42) that stores the control parameter, and a parameter setting function for setting the control parameter on the basis of the temperature variation rate,

wherein the controller (39) is configured to correct the parameter setting function on the basis of an ambient temperature, to refer to the parameter setting function after correction on the basis of the temperature variation rate that is obtained by performing a heating operation of heating the reformer by using a predetermined control parameter for determination, and to allow driving to be performed by using a control parameter that is set by the parameter setting function after correction.

15. The hydrogen generation apparatus of claim 3, further comprising:

a storage unit (42) that stores the control parameter, and a parameter setting function for setting the control parameter on the basis of the temperature variation rate,

wherein the controller (39) is configured to correct the temperature variation rate on the basis of an ambient temperature after obtaining the temperature variation rate by performing a heating operation of heating the reformer by using a predetermined control parameter for determination, to refer to the parameter setting function on the basis of the temperature variation rate after correction, and to perform control of allowing driving to be performed by using a control parameter set by the parameter setting function.

16. The hydrogen generation apparatus of claim 14 or 15, further comprising:

an ambient temperature detector (22, 43) that is provided on an outer side of the hydrogen generation apparatus to detect the ambient temperature.

17. The hydrogen generation apparatus of any one of claims 14 to 16, wherein the controller (7, 39) is configured to estimate the ambient temperature from a temperature drop rate of the reformer from a first temperature to a second temperature that is lower than the first temperature.

18. The hydrogen generation apparatus of claim 1, further comprising:

a storage unit (42) that stores the first control parameter corresponding to a gas composition with a high amount of heat generation, and the second control parameter corresponding to a gas composition with a low amount of heat generation,

wherein the controller (39) is configured to sequentially perform a first heating operation of heating the reformer by using one control parameter of the first control parameter and the second control parameter, and a second heating operation of heating the reformer by using the other control parameter of the first control parameter and the second control parameter with an operation of stopping the heating of the reformer set between the first heating operation and the second heating operation, and

the controller (39) is configured to allow driving to be performed by selecting a control parameter with which a temperature rise rate close to a temperature rise rate, which is set in advance, of the reformer is obtained between a first temperature rise rate that is detected by the reforming temperature detector when heating the reformer by using the first control parameter, and a second temperature rise rate that is detected by the reforming temperature detector when heating the reformer by using the second control parameter.

19. The hydrogen generation apparatus of claim 18, wherein the controller (39) is configured to perform the first heating operation and the second heating operation in a case where the ambient temperature is in a predetermined temperature range.

20. The hydrogen generation apparatus of claim 18 or 19, wherein the controller (39) is configured to perform the first heating operation of heating the reformer to a first temperature, to stop the heating of the reformer, and to perform the second heating operation of heating the reformer to a second temperature.

21. A fuel cell system, comprising:

the hydrogen generation apparatus (200) of any one of claims 1 to 20; and
a fuel cell (1, 50) that performs power generation by using the hydrogen-containing gas that is generated by the reformer, and an oxygen-containing oxidant gas.

22. A method of driving a hydrogen generation apparatus including a reformer (2, 31) that generates a hydrogen-containing gas from a hydrocarbon-containing raw material gas through a reforming reaction, a raw material gas supply device (3, 34) that supplies the raw material gas to the reformer, a combustor (4, 35) that combusts at least one of the raw material gas and the hydrogen-containing gas which pass through the reformer, or any off-gas that includes an unused hydrogen-containing gas to heat the reformer, a raw material gas supply amount detector (5, 37) that detects the amount of the raw material gas supplied to the reformer, a reforming temperature detector (6, 38) that detects a temperature of the reformer, and a controller that performs control in accordance with a control parameter, **characterized in that** the method comprising:

a step of setting the control parameter by the controller on the basis of a reforming temperature, which is detected by the reforming temperature detector, in a case where the raw material gas supply device supplies the raw material gas so that the amount of the raw material gas supplied, which is detected by the raw material gas supply amount detector, becomes a predetermined value, or on the basis of a temperature variation rate, which is detected by the reforming temperature detector, when a temperature of the reformer rises due to heating by the combustor,

wherein the step of setting the control parameter includes a step of selecting an optimal control parameter by the controller among at least two kinds of the control parameters depending on compositions of at least two kinds of the raw material gases, which are different in the amount of heat, on the basis of the reforming temperature or the temperature variation rate, and

the step of selecting the optimal control parameter includes

a step of performing control by the controller on the basis of a first control parameter that is one kind of the control parameter, and

a step of performing control by the controller after changing to a second control parameter, which is a different kind of the control parameter, in a case where the reforming temperature deviates from a predetermined threshold value or in a case where the temperature variation rate deviates from a predetermined threshold value.

23. The method of claim 22, wherein the amount of heat of the raw material gas corresponding to the first control parameter is greater than the amount of heat of the raw material gas corresponding to the second control parameter.

**Patentansprüche**

1. Wasserstofferzeugungs-Vorrichtung, die umfasst:

einen Reformer (2, 31), der über eine Reformier-Reaktion aus einem kohlenwasserstoffhaltigen Rohstoff-Gas ein wasserstoffhaltiges Gas erzeugt;
eine Einrichtung (3, 34) für Zufuhr von Rohstoff-Gas, die dem Reformer das Rohstoff-Gas zuführt;
einen Brenner (4, 35), der das Rohstoff-Gas oder/und das wasserstoffhaltige Gas, die durch den Reformer strömen, oder etwaiges Abgas verbrennt, das das nicht zum Erwärmen des Reformers genutzte wasserstoffhaltige Gas enthält;
eine Einrichtung (9, 36) für Zufuhr von Verbrennungs-Luft, die dem Brenner Verbrennungs-Luft zuführt;
einen Detektor (5, 37) für die Menge des zugeführten Rohstoff-Gases, der die Menge des dem Reformer zugeführten Rohstoff-Gases erfasst;
einen Detektor (6, 38) für eine Reformier-Temperatur, der eine Temperatur des Reformers erfasst, sowie
eine Steuerungseinrichtung (7, 39), die Steuerung entsprechend einem Steuerungs-Parameter durchführt;
**dadurch gekennzeichnet, dass**
die Steuerungseinrichtung (7, 39) so ausgeführt ist, dass sie den Steuerungs-Parameter auf der Grundlage einer Reformier-Temperatur einstellt, die durch den Detektor für eine Reformier-Temperatur erfasst wird, wenn die Einrichtung für Zufuhr von Rohstoff-Gas das Rohstoff-Gas so zuführt, dass die Menge des zugeführten Rohstoff-Gases, die durch den Detektor für die Menge des zugeführten Rohstoff-Gases erfasst wird, einen vorgegebenen Wert annimmt, oder auf der Grundlage einer Temperatur-Änderungsrate einstellt, die durch den Detektor für eine Reformier-Temperatur erfasst wird, wenn die Temperatur des Reformers aufgrund von Erwärmen durch den Brenner ansteigt,
die Steuerungseinrichtung (7, 39) so ausgeführt ist, dass sie einen optimalen Steuerungs-Parameter aus wenigstens zwei Typen der Steuerungs-Parameter in Abhängigkeit von Zusammensetzungen von wenigstens zwei Typen der Rohstoff-Gase, die sich hinsichtlich der Wärmemenge unterscheiden, auf der Grundlage der Reformier-Temperatur oder der Temperatur-Änderungsrate auswählt,

die Steuerungseinrichtung (7, 39) so ausgeführt ist, dass sie Steuerung auf der Grundlage eines ersten Steuerungs-Parameters durchführt, der ein Typ des Steuerungs-Parameters ist, und
die Steuerungseinrichtung (7, 39) so ausgeführt ist, dass sie Steuerung nach Wechseln zu einem zweiten Steuerungs-Parameter durchführt, der ein anderer Typ des Steuerungs-Parameters ist, wenn die Reformier-Temperatur von einem vorgegebenen Schwellenwert abweicht oder wenn die Temperatur-Änderungsrate von einem vorgegebenen Schwellenwert abweicht.

2. Wasserstofferzeugungs-Vorrichtung nach Anspruch 1, die des Weiteren umfasst:

eine Speicherungs-Einheit (11), die den Steuerungs-Parameter speichert, der auf der Grundlage der Reformier-Temperatur oder der Temperatur-Änderungsrate eingestellt oder ausgewählt wird,
wobei die Steuerungseinrichtung (7) so ausgeführt ist, dass sie Steuerung durchführt, die Durchführen einer nachfolgenden Aktivierung und von Ansteuern auf der Grundlage des Steuerungs-Parameters zulässt, der in der Speicherungs-Einheit gespeichert ist.

3. Wasserstofferzeugungs-Vorrichtung nach Anspruch 1 oder 2, wobei die Steuerungseinrichtung (7) so ausgeführt ist, dass sie eine Korrelation zwischen der Reformier-Temperatur oder der Temperatur-Änderungsrate und dem Steuerungs-Parameter auf der Grundlage einer Umgebungstemperatur korrigiert.

4. Wasserstofferzeugungs-Vorrichtung nach einem der Ansprüche 1 bis 3, wobei die Steuerungseinrichtung (7) so ausgeführt ist, dass sie eine Korrelation zwischen der Reformier-Temperatur oder der Temperatur-Änderungsrate und dem Steuerungs-Parameter auf der Grundlage der Ansteuerzeit des Reformers korrigiert, wenn das Rohstoff-Gas so zugeführt wird, dass die Menge des zugeführten Rohstoff-Gases, die durch den Detektor für die Menge des zugeführten Rohstoff-Gases erfasst wird, einen vorgegebenen Wert annimmt.

5. Wasserstofferzeugungs-Vorrichtung nach einem der Ansprüche 1 bis 4, wobei die Steuerungseinrichtung (7) so ausgeführt ist, dass sie eine Korrelation zwischen einer aus der Wärmemenge umgewandelten tatsächlichen Menge des Rohstoff-Gases, die durch Einrichtung für Zufuhr von Rohstoff-Gas zugeführt wird, und einem Erfassungs-Wert der Menge des zugeführten Rohstoff-Gases, der durch den Detektor für die Menge des zugeführten Rohstoff-Gases erfasst wird, auf der Grundlage der Reformier-Temperatur oder der Temperatur-Änderungsrate korrigiert.

6. Wasserstofferzeugungs-Vorrichtung nach Anspruch 5, wobei die Steuerungseinrichtung (7) so ausgeführt ist, dass sie den Erfassungs-Wert der Menge des zugeführten Rohstoff-Gases oder eine Soll-Menge des zugeführten Rohstoff-Gases bei Steuerung auf der Grundlage der Reformier-Temperatur oder der Temperatur-Änderungsrate korrigiert, damit die Menge des zugeführten Rohstoff-Gases die Soll-Menge wird.

7. Wasserstofferzeugungs-Vorrichtung nach Anspruch 6, wobei die Steuerungseinrichtung (7) so ausgeführt ist, dass sie einen Korrektur-Koeffizienten auf der Grundlage der Reformier-Temperatur oder der Temperatur-Änderungsrate berechnet und einen Wert, der durch Multiplizieren des Korrektur-Koeffizienten mit dem Erfassungs-Wert der Menge des Rohstoff-Gases ermittelt wird, als eine korrigierte Menge des zugeführten Rohstoff-Gases festlegt, oder einen Wert, der durch Multiplizieren des Korrektur-Koeffizienten mit der Soll-Menge des vor der Korrektur zugeführten Rohstoff-Gases ermittelt wird, als eine korrigierte Soll-Menge des zugeführten Rohstoff-Gases festlegt.

8. Wasserstofferzeugungs-Vorrichtung nach einem der Ansprüche 5 bis 7, die des Weiteren umfasst:

eine Einrichtung (8) für Zufuhr von Wasser, die dem Reformer Wasser zuführt;
wobei die Steuerungseinrichtung (7) so ausgeführt ist, dass sie die Einrichtung (8) für Zufuhr von Wasser so steuert, dass die Menge an Wasser, die dem Reformer zugeführt wird, im Vergleich zu der vor Korrektur zugeführten Menge an Wasser weiter verringert wird, wenn Korrektur vorgenommen wird, damit der Erfassungs-Wert der Menge des zugeführten Rohstoff-Gases im Vergleich zu einem Erfassungs-Wert vor Korrektur weiter vergrößert wird, und dass die zugeführte Menge an Wasser im Vergleich zu der vor Korrektur zugeführten Menge an Wasser dann weiter vergrößert wird, wenn Korrektur vorgenommen wird, damit der Erfassungs-Wert der Menge des zugeführten Rohstoff-Gases im Vergleich zu dem Erfassungs-Wert vor Korrektur weiter verringert wird.

9. Wasserstofferzeugungs-Vorrichtung nach einem der Ansprüche 5 bis 8, wobei die Steuerungseinrichtung (7) so ausgeführt ist, dass sie die Einrichtung (9) für Zufuhr von Verbrennungs-Luft so steuert, dass die Menge der Verbrennungs-Luft, die dem Brenner zugeführt wird, im Vergleich zu der vor Korrektur zugeführten Menge der Verbrennungs-Luft weiter verringert wird, wenn Korrektur vorgenommen wird, damit der Erfassungs-Wert des zugeführten Rohstoff-Gases im Vergleich zu einem Erfassungs-Wert vor Korrektur weiter vergrößert wird, und das die Menge der zugeführten Verbrennungs-Luft im Vergleich zu der vor Korrektur zugeführten Menge der Verbrennungs-Luft dann weiter vergrößert wird, wenn Korrektur vorgenommen wird, damit der Erfassungs-Wert der Menge des zugeführten Rohstoff-Gases im Vergleich zu dem Erfassungs-Wert vor Korrektur weiter verringert wird.

10. Wasserstofferzeugungs-Vorrichtung nach einem der Ansprüche 5 bis 9, wobei die Steuerungseinrichtung (7) so ausgeführt ist, dass sie Messung des Betrages von TemperaturÄnderung nach Einleiten von Wasserzufuhr zu dem Reformer durchführt, wenn durch den Detektor für eine Reformier-Temperatur erfasste Temperatur eine vorgegebene Temperatur erreicht, nachdem das Rohstoff-Gas dem Reformer zugeführt wurde.

11. Wasserstofferzeugungs-Vorrichtung nach einem der Ansprüche 5 bis 10, die des Weiteren umfasst:

eine Speicherungs-Einheit (21), die einen Korrektur-Wert der Menge des zugeführten Rohstoff-Gases speichert, der auf der Reformier-Temperatur oder der Temperatur-Änderungsrate basiert.
wobei die Steuerungseinrichtung (7) so ausgeführt ist, dass sie Steuerung durchführt, die Durchführen einer nachfolgenden Aktivierung und von Ansteuern auf der Grundlage des Korrektur-Wertes zulässt, der in der Speicherungs-Einheit gespeichert ist.

12. Wasserstofferzeugungs-Vorrichtung nach einem der Ansprüche 1 bis 11, die des Weiteren umfasst:

eine Einrichtung (32) für selektive Oxidation, die eine Konzentration von Kohlenmonoxid in dem wasserstoffhaltigen Gas verringert, das aus dem Reformer (31) abgeleitet wird; sowie
eine Einrichtung (33) für Zufuhr von Luft für selektive Oxidation, die der Einrichtung für selektive Oxidation Luft für selektive Oxidation zuführt,
wobei die Steuerungseinrichtung (39) so ausgeführt ist, dass sie eine Luft-Strömungsmenge, die durch die Einrichtung für Zufuhr von Luft für selektive Oxidation zugeführt wird, auf der Grundlage der Reformier-Temperatur oder der Temperatur-Änderungsrate korrigiert.

13. Wasserstofferzeugungs-Vorrichtung nach einem der Ansprüche 1 bis 12, die des Weiteren umfasst:

eine Einrichtung (51) für Zufuhr von Anoden-Luft, die einer Anode einer Brennstoffzelle Anoden-Luft zuführt,
wobei die Steuerungseinrichtung (39) so ausgeführt ist, dass sie eine Luft-Strömungsmenge, die durch die Einrichtung für Zufuhr von Anoden-Luft zugeführt wird, auf der Grundlage der Reformier-Temperatur oder der Temperatur-Änderungsrate korrigiert.

14. Wasserstofferzeugungs-Vorrichtung nach Anspruch 3, die des Weiteren umfasst:

eine Speicherungs-Einheit (42), die den Steuerungs-Parameter speichert, und eine Parameter-Einstellfunktion zum Einstellen des Steuerungs-Parameters auf der Grundlage der Temperatur-Änderungsrate,
wobei die Steuerungseinrichtung (39) so ausgeführt ist, dass sie die Parameter-Einstellfunktion auf der Grundlage einer Umgebungstemperatur korrigiert, sie auf die Parameter-Einstellfunktion nach Korrektur auf der Grundlage der Temperatur-Änderungsrate Bezug nimmt, die durch Ausführen eines Erwärmungsvorgangs zum Erwärmen des Reformers unter Verwendung eines vorgegebenen Steuerungs-Parameters für Bestimmung ermittelt wird, und sie zulässt, dass Ansteuern unter Verwendung eines Steuerungs-Parameters durchgeführt wird, der durch die Parameter-Einstellfunktion nach Korrektur eingestellt wird.

15. Wasserstofferzeugungs-Vorrichtung nach Anspruch 3, die des Weiteren umfasst:

eine Speicherungs-Einheit (42), die den Steuerungs-Parameter speichert, und eine Parameter-Einstellfunktion zum Einstellen des Steuerungs-Parameters auf der Grundlage der Temperatur-Änderungsrate,
wobei die Steuerungseinrichtung (39) so ausgeführt ist, dass sie die Temperatur-Änderungsrate auf der Grundlage einer Umgebungstemperatur nach Ermitteln der Temperatur-Änderungsrate mittels Durchführen eines Erwärmungsvorgangs zum Erwärmen des Reformers unter Verwendung eines vorgegebenen Steuerungs-Parameters für Bestimmung korrigiert, sie auf die Parameter-Einstellfunktion auf der Grundlage der Temperatur-Änderungsrate nach Korrektur Bezug nimmt und sie Steuerung durchführt, durch die zugelassen wird, das Ansteuern unter Verwendung eines durch die Parameter-Einstellfunktion eingestellten Steuerungs-Parameters durchgeführt wird.

**16.** Wasserstofferzeugungs-Vorrichtung nach Anspruch 14 oder 15, die des Weiteren umfasst:

einen Umgebungstemperatur-Detektor (22, 43), der an einer Außenseite der Wasserstofferzeugungs-Vorrichtung vorhanden ist, um die Umgebungstemperatur zu erfassen.

**17.** Wasserstofferzeugungs-Vorrichtung nach einem der Ansprüche 14 bis 16, wobei die Steuerungseinrichtung (7, 39) so ausgeführt ist, dass sie die Umgebungstemperatur anhand einer Temperatur-Abfallrate des Reformers von einer ersten Temperatur auf eine zweite Temperatur schätzt, die niedriger ist als die erste Temperatur.

**18.** Wasserstofferzeugungs-Vorrichtung nach Anspruch 1, die des Weiteren umfasst:

eine Speicherungs-Einheit (42), die den ersten Steuerungs-Parameter, der einer Gaszusammensetzung mit einem hohen Maß an Wärmeerzeugung entspricht, und den zweiten Steuerungs-Parameter speichert, der einer Gaszusammensetzung mit einem niedrigen Maß an Wärmeerzeugung entspricht,
wobei die Steuerungseinrichtung (39) so ausgeführt ist, dass sie nacheinander einen ersten Erwärmungsvorgang zum Erwärmen des Reformers unter Verwendung eines Steuerungsparameters von dem ersten Steuerungs-Parameter und dem zweiten Steuerungs-Parameter sowie einen zweiten Erwärmungsvorgang zum Erwärmen des Reformers unter Verwendung des anderen Steuerungs-Parameters von dem ersten Steuerungs-Parameter und dem zweiten Steuerungs-Parameter durchführt, und dabei ein Vorgang zum Unterbrechen der Erwärmung des Reformers zwischen dem ersten Erwärmungsvorgang und dem zweiten Erwärmungsvorgang liegt, und
die Steuerungseinrichtung (39) so ausgeführt ist, dass sie zulässt, dass Ansteuern durchgeführt wird, indem ein Steuerungs-Parameter ausgewählt wird, mit dem eine Temperatur-Anstiegsrate nahe an einer im Voraus festgelegten Temperatur-Anstiegsrate des Reformers zwischen einer ersten Temperatur-Anstiegsrate, die durch den Detektor für eine Reformier-Temperatur bei Erwärmen des Reformers unter Verwendung des ersten Steuerungs-Parameters erfasst wird, und einer zweiten Temperatur-Anstiegsrate erreicht wird, die durch den Detektor für eine Reformier-Temperatur bei Erwärmen des Reformers unter Verwendung des zweiten Steuerungs-Parameters erfasst wird.

**19.** Wasserstofferzeugungs-Vorrichtung nach Anspruch 18, wobei die Steuerungseinrichtung (39) so ausgeführt ist, dass sie den ersten Erwärmungsvorgang und den zweiten Erwärmungsvorgang dann durchführt, wenn die Umgebungstemperatur in einem vorgegebenen Temperaturbereich liegt.

**20.** Wasserstofferzeugungs-Vorrichtung nach Anspruch 18 oder 19, wobei die Steuerungseinrichtung (39) so ausgeführt ist, dass sie den ersten Erwärmungsvorgang zum Erwärmen des Reformers auf eine erste Temperatur durchführt, das Erwärmen des Reformers unterbricht, und den zweiten Erwärmungsvorgang zum Erwärmen des Reformers auf eine zweite Temperatur durchführt.

**21.** Brennstoffzellen-System, das umfasst:

die Wasserstofferzeugungs-Vorrichtung (200) nach einem der Ansprüche 1 bis 20; sowie
eine Brennstoffzelle (1, 50), die Energieerzeugung unter Verwendung des wasserstoffhaltigen Gases, das von der Wasserstofferzeugungs-Vorrichtung erzeugt wird, und eines sauerstoffhaltigen Oxidant-Gases durchführt.

**22.** Verfahren zum Betreiben einer Wasserstofferzeugungs-Vorrichtung, die einen Reformer (2, 2), der über eine Reformier-Reaktion aus einem kohlenwasserstoffhaltigen Rohstoff-Gas ein wasserstoffhaltiges Gas erzeugt, eine Einrichtung (3, 34) für Zufuhr von Rohstoff-Gas, die dem Reformer das Rohstoff-Gas zuführt, einen Brenner (4, 35), der das Rohstoff-Gas oder/und das wasserstoffhaltige Gas, die durch den Reformer strömen, oder etwaiges Abgas verbrennt, das das wasserstoffhaltige Gas enthält, das nicht zum Erwärmen des Reformers genutzt wird, einen Detektor (5, 37) für die Menge des zugeführten Rohstoff-Gases, der die Menge des dem Reformer zugeführten Rohstoff-Gases erfasst, einen Detektor (6, 38) für eine Reformier-Temperatur, der eine Temperatur des Reformers erfasst, sowie eine Steuerungseinrichtung enthält, die Steuerung entsprechend einem Steuerungs-Parameter durchführt, **dadurch gekennzeichnet, dass** das Verfahren umfasst:

einen Schritt zum Einstellen des Steuerungs-Parameters durch die Steuerungseinrichtung auf der Grundlage einer Reformier-Temperatur, die durch den Detektor für eine Reformier-Temperatur erfasst wird, wenn die Einrichtung für Zufuhr von Rohstoff-Gas das Rohstoff-Gas so zuführt, dass die Menge des zugeführten Rohstoff-Gases, die durch den Detektor für die Menge des zugeführten Rohstoff-Gases erfasst wird, einen vorgegebenen Wert annimmt, oder auf der Grundlage einer Temperatur-Änderungsrate, die durch den Detektor für eine Reformier-Temperatur erfasst wird, wenn die Temperatur des Reformers aufgrund von Erwärmen durch den Brenner ansteigt,

wobei der Schritt zum Einstellen des Steuerungs-Parameters einen Schritt zum Auswählen eines optimalen Steuerungs-Parameters durch die Steuerungseinrichtung aus wenigstens zwei Typen der Steuerungs-Parameter in Abhängigkeit von Zusammensetzungen von wenigstens zwei Typen der Rohstoff-Gase, die sich hinsichtlich der Wärmemenge unterscheiden, auf der Grundlage der Reformier-Temperatur oder der Temperatur-Änderungsrate einschließt, und

der Schritt zum Auswählen des optimalen Steuerungsparameters

einen Schritt zum Durchführen von Steuerung durch die Steuerungseinrichtung auf der Grundlage eines ersten Steuerungs-Parameters, der ein Typ des Steuerungs-Parameters ist, sowie

einen Schritt zum Durchführen von Steuerung durch die Steuerungseinrichtung nach Wechseln zu einem zweiten Steuerungs-Parameter, der ein anderer Typ des Steuerungs-Parameters ist, einschließt, wenn die Reformier-Temperatur von einem vorgegebenen Schwellenwert abweicht oder wenn die Temperatur-Änderungsrate von einem vorgegebenen Schwellenwert abweicht.

23. Verfahren nach Anspruch 22, wobei die Wärmemenge des Rohstoff-Gases, das dem ersten Steuerungs-Parameter entspricht, größer ist als die Wärmemenge des Rohstoff-Gases, das dem zweiten Steuerungs-Parameter entspricht.

**Revendications**

1. Appareil de génération d'hydrogène, comprenant :

un reformeur (2, 31) qui génère un gaz contenant de l'hydrogène à partir d'un gaz matière première contenant des hydrocarbures par une réaction de reformage ;

un dispositif d'alimentation en gaz matière première (3, 34) qui fournit le gaz matière première au reformeur ;

un module de combustion (4, 35) qui brûle au moins l'un du gaz matière première et du gaz contenant de l'hydrogène qui traversent le reformeur, ou tout effluent gazeux qui comprend le gaz contenant de l'hydrogène, qui n'est pas utilisé, pour chauffer le reformeur ;

un dispositif d'alimentation en air de combustion (9, 36) qui fournit de l'air de combustion au module de combustion ;

un détecteur de quantité d'alimentation en gaz matière première (5, 37) qui détecte la quantité de gaz matière première fournie au reformeur ;

un détecteur de température de reformage (6, 38) qui détecte une température du reformeur ; et

un module de commande (7, 39) qui effectue une commande en fonction d'un paramètre de commande ;

**caractérisé en ce que**

le module de commande (7, 39) est configuré pour régler le paramètre de commande sur la base d'une température de reformage, qui est détectée par le détecteur de température de reformage, dans un cas où le dispositif d'alimentation en gaz matière première fournit le gaz matière première de sorte que la quantité de gaz matière première fournie, qui est détectée par le détecteur de quantité d'alimentation en gaz matière première, devient égale à une valeur prédéterminée, ou sur la base d'un taux de variation de température, qui est détecté par le détecteur de température de reformage, lorsque la température du reformeur augmente en raison du chauffage par le module de combustion,

le module de commande (7, 39) est configuré pour sélectionner un paramètre de commande optimal parmi au moins deux types de paramètres de commande en fonction des compositions d'au moins deux types de gaz matière première, qui sont différentes en termes de quantité de chaleur, sur la base de la température de reformage ou du taux de variation de température,

le module de commande (7, 39) est configuré pour effectuer une commande sur la base d'un premier paramètre de commande qui correspond à un type du paramètre de commande, et

le module de commande (7, 39) est configuré pour effectuer une commande après le passage à un second paramètre de commande, qui correspond à un type différent du paramètre de commande, dans un cas où la température de reformage s'écarte d'une valeur de seuil prédéterminée ou dans un cas où le taux de variation de température s'écarte d'une valeur de seuil prédéterminée.

2. Appareil de génération d'hydrogène selon la revendication 1, comprenant en outre :

un module de stockage (11) qui stocke le paramètre de commande qui est réglé ou sélectionné sur la base de la température de reformage ou du taux de variation de température,

le module de commande (7) étant configuré pour effectuer une commande consistant à permettre d'effectuer une activation et un actionnement ultérieurs sur la base du paramètre de commande qui est stocké dans le module de stockage.

3. Appareil de génération d'hydrogène selon la revendication 1 ou 2, dans lequel le module de commande (7) est configuré pour corriger une corrélation entre la température de reformage ou le taux de variation de température et le paramètre de commande sur la base d'une température ambiante.

4. Appareil de génération d'hydrogène selon l'une quelconque des revendications 1 à 3, dans lequel le module de commande (7) est configuré pour corriger une corrélation entre la température de reformage ou le taux de variation de température et le paramètre de commande lorsque le gaz matière première est fourni de sorte que la quantité de gaz matière première fournie, qui est détectée par le détecteur de quantité de fourniture de gaz matière première, devienne égale à une valeur prédéterminée sur la base du temps d'actionnement du reformeur.

5. Appareil de génération d'hydrogène selon l'une quelconque des revendications 1 à 4, dans lequel le module de commande (7) est configuré pour corriger une corrélation entre une quantité réelle, qui est convertie à partir de la quantité de chaleur, du gaz matière première qui est fourni par le dispositif d'alimentation en gaz matière première, et une valeur de détection, qui est détectée par le détecteur de quantité d'alimentation en gaz matière première, de la quantité de gaz de matière première fournie, sur la base de la température de reformage ou du taux de variation de température.

6. Appareil de génération d'hydrogène selon la revendication 5, dans lequel le module de commande (7) est configuré pour corriger la valeur de détection de la quantité de gaz matière première fournie, ou une quantité cible de gaz matière première fournie pendant la commande afin que la quantité de gaz matière première fournie soit égale à la quantité cible, sur la base de la température de reformage ou du taux de variation de température.

7. Appareil de génération d'hydrogène selon la revendication 6, dans lequel le module de commande (7) est configuré pour calculer un coefficient de correction sur la base de la température de reformage ou du taux de variation de température, et pour régler une valeur, qui est obtenue en multipliant le coefficient de correction par la valeur de détection de la quantité de gaz matière première fournie, en tant que quantité corrigée de gaz matière première fournie, ou pour régler une valeur, qui est obtenue en multipliant le coefficient de correction par la quantité cible de gaz matière première fournie avant la correction, en tant que quantité cible corrigée de gaz matière première fournie.

8. Appareil de génération d'hydrogène selon l'une quelconque des revendications 5 à 7, comprenant en outre :

un dispositif d'alimentation en eau (8) qui fournit de l'eau au reformeur,

le module de commande (7) étant configuré pour commander le dispositif d'alimentation en eau (8) de manière à réduire davantage la quantité d'eau qui est fournie au reformeur par rapport à la quantité d'eau fournie avant la correction dans un cas où une correction est effectuée afin que la valeur de détection de la quantité de gaz matière première fournie augmente davantage par rapport à une valeur de détection avant la correction, et de manière à augmenter davantage la quantité d'eau fournie par rapport à la quantité d'eau fournie avant la correction dans un cas où la correction est effectuée afin que la valeur de détection de la quantité de gaz matière première fournie diminue davantage par rapport à la valeur de détection avant la correction.

9. Appareil de génération d'hydrogène selon l'une quelconque des revendications 5 à 8, dans lequel le module de commande (7) est configuré pour commander le dispositif d'alimentation en air de combustion (9) de manière à réduire davantage la quantité d'air de combustion qui est fournie au module de combustion par rapport à la quantité d'air de combustion fournie avant correction dans un cas où la correction est effectuée afin que la valeur de détection de la quantité de gaz matière première fournie augmente davantage par rapport à une valeur de détection avant correction, et de manière à augmenter davantage la quantité d'air de combustion fournie par rapport à la quantité d'air de combustion fournie avant la correction dans un cas où la correction est effectuée afin que la valeur de détection de la quantité de gaz matière première fournie diminue davantage par rapport à la valeur de détection avant la correction.

10. Appareil de génération d'hydrogène selon l'une quelconque des revendications 5 à 9, dans lequel le module de commande (7) est configuré pour effectuer une mesure de la quantité de variation de température après avoir initié l'alimentation en eau du reformeur lorsqu'une température détectée par le détecteur de température de reformage atteint une température prédéterminée après que le gaz matière première est fourni au reformeur.

11. Appareil de génération d'hydrogène selon l'une quelconque des revendications 5 à 10, comprenant en outre :

un module de stockage (21) qui stocke une valeur de correction, qui est basée sur la température de reformage ou le taux de variation de température, de la quantité de gaz matière première fournie, le module de commande (7) étant configuré pour effectuer une commande consistant à permettre d'effectuer une activation et un actionnement ultérieurs sur la base de la valeur de correction qui est stockée dans le module de stockage.

12. Appareil de génération d'hydrogène selon l'une quelconque des revendications 1 à 11, comprenant en outre :

un oxydateur sélectif (32) qui réduit une concentration de monoxyde de carbone dans le gaz contenant de l'hydrogène qui est évacué du reformeur (31) ; et
un dispositif d'alimentation en air d'oxydation sélective (33) qui fournit de l'air d'oxydation sélective à l'oxydateur sélectif,
le module de commande (39) étant configuré pour corriger un débit d'air, qui est fourni par le dispositif d'alimentation en air d'oxydation sélective, sur la base de la température de reformage ou du taux de variation de température.

13. Appareil de génération d'hydrogène selon l'une quelconque des revendications 1 à 12, comprenant en outre :

un dispositif d'alimentation en air anodique (51) qui fournit de l'air anodique à une anode d'une pile à combustible, le module de commande (39) étant configuré pour corriger un débit d'air, qui est fourni par le dispositif d'alimentation en air anodique, sur la base de la température de reformage ou du taux de variation de température.

14. Appareil de génération d'hydrogène selon la revendication 3, comprenant en outre :

un module de stockage (42) qui stocke le paramètre de commande, et une fonction de réglage de paramètre chargée de régler le paramètre de commande sur la base du taux de variation de température, le module de commande (39) étant configuré pour corriger la fonction de réglage de paramètre sur la base d'une température ambiante, pour se référer à la fonction de réglage de paramètre après correction sur la base du taux de variation de température qui est obtenu en effectuant une opération de chauffage du reformeur en utilisant un paramètre de commande prédéterminé pour la détermination, et pour permettre d'effectuer l'actionnement en utilisant un paramètre de commande qui est réglé par la fonction de réglage de paramètre après correction.

15. Appareil de génération d'hydrogène selon la revendication 3, comprenant en outre :

un module de stockage (42) qui stocke le paramètre de commande, et une fonction de réglage de paramètre chargée de régler le paramètre de commande sur la base du taux de variation de température, le module de commande (39) étant configuré pour corriger le taux de variation de température sur la base d'une température ambiante après avoir obtenu le taux de variation de température en effectuant une opération de chauffage consistant à chauffer le reformeur en utilisant un paramètre de commande prédéterminé pour la détermination, pour se référer à la fonction de réglage de paramètre sur la base du taux de variation de température après correction, et pour effectuer une commande permettant d'effectuer l'actionnement en utilisant un paramètre de commande réglé par la fonction de réglage de paramètre.

16. Appareil de génération d'hydrogène selon la revendication 14 ou 15, comprenant en outre :
un détecteur de température ambiante (22, 43) qui est situé sur un côté extérieur de l'appareil de génération d'hydrogène pour détecter la température ambiante.

17. Appareil de génération d'hydrogène selon l'une quelconque des revendications 14 à 16, dans lequel le module de commande (7, 39) est configuré pour estimer la température ambiante à partir d'un taux de chute de température du reformeur d'une première température à une seconde température qui est inférieure à la première température.

18. Appareil de génération d'hydrogène selon la revendication 1, comprenant en outre :

un module de stockage (42) qui stocke le premier paramètre de commande correspondant à une composition de gaz présentant une quantité élevée de génération de chaleur, et le second paramètre de commande correspondant à une composition de gaz présentant une faible quantité de génération de chaleur,

le module de commande (39) étant configuré pour exécuter séquentiellement une première opération de chauffage consistant à chauffer le reformeur en utilisant un paramètre de commande parmi le premier paramètre de commande et le second paramètre de commande, et une seconde opération de chauffage consistant à chauffer le reformeur en utilisant l'autre paramètre de commande parmi le premier paramètre de commande et le second paramètre de commande, une opération d'arrêt du chauffage du reformeur étant définie entre la première opération de chauffage et la seconde opération de chauffage, et

le module de commande (39) étant configuré pour permettre d'effectuer l'actionnement en sélectionnant un paramètre de commande grâce auquel un taux d'augmentation de température proche d'un taux d'augmentation de température, qui est fixé à l'avance, du reformeur est obtenu entre un premier taux d'augmentation de température qui est détecté par le détecteur de température de reformage lors du chauffage du reformeur en utilisant le premier paramètre de commande, et un second taux d'augmentation de température qui est détecté par le détecteur de température de reformage lors du chauffage du reformeur en utilisant le second paramètre de commande.

19. Appareil de génération d'hydrogène selon la revendication 18, dans lequel le module de commande (39) est configuré pour effectuer la première opération de chauffage et la seconde opération de chauffage dans un cas où la température ambiante est dans une plage de température prédéterminée.

20. Appareil de génération d'hydrogène selon la revendication 18 ou 19, dans lequel le module de commande (39) est configuré pour effectuer la première opération de chauffage consistant à chauffer le reformeur à une première température, pour arrêter le chauffage du reformeur et pour effectuer la seconde opération de chauffage consistant à chauffer le reformeur à une seconde température.

21. Système de pile à combustible, comprenant :

l'appareil de génération d'hydrogène (200) selon l'une quelconque des revendications 1 à 20 ; et
une pile à combustible (1, 50) qui produit de l'énergie en utilisant le gaz contenant de l'hydrogène qui est généré par le reformeur, et un gaz oxydant contenant de l'oxygène.

22. Procédé d'actionnement d'un appareil de génération d'hydrogène comprenant un reformeur (2, 31) qui génère un gaz contenant de l'hydrogène à partir d'un gaz matière première contenant des hydrocarbures par une réaction de reformage, un dispositif d'alimentation en gaz matière première (3, 34) qui fournit le gaz matière première au reformeur, un module de combustion (4, 35) qui brûle au moins l'un du gaz matière première et du gaz contenant de l'hydrogène qui traversent le reformeur, ou tout effluent gazeux qui comprend un gaz contenant de l'hydrogène non utilisé pour chauffer le reformeur, un détecteur de quantité d'alimentation en gaz matière première (5, 37) qui détecte la quantité de gaz matière première fournie au reformeur, un détecteur de température de reformage (6, 38) qui détecte une température du reformeur et un module de commande qui effectue une commande en fonction d'un paramètre de commande, **caractérisé en ce que** le procédé comprend :

une étape de réglage du paramètre de commande par le module de commande sur la base d'une température de reformage, qui est détectée par le détecteur de température de reformage, dans un cas où le dispositif d'alimentation en gaz matière première fournit le gaz matière première de sorte que la quantité de gaz matière première fournie, qui est détectée par le détecteur de quantité d'alimentation en gaz matière première, devient égale à une valeur prédéterminée, ou sur la base d'un taux de variation de température, qui est détecté par le détecteur de température de reformage, lorsqu'une température du reformeur augmente en raison du chauffage par le module de combustion,

l'étape de réglage du paramètre de commande comprenant une étape consistant à sélectionner un paramètre de commande optimal par le module de commande parmi au moins deux types des paramètres de commande en fonction de compositions d'au moins deux types de gaz matières premières, qui sont différentes en termes de quantité de chaleur, sur la base de la température de reformage ou du taux de variation de la température, et l'étape consistant à sélectionner le paramètre de commande optimal comprenant

une étape consistant à effectuer une commande par le module de commande sur la base d'un premier paramètre de commande qui correspond à un type de paramètre de commande, et

une étape consistant à effectuer une commande par le module de commande après le passage à un second paramètre de commande, qui est un type différent de paramètre de commande, dans un cas où la température de reformage s'écarte d'une valeur de seuil prédéterminée ou dans un cas où le taux de variation de température s'écarte d'une valeur de seuil prédéterminée.

23. Procédé selon la revendication 22, dans lequel la quantité de chaleur du gaz matière première correspondant au premier paramètre de commande est supérieure à la quantité de chaleur du gaz matière première correspondant au second paramètre de commande.

## FIG. 1

EXHAUST GAS

100

200

RAW MATERIAL
GAS

3

5

2

6

WATER

8

1

4

7

9

RAW MATERIAL GAS/OFF-GAS

COMBUSTION AIR

FIG. 2

## FIG. 3

# FIG. 4

AMOUNT OF RAW
MATERIAL
SUPPLIED

REFORMING TEMPERATURE OR AMOUNT OF HEAT

# FIG. 5

AMOUNT OF WATER SUPPLIED

REFORMING TEMPERATURE OR AMOUNT OF HEAT

FIG. 6

AMOUNT OF POWER GENERATION

REFORMING TEMPERATURE OR AMOUNT OF HEAT

## FIG. 7

| GAS NAME | CONVERSION FACTOR (C.F.) |
|---|---|
| NITROGEN ($N_2$) | 1.00 |
| HYDROGEN ($H_2$) | 1.00 |
| METHANE ($CH_4$) | 0.74 |
| PROPANE ($C_3H_8$) | 0.34 |
| CARBON DIOXIDE ($CO_2$) | 0.74 |
| 13A (CITY GAS) | 0.71 |

## FIG. 8

## FIG. 9

EXHAUST GAS

100

200

3    5

RAW MATERIAL
GAS

WATER

8

4

7

9

12

2

6

1

RAW MATERIAL GAS/OFF-GAS

COMBUSTION AIR

## FIG. 10

| SUPPLY GAS / CONTROL PARAMETER GROUP | CITY GAS 13A | · · · | 100% METHANE | · · · | 20% NITROGEN AND 80% METHANE | · · · |
|---|---|---|---|---|---|---|
| FIRST CONTROL PARAMETER GROUP | 620 | · · · | 600 | · · · | 580 | · · · |
| · · · | · · · | · · · | · · · | · · · | · · · | · · · |
| SECOND CONTROL PARAMETER GROUP | 635 | · · · | 615 | · · · | 575 | · · · |
| · · · | · · · | · · · | · · · | · · · | · · · | · · · |
| THIRD CONTROL PARAMETER GROUP | 650 | · · · | 630 | · · · | 600 | · · · |
| · · · | · · · | · · · | · · · | · · · | · · · | · · · |

## FIG. 11

| CONTROL PARAMETER GROUP | | FIRST CONTROL PARAMETER GROUP | SECOND CONTROL PARAMETER GROUP | THIRD CONTROL PARAMETER GROUP | · · · |
|---|---|---|---|---|---|
| CORRESPONDING GAS COMPOSITION | | CITY GAS 13A | 100% METHANE | 20% NITROGEN AND 80% METHANE | · · · |
| AMOUNT OF RAW MATERIAL GAS SUPPLIED | NL/min | 3.0 | 3.2 | 3.4 | · · · |
| AMOUNT OF WATER SUPPLIED | cc/min | 8.2 | 7.5 | 6.3 | · · · |
| AMOUNT OF COMBUSTION AIR SUPPLIED | L/min | 16.0 | 15.0 | 14.0 | · · · |
| AMOUNT OF POWER GENERATION | W | 750 | 750 | 700 | · · · |
| · · · | · · · | · · · | · · · | · · · | · · · |

# FIG. 12

COPING WITH RANGE OF FIRST CONTROL
PARAMETER GROUP

COPING WITH RANGE OF SECOND CONTROL
PARAMETER GROUP

COMPOSITION
A

COMPOSITION
B

AMOUNT
OF HEAT

COMPOSITION
C

COPING WITH RANGE OF THIRD CONTROL
PARAMETER GROUP

RELATIVE DENSITY

## FIG. 13

FIG. 14

# FIG. 15

| SUPPLY GAS | CORRECTION GAS | ACTUAL SUPPLY GAS | |
|---|---|---|---|
| COMPOSITION | 100% METHANE | 85% METHANE AND 15% NITROGEN | |
| | — | BEFORE CORRECTION | CORRECTION EXAMPLE |
| CONVERSION FACTOR | 0.74 | 0.78 | 0.78 |
| AMOUNT OF HEAT SUPPLIED (kJ/mol) | 802 | 682 | 682 |
| TEMPERATURE RISE RATE DURING ACTIVATION (MINUTES) | 30 | 35 | 29 |
| CORRECTION VALUE | — | 0.86 (30÷35) | |
| INSTRUCTED AMOUNT OF RAW MATERIAL SUPPLIED (NL/min) | 3.00 | 3.00 | 3.49 |
| ACTUAL AMOUNT OF RAW MATERIAL SUPPLIED (NL/min) | 3.00 | 3.15 | 3.66 |
| AMOUNT OF CARBON | 1.00 | 0.85 | 0.85 |
| ACTUAL AMOUNT OF HEAT SUPPLIED (W) | 1790 | 1598 | 1857 |

# FIG. 16

# FIG. 17

## FIG. 18

| GAS NAME | CONVERSION FACTOR (C.F.) |
|---|---|
| NITROGEN ($N_2$) | 1.00 |
| HYDROGEN ($H_2$) | 1.00 |
| METHANE ($CH_4$) | 0.74 |
| PROPANE ($C_3H_8$) | 0.34 |
| CARBON DIOXIDE ($CO_2$) | 0.74 |
| 13A (CITY GAS) | 0.71 |

## FIG. 19

## FIG. 20

EXHAUST GAS

200

3  5

RAW MATERIAL
GAS

2

WATER

6

8

210

4

7

9

RAW MATERIAL GAS/OFF-GAS

21

COMBUSTION AIR

*FIG. 21*

# FIG. 22

FIG. 23

# FIG. 24

RAW MATERIAL GAS/
HYDROGEN-RICH GAS

200

33

SELECTIVE
OXIDATION AIR

32

210

34    37

31

RAW MATERIAL
GAS

EXHAUST
GAS

38

40

35

WATER

39

36

COMBUSTION AIR

RAW MATERIAL GAS/
OFF-GAS

## FIG. 25

RAW MATERIAL GAS/
HYDROGEN-RICH GAS

41

200

33

32

SELECTIVE
OXIDATION AIR

210

34      37

31

EXHAUST
GAS

RAW MATERIAL
GAS

38

35

RAW MATERIAL GAS/
OFF-GAS

39

36

COMBUSTION AIR

## FIG. 26

FIG. 27

FIG. 28

## FIG. 29

RAW MATERIAL GAS/
HYDROGEN-RICH GAS

51

AIR

CATHODE AIR

200

34    37

31

RAW MATERIAL
GAS

40

38

EXHAUST
GAS

50

35

39

36

COMBUSTION AIR

RAW MATERIAL GAS/
OFF-GAS

# FIG. 30

## FIG. 31

51

AIR

CATHODE AIR

RAW MATERIAL GAS/
HYDROGEN-RICH GAS

200

42

34   37

31

RAW MATERIAL
GAS

EXHAUST
GAS

50

35   38

RAW MATERIAL GAS/
OFF-GAS

39

36

COMBUSTION AIR

## FIG. 32

## FIG. 33

## FIG. 34

## FIG. 35

START

S11 — SECOND TEMPERATURE OR LOWER? — No

Yes

S12 — INITIATE HEATING OPERATION WITH CONTROL PARAMETER GROUP FOR DETERMINATION

S13 — FIRST TEMPERATURE OR HIGHER? — No

Yes

S14 — ACQUIRE TEMPERATURE RISE RATE

S15 — CORRECT PARAMETER SETTING FUNCTION WITH OUTSIDE AIR TEMPERATURE

S16 — REFER TO PARAMETER SETTING FUNCTION AFTER CORRECTION ON THE BASIS OF TEMPERATURE RISE RATE

S17 — SET DRIVING CONTROL PARAMETER GROUP

END

FIG. 36

# FIG. 37

PARAMETER SETTING FUNCTION
CORRECTION VALUE
(CORRECTION MAGNIFICATION)

1

0

(OUTSIDE AIR TEMPERATURE)-
(REFERENCE OUTSIDE AIR TEMPERATURE)

## FIG. 38

| TARGET VALUE OF FLOW RATE OF RAW MATERIAL | TARGET VALUE OF FLOW RATE OF REFORMING WATER | TARGET VALUE OF AMOUNT OF COMBUSTION AIR |
|---|---|---|
| $f_1(\Delta T)$ | $f_2(\Delta T)$ | $f_3(\Delta T)$ |

※$\Delta T \Rightarrow$ TEMPERATURE RISE RATE

## FIG. 39

| TEMPERATURE RISE RATE | TARGET VALUE OF FLOW RATE OF RAW MATERIAL | TARGET VALUE OF FLOW RATE OF REFORMING WATER | TARGET VALUE OF AMOUNT OF COMBUSTION AIR |
|---|---|---|---|
| $\Delta T_1 \sim \Delta T_2$ | $a_1$ | $b_1$ | $c_1$ |
| $\Delta T_2 \sim \Delta T_3$ | $a_2$ | $b_2$ | $c_2$ |
| $\Delta T_3 \sim \Delta T_4$ | $a_3$ | $b_3$ | $c_3$ |
| ⋮ | ⋮ | ⋮ | ⋮ |

## FIG. 40

# FIG. 41

```
                    ┌──────────┐
                    │  START   │
                    └────┬─────┘
                         │
S21 ─────◇───────────────┴───────────────◇── No
         │  SECOND TEMPERATURE            │
         │      OR LOWER?                  │
         └───────────┬───────────────────┘
                     │ Yes
S22 ─┌──────────────────────────────────────┐
     │ INITIATE HEATING OPERATION WITH CONTROL│
     │ PARAMETER GROUP FOR DETERMINATION      │
     └────────────────┬─────────────────────┘
                      │
S23 ─────◇────────────┴──────────────◇── No
         │  DOES CONSTANT TIME HAVE   │
         │        PASSED?             │
         └───────────┬───────────────┘
                     │ Yes
S24 ─┌──────────────────────────────┐
     │  ACQUIRE THIRD TEMPERATURE    │
     └──────────────┬───────────────┘
                    │
S25 ─┌──────────────────────────────┐
     │ ACQUIRE TEMPERATURE RISE RATE │
     └──────────────┬───────────────┘
                    │
S26 ─┌──────────────────────────────────────────────────┐
     │ CORRECT PARAMETER SETTING FUNCTION WITH OUTSIDE AIR│
     │ TEMPERATURE                                        │
     └──────────────┬───────────────────────────────────┘
                    │
S27 ─┌──────────────────────────────────────────────────┐
     │ REFER TO PARAMETER SETTING FUNCTION AFTER CORRECTION│
     │ ON THE BASIS OF TEMPERATURE RISE RATE              │
     └──────────────┬───────────────────────────────────┘
                    │
S28 ─┌──────────────────────────────────────┐
     │ SET DRIVING CONTROL PARAMETER GROUP   │
     └──────────────┬───────────────────────┘
                    │
              ┌──────────┐
              │   END    │
              └──────────┘
```

116

## FIG. 42

```
                    ┌──────────────┐
                    │    START     │
                    └──────┬───────┘
                           │
                           ▼
S31         ╱─────────────────────────────╲      No
         ◁ │   SECOND TEMPERATURE           │ ──────┐
            ╲      OR LOWER?                ╱        │
             ╲─────────────┬──────────────╱         │
                           │ Yes                    │
                           ▼                        │
S32  ┌──────────────────────────────────────────┐  │
     │  INITIATE HEATING OPERATION WITH CONTROL  │  │
     │  PARAMETER GROUP FOR DETERMINATION        │  │
     └──────────────────┬───────────────────────┘  │
                        │ ◁──────────────────────────┐
                        ▼                            │
S33         ╱─────────────────────────────╲      No │
         ◁ │   FIRST TEMPERATURE OR HIGHER? │ ───────┘
            ╲─────────────┬──────────────╱
                          │ Yes
                          ▼
S34  ┌──────────────────────────────────────────┐
     │      ACQUIRE TEMPERATURE RISE RATE        │
     └──────────────────┬───────────────────────┘
                        ▼
S35  ┌──────────────────────────────────────────┐
     │   CORRECT TEMPERATURE RISE RATE WITH      │
     │        OUTSIDE AIR TEMPERATURE            │
     └──────────────────┬───────────────────────┘
                        ▼
S36  ┌──────────────────────────────────────────┐
     │ REFER TO PARAMETER SETTING FUNCTION ON    │
     │ THE BASIS OF TEMPERATURE RISE RATE        │
     │ CORRECTION VALUE                          │
     └──────────────────┬───────────────────────┘
                        ▼
S37  ┌──────────────────────────────────────────┐
     │     SET DRIVING CONTROL PARAMETER GROUP   │
     └──────────────────┬───────────────────────┘
                        ▼
                 ┌──────────────┐
                 │     END      │
                 └──────────────┘
```

## FIG. 43

TEMPERATURE RISE RATE
CORRECTION VALUE
(CORRECTION WIDTH)

0

(OUTSIDE AIR TEMPERATURE)-
(REFERENCE OUTSIDE AIR
TEMPERATURE)

# FIG. 44

TEMPERATURE RISE RATE
CORRECTION VALUE
(CORRECTION MAGNIFICATION)

1

0

(OUTSIDE AIR TEMPERATURE)-
(REFERENCE OUTSIDE AIR TEMPERATURE)

# FIG. 45

START

S41 —— SECOND TEMPERATURE OR LOWER? — No

Yes

S42 —— INITIATE HEATING OPERATION WITH CONTROL PARAMETER GROUP FOR DETERMINATION

S43 —— DOES CONSTANT TIME HAVE PASSED? — No

Yes

S44 —— ACQUIRE THIRD TEMPERATURE

S45 —— ACQUIRE TEMPERATURE RISE RATE

S46 —— CORRECT TEMPERATURE RISE RATE WITH OUTSIDE AIR TEMPERATURE

S47 —— REFER TO PARAMETER SETTING FUNCTION ON THE BASIS OF TEMPERATURE RISE RATE CORRECTION VALUE

S48 —— SET DRIVING CONTROL PARAMETER GROUP

END

## FIG. 46

```
                    ┌─────────────┐
                    │    START    │
                    └──────┬──────┘
                           │
         S51          ◇────▼────────◇    No
          ───────────◇ SECOND TEMPERATURE ◇──────┐
                      ◇   OR LOWER?     ◇         │
                       ◇──────┬────────◇          │
                              │ Yes               │
         S52    ┌─────────────▼──────────────┐    │
          ─────│ INITIATE FIRST HEATING OPERATION WITH FIRST CONTROL │
               │  PARAMETER GROUP FOR DETERMINATION  │
               └─────────────┬──────────────┘
                             │
         S53          ◇──────▼────────◇    No
          ───────────◇ FIRST TEMPERATURE OR HIGHER? ◇────┐
                       ◇──────┬────────◇                 │
                              │ Yes
         S54    ┌─────────────▼──────────────┐
          ─────│ ACQUIRE FIRST TEMPERATURE RISE RATE │
               └─────────────┬──────────────┘
         S55    ┌─────────────▼──────────────┐
          ─────│        STOP DRIVING         │
               └─────────────┬──────────────┘
                             │
         S56          ◇──────▼────────◇    No
          ───────────◇ SECOND TEMPERATURE OR ◇────┐
                      ◇      LOWER?       ◇
                       ◇──────┬────────◇
                              │ Yes
         S57    ┌─────────────▼──────────────┐
          ─────│ INITIATE SECOND HEATING OPERATION WITH │
               │  SECOND CONTROL PARAMETER GROUP  │
               └─────────────┬──────────────┘
                             │
         S58          ◇──────▼────────◇    No
          ───────────◇ FIRST TEMPERATURE OR ◇────┐
                      ◇      HIGHER?      ◇
                       ◇──────┬────────◇
                              │ Yes
         S59    ┌─────────────▼──────────────┐
          ─────│ ACQUIRE SECOND TEMPERATURE RISE RATE │
               └─────────────┬──────────────┘
         S60    ┌─────────────▼──────────────┐
          ─────│ DETERMINE DRIVING CONTROL PARAMETER GROUP │
               └─────────────┬──────────────┘
                    ┌─────────▼───────┐
                    │       END       │
                    └─────────────────┘
```

# FIG. 47

TEMPERATURE RISE
RATE FOR
DETERMINATION

0    OUTSIDE AIR TEMPERATURE

## FIG. 48

```
            START

S51   SECOND TEMPERATURE        No
      OR LOWER?
              Yes

S61   IS OUTSIDE TEMPERATURE IN    No
      PREDETERMINED RANGE?
              Yes

S52   INITIATE FIRST HEATING OPERATION WITH
      FIRST CONTROL PARAMETER GROUP

S53   FIRST TEMPERATURE OR        No
      HIGHER?
              Yes

S54   ACQUIRE FIRST TEMPERATURE RISE RATE

S55   STOP DRIVING

S56   SECOND TEMPERATURE         No
      OR LOWER?
              Yes

S62   IS OUTSIDE TEMPERATURE IN    No
      PREDETERMINED RANGE?
              Yes

S57   INITIATE SECOND HEATING OPERATION WITH
      SECOND CONTROL PARAMETER GROUP

S58   FIRST TEMPERATURE OR        No
      HIGHER?
              Yes

S59   ACQUIRE SECOND TEMPERATURE
      RISE RATE

S60   DETERMINE DRIVING CONTROL
      PARAMETER GROUP

            END
```

## FIG. 49

```
                        ┌──────────────┐
                        │    START     │
                        └──────────────┘
                               │
                               ▼
S51 ───        ╱◇╲                              No
              ╱ SECOND TEMPERATURE ╲ ─────────────────┐
              ╲  OR LOWER?         ╱                   │
               ╲◇╱                                     │
                │ Yes                                  │
                ▼                                       │
S71 ───  ┌─────────────────────────────────┐          │
         │ ACQUIRE FIRST OUTSIDE TEMPERATURE│          │
         └─────────────────────────────────┘          │
                │                                       │
                ▼                                       │
S52 ───  ┌─────────────────────────────────┐          │
         │ INITIATE FIRST HEATING OPERATION │          │
         │ WITH FIRST CONTROL PARAMETER GROUP│         │
         └─────────────────────────────────┘          │
                │                                       │
                ▼                                       │
S53 ───        ╱◇╲                              No     │
              ╱ FIRST TEMPERATURE OR ╲ ──────────┐     │
              ╲   HIGHER?            ╱            │     │
               ╲◇╱                               │     │
                │ Yes                            │     │
                ▼                                 │     │
S54 ───  ┌───────────────────────────────┐       │     │
         │ ACQUIRE FIRST TEMPERATURE RISE RATE│   │     │
         └───────────────────────────────┘       │     │
                │                                 │     │
                ▼                                 │     │
S55 ───  ┌───────────────────────────────┐       │     │
         │          STOP DRIVING          │       │     │
         └───────────────────────────────┘       │     │
                │                                 │     │
                ▼                                 │     │
S56 ───        ╱◇╲                      No        │     │
              ╱ SECOND TEMPERATURE ╲ ────┐        │     │
              ╲  OR LOWER?         ╱      │        │     │
               ╲◇╱                        │        │     │
                │ Yes                     │        │     │
                ▼                          │        │     │
S72 ───  ┌───────────────────────────┐    │        │     │
         │ ACQUIRE SECOND OUTSIDE     │    │        │     │
         │       TEMPERATURE          │    │        │     │
         └───────────────────────────┘    │        │     │
                │                          │        │     │
                ▼                          │        │     │
S57 ───  ┌───────────────────────────┐    │        │     │
         │ INITIATE SECOND HEATING    │    │        │     │
         │ OPERATION WITH SECOND      │    │        │     │
         │ CONTROL PARAMETER GROUP    │    │        │     │
         └───────────────────────────┘    │        │     │
                │                          │        │     │
                ▼                          │        │     │
S58 ───        ╱◇╲                   No    │        │     │
              ╱ FIRST TEMPERATURE ╲ ──┐    │        │     │
              ╲  OR HIGHER?       ╱    │    │        │     │
               ╲◇╱                     │    │        │     │
                │ Yes                  │    │        │     │
                ▼                       │    │        │     │
S59 ───  ┌───────────────────────┐     │    │        │     │
         │ ACQUIRE SECOND         │     │    │        │     │
         │ TEMPERATURE RISE RATE  │     │    │        │     │
         └───────────────────────┘     │    │        │     │
                │                       │    │        │     │
                ▼                                                  No
S73 ───     ╱◇╲ ARE FIRST OUTSIDE ╲ ──────────────────────────────┐
           ╱ TEMPERATURE AND SECOND OUTSIDE TEMPERATURE IN ╲
           ╲     PREDETERMINED RANGE?                      ╱
            ╲◇╱
                │ Yes
                ▼
S60 ───  ┌───────────────────────────┐
         │ DETERMINE DRIVING CONTROL  │
         │     PARAMETER GROUP        │
         └───────────────────────────┘
                │
                ▼
         ┌──────────────┐
         │     END      │
         └──────────────┘
```

## FIG. 50

START

S51 — SECOND TEMPERATURE OR LOWER? — No

Yes

S52 — INITIATE FIRST HEATING OPERATION WITH FIRST CONTROL PARAMETER GROUP

S53 — FIRST TEMPERATURE OR HIGHER? — No

Yes

S54 — ACQUIRE FIRST TEMPERATURE RISE RATE

S55 — STOP DRIVING

S56 — SECOND TEMPERATURE OR LOWER? — No

Yes

S81 — IS OUTSIDE TEMPERATURE IN PREDETERMINED RANGE? — No

Yes

S57 — INITIATE SECOND HEATING OPERATION WITH SECOND CONTROL PARAMETER GROUP

S58 — FIRST TEMPERATURE OR HIGHER? — No

Yes

S59 — ACQUIRE SECOND TEMPERATURE RISE RATE

S82 — IS OUTSIDE TEMPERATURE IN PREDETERMINED RANGE? — No

S83 — STOP DRIVING

Yes

S60 — DETERMINE DRIVING CONTROL PARAMETER GROUP

END

FIG. 51

## FIG. 52

START

CHANGE RATIO OF AMOUNT OF AIR SUPPLIED
TO AMOUNT OF RAW MATERIAL SUPPLIED — S101

ACQUIRE OUTPUT OF COMBUSTION STATE
FROM COMBUSTION STATE DETECTOR — S102

CONTROL AMOUNT OF RAW MATERIAL THAT IS
SUPPLIED TO REFORMER WITH RESPECT TO
AMOUNT OF POWER GENERATION IN
ACCORDANCE WITH OUTPUT VALUE OF
COMBUSTION STATE DETECTOR — S103

END

# FIG. 53

RELATIONSHIP BETWEEN FLOW RATE OF COMBUSTION AIR DURING POWER GENERATION
AND CONCENTRATION OF CARBON MONOXIDE IN COMBUSTION EXHAUST GAS

## FIG. 54

ESTIMATED AMOUNT OF HEAT OF RAW MATERIAL (arb)

CONCENTRATION OF CARBON MONOXIDE IN EXHAUST GAS (arb)

FIG. 55

## FIG. 56

## FIG. 57

```
                    ┌─────────────┐
                    │    START    │
                    └─────────────┘
                           │
                           ▼
    ┌────────────────────────────────────────────────┐
    │ CHANGE RATIO OF AMOUNT OF AIR SUPPLIED TO AMOUNT │      S201
    │ OF RAW MATERIAL SUPPLIED BY CHANGING AT LEAST ANY │
    │   ONE OF AMOUNT OF RAW MATERIAL SUPPLIED AND      │
    │            AMOUNT OF AIR SUPPLIED                 │
    └────────────────────────────────────────────────┘
                           │
                           ▼
    ┌────────────────────────────────────────────────┐
    │      ACQUIRE OUTPUT OF COMBUSTION STATE FROM     │      S202
    │           COMBUSTION STATE DETECTOR             │
    └────────────────────────────────────────────────┘
                           │
                           ▼
    ┌────────────────────────────────────────────────┐
    │ CONTROL AMOUNT OF RAW MATERIAL THAT IS SUPPLIED  │      S203
    │  TO REFORMER WITH RESPECT TO AMOUNT OF POWER     │
    │ GENERATION IN ACCORDANCE WITH OUTPUT VALUE OF    │
    │            COMBUSTION STATE DETECTOR            │
    └────────────────────────────────────────────────┘
                           │
                           ▼
                    ┌─────────────┐
                    │     END     │
                    └─────────────┘
```

## FIG. 58

START

CHANGE RATIO OF AMOUNT OF AIR SUPPLIED TO AMOUNT OF RAW MATERIAL SUPPLIED — S301

ACQUIRE OUTPUT OF COMBUSTION STATE FROM COMBUSTION STATE DETECTOR — S302

IS OUTPUT VALUE EQUAL TO OR GREATER THAN PREDETERMINED VALUE — S303

N

Y

SET FIRST RAW MATERIAL SUPPLY AMOUNT — S304

SET SECOND RAW MATERIAL SUPPLY AMOUNT — S305

END

# FIG. 59

```
        ┌─────────────┐
        │    START    │
        └──────┬──────┘
               │
               ▼
   ┌───────────────────────────┐
   │ CHANGE RATIO OF AMOUNT OF AIR │    S401
   │   SUPPLIED TO AMOUNT OF RAW   │
   │       MATERIAL SUPPLIED       │
   └───────────────┬───────────┘
               │
               ▼
   ┌───────────────────────────┐
   │   ACQUIRE CONCENTRATION OF    │    S402
   │ CARBON MONOXIDE FROM CARBON   │
   │       MONOXIDE SENSOR         │
   └───────────────┬───────────┘
               │
               ▼
   ┌───────────────────────────┐
   │ CONTROL AMOUNT OF RAW MATERIAL THAT IS │  S403
   │ SUPPLIED TO REFORMER WITH RESPECT TO   │
   │   AMOUNT OF POWER GENERATION IN        │
   │ ACCORDANCE WITH CONCENTRATION OF       │
   │        CARBON MONOXIDE                 │
   └───────────────┬───────────┘
               │
               ▼
        ┌─────────────┐
        │     END     │
        └─────────────┘
```

# FIG. 60

```
                    ┌──────────────┐
                    │    START     │
                    └──────┬───────┘
                           │
                           ▼
        ┌──────────────────────────────┐
        │ CHANGE RATIO OF AMOUNT OF AIR │ ~ S501
        │   SUPPLIED TO AMOUNT OF RAW   │
        │        MATERIAL SUPPLIED      │
        └──────────────┬───────────────┘
                       │
                       ▼
        ┌──────────────────────────────┐
        │ ACQUIRE CONCENTRATION OF CARBON│ ~ S502
        │ MONOXIDE FROM CARBON MONOXIDE │
        │             SENSOR            │
        └──────────────┬───────────────┘
                       │
                       ▼
                   ◇ S503
        ┌──────────────────────────────┐
        │        IS CONCENTRATION       │       N
        │ OF CARBON MONOXIDE EQUAL TO OR GREATER │────────┐
        │    THAN PREDETERMINE VALUE    │                 │
        └──────────────┬───────────────┘                 │
                    Y  │                                  │
                       ▼ ~ S504                           ▼ ~ S505
        ┌──────────────────────────────┐  ┌──────────────────────────────┐
        │ SET FIRST RAW MATERIAL SUPPLY AMOUNT │ │ SET SECOND RAW MATERIAL SUPPLY │
        │                              │  │            AMOUNT             │
        └──────────────┬───────────────┘  └──────────────┬───────────────┘
                       │◄─────────────────────────────────┘
                       ▼
                ┌──────────────┐
                │     END      │
                └──────────────┘
```

## FIG. 61

```
        ┌──────────────┐
        │    START     │
        └──────┬───────┘
               │
               ▼
   ┌───────────────────────────┐
   │ CHANGE RATIO OF AMOUNT     │────  S601
   │ OF AIR SUPPLIED TO AMOUNT  │
   │ OF RAW MATERIAL SUPPLIED   │
   └───────────┬───────────────┘
               │
               ▼
   ┌───────────────────────────────┐
   │ ACQUIRE INFORMATION, WHICH     │────  S602
   │ INDICATES WHETHER OR NOT       │
   │ COMBUSTION REACTION OCCURS,    │
   │ FROM COMBUSTION STATE DETECTOR │
   └───────────┬───────────────────┘
               │
               ▼
   ┌───────────────────────────────┐
   │ CONTROL AMOUNT OF RAW MATERIAL │────  S603
   │ THAT IS SUPPLIED TO REFORMER   │
   │ WITH RESPECT TO AMOUNT OF      │
   │ POWER GENERATION IN ACCORDANCE │
   │ WITH PRESENCE OR ABSENCE       │
   │ OF COMBUSTION STATE            │
   └───────────┬───────────────────┘
               │
               ▼
        ┌──────────────┐
        │     END      │
        └──────────────┘
```

## FIG. 62

START

CHANGE RATIO OF AMOUNT OF AIR
SUPPLIED TO AMOUNT OF RAW
MATERIAL SUPPLIED ⌐ S701

ACQUIRE FLAME CURRENT
FROM FLAME ROD ⌐ S702

⌐ S703
IS FLAME
CURRENT EQUAL TO OR GREATER THAN
PREDETERMINED VALUE

Y

N

⌐ S704
SET FIRST RAW MATERIAL SUPPLY
AMOUNT

⌐ S705
SET SECOND RAW MATERIAL SUPPLY
AMOUNT

END

*FIG. 63*

```
              ┌─────────────┐
              │    START    │
              └──────┬──────┘
                     │
                     ▼
       ┌──────────────────────────┐
       │ CHANGE RATIO OF AMOUNT   │        S701
       │ OF AIR SUPPLIED TO       │───
       │ AMOUNT OF RAW            │
       │ MATERIAL SUPPLIED        │
       └────────────┬─────────────┘
                    │
                    ▼
       ┌──────────────────────────┐
       │ ACQUIRE TEMPERATURE IN   │        S702B
       │ THE VICINITY OF FLAME    │───
       │ FROM TEMPERATURE SENSOR  │
       └────────────┬─────────────┘
                    │
                    ▼
                                            S703B
            ╱────────────────────╲   ───
          ╱   IS TEMPERATURE       ╲
         ⟨ EQUAL TO OR HIGHER THAN  ⟩────── Y ──────┐
          ╲ PREDETERMINED VALUE   ╱                 │
            ╲────────────────────╱                  │
                    │                               │
                    N                               │
                    │      S704B                    │      S705B
                    ▼   ───                          ▼   ───
       ┌──────────────────────┐      ┌──────────────────────────┐
       │ SET FIRST RAW        │      │ SET SECOND RAW MATERIAL  │
       │ MATERIAL SUPPLY      │      │ SUPPLY AMOUNT            │
       │ AMOUNT               │      └──────────┬───────────────┘
       └──────────┬───────────┘                 │
                  │◄───────────────────────────-┘
                  ▼
           ┌─────────────┐
           │     END     │
           └─────────────┘
```

## FIG. 64

START

CHANGE RATIO OF AMOUNT OF AIR
SUPPLIED TO AMOUNT OF RAW
MATERIAL SUPPLIED — S701

ACQUIRE SENSOR OUTPUT FROM
OPTICAL SENSOR — S702C

S703C

IS SENSOR
OUTPUT EQUAL TO OR GREATER THAN
PREDETERMINED VALUE

Y

N

S704C

SET FIRST RAW MATERIAL SUPPLY AMOUNT

S705C

SET SECOND RAW MATERIAL SUPPLY
AMOUNT

END

## FIG. 65

START

CHANGE RATIO OF AMOUNT OF AIR SUPPLIED TO AMOUNT OF RAW MATERIAL SUPPLIED — S801

ACQUIRE FLAME CURRENT FROM FLAME ROD — S802

S803 — IS FLAME CURRENT EQUAL TO OR GREATER THAN PREDETERMINED VALUE

N

Y

PERFORM RE-IGNITION OPERATION — S804

SET FIRST RAW MATERIAL SUPPLY AMOUNT — S805

SET SECOND RAW MATERIAL SUPPLY AMOUNT — S806

END

**EP 3 184 488 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006046621 A
- JP 2013150722 A
- JP 2013053036 A
- JP 2013150721 A
- JP 2005200260 A
- JP 2003282116 A
- JP 2013164985 A